# EUROPEAN PATENT SPECIFICATION

(11) **EP 4 249 570 B1**
(45) Date of publication and mention of the grant of the patent: **13.08.2025**
(21) Application number: 23162567.4
(22) Date of filing: 17.03.2023
(51) Int. Cl.: C09K 19/30, C09K 19/04, C09K 19/12, C09K 19/34

(54) **LIQUID-CRYSTALLINE MEDIUM**
FLÜSSIGKRISTALLINES MEDIUM
MILIEU À BASE DE CRISTAUX LIQUIDES

(30) Priority: 21.03.2022 EP 22163367
(43) Date of publication of application: 27.09.2023
(73) Proprietor: Merck Patent GmbH, 64293 Darmstadt (DE)
(72) Inventor: Laut, Sven Christian, 64293 DARMSTADT (DE); Lee, Hee-Kyu, SHANGHAI, 201206 (CN); Wang, Jing, SHANGHAI, 201206 (CN)
(74) Representative: Merck Patent Association

(56) References cited:
- EP-A1- 3 299 438
- DE-A1- 102009 005 747

## Description

The present invention relates to liquid-crystalline (LC) media having positive dielectric anisotropy and to liquid-crystal displays (LCDs) containing these media, especially to displays addressed by an active matrix and in particular to energy efficient LC displays of the TN, PS-TN, STN, TN-TFT, OCB, IPS, PS-IPS, FFS, HB-FFS, XB-FFS, PS-FFS, SA-HB-FFS, SA-XB-FFS, polymer stabilised SA-HB-FFS, polymer stabilised SA-XB-FFS, positive VA or positive PS-VA type.

Liquid-crystal displays (LCDs) are used in many areas for the display of information. LCDs are used both for direct-view displays and for projection-type displays. The electro-optical modes used are, for example, the twisted nematic (TN), super twisted nematic (STN), optically compensated bend (OCB) and electrically controlled birefringence (ECB) modes together with their various modifications, as well as others. All these modes utilise an electric field which generated substantially perpendicular to the substrates and the liquid-crystal layer.

Besides these modes, there are also electro-optical modes that utilise an electric field which is substantially parallel to the substrates or the liquid-crystal layer. For example, WO 91 / 10936 discloses a liquid-crystal display in which the electric signals are generated in such a way that the electric fields have a significant component parallel to the liquid-crystal layer, and which has since then become known as in-plane switching IPS) display. The principles of operating such a display are described, for example, by R.A. Soref in Journal of Applied Physics, Vol. 45, No. 12, pp. 5466-5468 (1974).

IPS displays contain an LC layer between two substrates with planar orientation, where the two electrodes are arranged on only one of the two substrates and preferably have interdigitated, comb-shaped structures. On application of a voltage to the electrodes an electric field with a significant component parallel to the LC layer is generated between them. This causes realignment of the LC molecules in the layer plane.

EP 0 588 568, for example, discloses various possibilities for the design of the electrodes and for addressing an IPS display. DE 198 24 137 likewise describes various embodiments of such IPS displays.

Liquid-crystalline materials for IPS displays of this type are described, for example, in EP 3 299 438 A1, DE 10 2009 005747 A1 and DE 195 28 104.

Furthermore, so-called *"fringe-field switching"* (FFS) displays have been reported (see *inter alia* S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called *"fringe field"* is thereby generated, *i.e.* a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

Liquid-crystal displays of the IPS and FFS electro-optical mode are in particular suitable for use in modern desktop monitors, TV sets and multimedia applications. The liquid-crystalline media according to the present invention are preferably used in displays of this type. In general, dielectrically positive liquid-crystalline media having rather lower values of the dielectric anisotropy are used in FFS displays, but in some cases liquid-crystalline media having a dielectric anisotropy of only about 3 or even less are also used in IPS displays.

A further improvement has been achieved by the HB-FFS mode. One of the unique features of the HB-FFS mode in contrast to the traditional FFS technology is that it enables higher transmittance which allows operation of the panel with less energy consumption.

Another recently developed mode is the XB-FFS mode, wherein the liquid-crystalline medium additionally contains a polar liquid crystal compound with low dielectric anisotropy.

Liquid-crystal compositions which are suitable for LCDs and especially for FFS and IPS displays are known in prior art, for example, from JP 07-181 439 (A), EP 0 667 555, EP 0 673 986, DE 195 09 410, DE 195 28 106, DE 195 28 107, WO 96 / 23 851 and WO 96 / 28 521. However, these compositions have certain disadvantages. Amongst other deficiencies, most of them result in disadvantageously long addressing times, have inadequate values of the resistivity and/or require excessively high operating voltages. Both an improvement in the operating properties and also in the shelf life are necessary here.

FFS and IPS displays can be operated as active-matrix displays (AMD) or passive-matrix displays (PMD). In the case of active-matrix displays individual pixels are usually addressed by integrated, non-linear active elements such as, for example, thin-film transistors (TFTs), while in the case of passive-matrix displays individual pixels are usually addressed by the multiplex method as known from the prior art.

The displays according to the present invention are preferably by an active matrix, preferably by a matrix of TFT. However, the liquid crystals according to the invention can also advantageously be used in displays having other known addressing means.

Typical applications of in-plane switching (IPS) and fringe field switching (FFS) technologies are monitors, notebooks, televisions, mobile telephones, tablet PCs, etc.

Both the IPS and the FFS technology have certain advantages over other LCD technologies, such as, for example, the vertical alignment (VA) technology, e.g. a broad viewing angle dependency of the contrast.

The provision of further liquid-crystalline media and the use thereof in a display having high transmission, a good black state and a high contrast ratio is a central challenge for modern FFS and IPS applications. In addition, modern applications also require good low-temperature stability and fast addressing times.

Until now, it was not possible to design suitable LC media having a high contrast ratio e.g. high elastic constant Kₐᵥ., low temperature stability and low response times. Therefore, the overall picture quality in such devices still requires a further improvement.

The invention has the object of providing liquid-crystalline media, in particular for FFS and IPS displays, but also for TN, positive VA or STN displays, and in particular for active-matrix displays like those addressed by TFTs, which do not exhibit the disadvantages indicated above or only do so to a lesser extent and preferably have high specific resistance, low threshold voltage, high dielectric anisotropy, a good low temperature stability (LTS), fast response times and low rotational viscosities, and enable high brightness.

This was achieved by providing liquid-crystalline media as described and claimed hereinafter.

In case of FFS displays there is a need for further optimization of response time, contrast, brightness and reliability. However, it was found that the liquid-crystalline materials of the prior art do often not achieve all these requirements at the same time.

It has now been surprisingly found that liquid-crystalline media according to the present invention which contain a combination of compounds of Formula I and L1 and/or L2 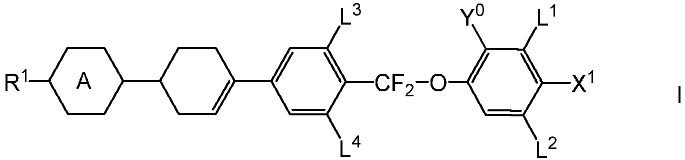 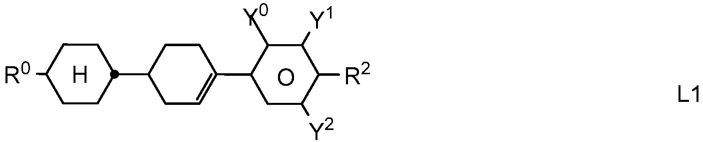 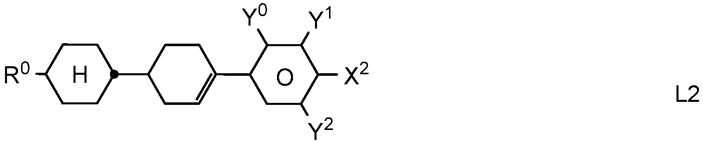
in which the individual radicals are specified in Claim 1,
show several improvements, especially when being used in FFS mode displays, like a good solubility, and enable fast response times.

Additionally, the liquid-crystalline media according to the present invention have high clearing points, an excellent low temperature stability (LTS) and provide a best motion picture quality and an improved overall image quality, in particular a high contrast.

The invention relates to a liquid-crystalline medium, characterised in that it comprises one or more compounds of Formula I 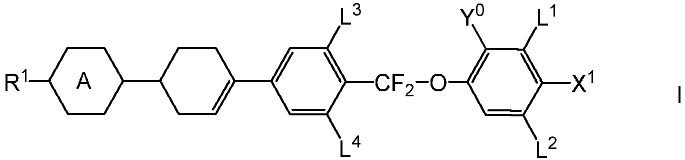 in which the individual radicals, on each occurrence identically or differently, and each, independently of one another, have the following meaning: 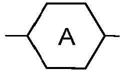 denotes 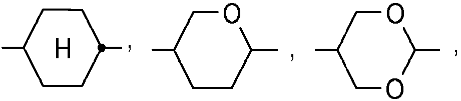 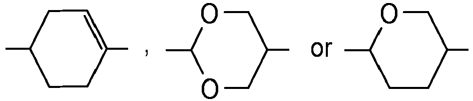
- R¹: a H atom, an alkyl or an alkoxy group having 1 to 12 C atoms or an alkenyl or an alkenyloxy group having 2 to 12 C atoms in which one or more CH₂ groups are optionally substituted by -C≡C-, -CF₂O-, -OCF₂-, -CH=CH-, 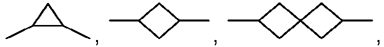 -O-, -CO-O- or -O-CO- in such a way that 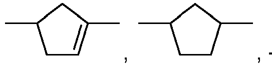 O atoms are not linked directly to one another, and in which one or more H atoms may be replaced by a halogen atom or a cycloalkyl or a cycloalkoxy group having 3 to 12 C atoms, in which one or more H
- Y⁰: atoms may be replaced by a halogen atom, preferably cyclopentyl or cyclopentyloxyl, a H atom or CH₃,
- X¹: -CN, -SCN, a halogen atom or an alkyl or an alkoxy group having 1 to 3 C atoms or an alkenyl or an alkenyloxy group having 2 or 3 C atoms in which one or more H atoms are replaced by a halogen atom, preferably F, CF₃ or OCF₃, and
- L¹ to L⁴: independently of one another H or F;
and one or more compounds selected from Formula L1 and L2, 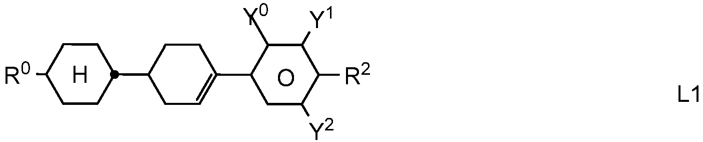 in which the individual radicals, on each occurrence identically or differently, and each, independently of one another, have the following meaning:
- R⁰: an alkyl group having 1 to 12 C atoms or an alkenyl group having 2 to 12 C atoms in which one or more CH₂ groups are optionally substituted by -C≡C-, -CF₂O-, -OCF₂-, -CH=CH-, 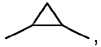 O-, -CO-O- 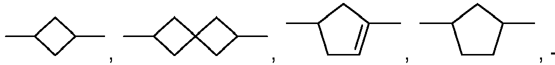 or -O-CO- in such a way that O atoms are not linked directly to one another, and in which one or more H atoms may be replaced by a halogen atom,
- R²: an alkyl group having 1 to 6 C atoms, or an alkenyl group having 2 to 6 C atoms, in which one or more CH₂ groups are optionally substituted by -C≡C-, -CF₂O-, -OCF₂-, -CH=CH-, 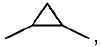 -O-, -CO-O- 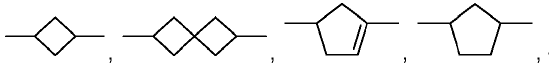 or -O-CO- in such a way that O atoms are not linked directly to one another, and in which one or more H atoms may be replaced by a halogen atom;
- Y¹ and Y²: H, For Cl,
- Y⁰: H or CH₃ ; 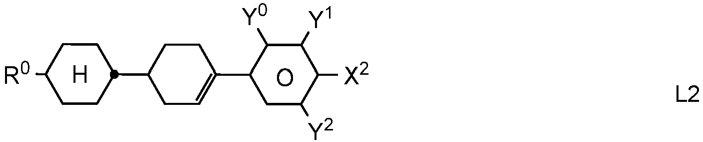 in which the individual radicals, on each occurrence identically or differently, and each, independently of one another, have the following meaning:
R⁰ an alkyl group having 1 to 12 C atoms or an alkenyl group having 2 to12 C atoms in which one or more CH₂ groups are optionally substituted by -C≡C-, -CF₂O-, -OCF₂-, -CH=CH-, 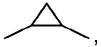 -O-, -CO-O- 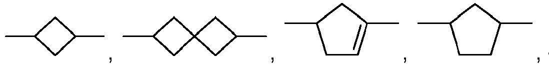 or -O-CO- in such a way that O atoms are not linked directly to one another, and in which one or more H atoms may be replaced by a halogen atom,
X² a F atom or an alkyl or an alkoxy group having 1 to 6 C atoms or an alkenyl or an alkenyloxy group having 2 to 6 C atoms in which one or more H atoms are replaced by a F atom, preferably F, CF₃ or OCF₃, and
Y¹ and Y² H, F or Cl,
Y⁰ H or CH₃.

The liquid-crystal media according to the present invention are especially suitable for use in liquid-crystal displays of the FFS, HB-FFS, XB-FFS and IPS mode based on dielectrically positive liquid crystals, and polymer stabilised variants thereof.

The invention further relates to the use of a liquid-crystalline medium as described above and below for electro-optical purposes, in particular for the use in liquid-crystal displays, shutter glasses, LC windows, 3D applications, preferably in TN, PS-TN, STN, TN-TFT, OCB, IPS, PS-IPS, FFS, HB-FFS, XB-FFS, PS-HB-FFS, PS-XB-FFS, SA-HB-FFS, SA-XB-FFS, polymer stabilised SA-HB-FFS, polymer stabilised SA-XB-FFS, positive VA and positive PS-VA displays, very preferably in FFS, HB-FFS, IPS, PS-HB-FFS and PS-IPS displays.

The invention further relates to an electro-optical liquid-crystal display containing a liquid-crystalline medium as described above and below, in particular a TN, PS-TN, STN, TN-TFT, OCB, IPS, PS-IPS, FFS, HB-FFS, XB-FFS, PS-HB-FFS, PS-XB-FFS, SA-HB-FFS, SA-XB-FFS, polymer stabilised SA-HB-FFS, polymer stabilised SA-XB-FFS, positive VA or positive PS-VA display, preferably a FFS, HB-FFS, IPS, PS-HB-FFS or PS-IPS display.

WO 2009/100810 A1 describes LC media for displays comprising one or more dielectrically positive compounds of the following formula for use in various devices:

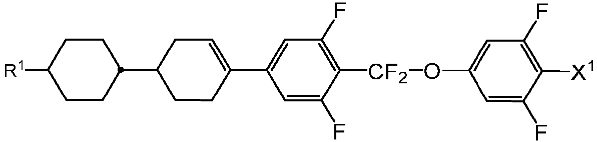

However, LC media in examples of WO 2009/100810 A1 have relatively low elastic constants K₁, K₂ and K₃. This is disadvantageous in terms of image quality, in particular contrast ratio. Additionally, the LC media of WO 2009/100810 A1 have a relatively high rotational viscosity γ₁.

In the present application, all atoms also include their isotopes. In some embodiments of the present invnetion one or more hydrogen atoms (H) may be replaced by deuterium (D); a high degree of deuteration enables or simplifies analytical determination of compounds, in particular in the case of low concentrations.

In the Formulae I, L1 and L2, if R⁰, R¹ or R² preferably denotes an alkyl radical and/or an alkoxy radical, this may be straight-chain or branched. It is preferably straight-chain, has 2, 3, 4, 5, or 6 C atoms and accordingly preferably denotes ethyl, propyl, butyl, pentyl, hexyl, ethoxy, propoxy, butoxy, pentoxy, hexyloxy or heptyloxy, furthermore methyl, methoxy. R⁰ preferably denotes straight-chain alkyl having 1 to 6 C atoms or an alkoxy radical having 2 to 6 C atoms.

Oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl.

If R⁰, R¹ or R² denotes an alkoxy or oxaalkyl group it may also contain one or more additional oxygen atoms, provided that oxygen atoms are not linked directly to one another.

In another preferred embodiment, one or more of R⁰, R¹ and R² are selected from the group consisting of 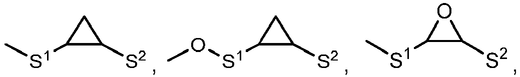 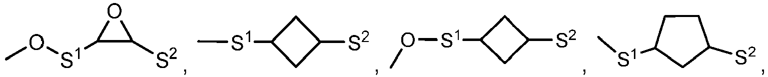 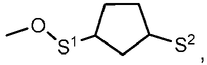 -S¹-F, -O-S¹-F, -O-S₁-O-S₂, wherein S¹ is C₁₋₁₂-alkylene or C₂₋₁₂-alkenylene and S² is H, C₁₋₁₂-alkyl or C₂₋₁₂-alkenyl, and very preferably one or more of R⁰, R¹ and R² are selected from the group consisting of 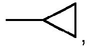 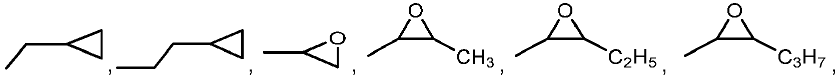 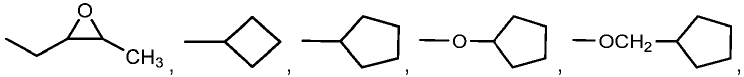 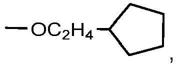 -OCH₂OCH₃, -O(CH₂)₂OCH₃, -O(CH₂)₃OCH₃, -O(CH₂)₄OCH₃, -O(CH₂)₂F, -O(CH₂)₃F, -O(CH₂)₄^{F}.

If R⁰, R¹ or R² denotes an alkenyl radical, this may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1- , -2- , -3- , -4- , -5- , -6- , -7- , -8- or -9-enyl.

If R⁰, R¹ or R² denotes an alkyl or alkenyl radical which is at least monosubstituted by halogen, this radical is preferably straight-chain, and halogen is preferably F or Cl. In the case of polysubstitution, halogen is preferably F. The resultant radicals also include perfluorinated radicals. In the case of monosubstitution, the fluorine or chlorine substituent may be in any desired position, but is preferably in the ω-position.

In the Formulae I and L2, X¹ and X² are preferably F, Cl or a mono- or poly-fluorinated alkyl or alkoxy radical having 1, 2 or 3 C atoms or a mono- or polyfluorinated alkenyl radical having 2 or 3 C atoms. X¹ and X² are particularly preferably F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, OCH=CF₂ or CH=CF₂, very particularly preferably F or OCF₃, furthermore CF₃, OCF=CF₂, OCHF₂ or OCH=CF₂.

In the compounds of Formula I and its subformulae R¹ preferably denotes straight-chain alkyl or alkoxy having 1 to 6 C atoms, very preferably methyl, ethyl or propyl, most preferably n-propyl.

Preferred compounds of Formula I are those wherein L¹ and L² denote H or F, very preferably both L¹ and L² denote F. L³ and L⁴ both preferably denote F.

In a preferred embodiment, the compounds of Formula I can be selected from those of Formulae I-1 to I-24: 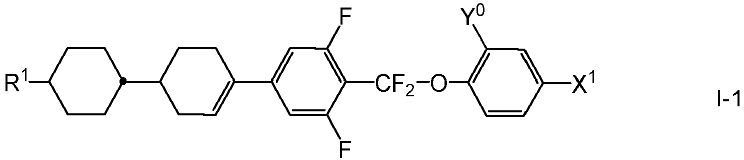 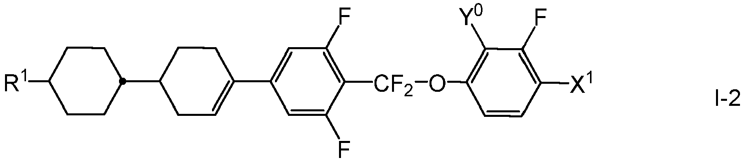 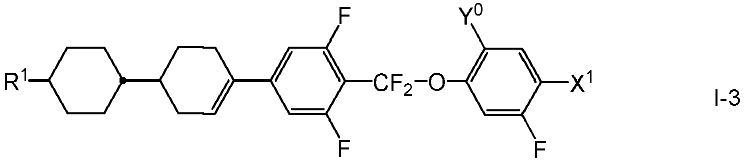 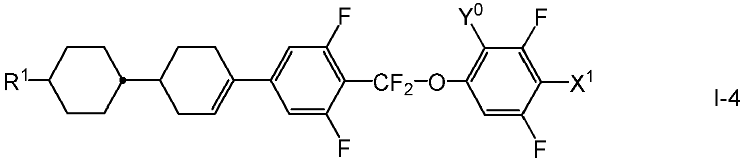 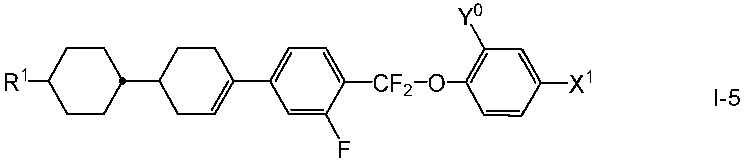 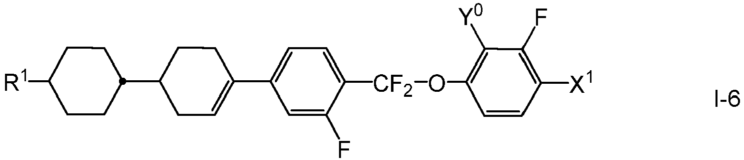 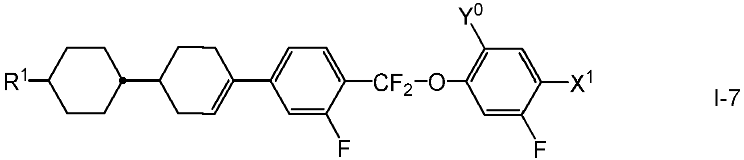 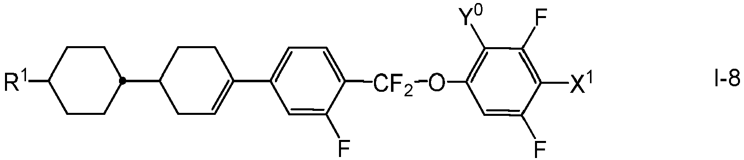 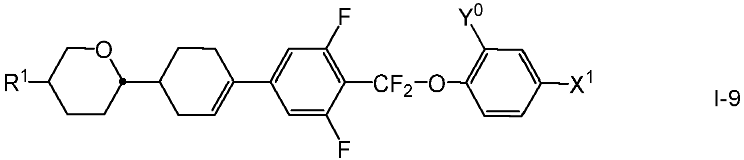 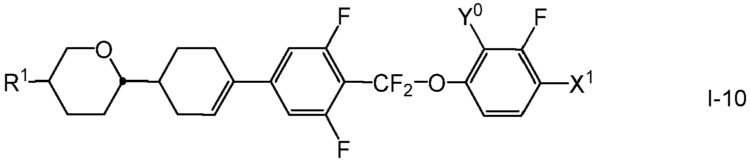 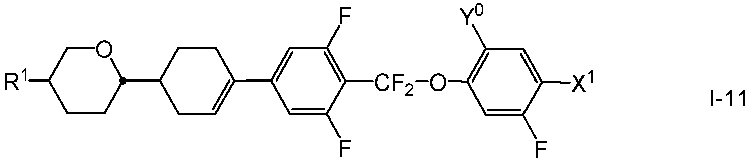 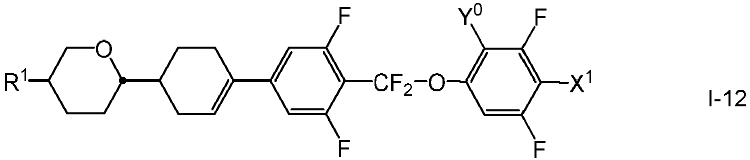 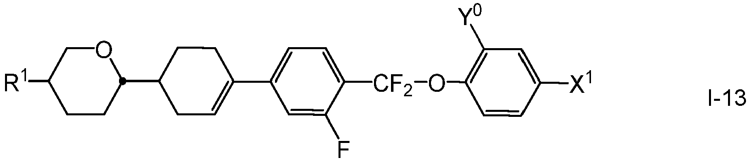 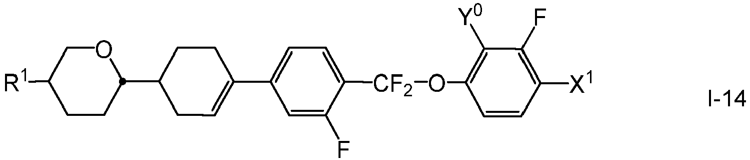 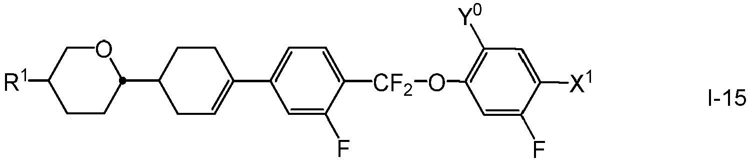 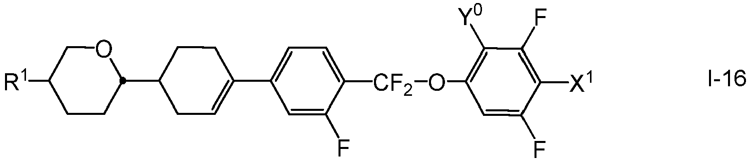 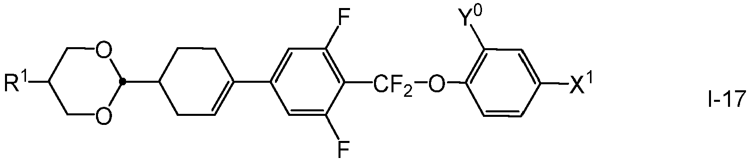 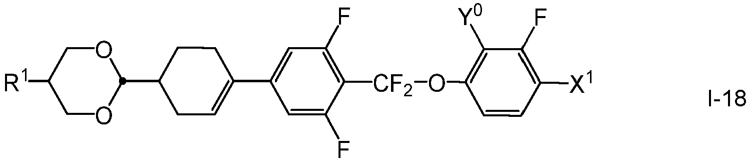 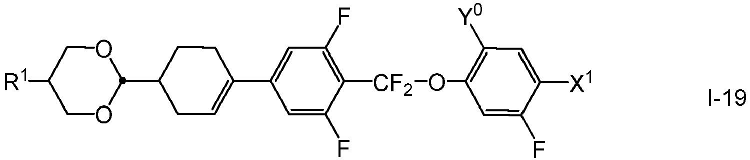 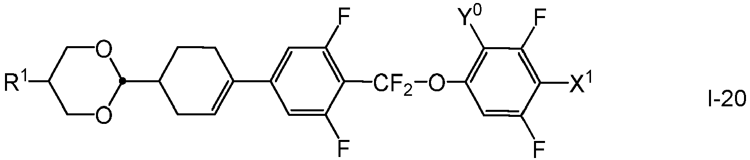 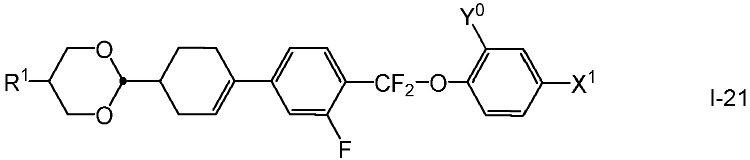 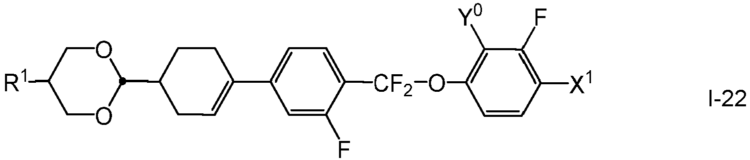 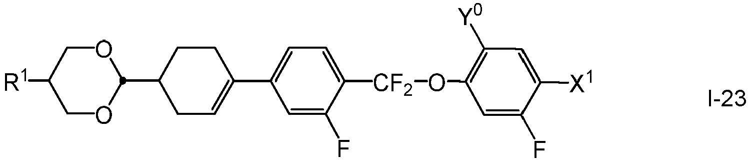 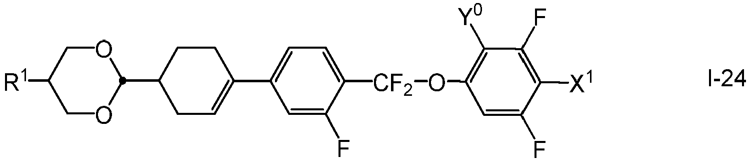 in which
- R¹: denotes a H atom, an alkyl or an alkoxy group having 1 to 6 C atoms or an alkenyl or an alkenyloxy group having 2 to 6 C atoms in which one or more CH₂ groups are optionally substituted by -C≡C-, -CF₂O-, -OCF₂-, -CH=CH-, 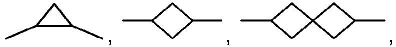 -O-, -CO-O- or -O-CO- in such a way that 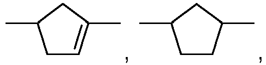 O atoms are not linked directly to one another, and in which one or more H atoms may be replaced by a halogen atom, preferably a F atom or a cycloalkyl or a cycloalkoxy group having 3 to 6 C atoms, in which one or more H atoms may be replaced by a halogen atom, preferably cyclopentyl or cyclopentyloxy,
- Y⁰: denotes a H atom or CH₃, preferably a H atom, and
- X¹: denotes -CN, -SCN, a halogen atom, preferably a F atom or an alkyl or an alkoxy group having 1 to 3 C atoms or an alkenyl or an alkenyloxy group having 2 or 3 C atoms in which one or more H atoms are replaced by a halogen atom, preferably a F atom, mostly preferably F, CF₃ or OCF₃.

Although the choice of the substituent R¹ in the Formula I is not particularly limited, it is particularly advantageous to choose R¹ being an alkyl or a cycloalkyl group having 1 to 6 C atoms, wherein R¹ selected from the group consisting of methyl, ethyl, n-propyl, i-propyl, n-butyl, s-butyl, i-butyl, cyclopentyl is particularly preferred. Y⁰ may also be represented by a CH₃ group.

In particular, it showed to be highly advantageous to select the compound of Formula I from those represented by Formula I-4-1 below: 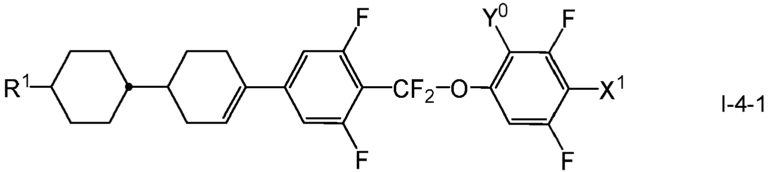 in which
- R¹: denotes a H atom, an alkyl or an alkoxy group having 1 to 6 C atoms in which one or more H atoms may be replaced by a halogen atom, preferably a F atom or a cycloalkyl or a cycloalkoxy group having 3 to 6 C atoms, preferably cyclopentyl or cyclopentyloxy,
- X¹: denotes a F atom or an alkyl or an alkoxy group having 1 to 3 C atoms in which one or more H atoms are replaced by a F atom, preferably F, CF₃ or OCF₃ and
- Y⁰: denotes a CH₃ group or a H atom.

In a particularly preferred embodiment, R¹ in the Formula I-4-1 is selected from the group consisting of methyl, ethyl, *n*-propyl, *i*-propyl, *n*-butyl, *s*-butyl, *i*-butyl and X¹ is represented by a F atom. In yet a further preferred embodiment, R¹ in the Formula I-4-1 may be represented by a cyclopentyl group.

The proportion of the compounds of Formula I or its subformulae in the medium is preferably from 2 to 35%, very preferably from 3 to 30%, most preferably from 4 to 20% by weight.

In a particularly preferred embodiment the compounds of general Formulae L1 and L2 can be represented by one of the following: 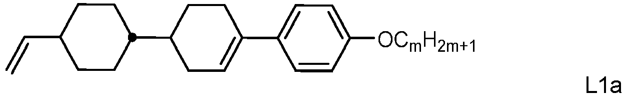 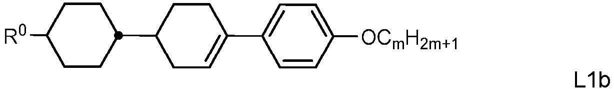 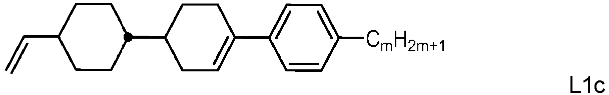 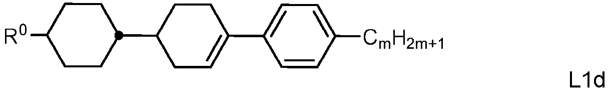 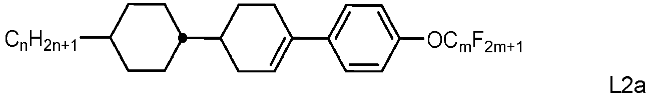 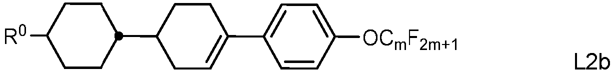 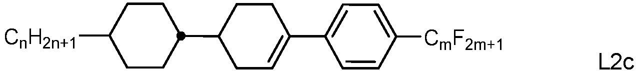 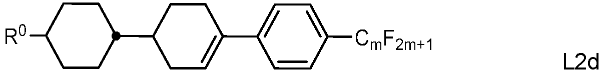 in which
- R⁰: is an alkyl group having 1 to 12 C atoms in which one or more CH₂ groups are optionally substituted by -C≡C-, -CF₂O-, -OCF₂-, -O-, 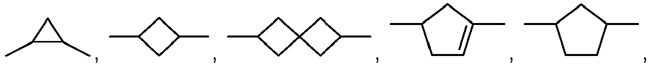 -CO-O- or -O-CO- in such a way that O atoms are not linked directly to one another, and in which one or more H atoms may be replaced by a halogen atom, preferably an alkyl group having 1 to 4 C atoms, alkenyl or an alkenyloxy group having 2 to 6 C atoms or a cycloalkyl or a cycloalkyloxy group having 3 to 6 C atoms, wherein vinyl, allyl or cyclopentyl are particularly preferable,
- n: denotes 1, 2, 3, 4 or 5, and
- m: denotes 1, 2, 3 or 4.

In a further embodiment, the one or more compounds of Formulae L1 and L2 are described by the Formulae L1-1 and L2-1: 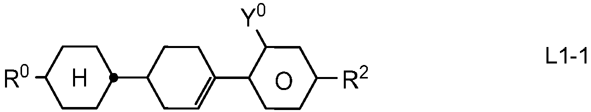 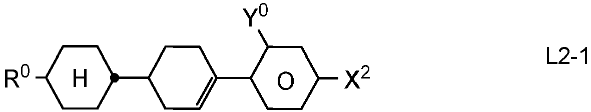 in which
- R⁰: an alkyl group having 1 to 6 C atoms or an alkenyl group having 2 to 12 C atoms in which one or more CH₂ groups are optionally substituted by -C≡C-, -CF₂O-, -OCF₂-, -CH=CH-, 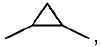 -O-, -CO-O- 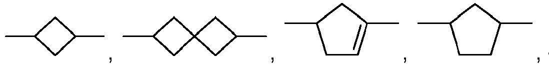 or -O-CO- in such a way that O atoms are not linked directly to one another, and in which one or more H atoms may be replaced by a halogen atom,
- R²: an alkyl group having 1 to 6 C atoms, in which one or more CH₂ groups are optionally substituted by -C≡C-, -CF₂O-, -OCF₂-, -CH=CH-, 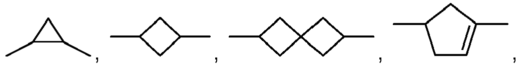 -O-, -CO-O- or -O-CO- in such a way that O atoms are 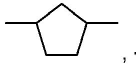 not linked directly to one another, and in which one or more H atoms may be replaced by a halogen atom;
- X²: a F atom or an alkyl or an alkoxy group having 1 to 3 C atoms or an alkenyl or an alkenyloxy group having 2 or 3 C atoms in which one or more H atoms are replaced by a F atom, and
- Y⁰: H or CH₃.

Very preferred compounds of Formula L1 are those selected from the group consisting of the following subformulae: 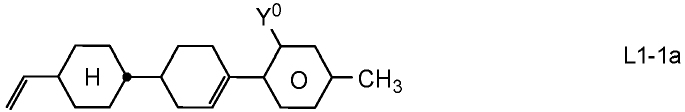 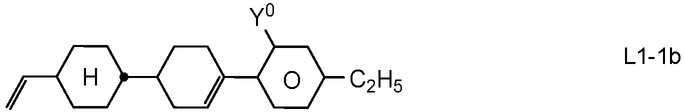 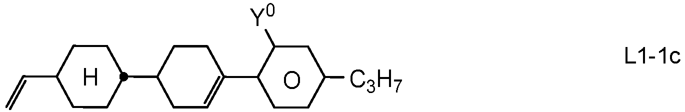 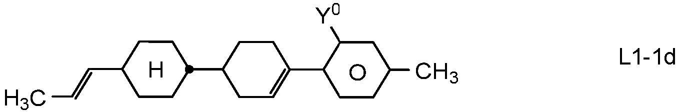 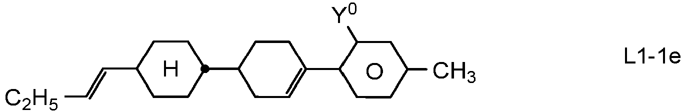 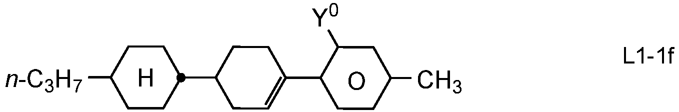 wherein Y⁰ is H or CH₃, preferably H.

Very preferred are the compounds of Formulae L1-1a, L1-1b and L1-1c, most preferred is the compound Formula L1-1a.

Particularly preferred compounds of Formula L2 are those selected from the group consisting of the following subformulae: 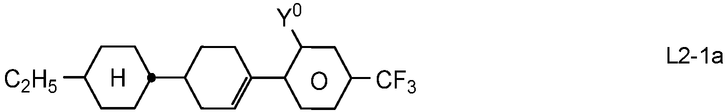 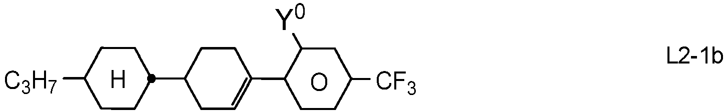 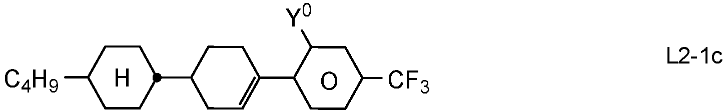 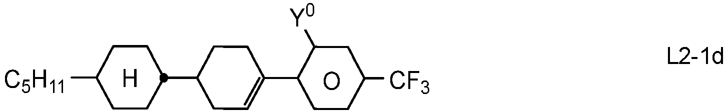 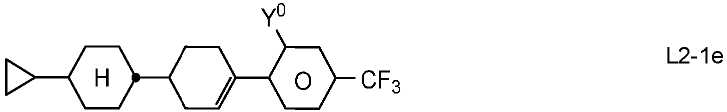 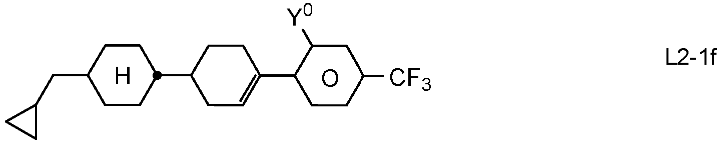 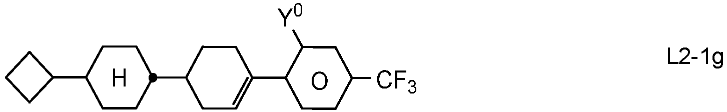 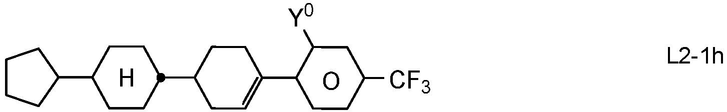 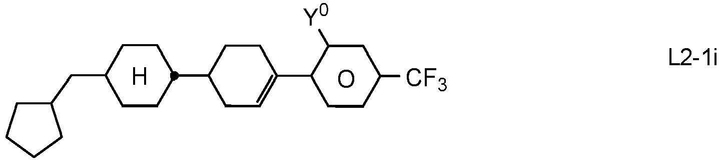 wherein Y⁰ is H or CH₃, preferably H.

Very preferred are the compounds of Formulae L2-1a, L2-1a, L2-1c, L2-1d, and L2-1i, most preferred is the compound Formula L2-11.

The proportion of the compounds of Formula L1 or L2 or its subformulae in the medium is preferably from 2 to 35%, very preferably from 3 to 30%, most preferably from 4 to 20% by weight.

Preferably the medium contains 1, 2 or 3 compounds of Formulae L1 or L2 or their subformulae.

Preferably the medium contains, in addition to the compounds of Formula I and L1 or L2, one or more compounds selected from the following formulae: 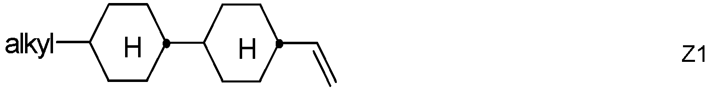 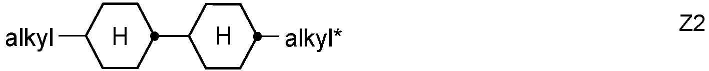 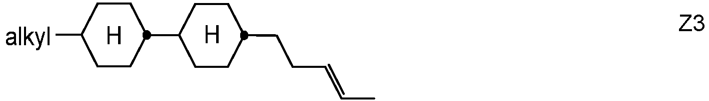 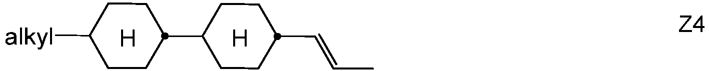 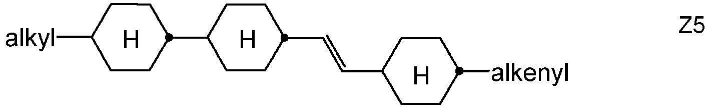 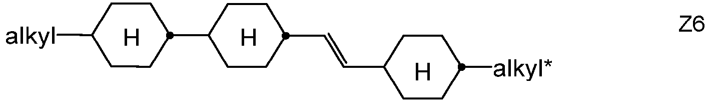 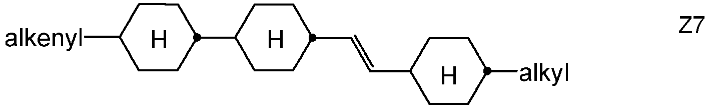 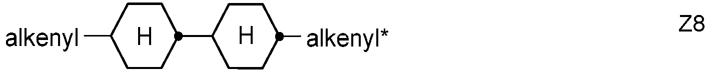 wherein
"alkyl" and "alkyl*" are, independently from one another, C₁₋₆-alkyl, and preferably denotes ethyl, propyl, butyl or pentyl, very preferably ethyl, propyl or butyl "alkenyl" and "alkenyl*" preferably denote C₂₋₆-alkenyl. Very preferred are compounds of Formula Z1 and Z2.

Preferred compounds of Formula Z1 to Z6 are those selected from the following subformulae

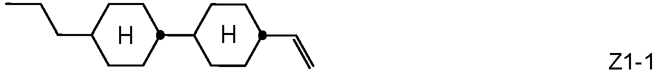

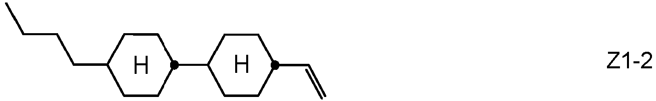

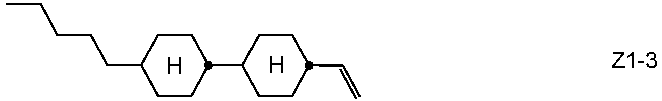

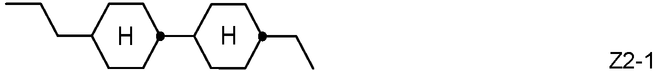

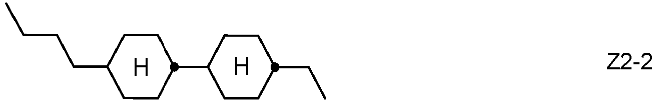

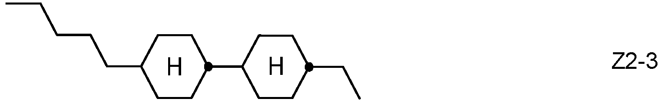

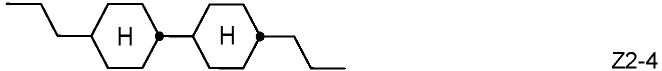

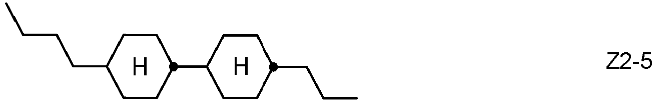

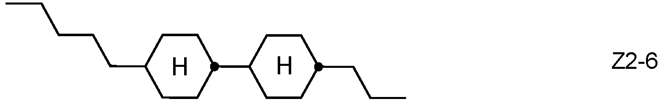

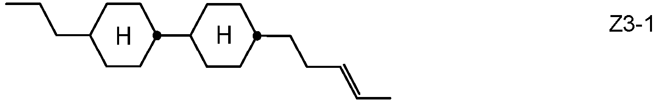

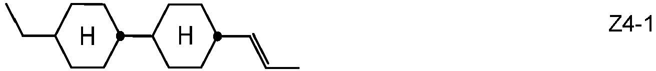

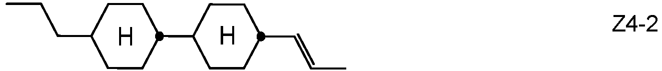

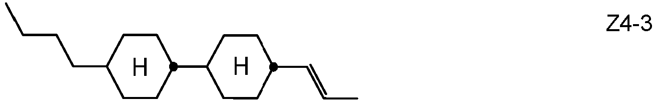

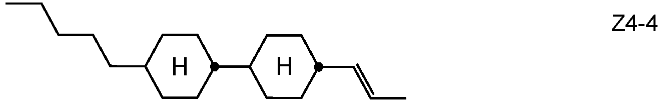

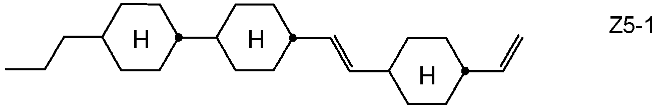

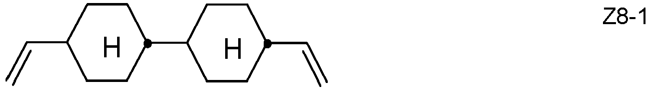

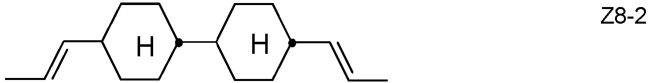

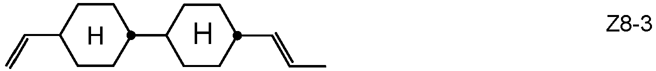

In another preferred embodiment the medium contains one or more compounds of Formula Z1 or its preferred subformulae and/or one or more compounds selected from Formulae Z2, Z3, Z4 and Z5 or their preferred subformulae.

Preferably the total proportion of compounds of Formulae Z1, Z2, Z3, Z4, Z5 and Z6 or their subformulae, such as CC-3-V in the medium is from 10 to 65 wt.-%, very preferably from 20 to 60 wt.-%, most preferably from 25 to 55 wt.-% by weight. In yet a more preferred embodiment, the compound of Formula Z1-1 is used in concentrations ranging from 10 wt.-% to 60 wt.-%, more preferably 10 wt.-% to 40 wt.-%, based on the total weight of the LC medium.

Preferably the medium contains 1, 2 or 3 compounds selected from the Formulae Z1, Z2, Z3 and Z4 or their subformulae.

The medium may additionally comprise one or more compounds of the following general formulae: 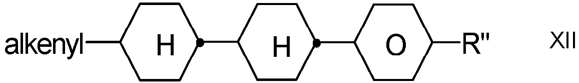 in which
- R": denotes C₁₋₆-alkyl, C₁₋₆-alkoxy or C₂₋₆-alkenyl, and
- "alkenyl": denotes C₂₋₆-alkenyl,

The compounds of the Formulae XII are preferably selected from the following subformulae: 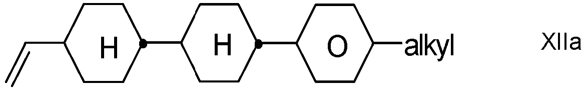 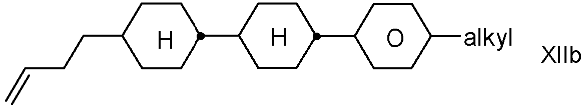 wherein "alkyl" is methyl, butyl, pentyl or hexyl

Particular preference is given to the compounds of the Formula Xlla. In the Formula IXb, "alkyl" preferably, independently of one another, denotes *n*-C₃H₇, *n-*C₄H₉ or *n*-C₅H₁₁, in particular *n*-C₃H₇.

Preferred compounds of subformula Xlla are selected from the following group:

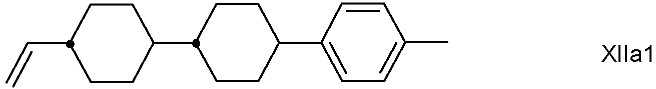

The medium may additionally comprise one or more compounds selected from the following formulae: 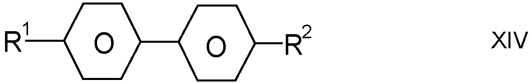 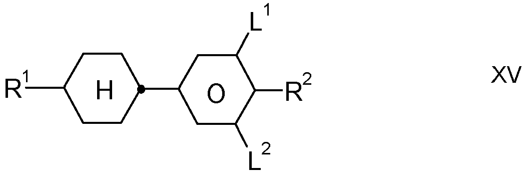 in which L¹ and L² have the meanings indicated in Formula I, and R¹ and R² each, independently of one another, denote n-alkyl, alkoxy, oxaalkyl, fluoroalkyl or alkenyl, each having up to 6 C atoms, and preferably each, independently of one another, denote alkyl having 1 to 6 C atoms; in the compound of the Formula XIV, at least one of the radicals R¹ and R² preferably denotes alkenyl having 2 to 6 C atoms.

The medium may further comprise one or more compounds of the Formula XIV in which at least one of the radicals R¹ and R² denotes alkenyl having 2 to 6 C atoms, preferably those selected from the following subformulae: 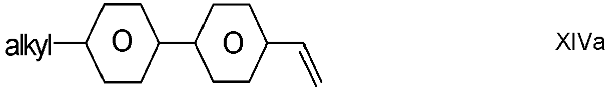 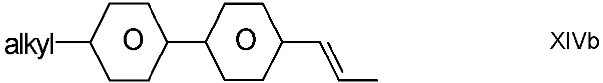 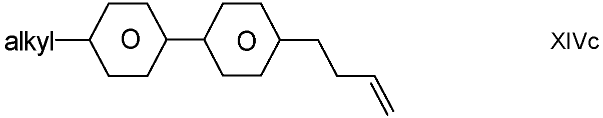 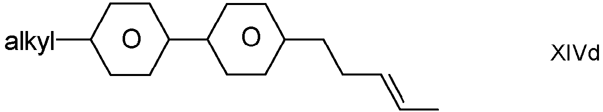 in which *"alkyl"* has the meaning indicated above, and preferably denotes methyl, ethyl or propyl;

The compounds of the Formula XIV are preferably selected from the following subformulae:

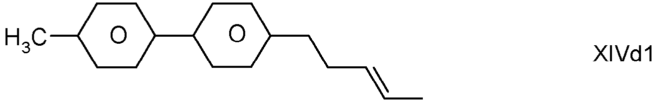

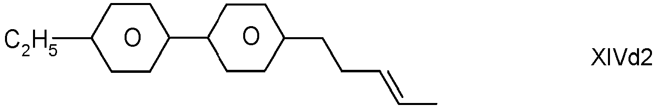

Very preferred are compounds of Formula XIVd1;
In yet a further embodiment the medium comprises one or more compounds of the Formula XVI, 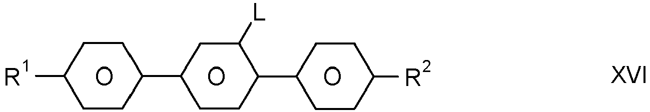 in which R¹ and R² have the meanings indicated in Formulae I and L1, respectively, and preferably each, independently of one another, denote alkyl having 1 to 6 C atoms. L denotes H or F.

Particularly preferred compounds of the Formula XVI are those of the subformulae 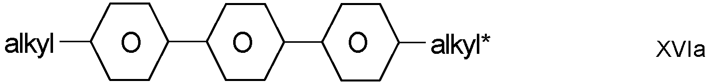 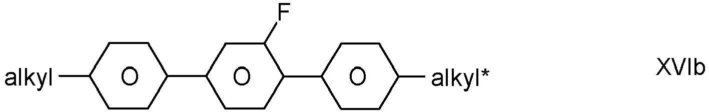 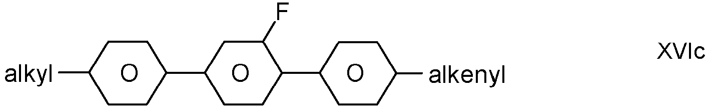 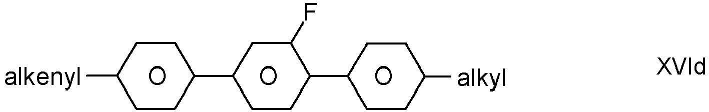 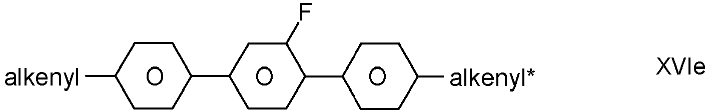 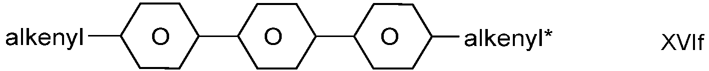 in which
- alkyl and alkyl*: each, independently of one another, denote a straight-chain alkyl radical having 1 to 6 C atoms, in particular ethyl, propyl or pentyl, and
- alkenyl and alkenyl*: each, independently of one another, denote a straight-chain alkenyl radical having 2 to 6 C atoms, in particular CH₂=CHC₂H₄, CH₃CH=CHC₂H₄, CH₂=CH and CH₃CH=CH.

Particular preference is given to the compounds of the Formulae XVIb and XVIc. Very particular preference is given to the compounds of the following subformulae 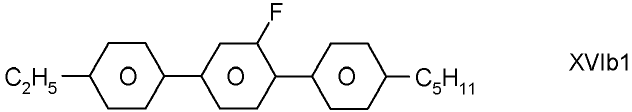 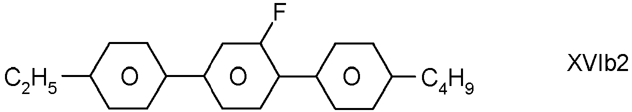 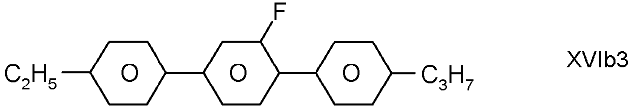 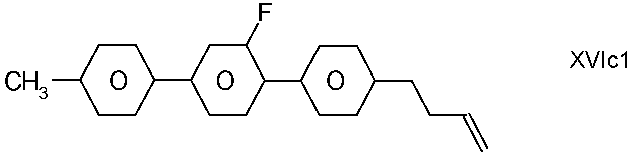 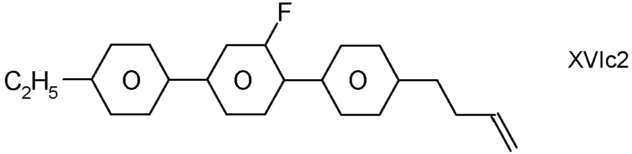 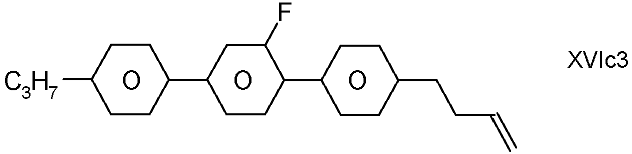
Very preferred are compounds of Formula XVlc2;
The medium comprises one or more compounds of the following formulae: 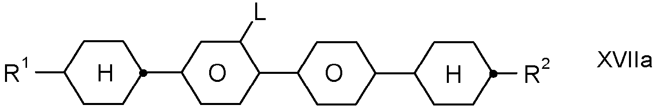 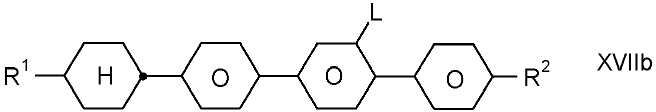 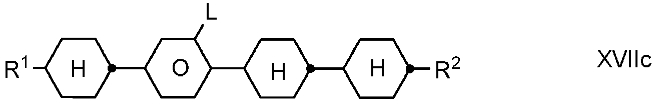 in which
   R¹ and R² have the meanings indicated in Formulae I and L1, respectively, and preferably each, independently of one another, denote alkyl having 1 to 6 C atoms. L denotes H or F.

Very preferred are compounds of Formula XVlla wherein L is H. Very preferred are compounds of Formula XVllb wherein L is F.

In one preferred embodiment according to the present invention, the LC medium contains, in addition to the compounds of Formula I and L1 and/or L2, one or more compounds selected from the Formulae Y and B 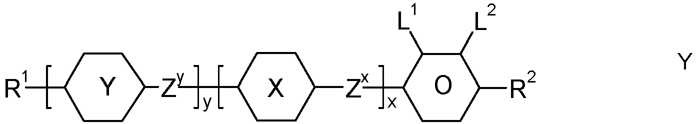 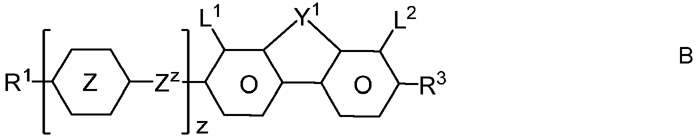 in which the individual radicals, on each occurrence identically or differently, and each, independently of one another, have the following meanings: 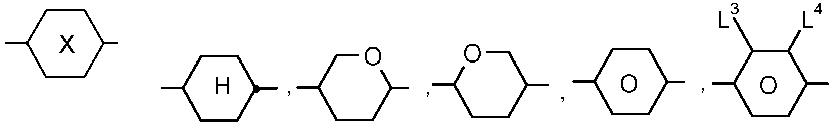 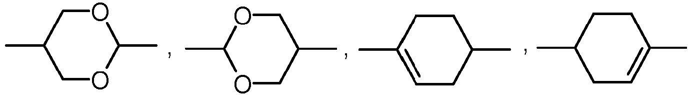 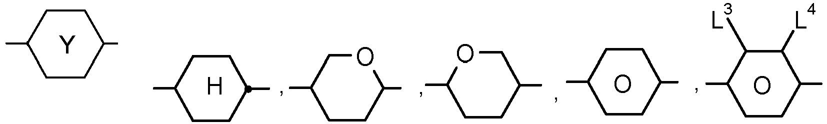 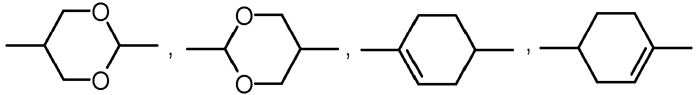 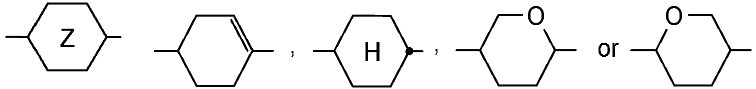
- R¹, R²: one of the meanings given for R¹ in Formula I,
- R³: one of the meanings given for R¹
- X^{x}, Z^{y}: -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond, preferably a single bond,
- Z^{z}: CH₂O or a single bond,
- Y¹: O or S,
- L¹-⁴: H, F or Cl, preferably H or F, very preferably F,
- x, y: 0, 1 or 2, with x+y ≤3,
- z: 0 or 1,

wherein in Formula B the dibenzofuran or dibenzothiophene group may also be further substituted by a methyl or methoxy group, and
wherein the compounds of Formula Y contain at least one substituent L¹⁻⁴ that is F or Cl, preferably F.

Preferably the LC medium according to this first preferred embodiment contains one or more compounds of Formula I and L1 and/or L2, one or more compounds selected from Formulae Z1, Z2 and Z3, and one or more compounds selected from Formulae Y and B.

The LC media according to this first preferred embodiment are especially suitable for use in LC displays of the HB-FFS or PS-HB-FFS mode.

In a second preferred embodiment according to the present invention, the LC medium does not contain a compound of the Formulae Y or B.

In the compounds of Formula Y and its subformulae, R¹ and R² preferably denote straight-chain alkyl or alkoxy having 1 to 6 C atoms, furthermore alkenyl having 2 to 6C atoms, in particular vinyl, 1E-propenyl, 1E-butenyl, 3-butenyl, 1E-pentenyl, 3E-pentenyl or 4-pentenyl.

In the compounds of Formula Y and its subformulae, preferably both radicals L¹ and L² denote F. In another preferred embodiment of the present invention, in the compounds of Formula Y and its subformulae one of the radicals L¹ and L² denotes F and the other denotes CI.

In a preferred embodiment of the present invention the medium contains one or more compounds of Formula Y selected from the following subformulae 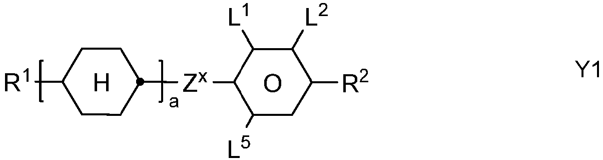 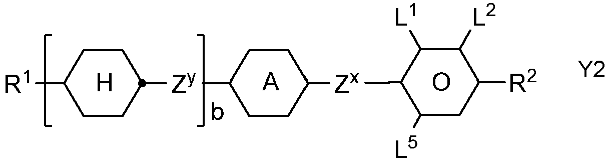 wherein L¹, L², R¹, R², Z^{x}, Z^{y}, x and y have the meanings given in Formula Y or one of the preferred meanings given above in Formula I,
- a: denotes 1 or 2,
- b: denotes 0 or 1,

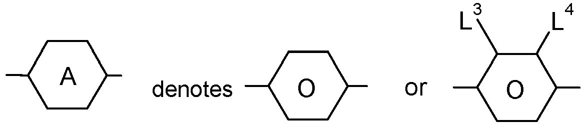

- L³, L⁴: denote F or Cl, preferably F, and
- L⁵: denotes a H atom or CH₃.

Preferably, in the compounds of Formula Y1 and Y2 both L¹ and L² denote F or one of L¹ and L² denotes F and the other denotes Cl, or both L³ and L⁴ denote F or one of L³ and L⁴ denotes F and the other denotes CI.

Preferably, the medium comprises one or more compounds of the Formula Y1 selected from the group consisting of the following subformulae 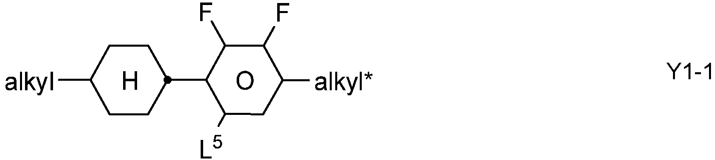 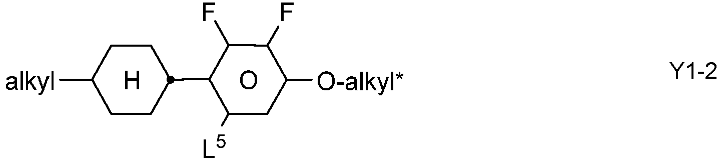 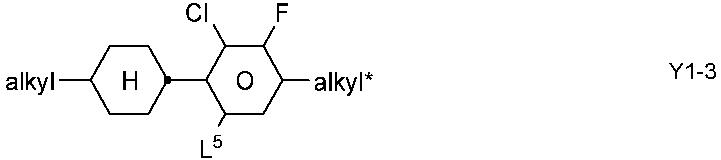 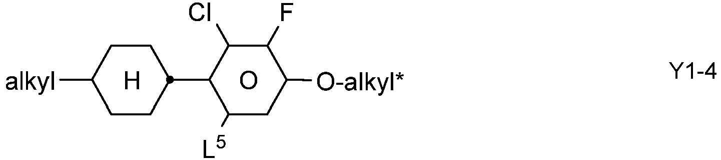 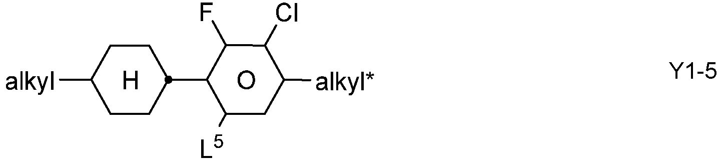 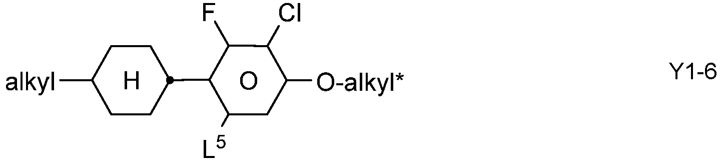 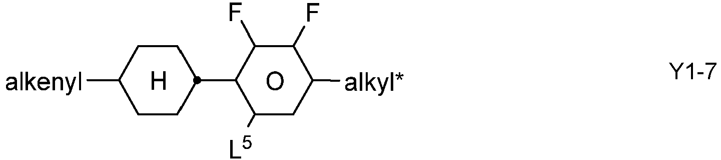 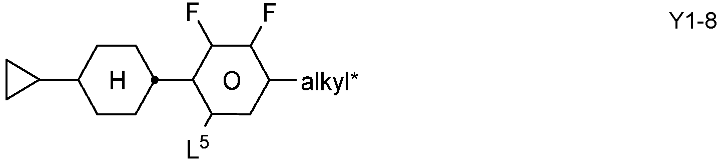 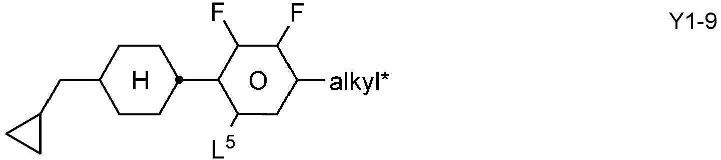 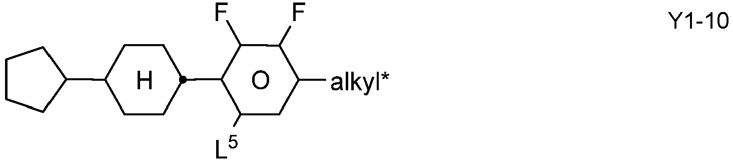 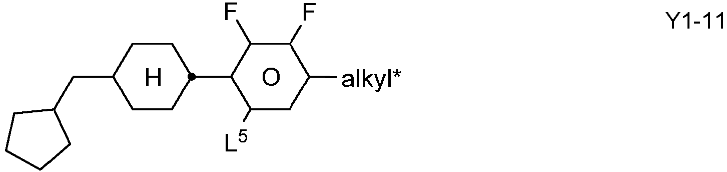 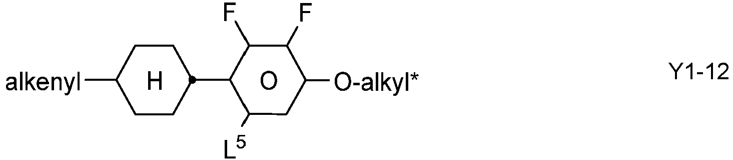 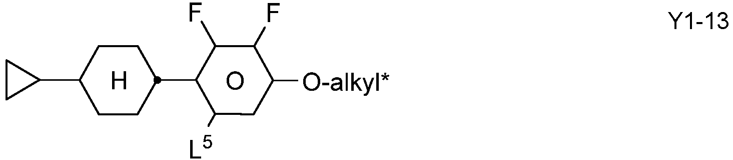 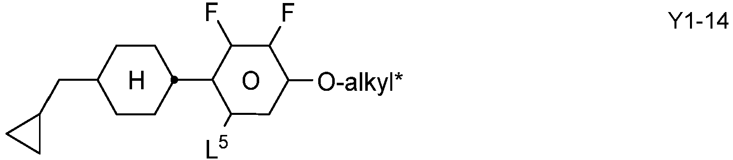 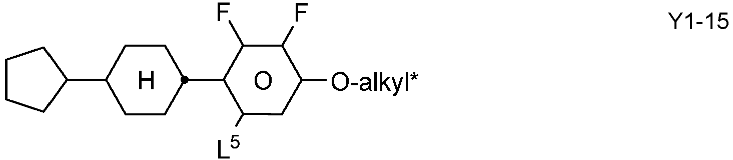 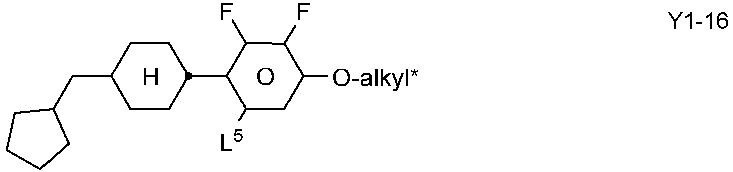 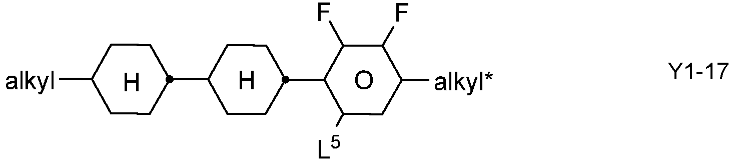 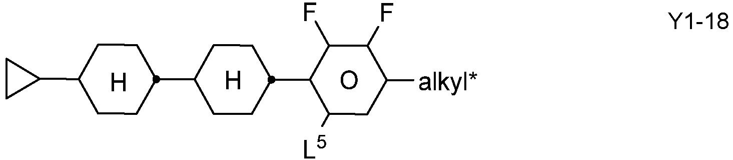 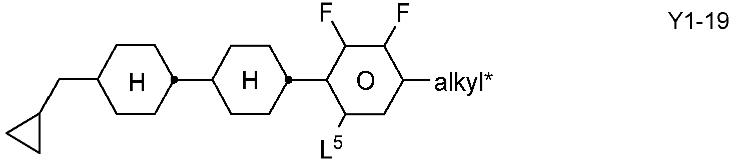 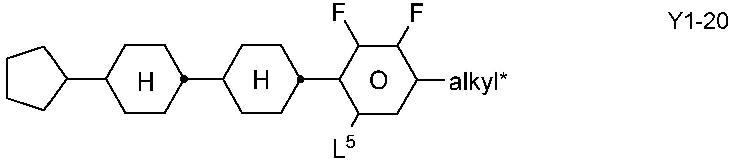 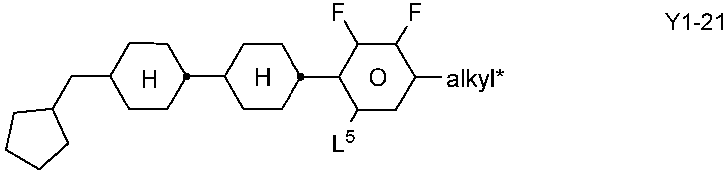 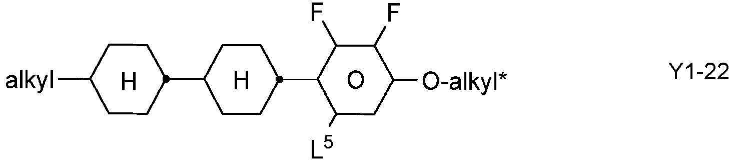 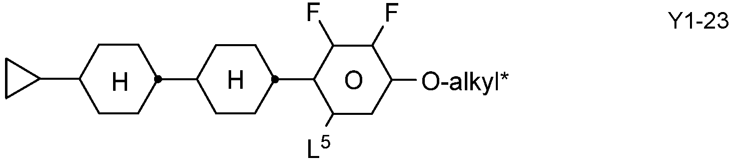 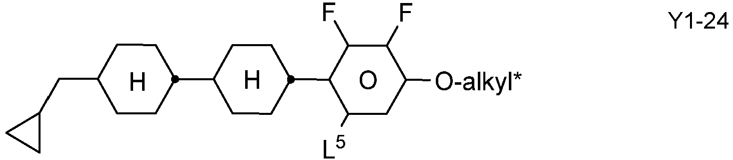 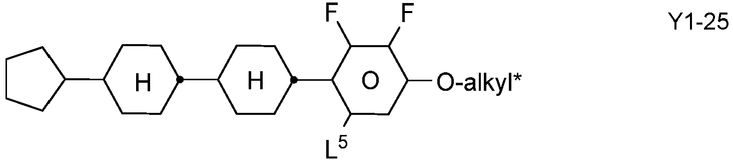 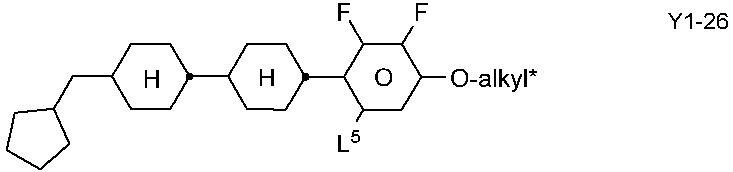 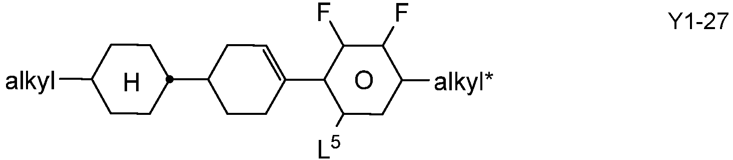 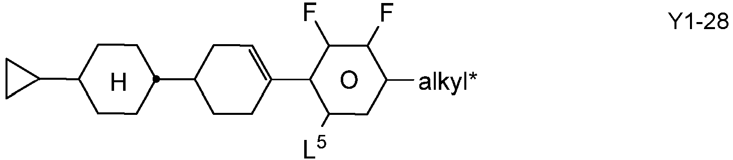 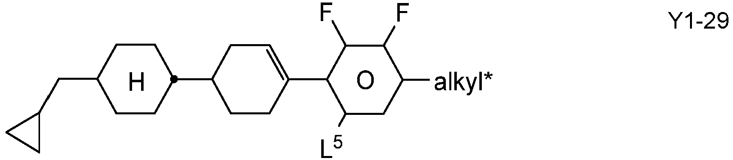 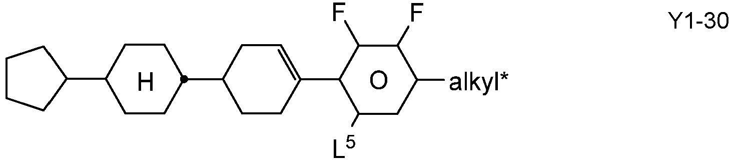 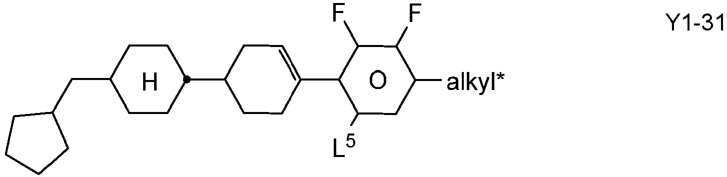 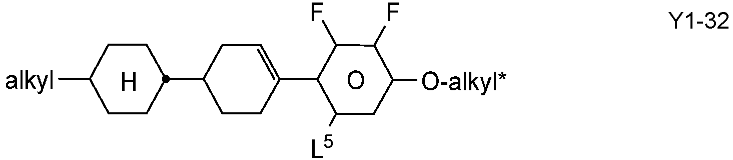 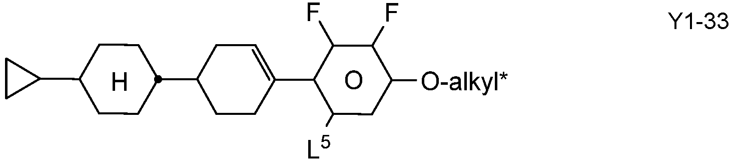 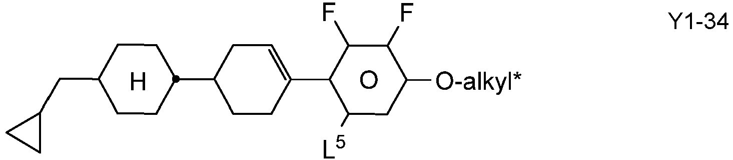 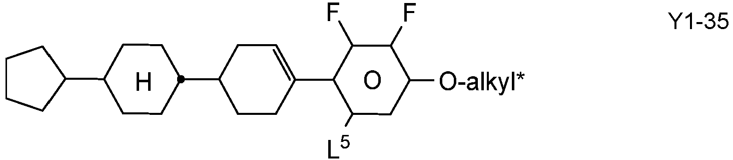 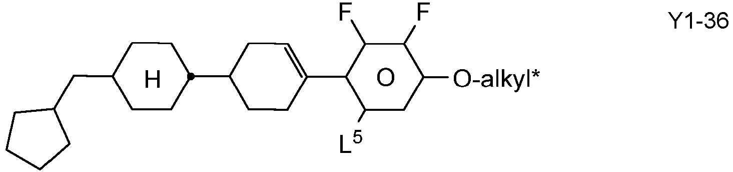 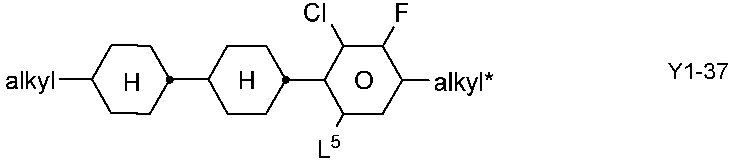 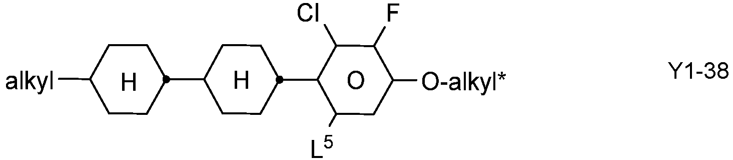 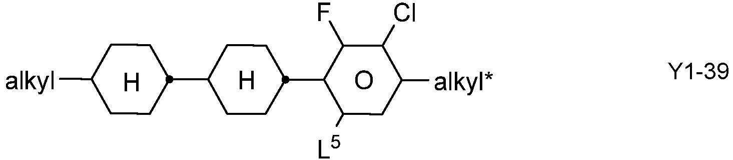 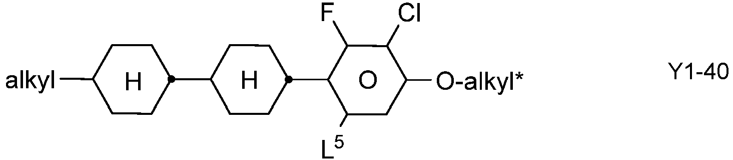 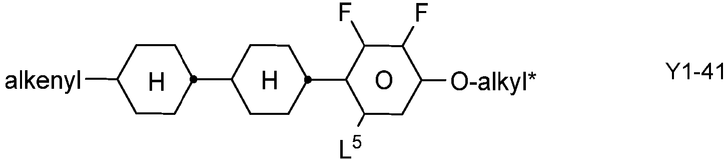 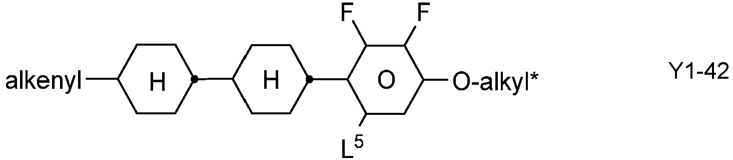 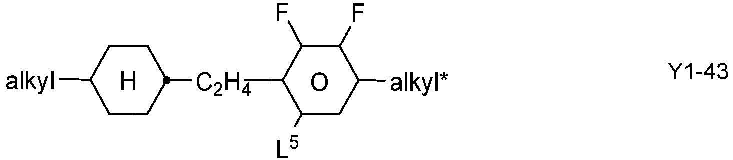 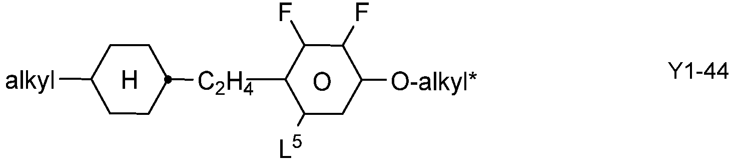 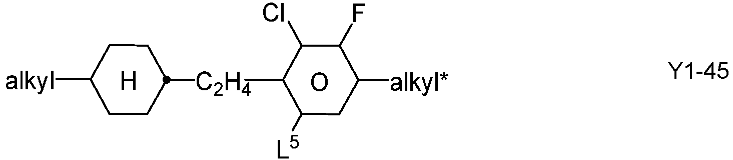 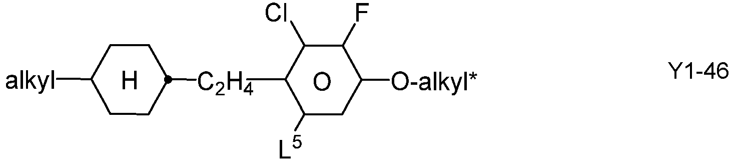 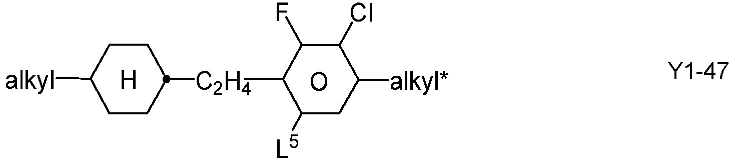 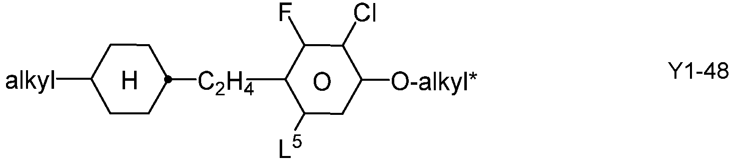 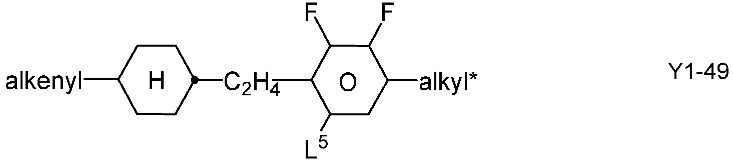 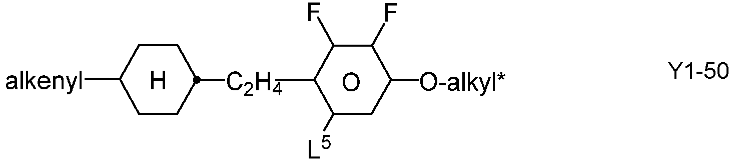 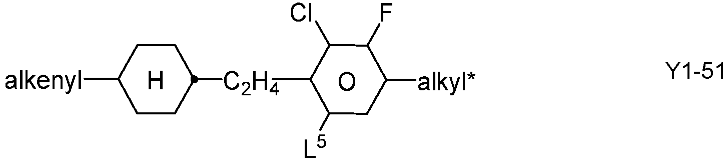 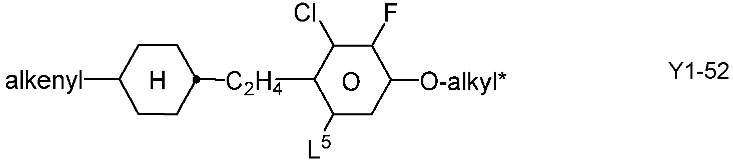 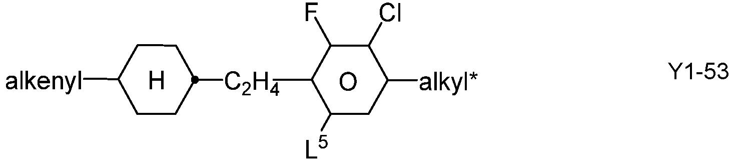 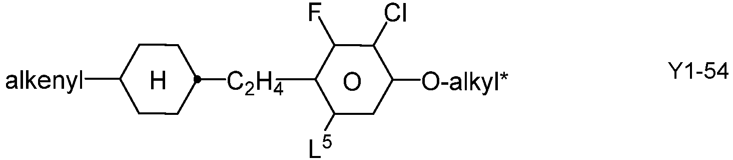 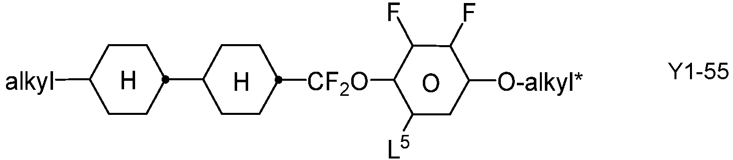 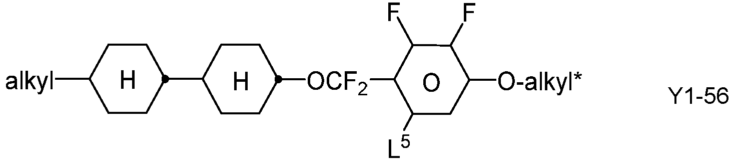 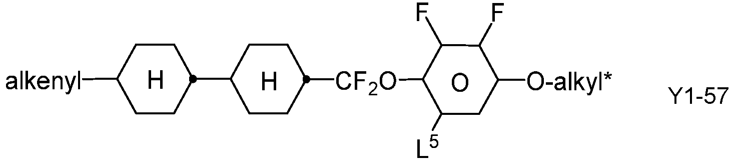 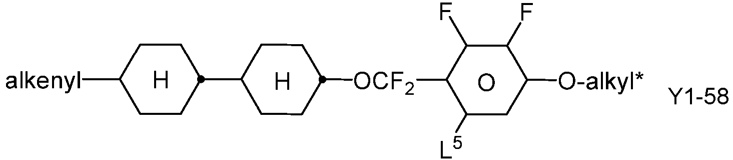 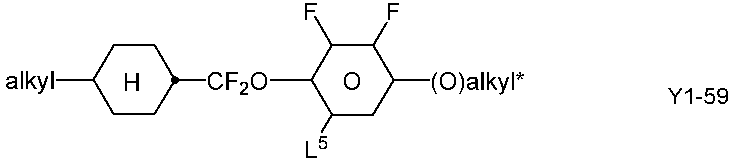 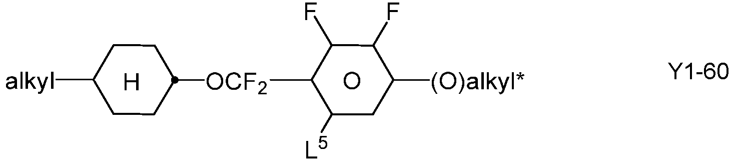 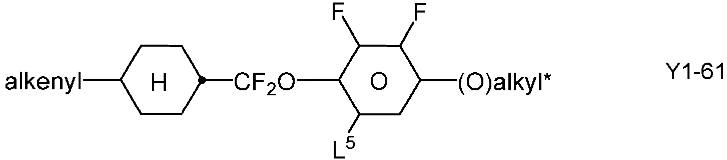 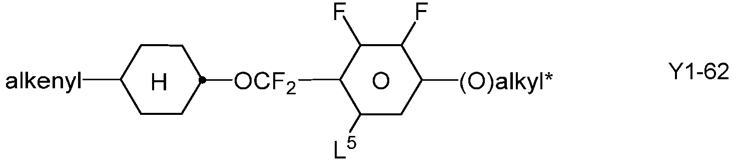 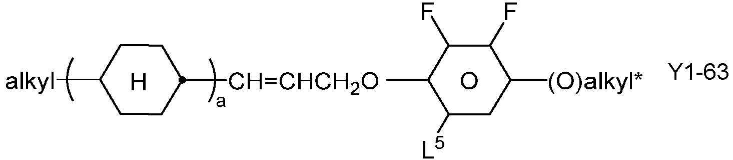 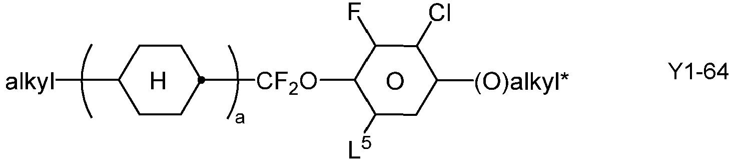 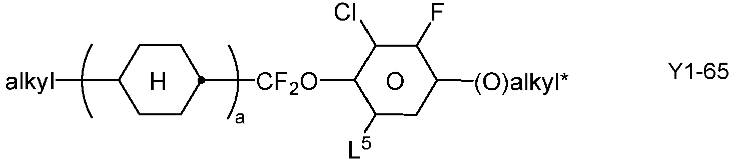 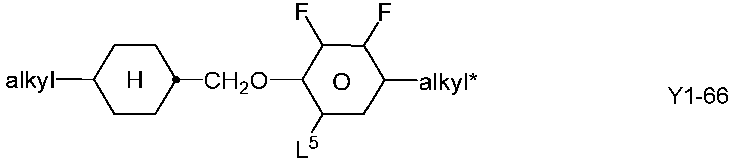 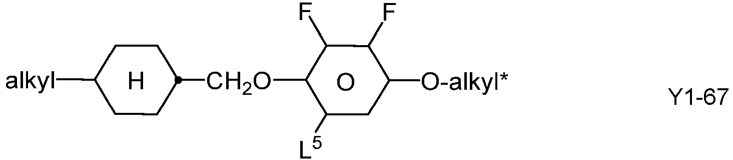 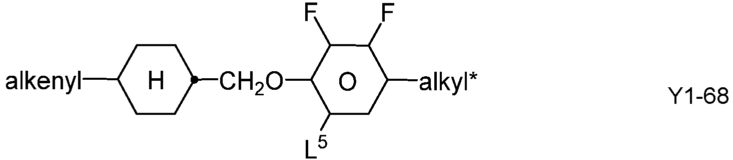 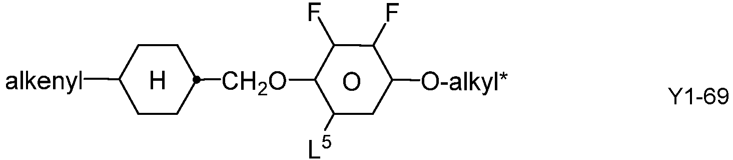 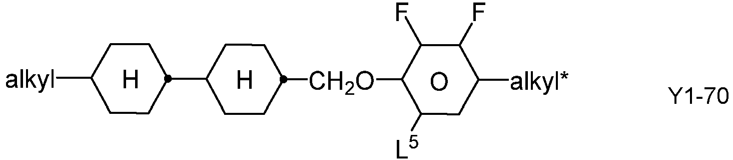 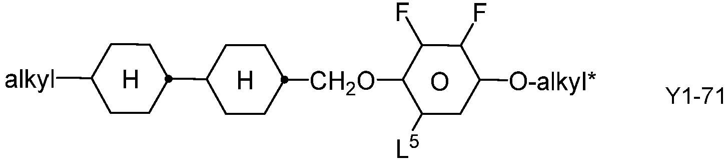 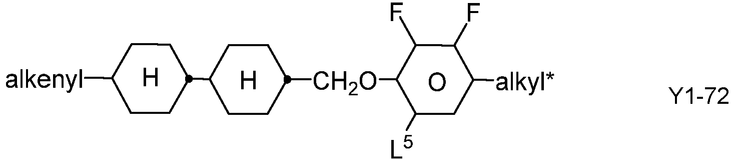 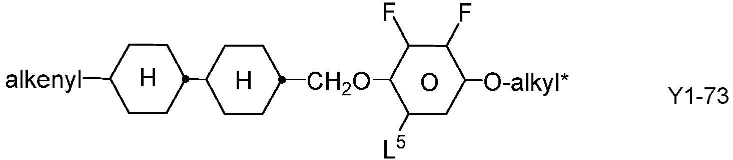 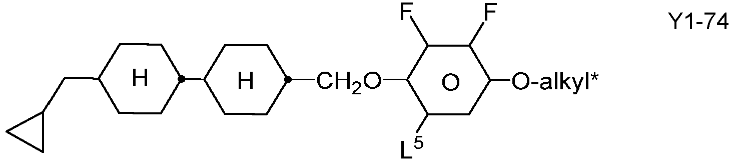 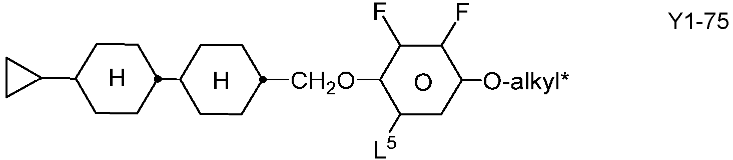 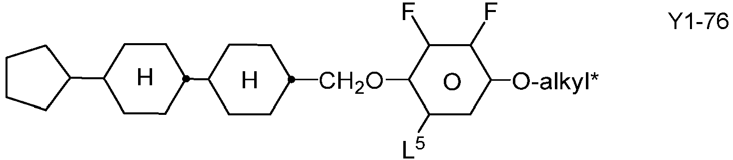 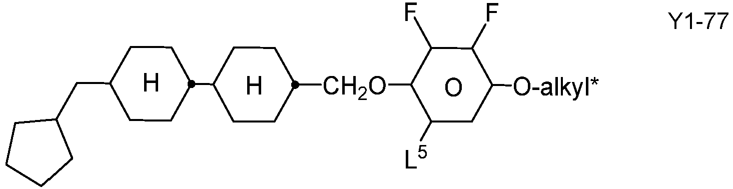 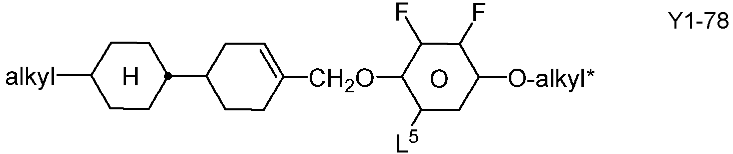 in which
a denotes 1 or 2,
*"alkyf"* and *"alkyl*"* each, independently of one another, denote a straight-chain alkyl radical having 1 to 6 C atoms,
*"alkenyl"* denotes a straight-chain alkenyl radical having 2 to 6 C atoms, and L⁵ denotes a H atom or CH₃.
*"alkenyf"* preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferably, the medium contains one or more compounds of Formula Y1 selected from Formulae Y1-1, Y1-2, Y1-7, Y1-12, Y1-17, Y1-22, Y1-40, Y1-41, Y1-42, Y1-44, Y1-50 and Y1-68. L⁵ preferably denotes a H atom.

Further preferably, the medium comprises one or more compounds of the Formula Y2 selected from the group consisting of the following subformulae: 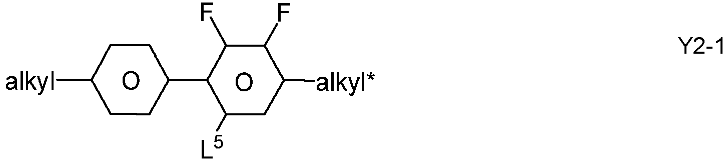 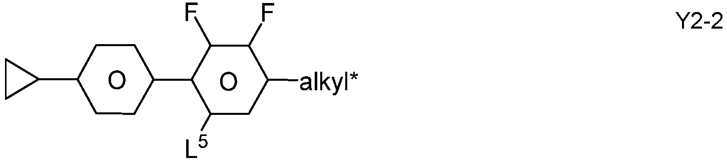 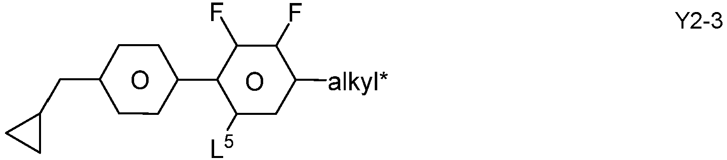 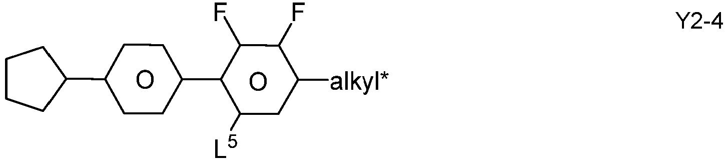 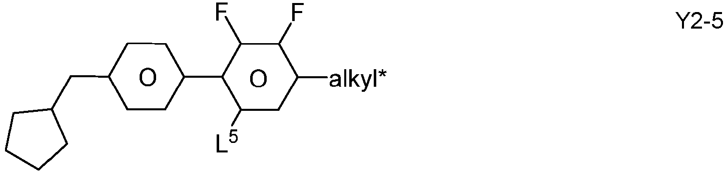 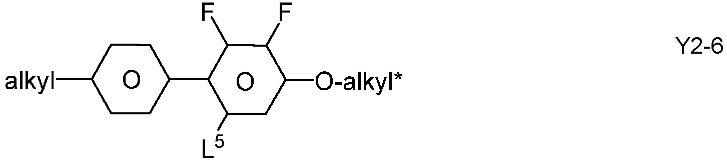 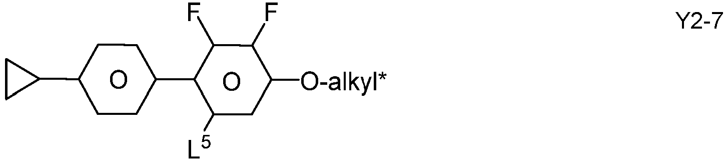 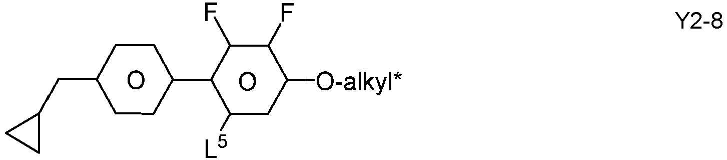 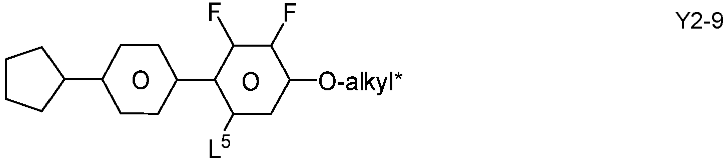 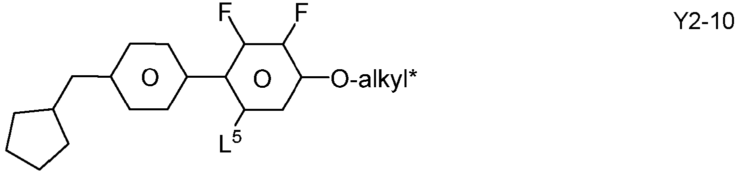 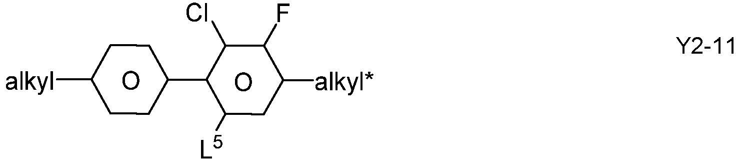 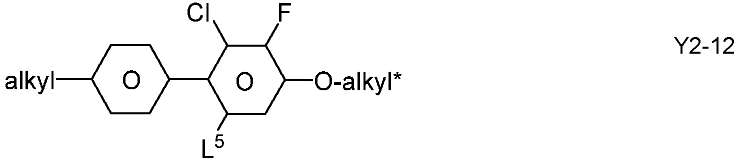 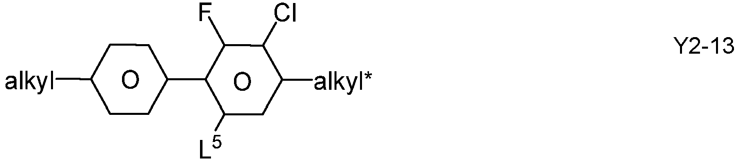 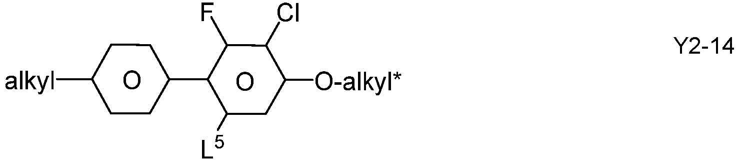 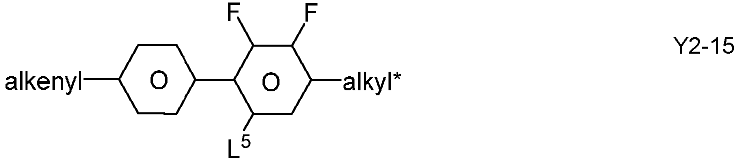 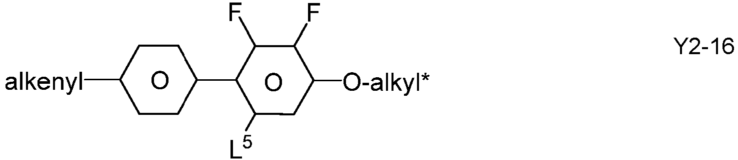 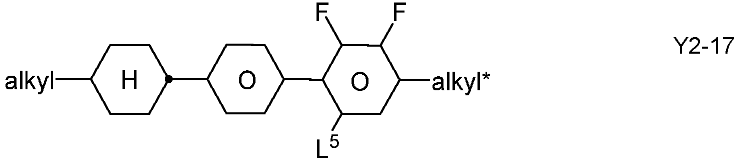 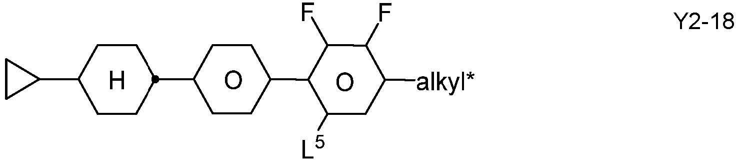 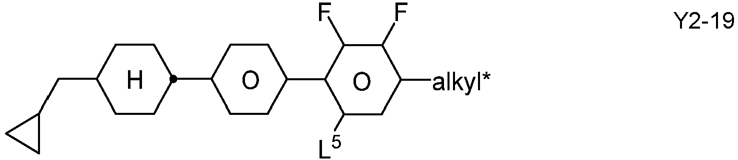 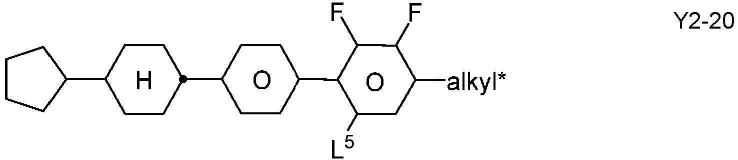 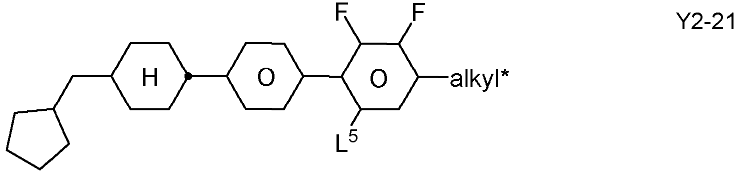 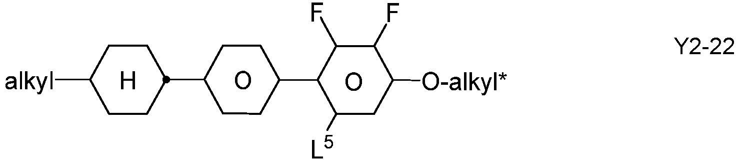 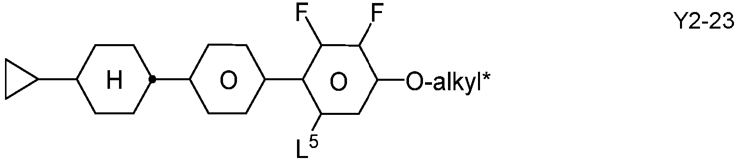 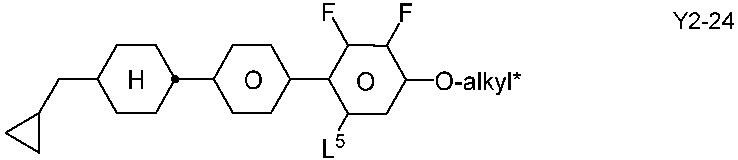 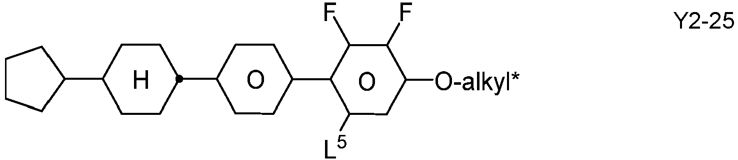 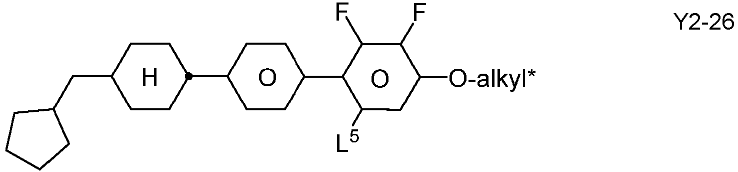 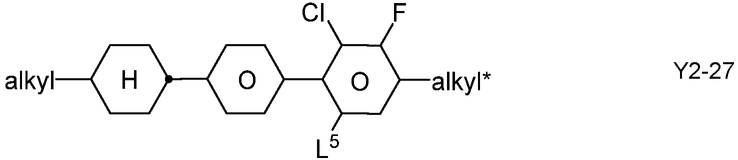 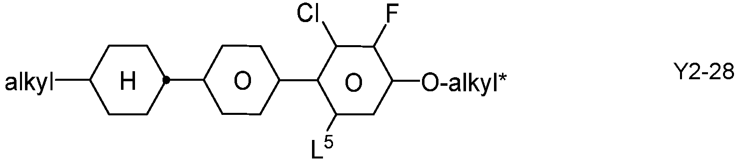 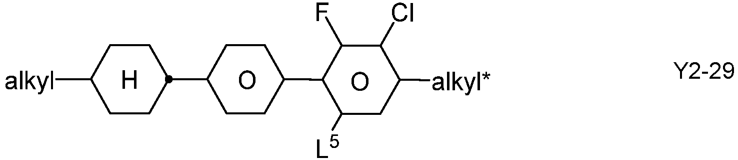 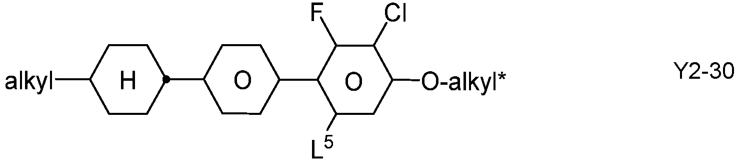 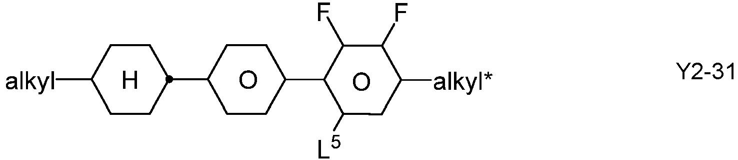 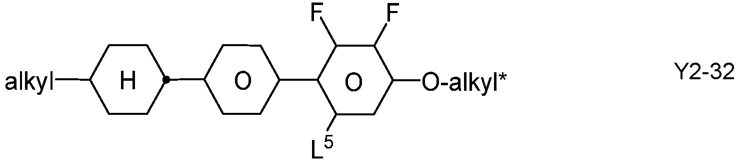 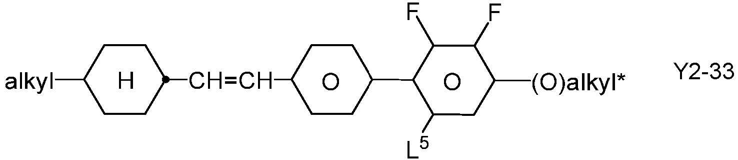 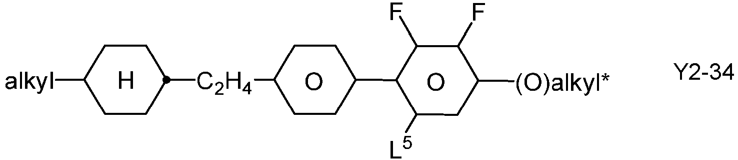 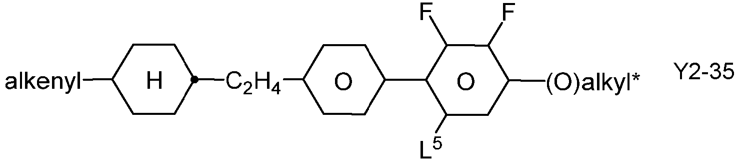 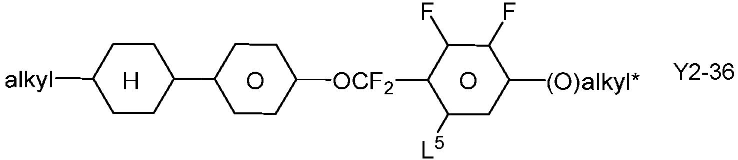 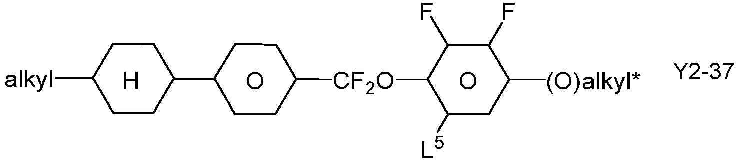 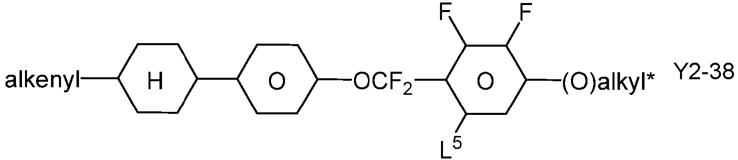 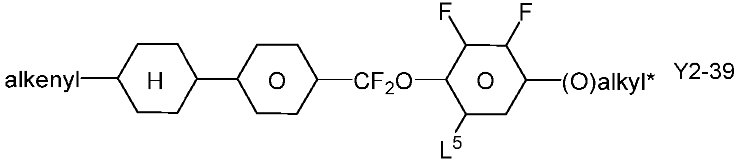 in which
*"alkyf"* and *"alkyl*"* each, independently of one another, denote a straight-chain alkyl radical having 1 to 6 C atoms, and
*"alkenyl"* denotes a straight-chain alkenyl radical having 2 to 6 C atoms, and (O) denotes an oxygen atom or a single bond, and
L⁵ denotes a H atom or CH₃, preferably a H atom.
*"alkenyf"* preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferably, the medium contains one or more compounds of Formula Y2 selected from Formulae Y2-2 and Y2-10.

The proportion of the compounds of Formula Y1 or its subformulae in the medium is preferably from 0 to 10% by weight.

The proportion of the compounds of Formula Y2 or its subformulae in the medium is preferably from 0 to 10% by weight.

The total proportion of the compounds of Formula Y1 and Y2 or their subformulae in the medium is preferably from 1 to 20%, very preferably from 2 to 15% by weight.

Preferably the medium contains 1, 2 or 3 compounds of Formula Y1 and Y2 or their subformulae, very preferably selected from Formulae Y1-2, Y1-22, Y1-66, Y1-70, Y2-6 and Y2-22.

In another preferred embodiment of the present invention the medium contains one or more compounds of Formula Y selected from the following subformula 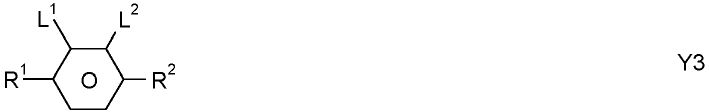 wherein L¹, L², R¹ and R² have one of the meanings given in Formula Y or one of the preferred meanings as given in Formulae I and L1.

Preferred compounds of the Formula Y3 are selected from the group consisting of the following subformulae 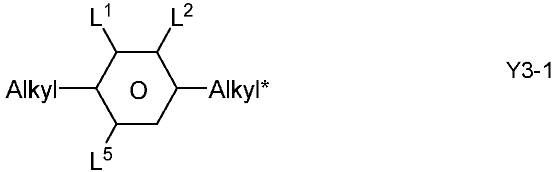 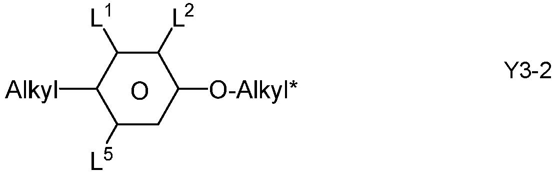 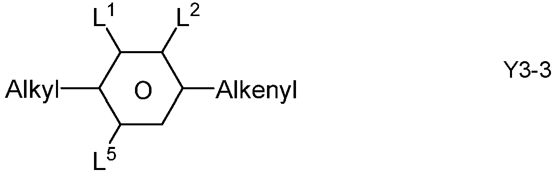 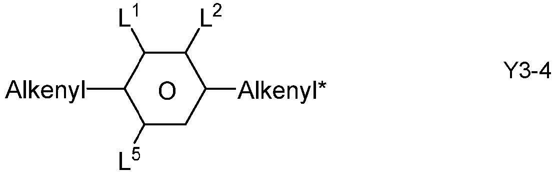 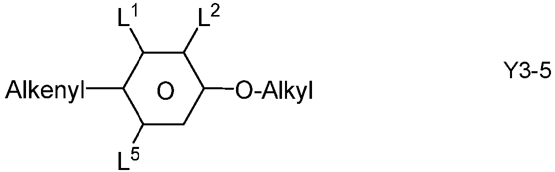 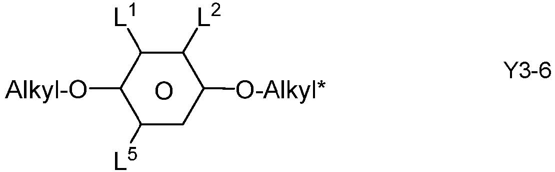 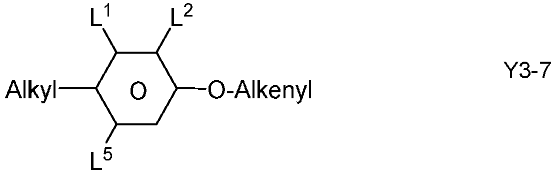 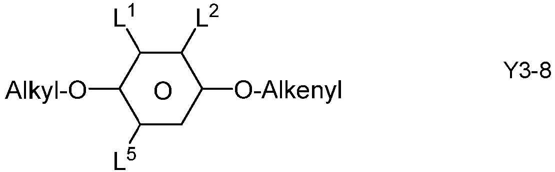 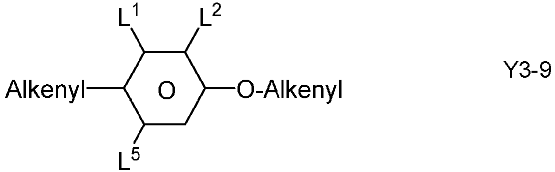 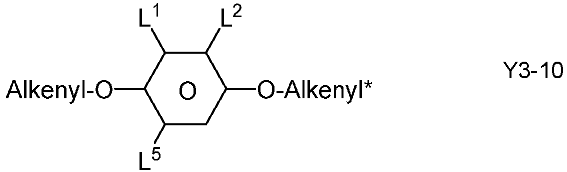 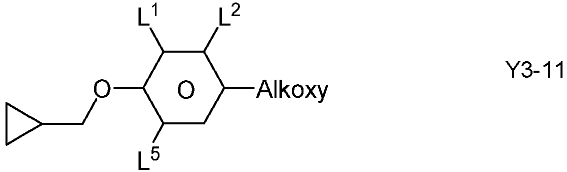 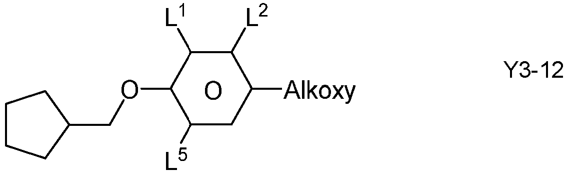 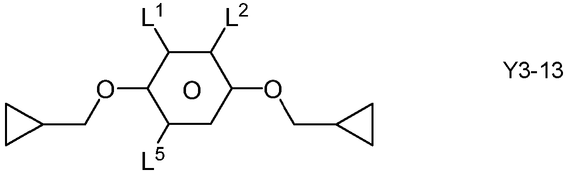 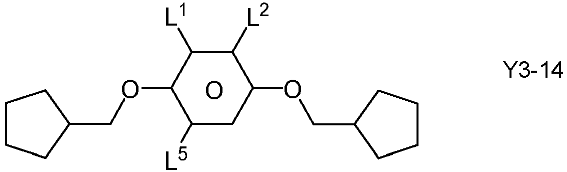 in which,
*"Alkyf"* and *"Alkyl*"* each, independently of one another, denote a straight-chain alkyl radical having 1 to 6 C atoms,
*"Alkenyf'* and *"Alkenyl*"* each, independently of one another, denote a straight-chain alkenyl radical having 2 to 6 C atoms, and
O denotes an oxygen atom or a single bond.

*"Alkenyf'* and *"Alkenyl*"* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred compounds of the Formula Y3 are selected from the group consisting of following subformulae: 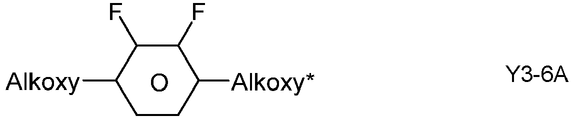 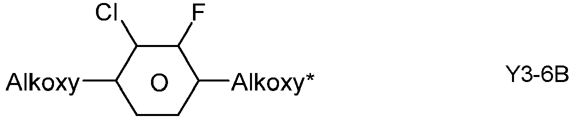 wherein *"Alkoxy"* and *"Alkoxy*"* each, independently of one another, preferably denote straight-chain alkoxy with 3, 4, or 5 C atoms.

Preferably, in the compounds of Formula Y3 and its subformulae both L¹ and L² denote F. Further preferably in the compounds of Formula Y3 one of the radicals L¹ and L² denotes F and the other denotes CI.

The proportion of the compounds of Formula Y3 or its subformulae in the medium is preferably from 1 to 10%, very preferably from 1 to 6% by weight.

Preferably, the medium contains 1, 2 or 3 compounds of Formula Y3 or its subformulae, preferably of Formula Y3-6, very preferably of Formula Y3-6A.

In another preferred embodiment the present invention the medium contains one or more compounds of Formula Y selected from the subformula Y4 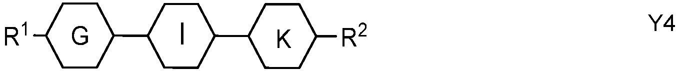 in which R¹ and R² each, independently of one another, have one of the meanings indicated above in Formula Y, and 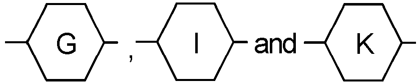 each, independently of one another, denote 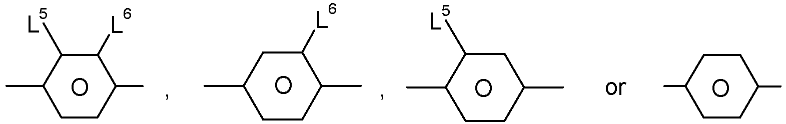 in which L⁵ denotes F or Cl, preferably F, and L⁶ denotes F, Cl, OCF₃, CF₃, CH₃, CH₂F or CHF₂, preferably F, and preferably at least one of the rings G, I and K is different from unsubstituted benzene.

Preferred compounds of the Formula Y4 are selected from the group consisting of the following subformulae: 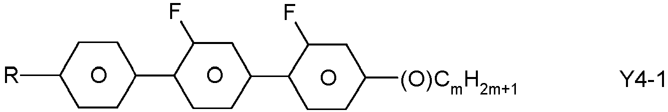 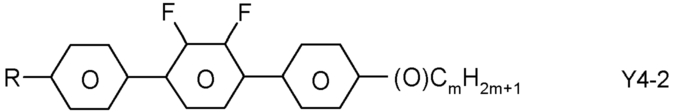 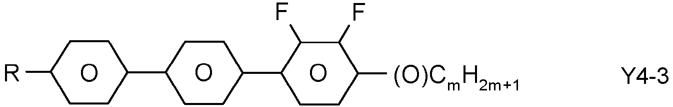 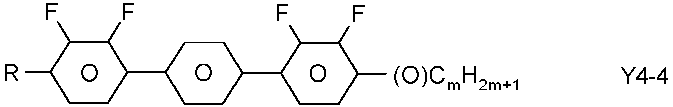 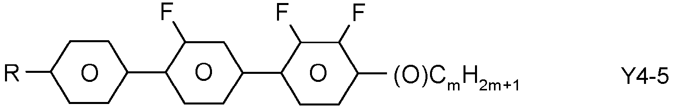 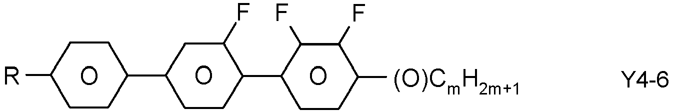 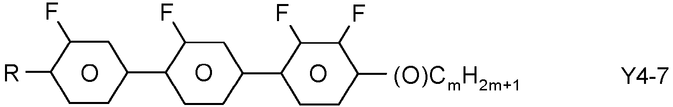 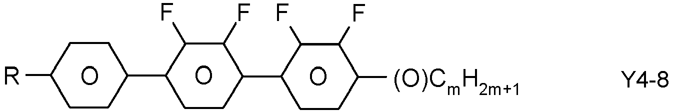 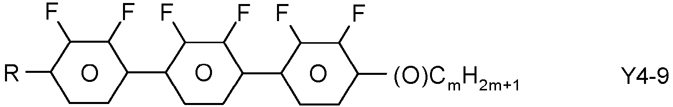 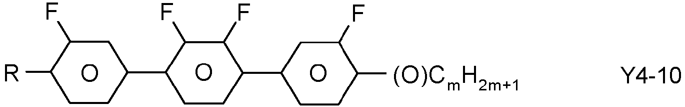 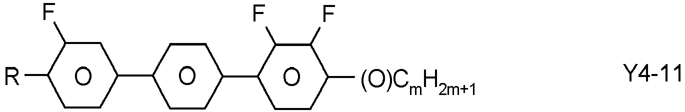 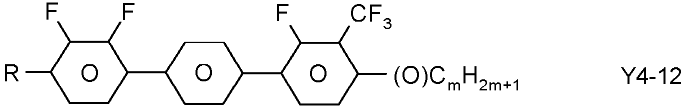 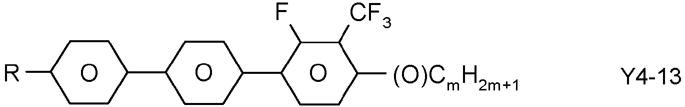 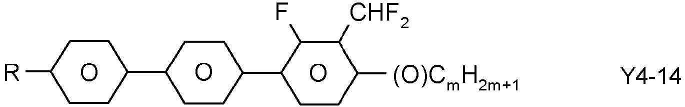 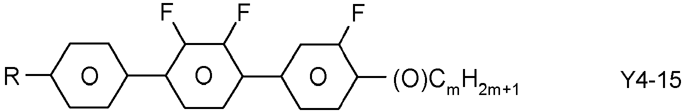 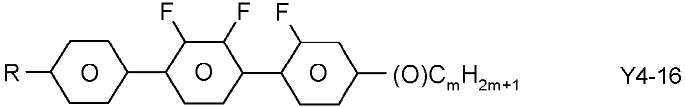 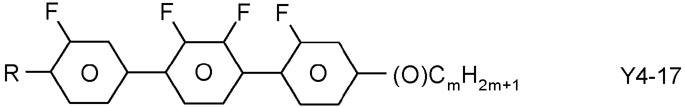 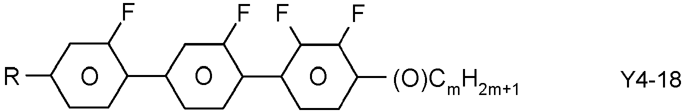 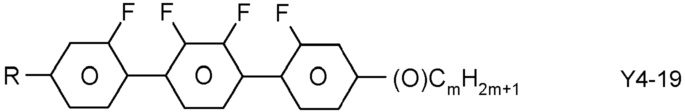 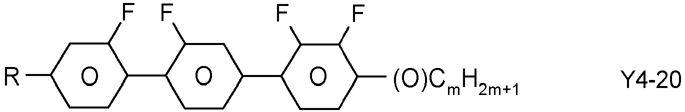 in which
- R: denotes a straight-chain alkyl or alkoxy radical having 1-7 C atoms,
- R*: denotes a straight-chain alkenyl radical having 2-7 C atoms,
- (O): denotes an oxygen atom or a single bond, and m denotes an integer from 1 to 6.

R* preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

R preferably denotes methyl, ethyl, propyl, butyl, pentyl, hexyl, methoxy, ethoxy, propoxy, butoxy or pentoxy.

The proportion of the compounds of Formula Y4 or its subformulae in the medium is preferably from 1 to 10%, very preferably from 1 to 6% by weight.

Particularly preferred compounds are those of the subformulae 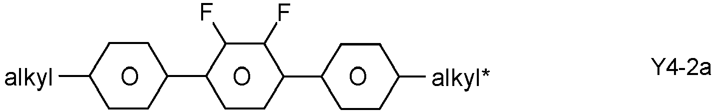 in which
alkyl and alkyl* each, independently of one another, denote a straight-chain alkyl radical having 1 to 6 C atoms, in particular ethyl, propyl or pentyl

Use of the following compounds is particularly advantageous:

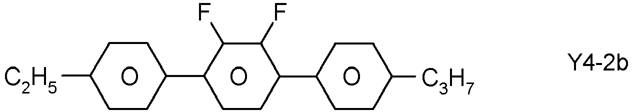

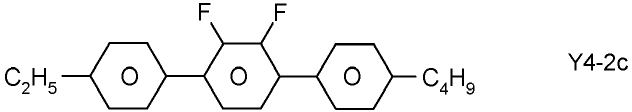

In another preferred embodiment the present invention the medium contains one or more compounds of Formula Y selected from the group consisting of the following subformulae 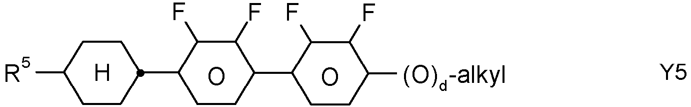 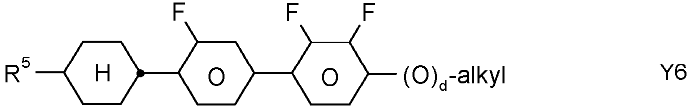 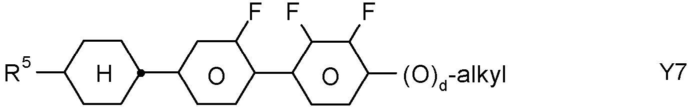 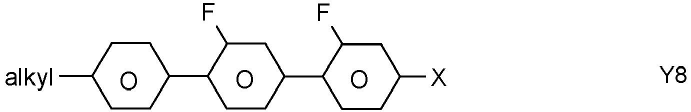 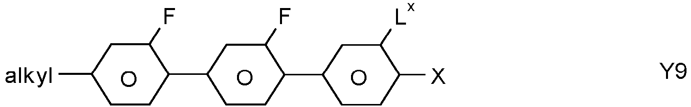 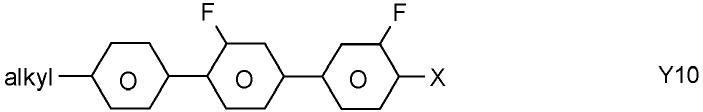 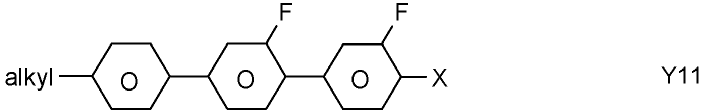 in which R⁵ has one of the meanings indicated above in Formula Y for R¹, "alkyl" denotes a straight-chain alkyl radical having 1 to 6 C atoms, L^{X} denotes H or F, X denotes F, Cl, OCF₃, OCHF₂ or OCH=CF₂, d denotes 0 or 1, and z and m each, independently of one another, denote an integer from 1 to 6.

R⁵ in these compounds is particularly preferably C₂₋₆-alkyl or -alkoxy or C₂₋₆-alkenyl, d is preferably 1. X in these compounds is particularly preferably F. The LC medium according to the invention preferably comprises one or more compounds of the above-mentioned formulae in amounts of ≥ 5% by weight.

In the compounds of Formula B and its subformulae, R¹ and R³ preferably denote straight-chain alkyl or alkoxy having 1 to 6 C atoms, in particular methoxy, ethoxy, propoxy or butoxy, furthermore alkenyl having 2 to 6 C atoms, in particular vinyl, 1E-propenyl, 1E-butenyl, 3-butenyl, 1E-pentenyl, 3E-pentenyl or 4-pentenyl.

In a preferred embodiment of the present invention, the medium contains one or more compounds of Formula B selected from the following subformulae 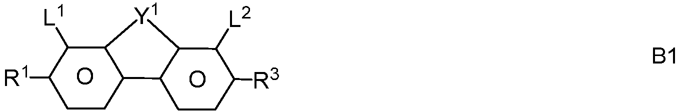 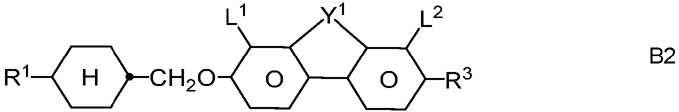 wherein L¹, L², R¹ and R³ have the meanings given in Formula B.

Preferred compounds of Formula B1 are selected from the following subformulae: 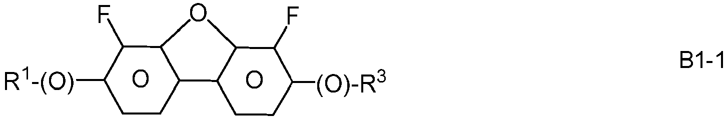 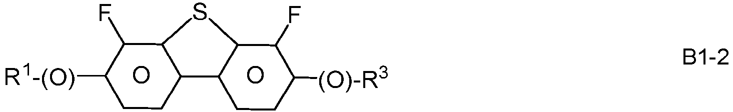 wherein R¹ and R³ independently denote a straight-chain alkyl radical having 1 to 6 C atoms, in which one or more CH₂ groups are optionally substituted by -C≡C-, -CF₂O-, -OCF₂-, -CH=CH-, 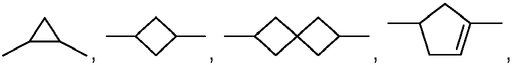 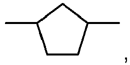 -O-, -CO-O- or -O-CO- in such a way that O atoms are not linked directly to one another, and in which one or more H atoms may be replaced by a halogen atom. Very preferred are compounds of Formula B1-1 and B1-2 wherein both groups (O) denote an oxygen atom and R¹ and R³ independently denote an alkyl group being methyl, ethyl, propyl, butyl, pentyl or hexyl, which are preferably straight-chained. Very preferably one "alkyl" is ethyl and the other "alkyl" is n-pentyl.

Very preferred are compounds of Formula B1-2.

Preferably, the compounds of the Formula B1-1 are selected from the group of compounds of Formulae B1-1-1 to B1-1-11, preferably of Formula B1-1-6, 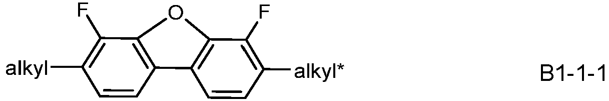 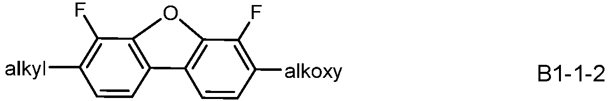 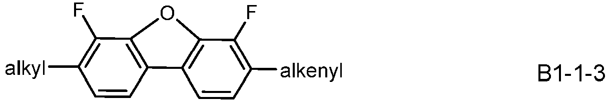 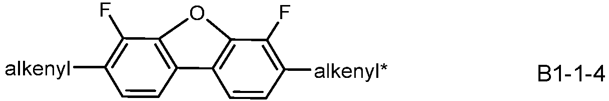 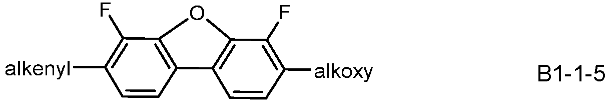 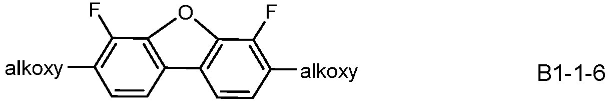 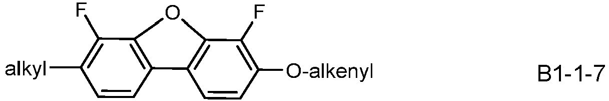 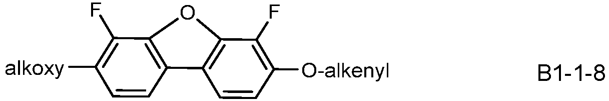 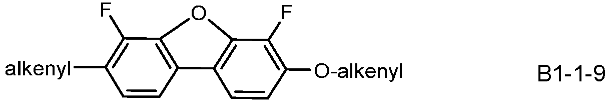 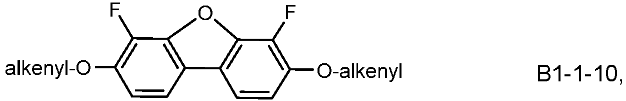 in which
alkyl and alkyl* each, independently of one another, denote a straight-chain alkyl radical having 1 to 6 C atoms,
alkenyl and alkenyl* each, independently of one another, denote a straight-chain alkenyl radical having 2 to 6 C atoms,
alkoxy and alkoxy* each, independently of one another, denote a straight-chain alkoxy radical having 1 to 6 C atoms.

Preferably, the compounds of the Formula B1-2 are selected from the group of compounds of Formulae B1-2-1 to B1-2-10, preferably of Formula B1-2-6, 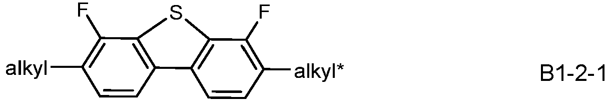 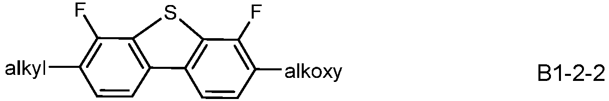 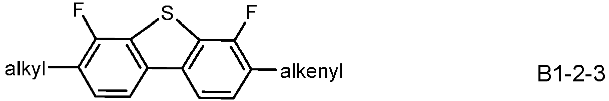 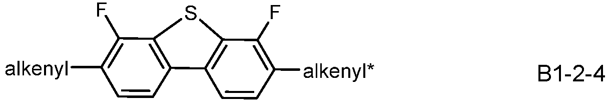 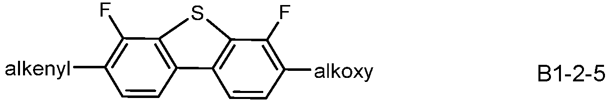 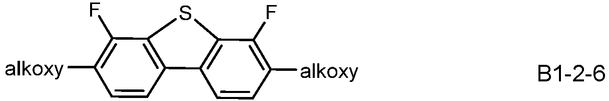 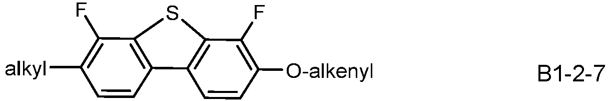 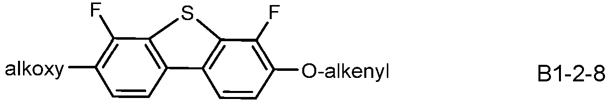 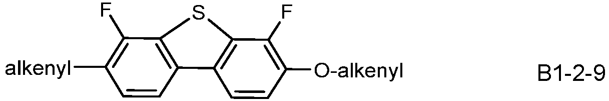 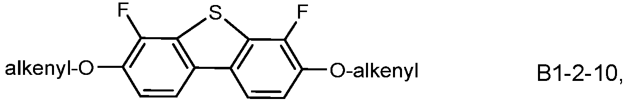 in which
alkyl and alkyl* each, independently of one another, denote a straight-chain alkyl radical having 1 to 6 C atoms,
alkenyl and alkenyl* each, independently of one another, denote a straight-chain alkenyl radical having 2 to 6 C atoms,
alkoxy and alkoxy* each, independently of one another, denote a straight-chain alkoxy radical having 1 to 6 C atoms.

Optionally, the medium comprises one or more compounds of the Formula B1-1A and/or B1-2A 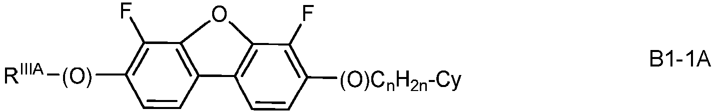 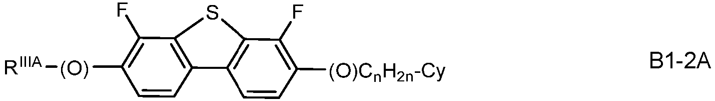 in which
- (O): denotes O or a single bond,
- R^{IIIA}: denotes alkyl or alkenyl having up to 7 C atoms or a group Cy-CₘH₂ₘ₊₁-,
- m and n: are, identically or differently, 0, 1, 2, 3, 4, 5 or 6, preferably 1, 2 or 3, very preferably 1,
- Cy: denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl or cyclopentyl.

The compounds of Formulae B1-1A and/or B1-2A are contained in the medium either alternatively or in addition to the compounds of Formulae B1-1 and B1-2, preferably additionally.

Very preferred compounds of the Formulae B1-1A and/or B1-2A are the following: 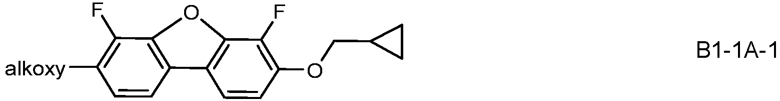 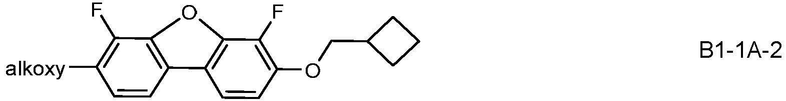 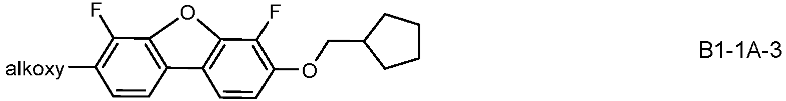 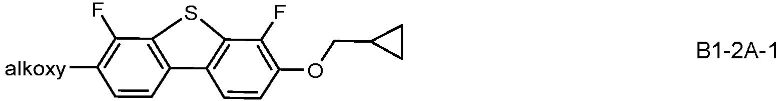 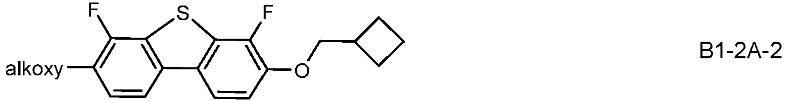 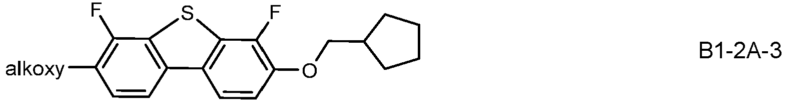 in which alkoxy denotes a straight-chain alkoxy radical having 1 to 6 C atoms or alternatively -(CH₂)ₙF in which n is 2, 3, 4, or 5, preferably C₂H₄F .

The proportion of the compounds of Formula B1 or its subformulae in the medium is preferably from 1 to 20%, very preferably from 1 to 15% by weight.

Preferably the medium contains 1, 2 or 3 compounds of Formula B1 or its subformulae.

In a preferred embodiment of the present invention, the medium may comprise one or more compounds of Formula B2-2 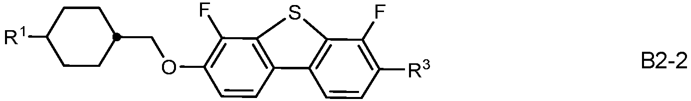 in which
R¹, R³ identically or differently, denote H, an alkyl or alkoxy radical having 1 to 6 C atoms, in which one or more CH₂ groups in these radicals are optionally replaced, independently of one another, by -C≡C-, -CF₂O-, -OCF₂-, -CH=CH-, 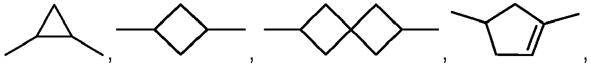 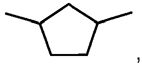 -O-, -CO-O- or -O-CO- in such a way that O atoms are not linked directly to one another, and in which, in addition, one or more H atoms may be replaced by halogen.

The compounds of Formula B2-2 are preferably selected from the group of compounds of the Formulae B2-2-1 to B2-2-10: 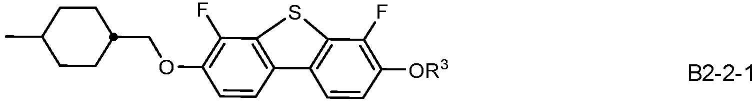 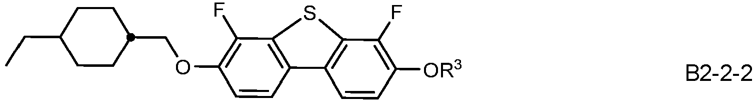 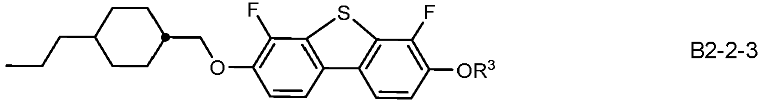 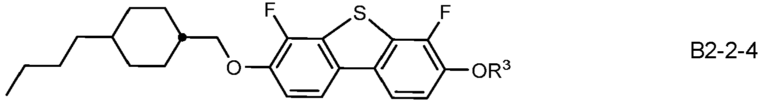 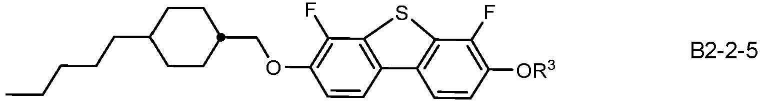 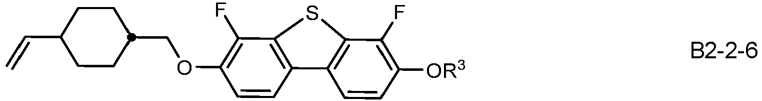 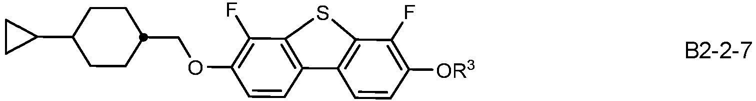 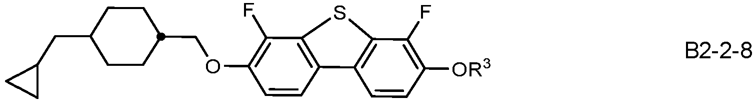 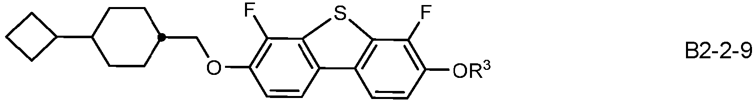 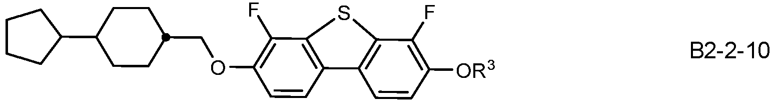 in which R³ denotes alkyl having 1 to 6 C-atoms, preferably ethyl, n-propyl or *n-*butyl, or alternatively cyclopropylmethyl, cyclobutylmethyl or cyclopentylmethyl or alternatively -(CH₂)ₙF in which n is 2,3,4, or 5, preferably C₂H₄F.

Particularly preferred compounds of Formula B2 are selected from the following subformulae:

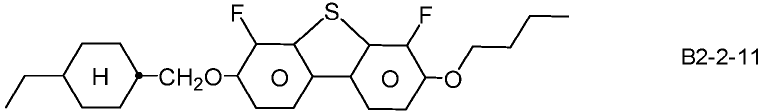

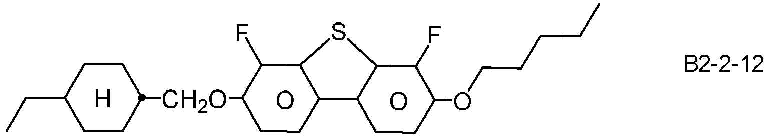

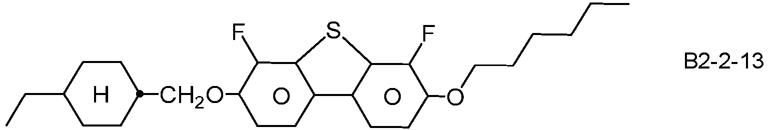

The proportion of the compounds of Formula B2 or its subformulae in the medium is preferably from 1 to 20%, very preferably from 1 to 15% by weight.

Preferably, the LC medium contains 1, 2 or 3 compounds of Formula B2 or its subformulae.

Preferred compounds of Formula B3 are selected from the following subformulae: 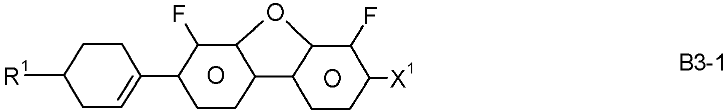 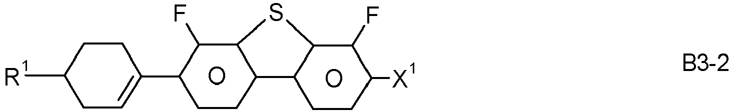 wherein R¹ has one of the meanings given in the Formula B3 and preferably denotes straight-chain alkyl having 1 to 6 C atoms, very preferably methyl, ethyl, propyl, butyl, pentyl or hexyl, more preferably ethyl or propyl, most preferably propyl, and X¹ has one of the meanings given in the Formula B3 and preferably denotes CF₃ or OCF₃.

Preferred compounds of the Formula B3 are selected from the following subformulae: 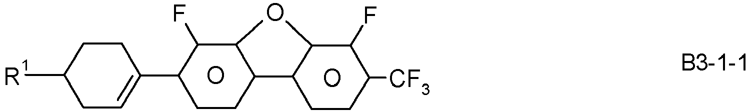 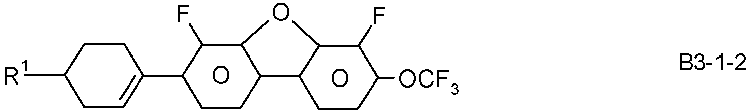 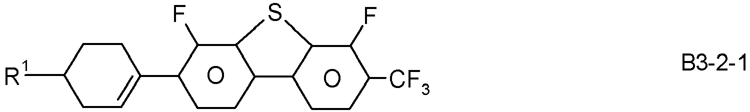 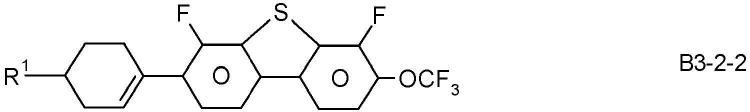 wherein R¹ has one of the meanings given in the Formula B3 and preferably denotes straight-chain alkyl having 1 to 6 C atoms, very preferably methyl, ethyl, propyl, butyl, pentyl or hexyl, more preferably ethyl or propyl, most preferably propyl.

Most preferred are compounds of Formulae B3-1-1 and B3-2-2.

In a preferred embodiment the medium contains one or more compounds of Formula B or its subformulae B1, B2, B3, B1-1, B1-2, B2-1, B2-2, B2-3, B3-1, B3-2, B3-1-1, B3-1-2, B3-2-1 and B3-2-2 wherein the dibenzofuran or dibenzothiophene group is substituted by a methyl or methoxy group, preferably by a methyl group, preferably in p-position to the substituent F, very preferably in p-position to the substituent F (*i.e.* in m-position to the terminal group R² or X¹).

The proportion of the compounds of the Formula B3 or its subformulae in the LC medium is preferably from 1 to 20%, very preferably from 1 to 10% by weight.

Preferably the LC medium contains 1, 2 or 3 compounds of the Formula B3 or its subformulae.

Preferably the total proportion of compounds of the Formula Y and B or their subformulae in the medium is from 2 to 25%, very preferably from 3 to 20% by weight.

Further preferred embodiments are indicated below:
- The medium comprises one or more compounds of the Formula Y selected from the following subformula 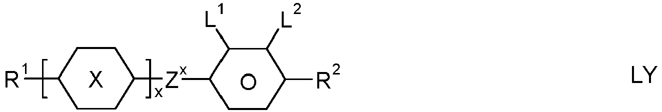 wherein R¹, R², L¹, L², X, x and Z^{x} have the meanings given in Formula Y, and wherein at least one of the rings X is cyclohexenylene.

Preferably, both radicals L¹ and L² denote F. Further preferably one of the radicals L¹ and L² denotes F and the other denotes Cl.

The compounds of the Formula LY are preferably selected from the group consisting of the following subformulae: 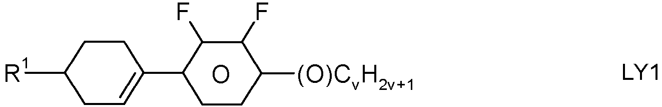 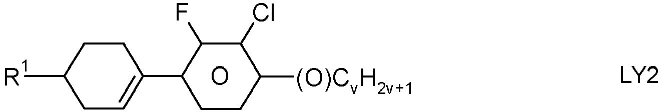 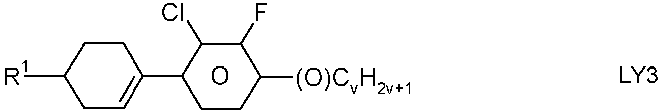 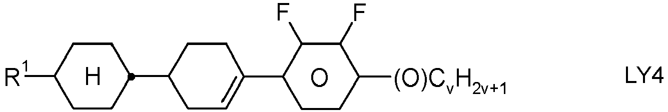 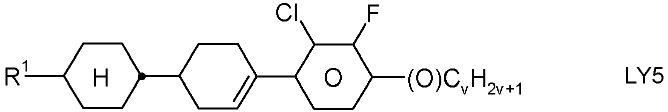 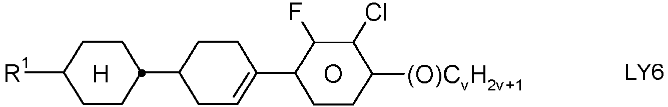 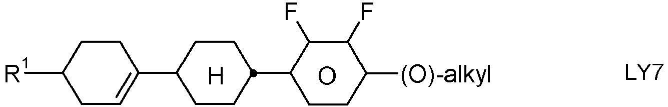 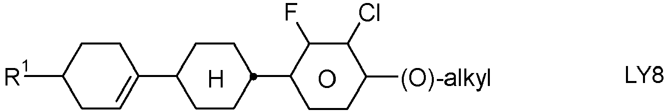 in which R¹ has the meaning indicated in Formula Y above, (O) denotes an oxygen atom or a single bond, and v denotes an integer from 1 to 6. R¹ preferably denotes straight-chain alkyl having 1 to 6 C atoms or straight-chain alkenyl having 2 to 6 C atoms, in particular CH₃, C₂H₅, *n*-C₃H₇, *n*-C₄Hg, *n*-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferred are compounds of Formula LY4.

Preferably the medium contains 1, 2 or 3 compounds of Formula LY, very preferably of Formula LY4.

The proportion of the compounds of Formula LY or its subformulae in the medium is preferably from 1 to 10% by weight.
- The medium comprises one or more compounds of Formula Y selected from the following subformula 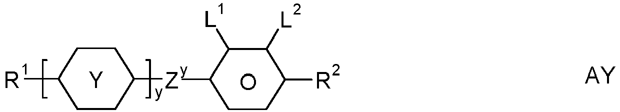 wherein R¹, R², L¹, L², Y, y and Z^{y} have the meanings given in Formula Y, and wherein at least one of the rings Y is tetrahydropyrane.
   The compounds of the Formula AY are preferably selected from the group consisting of the following subformulae: 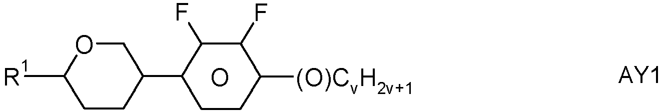 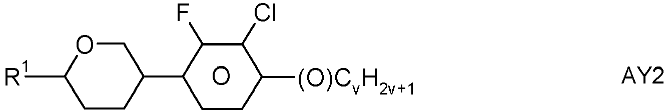 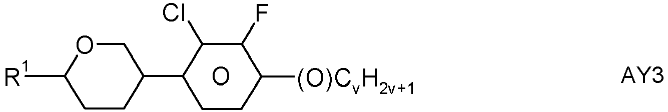 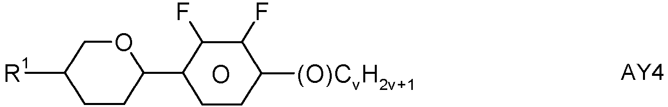 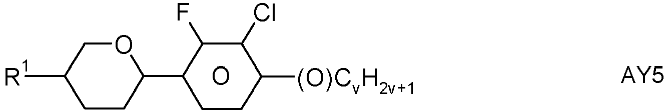 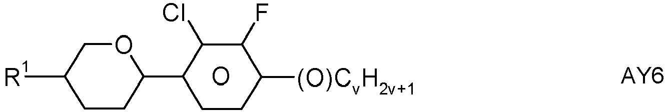 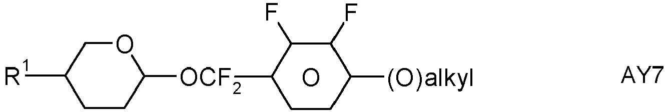 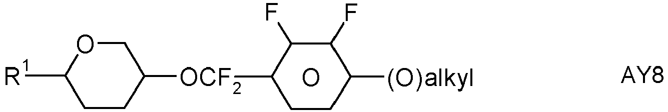 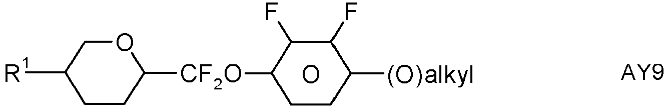 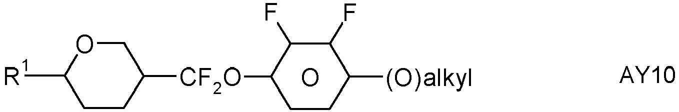 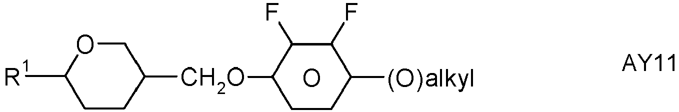 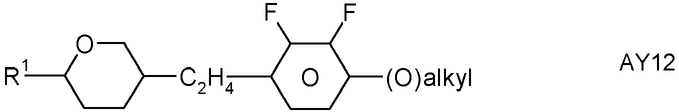 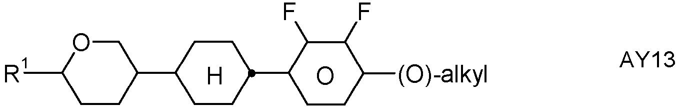 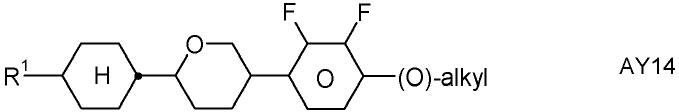 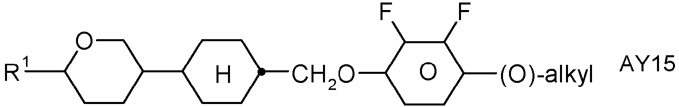 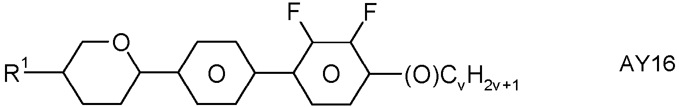 in which R¹ has the meaning indicated above, "alkyl" denotes a straight-chain alkyl radical having 1 to 6 C atoms, (O) denotes an oxygen atom or a single bond, and v denotes an integer from 1 to 6. R¹ preferably denotes straight-chain alkyl having 1 to 6 C atoms or straight-chain alkenyl having 2 to 6 C atoms, in particular CH₃, C₂H₅, *n*-C₃H₇, *n*-C₄Hg, *n*-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)2⁻.
- The medium does not contain a compound of Formula Y, B, LY or AY.
- The medium does not contain a compound having a 1,4-phenylene group that is substituted in 2- and 3-position with F or CI.
- The medium additionally comprises one or more compounds selected from the following formulae: 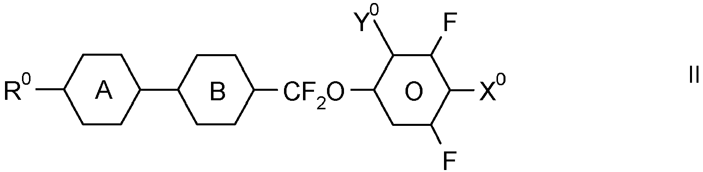 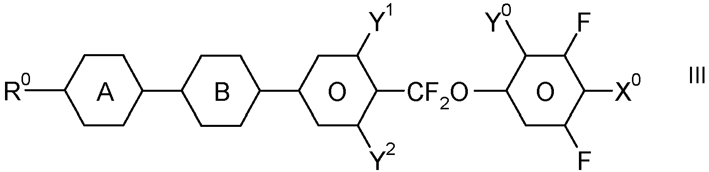 wherein the individual radicals, independently of each other and on each occurrence identically or differently, have the following meanings 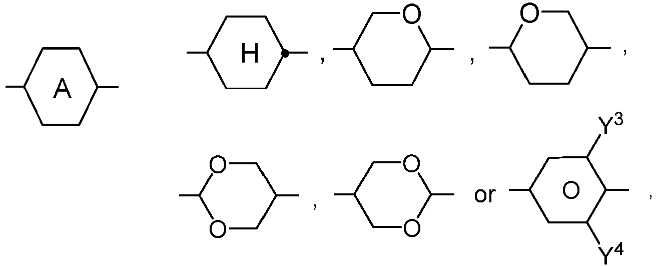 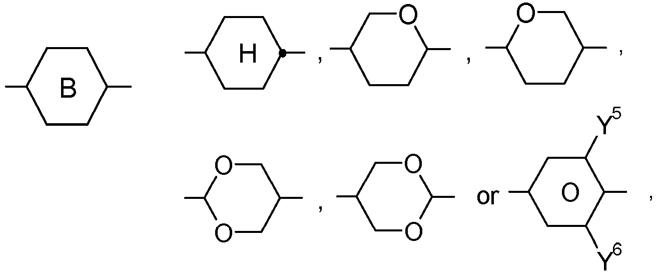
   - R⁰: one of the meanings given for R¹ in Formula I,
   - X⁰: F, Cl, CN, SF₅, SCN, NCS, a halogenated alkyl radical, a halogenated alkenyl radical, a halogenated alkoxy radical or a halogenated alkenyloxy radical having up to 6 C atoms, and
   - Y¹⁻⁶: H or F,
   - Y⁰: H or CH₃.

Preferred compounds of Formula II and III are those wherein Y⁰ is H.

Further preferred compounds of Formula II and III are those wherein R⁰ denotes alkyl having 1 to 6 C atoms, very preferably ethyl or propyl, and X⁰ denotes F or OCF₃, very preferably F.

The medium may comprise one or more compounds of Formula II selected from the following subformulae: 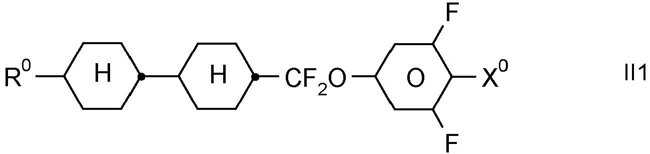 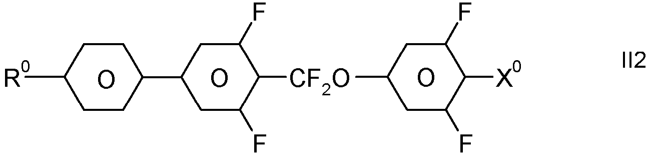 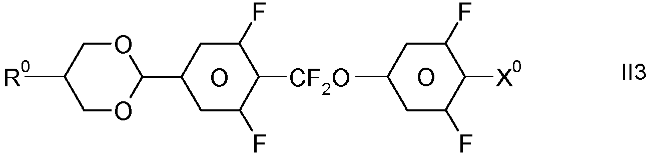 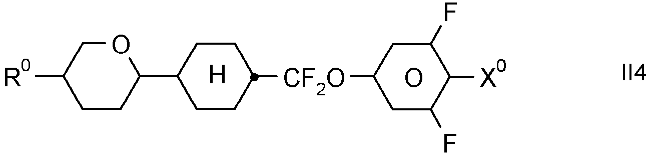 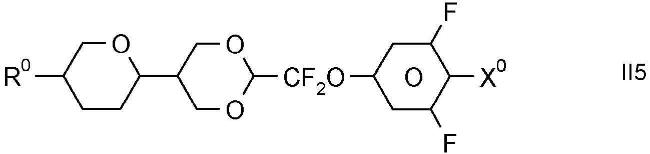 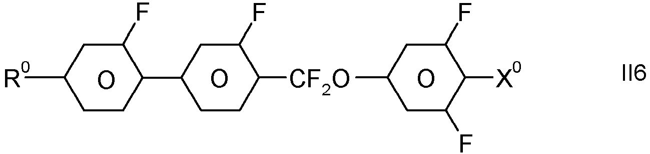 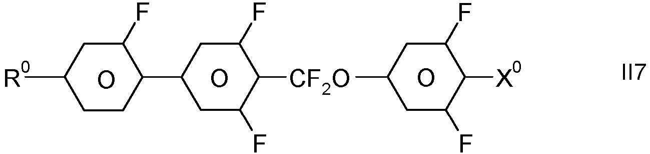 in which R⁰ and X⁰ have the meanings given in Formula II.

Preferred compounds are those of Formula II1, II2 and II3, very preferred those of Formula II1 and II2.

In the compounds of Formulae II1 to II7 R⁰ preferably denotes alkyl having 1 to 6 C atoms, very preferably ethyl or propyl, and X⁰ preferably denotes F or OCF₃, very preferably F.

The medium may contain one or more compounds of Formula II or their subformulae as described above and below wherein Y⁰ is CH₃, Very preferably the medium according to this preferred embodiment comprises one or more compounds of Formula II selected from the following subformulae: 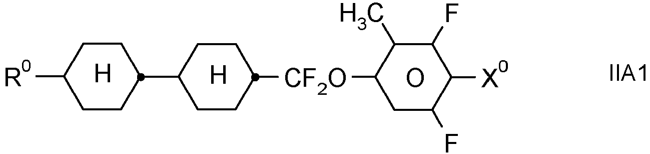 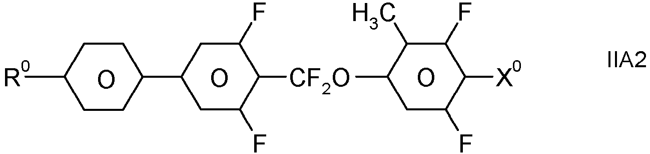 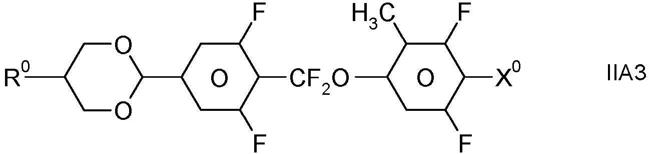 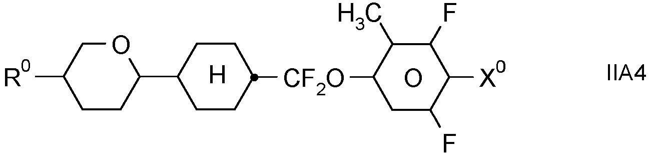 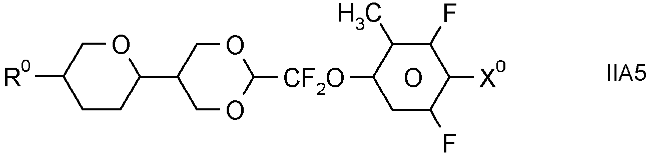 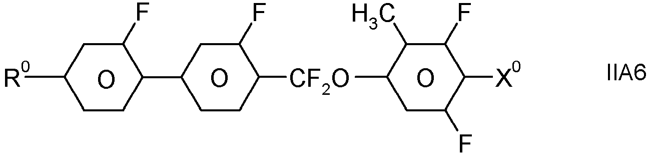 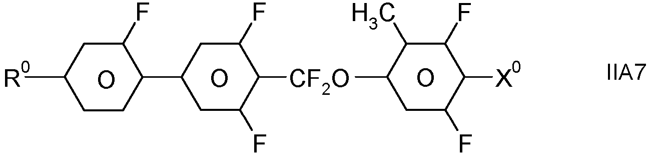 in which R⁰ and X⁰ have the meanings given in Formula II.

Preferred compounds are those of Formula IIA1, IIA2 and IIA3, very preferred those of Formula IIA1 and IIA2.

In the compounds of Formulae IIA1 to IIA7 R⁰ preferably denotes alkyl having 1 to 6 C atoms, very preferably ethyl or propyl, and X⁰ preferably denotes F or OCF₃, very preferably F.
- The medium comprises one or more compounds of Formula III selected from the following subformulae: 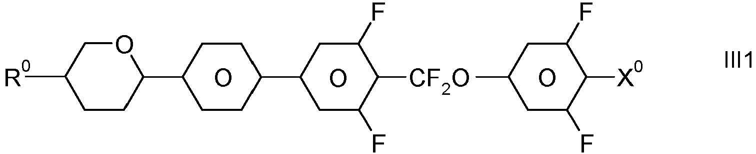 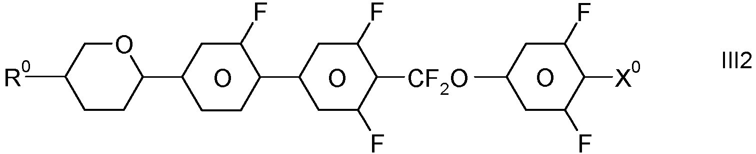 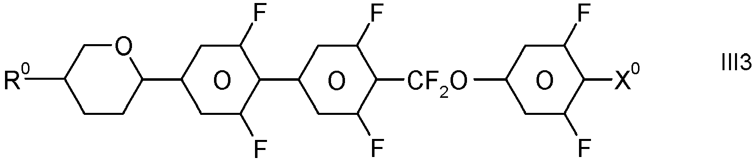 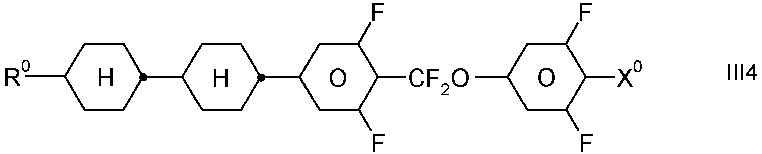 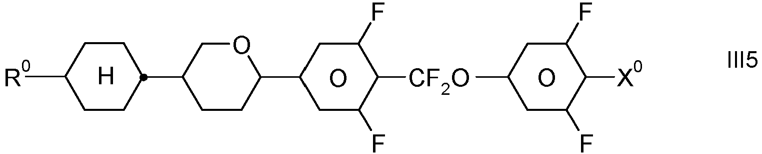 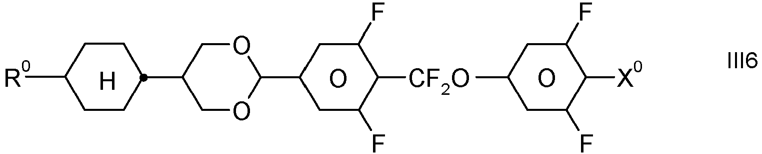 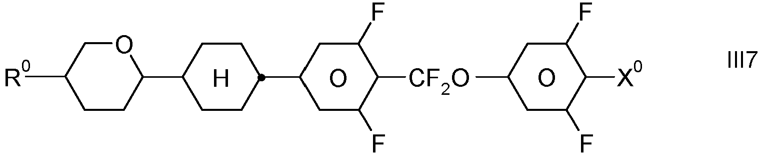 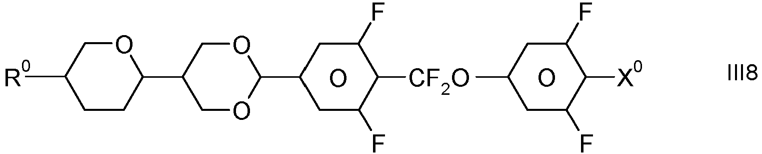 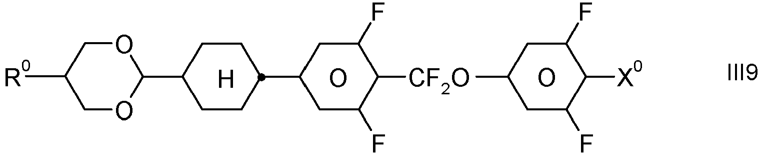 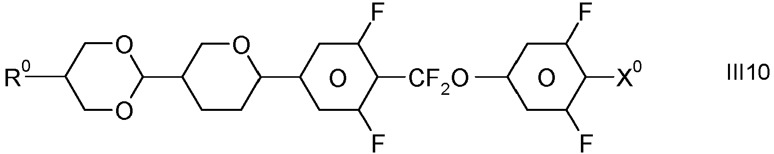 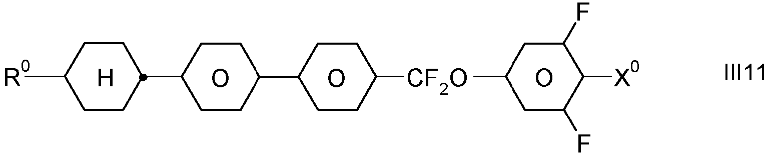 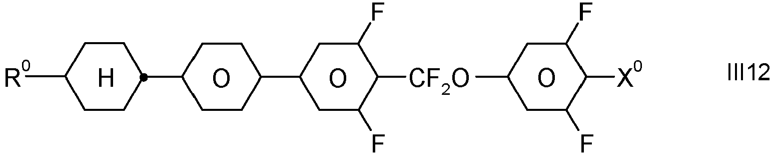 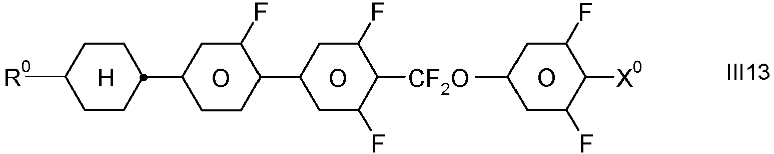 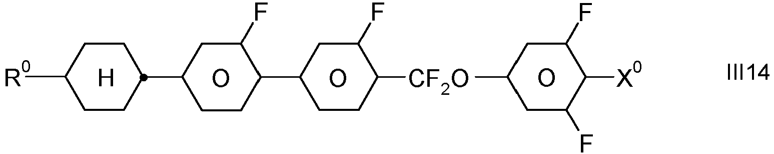 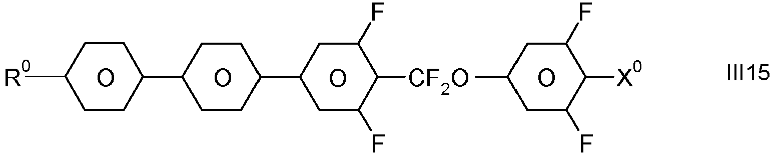 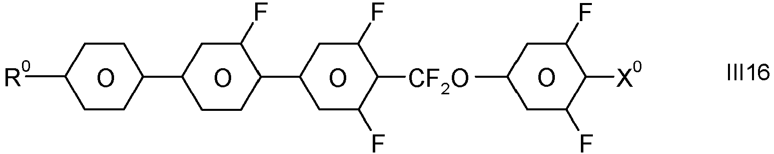 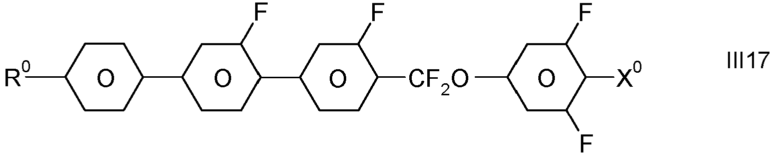 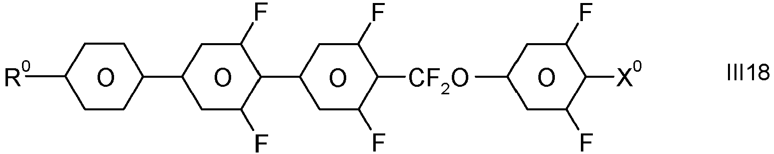 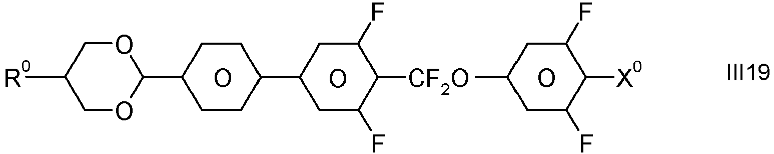 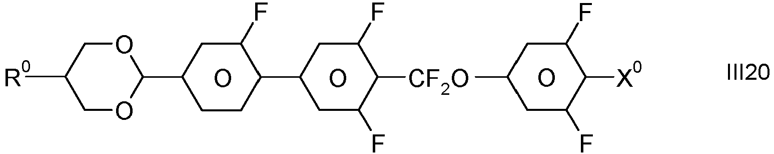 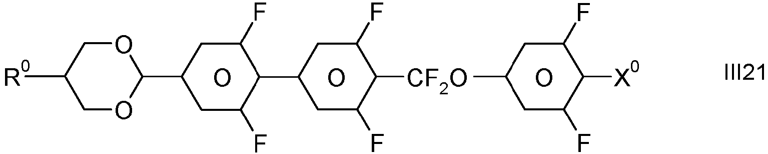 in which R⁰ and X⁰ have the meanings given in Formula II.

Preferred compounds are those of Formula 1111, 1114, 1116, 11116, III19 and III20.

In the compounds of Formulae III1 to III21 R⁰ preferably denotes alkyl having 1 to 6 C atoms, very preferably ethyl or propyl, X⁰ preferably denotes F or OCF₃, very preferably F, and Y² preferably denotes F.

The medium contains one or more compounds of Formula III or their subformulae as described above and below wherein Y⁰ is CH₃, Very preferably the medium according to this preferred embodiment comprises one or more compounds of Formula III selected from the following subformulae: 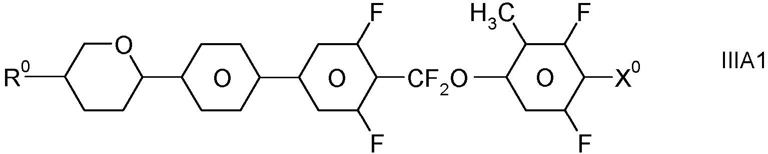 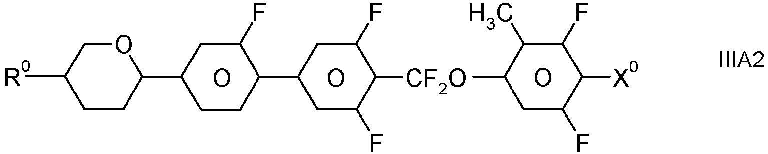 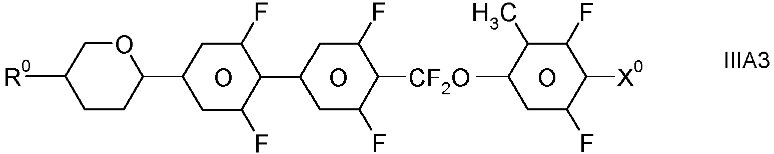 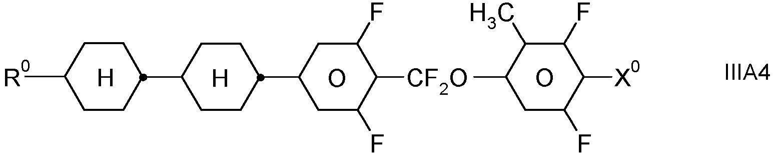 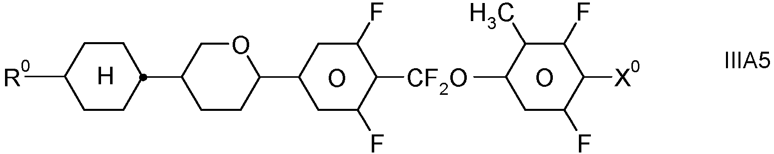 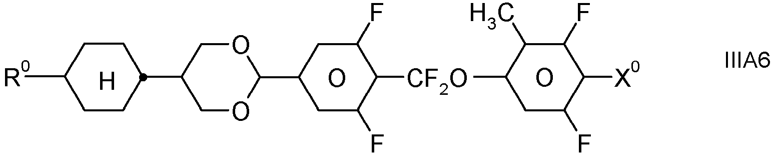 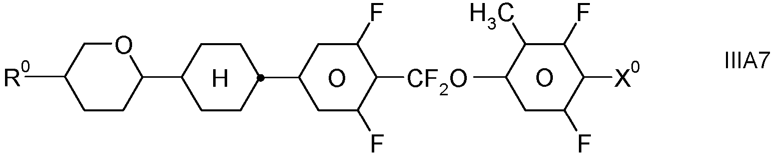 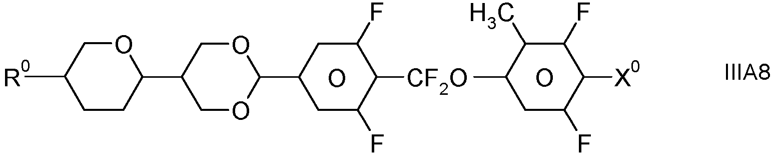 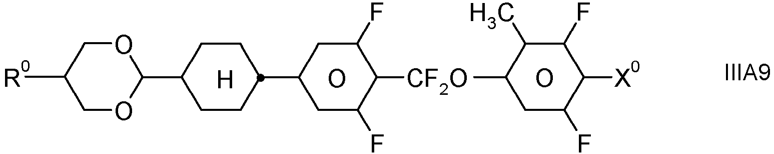 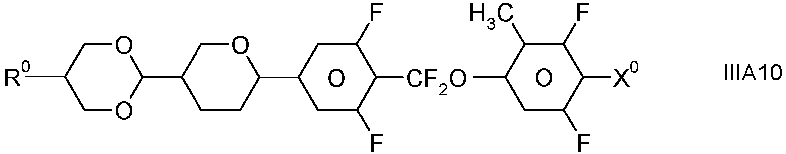 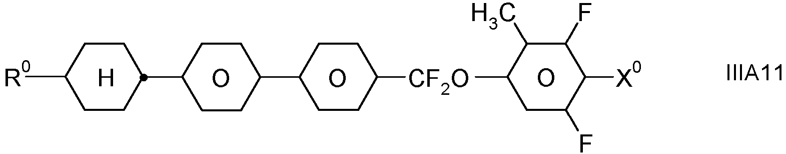 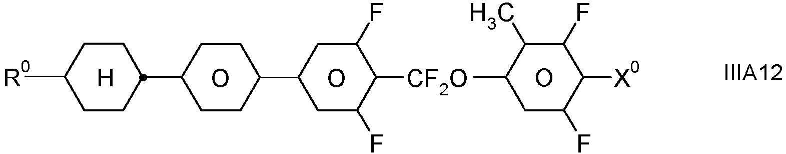 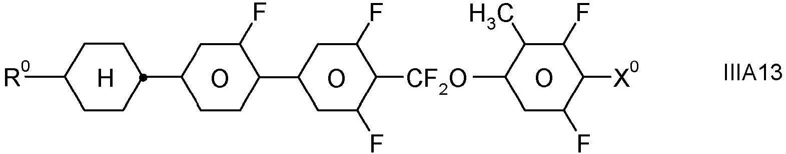 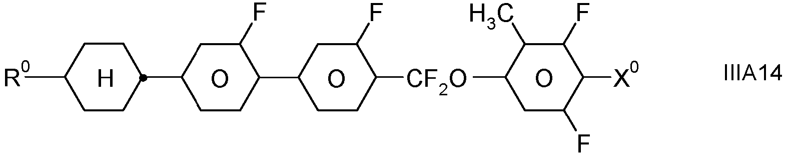 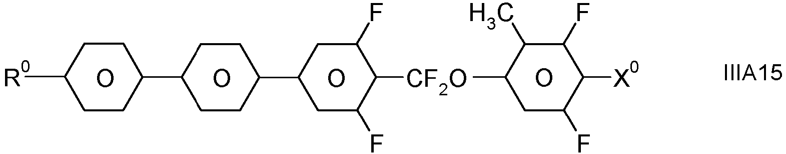 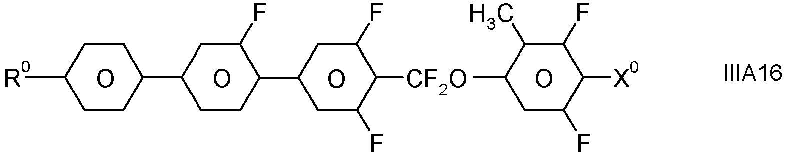 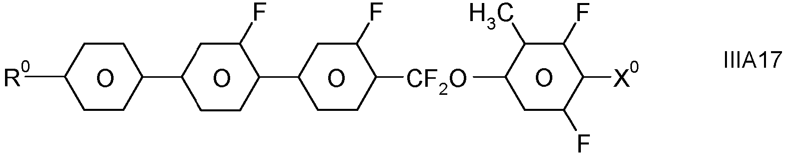 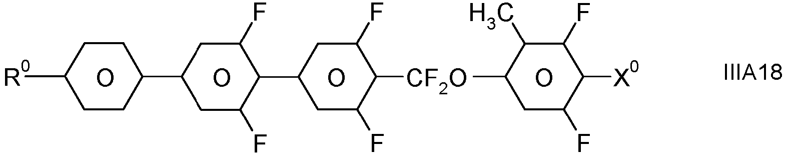 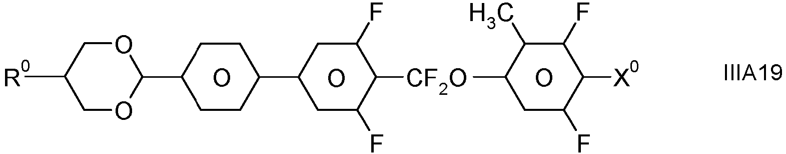 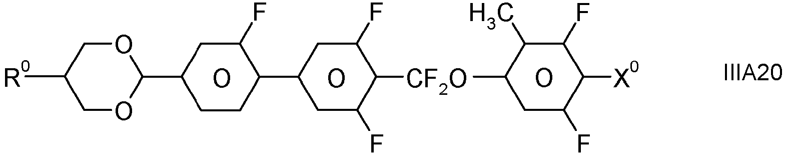 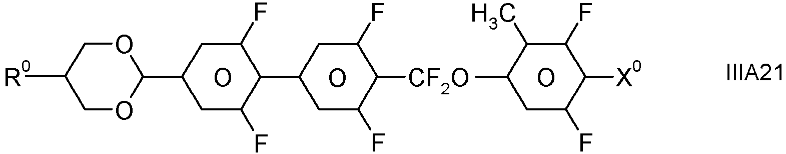 in which R⁰ and X⁰ have the meanings given in Formula III.

Preferred compounds are those of Formula IIIA1, IIIA4, IIIA6, IIIA16, IIIA19 and IIIA20.

In the compounds of Formulae IIIA1 to IIIA21 R⁰ preferably denotes alkyl having 1 to 6 C atoms, very preferably ethyl or propyl, X⁰ preferably denotes F or OCF₃, very preferably F, and Y² preferably denotes F.

The medium additionally comprises one or more compounds selected from the following formulae: 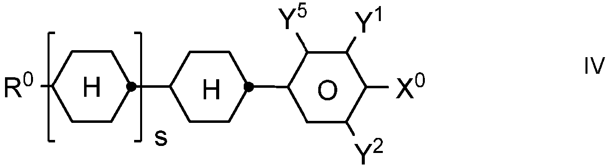 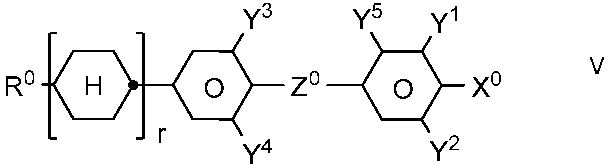 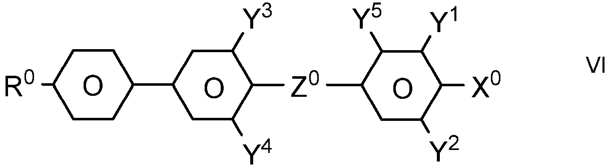 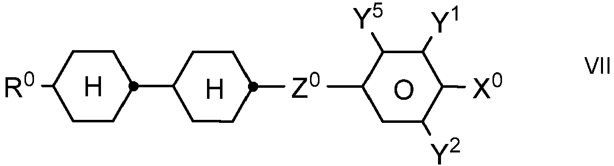 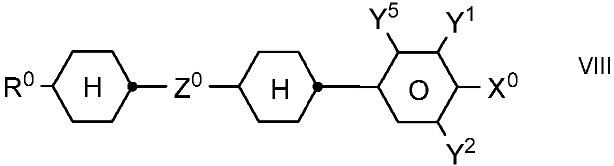 in which
- R⁰, X⁰ and Y¹⁻⁵: have the meanings indicated in Formulae II and III,
- Z⁰: denotes -C₂H₄-, -(CH₂)₄-, -CH=CH-, -CF=CF-, -C₂F₄-, -CH₂CF₂-, -CF₂CH₂-, -CH₂O-, -OCH₂-, -COO- or -OCF₂-, in Formulae V and VI also a single bond, in Formulae V and VIII also -CF₂O-,
- r: denotes 0 or 1, and
- s: denotes 0 or 1.

The compounds of the Formula IV are preferably selected from the following formulae: 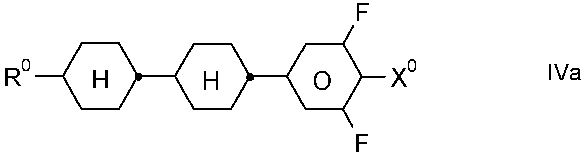 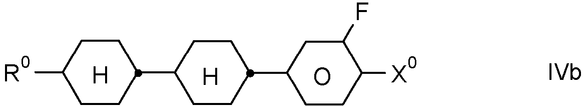 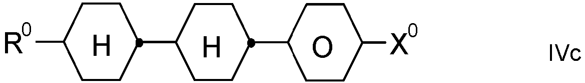 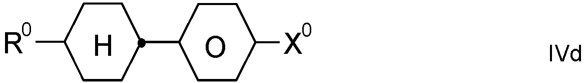 in which R⁰ and X⁰ have the meanings indicated in Formulae II and III.

R⁰ preferably denotes alkyl having 1 to 6 C atoms. X⁰ preferably denotes F or OCF₃, furthermore OCF=CF₂ or Cl;

The compounds of the Formula IVa are preferably selected from the following subformula:

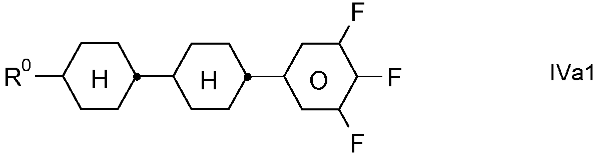

The compounds of the Formula IVb are preferably represented by the following formula:

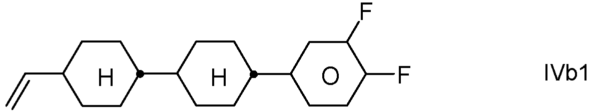

The compounds of the Formula IVc are preferably selected from the following subformula: 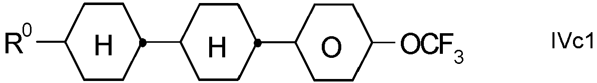 in which R⁰ has the meanings indicated in Formula II and is preferably propyl or pentyl.

The compound(s) of the Formula IVc, in particular of the Formula IVc1, is (are) preferably employed in the mixtures according to the invention in amounts of 1-20% by weight, particularly preferably 2-15% by weight.

The compounds of the Formula V are preferably selected from the following subformulae: 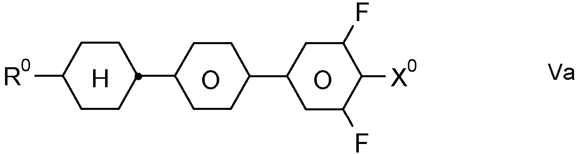 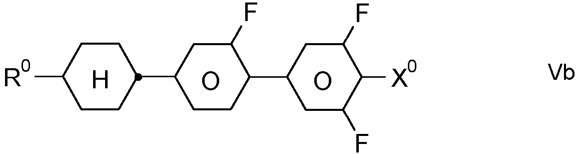 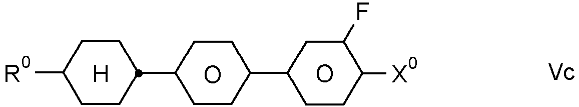 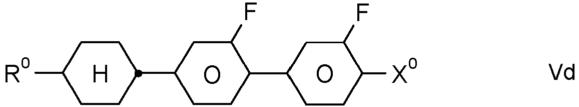 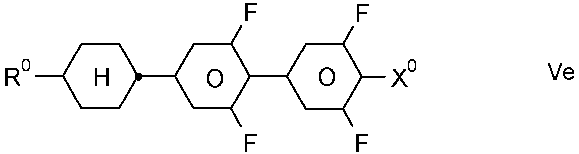 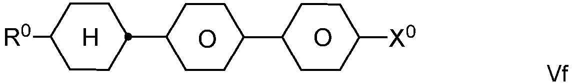 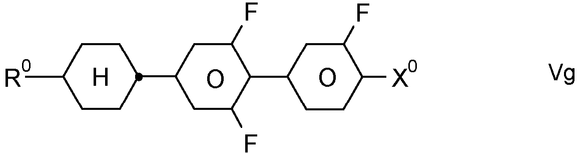 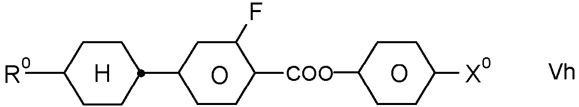 in which R⁰ and X⁰ have the meanings indicated in Formula II.

R⁰ preferably denotes alkyl having 1 to 6 C atoms. X⁰ preferably denotes F and OCF₃, furthermore OCHF₂, CF₃, OCF=CF₂ and OCH=CF₂;
- The compounds of the Formula VI are preferably selected from the following subformulae: 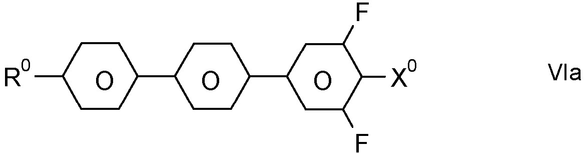 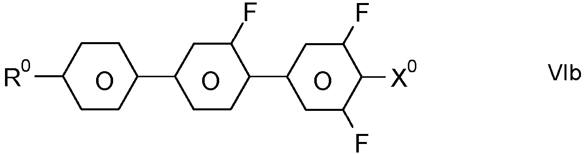 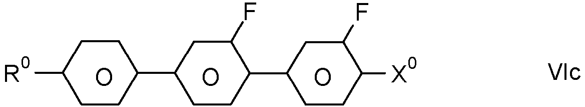 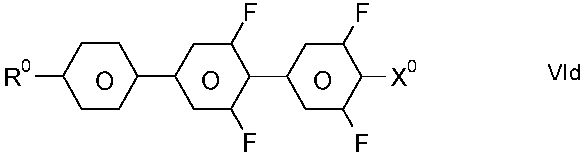 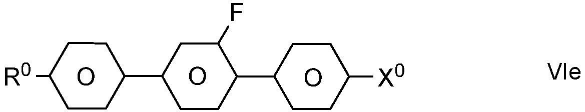 in which R⁰ and X⁰ have the meanings indicated in Formula II.

R⁰ preferably denotes alkyl having 1 to 6 C atoms. X⁰ preferably denotes F, furthermore OCF₃, CF₃, CF=CF₂, OCHF₂ and OCH=CF₂;
The compounds of the Formula VII are preferably selected from the following subformulae: 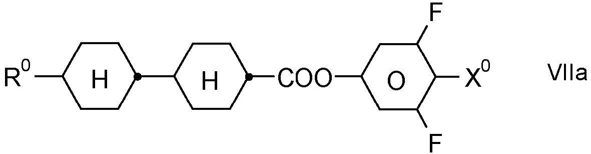 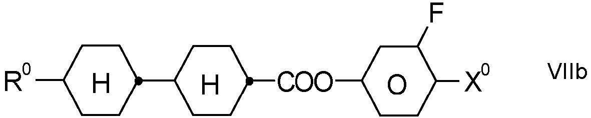 in which R⁰ and X⁰ have the meanings indicated in Formula II.

R⁰ preferably denotes alkyl having 1 to 6 C atoms. X⁰ preferably denotes F, furthermore OCF₃, OCHF₂ and OCH=CF₂.

In some embodiments, the medium additionally comprises one or more compounds selected from the following formulae: 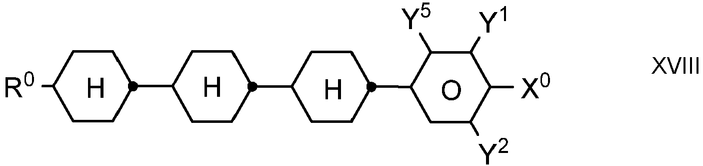 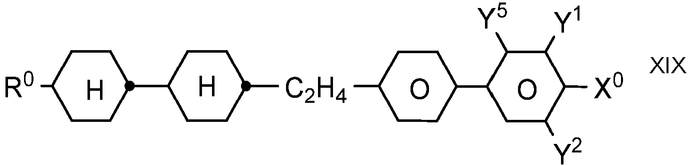 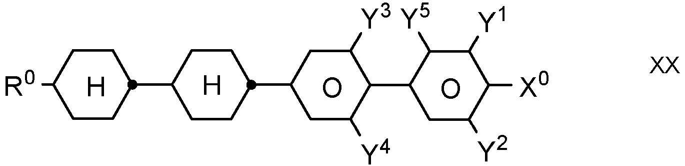 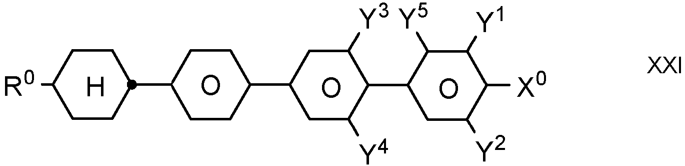 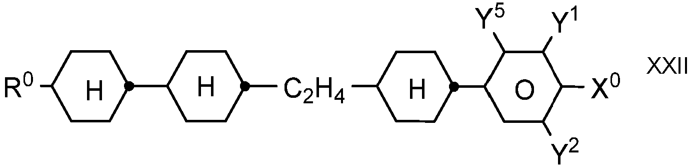 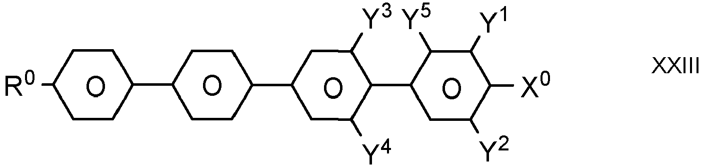 in which
- R⁰ and X⁰: each, independently of one another, have one of the meanings indicated in Formula II,
- Y¹⁻⁴: each, independently of one another, denote H or F,
- Y⁵: denotes H or CH₃, preferably H.
- X⁰: is preferably F, Cl, CF₃, OCF₃ or OCHF₂.
- R⁰: preferably denotes alkyl, alkoxy, oxaalkyl, fluoroalkyl or alkenyl, each having up to 6 C atoms.

Very preferably the medium according to the invention comprises one or more compounds of the Formula XXa, 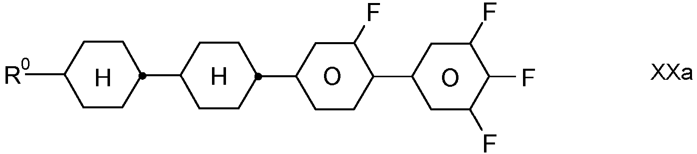 in which R⁰ has the meanings indicated in Formula L1. R⁰ preferably denotes straight-chain alkyl, in particular ethyl, n-propyl, n-butyl or n-pentyl and very particularly preferably n-propyl.

The compound(s) of the Formula XX, in particular of the Formula XXa, is (are) preferably employed in the mixtures according to the invention in amounts of 0-15% by weight, particularly preferably 1-10% by weight.

Very preferably the medium according to the invention comprises one or more compounds of the Formula XXla, 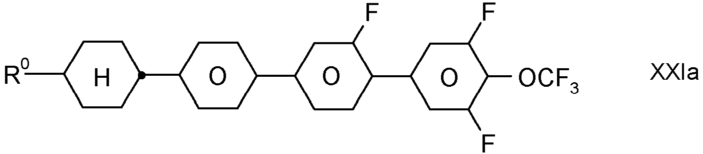 in which R⁰ has the meanings indicated in Formula L1. R⁰ preferably denotes straight-chain alkyl, in particular ethyl, n-propyl, n-butyl or n-pentyl and very particularly preferably n-propyl.

The compound(s) of the Formula XXI, in particular of the Formula XXIa, is (are) preferably employed in the mixtures according to the invention in amounts of 1-15% by weight, particularly preferably 2-10% by weight.

Further preferably the medium according to the invention comprises one or more compounds of the Formula XXllla, 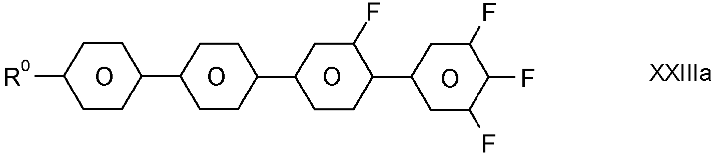 in which R⁰ has the meanings indicated in Formula L1. R⁰ preferably denotes straight-chain alkyl, in particular ethyl, n-propyl, n-butyl or n-pentyl and very particularly preferably n-propyl.

The compound(s) of the Formula XXIII, in particular of the Formula XXllla, is (are) preferably employed in the mixtures according to the invention in amounts of 0.5-5% by weight, particularly preferably 0.5-2% by weight.

The medium additionally comprises one or more compounds of the Formula XXIV, 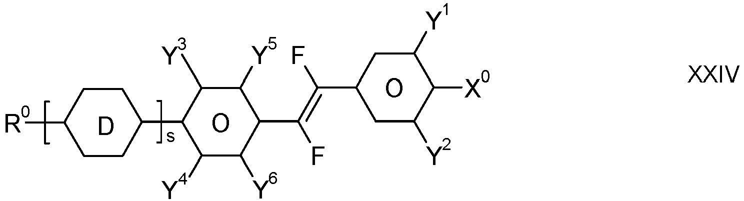 in which R⁰, X⁰ and Y¹⁻⁶ have the meanings indicated in Formula III, s denotes 0 or 1, and 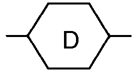 denotes

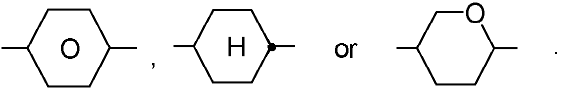

In the Formula XXIV, X⁰ may also denote an alkyl radical having 1 to 6 C atoms or an alkoxy radical having 1 to 6 C atoms. The alkyl or alkoxy radical is preferably straight-chain.

R⁰ preferably denotes alkyl having 1 to 6 C atoms. X⁰ preferably denotes F;

The compounds of the Formula XXIV are preferably selected from the following subformulae: 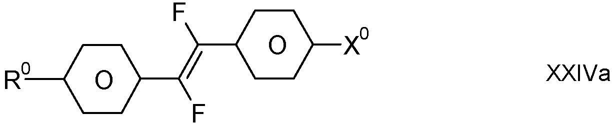 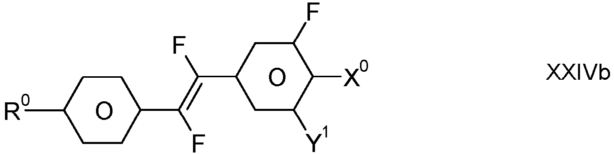 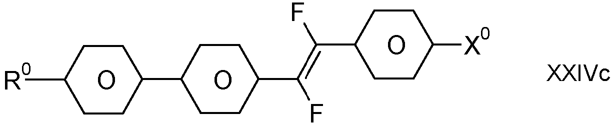 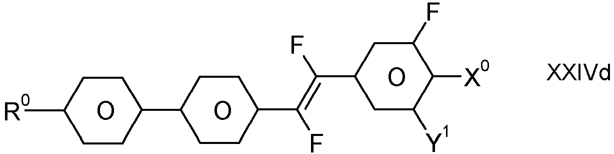 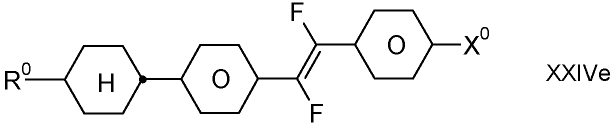 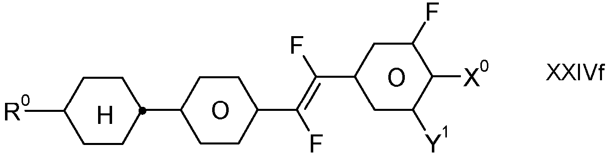 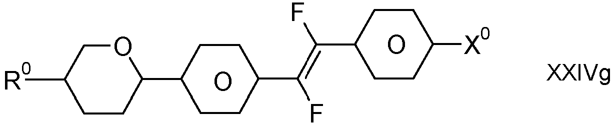 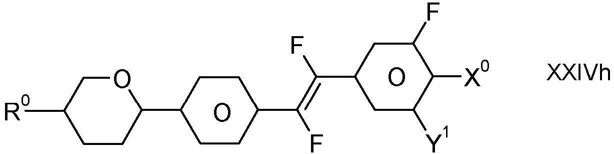 in which R⁰, X⁰ and Y¹ have the meanings indicated in Formula III. R⁰ preferably denotes alkyl having 1 to 6 C atoms. X⁰ preferably denotes F, and Y¹ is preferably F; 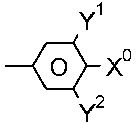 is preferably

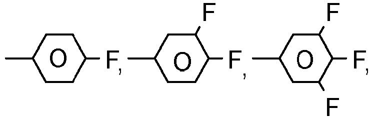

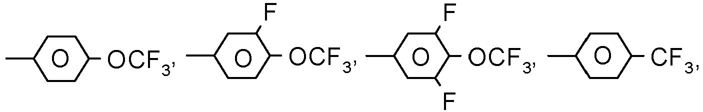

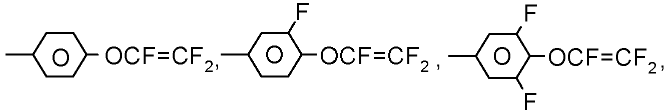

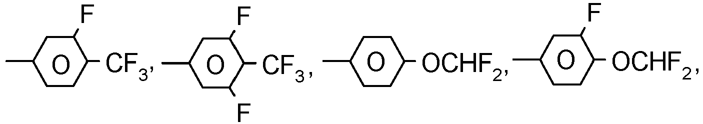

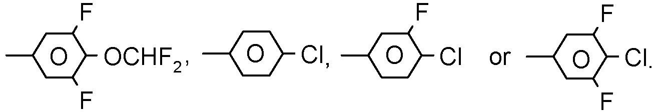

R⁰ is straight-chain alkyl or alkenyl having 2 to 6 C atoms;
The medium may further comprise one or more compounds of the following formulae: 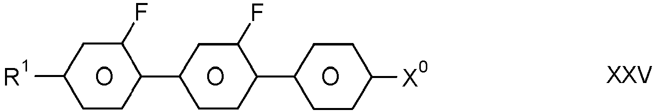 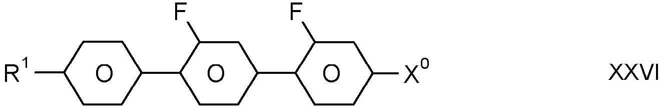 in which R¹ and X⁰ have the meanings indicated in Formula I for R¹ and X¹, respectively. R¹ preferably denotes alkyl having 1 to 6 C atoms. X⁰ preferably denotes F or Cl. In the Formula XXIV, X⁰ very particularly preferably denotes CI.

The medium comprises one or more compounds of the following formulae: 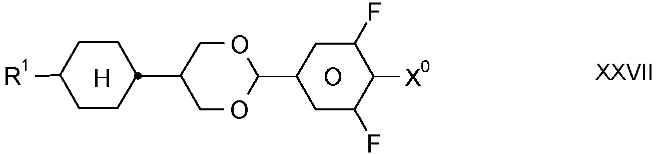 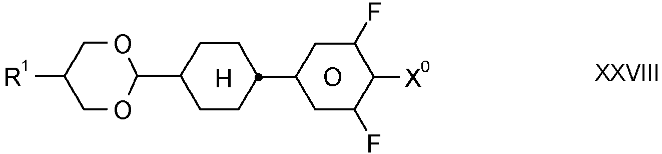 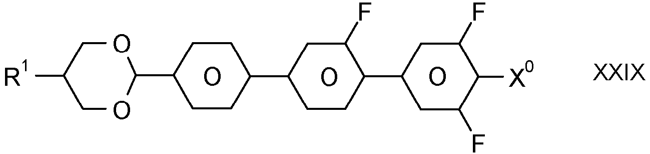 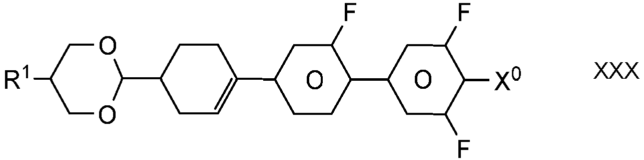 in which R¹ and X⁰ have the meanings indicated in Formula I for R¹ and X¹, respectively. R¹ preferably denotes alkyl having 1 to 6 C atoms. X⁰ preferably denotes F. The medium according to the invention particularly preferably comprises one or more compounds of the Formula XXIX in which X⁰ preferably denotes F.

The compound(s) of the Formulae XXVI - XXIX is (are) preferably employed in the mixtures according to the invention in amounts of 1-20% by weight, particularly preferably 1-15% by weight. Particularly preferred mixtures comprise at least one compound of the Formula XXIX.

In some further embodiments, the medium comprises one or more compounds of the following formulae: 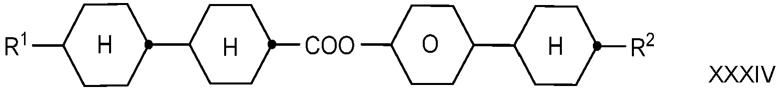 in which R¹ and R² have the meanings indicated in Formulae I and L1, respectively, and preferably each, independently of one another, denote alkyl having 1 to 6 C atoms.

Very preferably the medium according to the invention comprises one or more compounds of the Formula XXIXa: 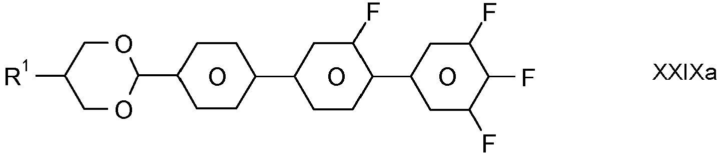 in which R¹ has the meanings indicated in Formula I, and preferably denotes straight-chain alkyl, in particular ethyl, *n*-propyl, *n*-butyl or *n*-pentyl and very particularly preferably *n*-propyl.

The compound(s) of the Formula XXIXa is (are) preferably employed in the mixtures according to the invention in amounts of 1-15% by weight, particularly preferably 2-10% by weight.

The medium may further comprise one or more compounds of the following pyrimidine or pyridine compounds of the formulae: 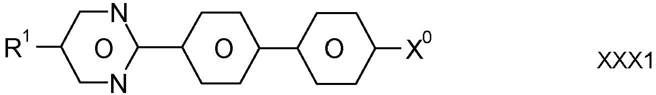 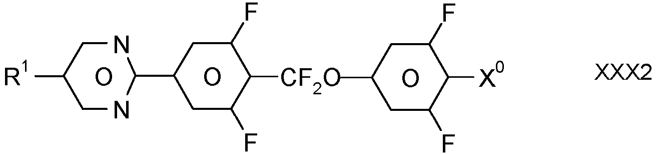 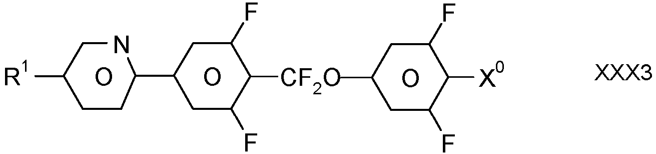 in which R¹ and X⁰ have the meanings indicated in Formula I for R¹ and X¹, respectively. R¹ preferably denotes alkyl having 1 to 6 C atoms. X⁰ preferably denotes F. The medium according to the invention particularly preferably comprises one or more compounds of the Formula XXX1, in which X⁰ preferably denotes F. The compound(s) of the Formulae XXX1 to XXX3 is (are) preferably employed in the mixtures according to the invention in amounts of 1-20% by weight, particularly preferably 1-15% by weight.

The medium may additionally comprise one or more compounds of the following formulae: 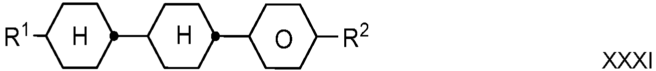 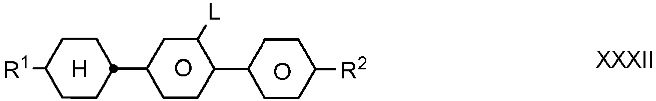 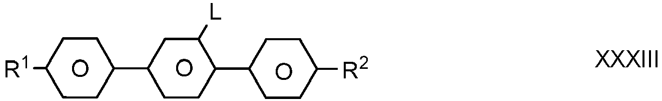 in which L, R¹ and R² have the meanings indicated in Formula L1 for Y¹, R⁰ and R², respectively. R¹ and R² preferably denote alkyl, alkoxy, oxaalkyl, fluoroalkyl or alkenyl, each having up to 6 C atoms.

Further preferred LC media are selected from the following preferred embodiments, including any combination thereof:
- a compound of Formula I in combination with a compound of Formula L1
- a compound of Formula I in combination with a compound of Formula L2
- a compound of Formula I in combination with a compound of Formula L1 and a compound of Formula Z1
- a compound of Formula I in combination with a compound of Formula L2 and a compound of Formula Z1

- The medium comprises one or more compounds of Formula I or its subformulae and L1 and/or L2 and one or more compounds selected from the group consisting of Formulae Z1, Z2, Z3, Z4, Z5, Y, B, LY, AY, II, III, IV, V, VI, VII, VIII, XII, XIV, XV, XVI, XVlla, XVllb, XVllc, XVIII, XIX, XX, XXI, XII, XXIII, XXIV, XXV, XXVI, XXVII, XXVIII, XXIX, XXX1, XXX2, XXX3, XXXI, XXXII, XXXIII and XXXIV and their subformulae.
- The medium comprises one or more compounds of Formulae I or its subformulae and L1 and/or L2 and one or more compounds selected from the group consisting of Formulae Z1, Z2, Z3, Z4, Z5, Y, B, II, III, IV, VI , XIV, XVI, XVlla, XVllb, XVllc, XX, XII, XXIII, XXIX, XXXI and XXXIV and their subformulae.
- The medium comprises one or more compounds of the Formula II, preferably selected from the group consisting of Formula II1, II2 and II3, very preferably from Formula II1 and II2. The individual concentration of each of these compounds is preferably from 2 to 15% by weight. The total concentration of these compounds is preferably from 5 to 25% by weight.
- The medium comprises one or more compounds of the Formula III, preferably selected from the group consisting of Formula III1, 1114, III6, 11116, III19 and III20, very preferably from the group consisting of Formula III1, 1116, 11116 and III20. The individual concentration of each of these compounds is preferably from 2 to 15% by weight. The total concentration of these compounds is preferably from 5 to 30% by weight.
- The medium comprises one or more compounds of the Formula IV, preferably selected from Formula IVa or IVc, very preferably from Formula IVa1 or IVc1, most preferably of Formula IVc1. The individual concentration of each of these compounds is preferably from 2 to 15% by weight. The total concentration of these compounds is preferably from 5 to 20% by weight.
- The medium comprises one or more compounds of the Formula VI, preferably selected from Formula Vlb. The individual concentration of each of these compounds is preferably from 1 to 20% by weight. The total concentration of these compounds is preferably from 5 to 20% by weight.
- The medium comprises one or more compounds of the Formula Z1, preferably selected from Formula Z1-1. The total concentration of these compounds is preferably from 1 to 25% by weight.
- The medium comprises one or more compounds of the Formula Z2, preferably selected from Formulae Z2-1 and Z2-2. The total concentration of these compounds is preferably from 2 to 35%, very preferably from 3 to 25% by weight.
- The medium comprises from 5 to 20% by weight of compounds of Formula Z3, preferably of Formula Z3-1.
- The medium comprises from 5 to 20% by weight of compounds of Formula Z4, preferably of Formula Z4-1.
- The medium comprises from 10 to 65%, very preferably from 20 to 60% by weight of compounds of Formula Z5.
- The medium comprises one or more compounds of the Formula XII, preferably of the Formula Xlla or Xllb, very preferably of Formula Xlla, most preferably of Formula Xlla1. The concentration of these compounds is preferably from 2 to 15% by weight.
- The medium comprises from 1 to 15% by weight of compounds of Formula Xllb.
- The medium comprises one or more compounds of the Formula XIV, preferably of the Formula XIVd, very preferably of Formula XIVd1. The concentration of these compounds is preferably from 2 to 10% by weight.
- The medium comprises one or more compounds of the Formula XVIb, preferably of Formula XVIb1, XVIb2 and/or XVI3. The concentration of these compounds is preferably from 2 to 15% by weight.
- The medium comprises one or more compounds of the Formula XVIc, preferably of Formula XVIc1, XVIc2 and/or XVIc3. The concentration of these compounds is preferably from 2 to 20% by weight.
- The medium comprises one or more compounds of the Formula XVIg, preferably of the Formula XVIg1 and/or XVIg2. The total concentration of these compounds is preferably from 5 to 25% by weight.
- The medium comprises one or more compounds selected from the group consisting of the Formulae XVlla, XVllb and XVllc, very preferably of Formula XVlla wherein L is H and of Formula XVllb wherein L is F. The total concentration of these compounds is preferably from 0.5 to 5% by weight.
- The medium comprises one or more compounds of the Formula XX, preferably of the Formula XXa. The concentration of these compounds is preferably from 2 to 10% by weight.
- The medium comprises one or more compounds of the Formula XXI, preferably of the Formula XXIa. The concentration of these compounds is preferably from 2 to 10% by weight.
- The medium comprises one or more compounds of the Formula XXIII, preferably of the Formula XXllla. The concentration of these compounds is preferably from 0.5 to 5% by weight.
- The medium comprises one or more compounds of the Formula XXIX, preferably of the Formula XXIXa. The concentration of these compounds is preferably from 2 to 10% by weight.
- The medium comprises one or more compounds of the Formula XXX. The concentration of these compounds is preferably from 2 to 10% by weight.
- The medium comprises one or more compounds of the Formula XXXI. The concentration of these compounds is preferably from 2 to 10% by weight.
- The medium comprises one or more compounds of the Formula XXXI. The concentration of these compounds is preferably from 2 to 10% by weight.
- The medium comprises one or more compounds of the Formula XXXIV. The concentration of these compounds is preferably from 1 to 5% by weight.
- The medium comprises one or more compounds of Formula I, preferably of Formula I1, and L1 and/or L2, one or more compounds selected from the group consisting of the Formulae Z1, Z2 and Z3 or their subformulae, one or more compounds selected from the group consisting of Formulae IX, X and XIV or their subformulae, one or more compounds selected from the group consisting of Formulae II, III, IV, VI, XX, XXIII and XXIX or their subformulae, and one or more compounds selected from the group consisting of the Formulae XII, XVI, XVlla, XVllb, XVllc, XXXI and XXXIV or their subformulae.
- The medium comprises one or more compounds of Formula I, preferably of Formula I1, L1 and/or L2, one or more compounds selected from the group consisting of the Formulae Z1, Z2, Z3, Z4 and Z5 or their subformulae, one or more compounds selected from the group consisting of Formula XIVd or their subformulae, one or more compounds selected from the group consisting of Formulae II, III, IVc, Vlb, XXa, XXIIIa and XXIXa or their subformulae, and one or more compounds selected from the group consisting of the Formulae Xllb, XVIb, XVlc, XVlla, XVllb, XVllc, XXXI and XXXIV or their subformulae.
- The medium comprises one or more compounds of Formula I, preferably of Formula I1, L1 and/or L2, one or more compounds selected from the group consisting of the Formulae Z1, Z2 and Z3 or their subformulae, one or more compounds of Formula Y, preferably selected from the group consisting of the Formulae Y1 and Y2, one or more compounds selected from the group consisting of Formulae IX, X and XIV or their subformulae, one or more compounds selected from the group consisting of Formulae II, III, IV, VI, XX, XXIII and XXIX or their subformulae, and one or more compounds selected from the group consisting of the Formulae XII, XVI, XVlla, XVllb, XVllc, XXXI and XXXIVor their subformulae.
- The medium comprises one or more compounds of Formula I, preferably of Formula I1, L1 and/or L2, one or more compounds selected from the group consisting of the Formulae Z1, Z2, Z3, Z4 and Z5 or their subformulae, one or more compounds of Formula B, preferably selected from the group consisting of the Formulae B1, B2 and B3, one or more compounds of Formula XIVd or their subformulae, one or more compounds selected from the group consisting of Formulae II, III, IVc, Vlb, XXa, XXIIIa and XXIXa or their subformulae, and one or more compounds selected from the group consisting of the Formulae Xllb, XVIb, XVlc, XVlla, XVllb, XVllc, XXXI and XXXIV or their subformulae.
- Besides the compounds of Formula I, the medium comprises further compounds selected from the group of the compounds of the Formula Z1, Z2, Z3, Y, B, IV, XII, XIV, XVI, XVlla, XVllb, XVllc, XXI, XXIII, XXIX, XXX, XXXI and XXIV or their subformulae.
- Besides the compounds of Formula I, the medium comprises further compounds selected from the group of the compounds of Formulae Z1, Z2, Z3, IV, XII, XIV, XVI, XVlla, XVllb, XVllc, XXI, XXIII, XXIX, XXX, XXXI and XXIV or their subformulae.
- The proportion of compounds of Formula I or its subformulae in the medium is from 1 to 30%, very preferably from 2 to 25%, most preferably from 2 to 20% by weight.
- The proportion of compounds of the Formulae Z1, Z2, Z3, Z4 and Z5 or their subformulae in the mixture as a whole is from 10 to 65%, very preferably from 20 to 60%.
- The proportion of compounds of the Formula Y or its subformulae in the mixture as a whole is from 1 to 20%, very preferably from 2 to 15%.
- The proportion of compounds of the Formula B or its subformulae in the mixture as a whole is from 1 to 20%, very preferably from 2 to 18%.
- The proportion of compounds of the Formulae II, III, IV-VIII, XVIII-XXIII and XXVII-XXX in the mixture as a whole is 30 to 60% by weight.
- The proportion of compounds of the Formulae XII-XV in the mixture as a whole is 40 to 70% by weight.
- The proportion of compounds of the Formulae XIV, XVlla-c and XXXI-XXXIII in the mixture as a whole is 0.5 to 15% by weight.

The term "alkyl" or "alkyl*" in this application encompasses straight-chain and branched alkyl groups having 1 to 6 carbon atoms, in particular the straight-chain groups methyl, ethyl, propyl, butyl, pentyl and hexyl. Groups having 2 to 5 carbon atoms are generally preferred.

The term "alkenyl" or "alkenyl*" encompasses straight-chain and branched alkenyl groups having 2 to 6 carbon atoms, in particular the straight-chain groups. Preferred alkenyl groups are C₂-C₇-1E-alkenyl, C₄-C₆-3E-alkenyl, in particular C₂-C₆-1E-alkenyl. Examples of particularly preferred alkenyl groups are vinyl, 1E-propenyl, 1E-butenyl, 1E-pentenyl, 1E-hexenyl, 3-butenyl, 3E-pentenyl, 3E-hexenyl, 4-pentenyl, 4Z-hexenyl, 4E-hexenyl and 5-hexenyl. Groups having up to 5 carbon atoms are generally preferred, in particular CH₂=CH, CH₃CH=CH.

The term "fluoroalkyl" preferably encompasses straight-chain groups having a terminal fluorine, *i.e.* fluoromethyl, 2-fluoroethyl, 3-fluoropropyl, 4-fluorobutyl, 5-fluoropentyl, 6-fluorohexyl and 7-fluoroheptyl. However, other positions of the fluorine are not excluded.

The term "oxaalkyl" or "alkoxy" preferably encompasses straight-chain radicals of the Formula CₙH₂ₙ₊₁-O-(CH₂)ₘ, in which n and m each, independently of one another, denote 1 to 6. m may also denote 0. Preferably, n = 1 and m = 1 to 6 or m = 0 and n = 1 to 3. Further preferably the alkoxy or oxaalkyl group can also contain one or more further O atoms such that oxygen atoms are not directly linked to one another.

Through a suitable choice of the meanings of R⁰ and X⁰, the addressing times, the threshold voltage, the steepness of the transmission characteristic lines, etc., can be modified in the desired manner. For example, 1E-alkenyl radicals, 3E-alkenyl radicals, 2E-alkenyloxy radicals and the like generally result in shorter addressing times, improved nematic tendencies and a higher ratio between the elastic constants k₃₃ (bend) and k₁₁ (splay) compared with alkyl and alkoxy radicals. 4-Alkenyl radicals, 3-alkenyl radicals and the like generally give lower threshold voltages and lower values of k₃₃/k₁₁ compared with alkyl and alkoxy radicals. The mixtures according to the invention are distinguished, in particular, by high Δε values and thus have significantly faster response times than the mixtures from the prior art.

The optimum mixing ratio of the compounds of the above-mentioned formulae depends substantially on the desired properties, on the choice of the components of the above-mentioned formulae and on the choice of any further components that may be present.

Suitable mixing ratios within the range indicated above can easily be determined from case to case.

The total amount of compounds of the above-mentioned formulae in the liquid-crystalline media according to the invention is not crucial. The mixtures can therefore comprise one or more further components for the purposes of optimisation of various properties. However, the observed effect on the desired improvement in the properties of the medium is generally greater, the higher the total concentration of compounds of the above-mentioned formulae.

In a particularly preferred embodiment, the liquid-crystalline media according to the invention comprise compounds of the Formulae IV to VIII (preferably IV and V) in which X⁰ denotes F, OCF₃, OCHF₂, OCH=CF₂, OCF=CF₂ or OCF₂-CF₂H. A favourable synergistic action with the compounds of the Formulae I, L1 and/or L2, II and III results in particularly advantageous properties. In particular, mixtures comprising compounds of the Formulae I, L1 and/or L2, II and III are distinguished by their low threshold voltage.

The individual compounds of the above-mentioned formulae and the subformulae thereof which can be used in the liquid-crystalline media according to the invention are either known or can be prepared analogously to the known compounds.

The invention also relates to a process for the preparation of a liquid-crystalline medium as described above and below, by mixing one or more compounds of the Formula I with one or more compounds of Formulae L1 and/or L2, Y1, Y2 or Y3, one or more compounds of Formula B, and one or more compounds selected from the group consisting of Formulae II, III, Z1, Z2, Z3, Z4, IV, VI, XIV, XII, XVI, XVlla, XVllb, XVllc, XX, XXIII, XXIX XXXI and XXXIV.

In another preferred embodiment of the present invention the liquid-crystalline medium additionally comprises one or more polymerisable compounds. The polymerisable compounds are preferably selected from Formula M

R^{a}-B¹-(Z^{b}-B²)ₘ-R^{b} M

in which the individual radicals, on each occurrence identically or differently, and each, independently of one another, have the following meaning:
   - R^{a} and R^{b}: P, P-Sp-, H, F, Cl, Br, I, -CN, -NO₂, -NCO, -NCS, -OCN, -SCN, SF₅ or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN, P or P-Sp-, where, if B¹ and/or B² contain a saturated C atom, R^{a} and/or R^{b} may also denote a radical which is spiro-linked to this saturated C atom,
wherein at least one of the radicals R^{a} and R^{b} denotes or contains a group P or P-Sp-,
   - P: a polymerisable group,
   - Sp: a spacer group or a single bond,
   - B¹ and B²: an aromatic, heteroaromatic, alicyclic or heterocyclic group, preferably having 4 to 25 ring atoms, which may also contain fused rings, and which is unsubstituted, or mono- or polysubstituted by L,
   - Z^{b}: -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ or a single bond,
   - R⁰ and R⁰⁰: each, independently of one another, denote H or alkyl having 1 to 12 C atoms,
   - m: denotes 0, 1, 2, 3 or 4,
   - n1: denotes 1, 2, 3 or 4,
   - L: P, P-Sp-, OH, CH₂OH, F, CI, Br, I, -CN, -NO₂, -NCO, -NCS, -OCN, -SCN, -C(=O)N(R^{X})₂, -C(=O)Y¹, -C(=O)R^{X}, -N(R^{X})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-,
   - P and Sp: have the meanings indicated in Formula M above,
   - Y¹: denotes halogen,
   - R^{X}: denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms.

Particularly preferred compounds of the Formula M are those in which B¹ and B² each, independently of one another, denote 1,4-phenylene, 1,3-phenylene, naphthalene-1,4-diyl, naphthalene-2,6-diyl, phenanthrene-2,7-diyl, 9,10-dihydro-phenanthrene-2,7-diyl, anthracene-2,7-diyl, fluorene-2,7-diyl, coumarine, flavone, where, in addition, one or more CH groups in these groups may be replaced by N, cyclohexane-1,4-diyl, in which, in addition, one or more non-adjacent CH₂ groups may be replaced by O and/or S, 1,4-cyclohexenylene, bicycle[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L as defined for the Formula M above.

Particularly preferred compounds of the Formula M are those in which B¹ and B² each, independently of one another, denote 1,4-phenylene, 1,3-phenylene, naphthalene-1,4-diyl or naphthalene-2,6-diyl.

Very preferred compounds of Formula M are selected from the following formulae: 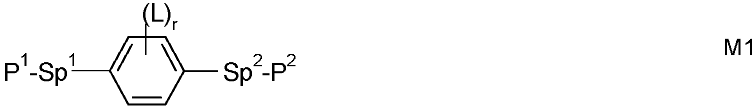 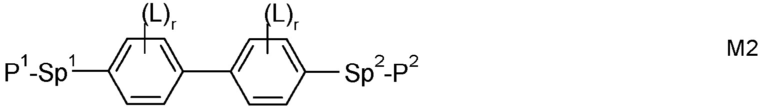 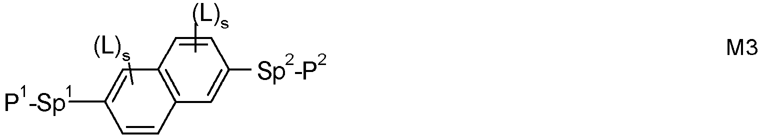 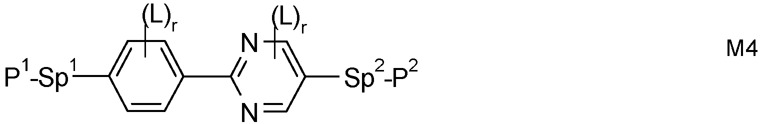 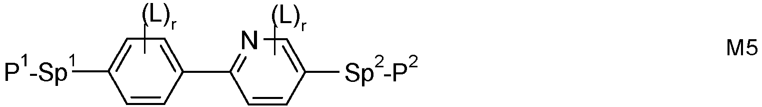 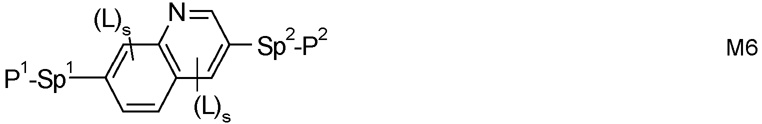 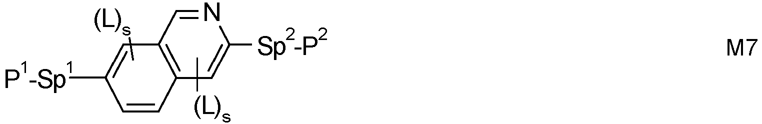 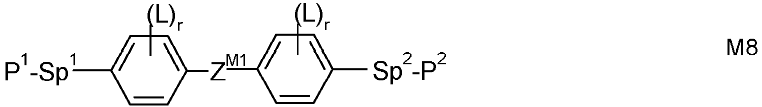 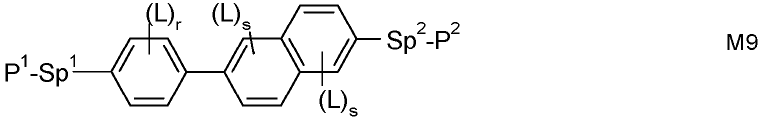 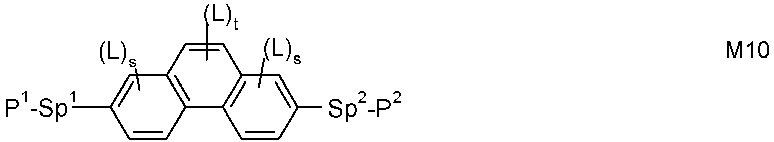 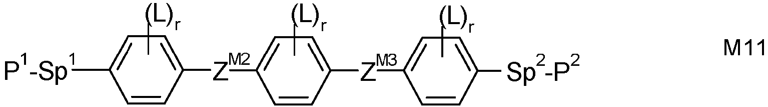 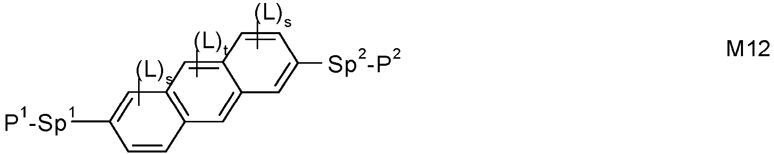 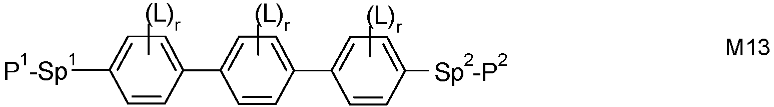 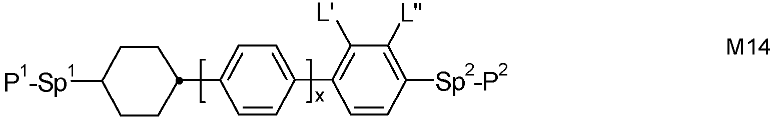 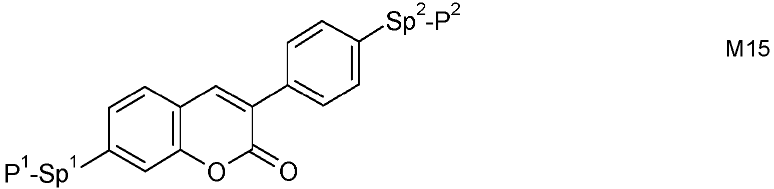 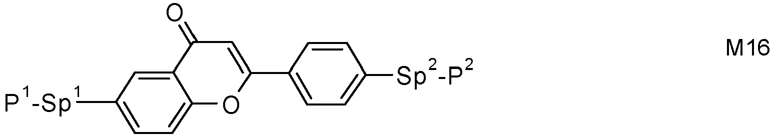 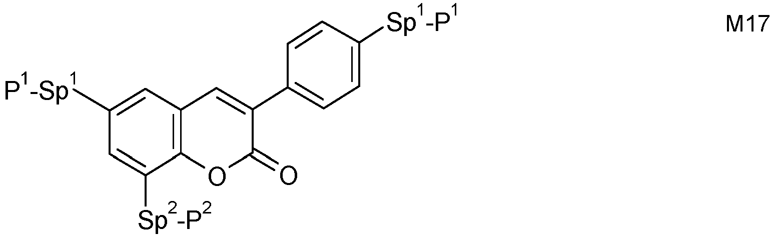 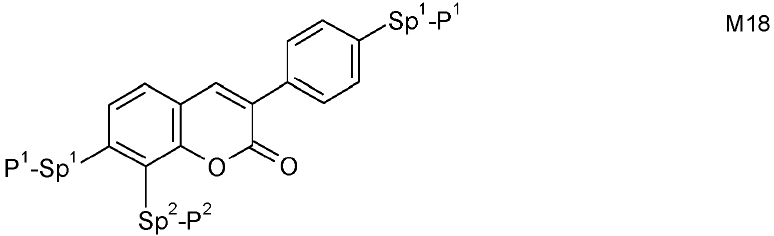 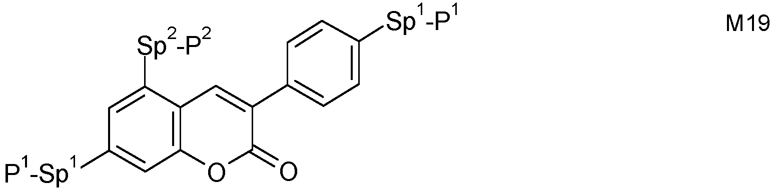 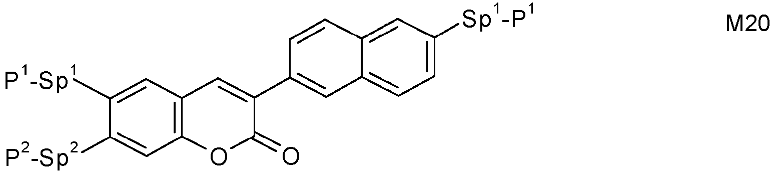 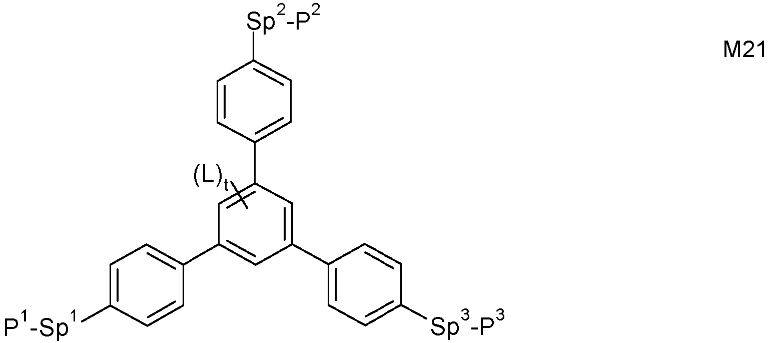 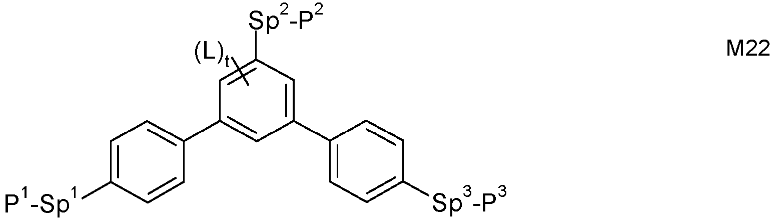 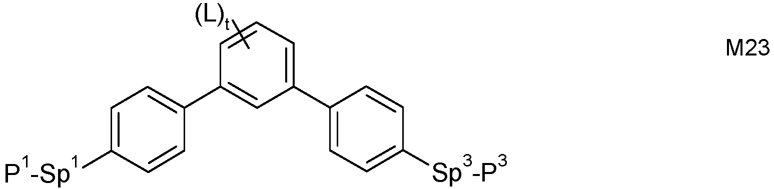 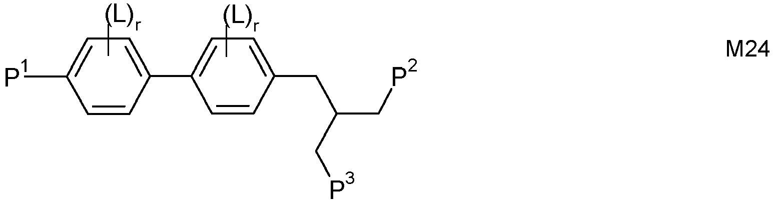 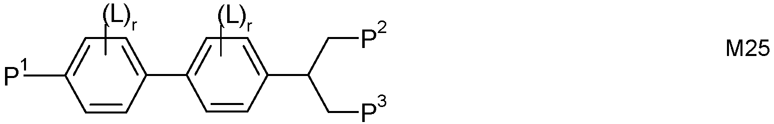 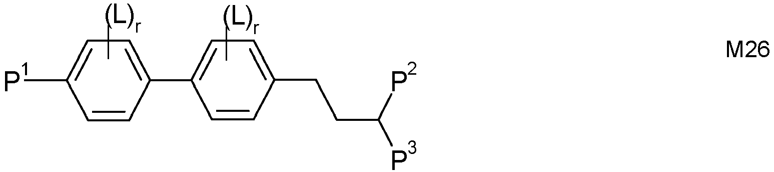 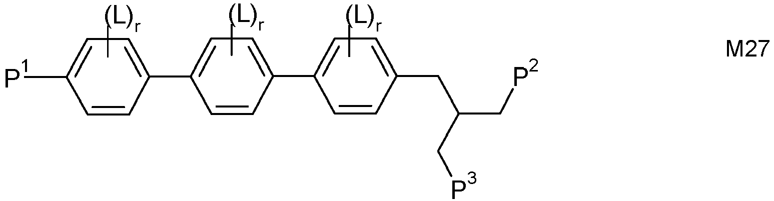 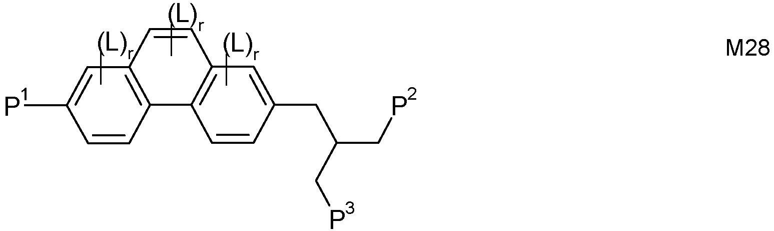 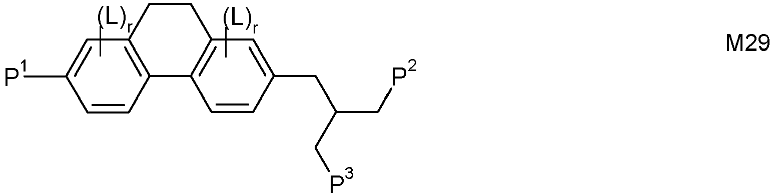 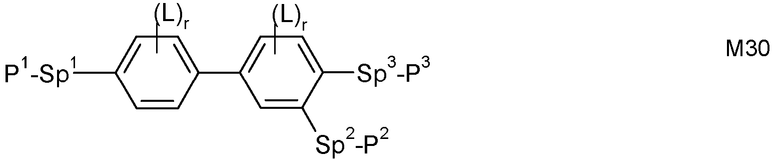 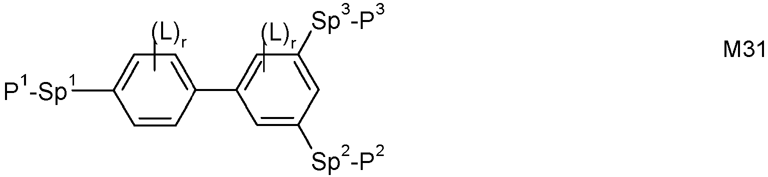 in which the individual radicals, on each occurrence identically or differently, and each, independently of one another, have the following meaning:
- P¹, P², P³: a polymerisable group, preferably selected from vinyloxy, acrylate, methacrylate, fluoroacrylate, chloroacrylate, oxetane and epoxy,
- Sp¹, Sp², Sp³: a single bond or a spacer group where, in addition, one or more of the radicals P¹-Sp¹-, P¹-Sp²- and P³-Sp³- may denote R^{aa}, with the proviso that at least one of the radicals P¹-Sp¹-, P²-Sp² and P³-Sp³- present is different from R^{aa}, preferably -(CH₂)ₚ₁-, -(CH₂)p₁-O-, -(CH₂)ₚ₁-CO-O- or -(CH₂)ₚ₁-O-CO-O-, wherein p1 is an integer from 1 to 12,
- R^{aa}: H, F, Cl, CN or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, CI, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),
- R⁰, R⁰⁰: H or alkyl having 1 to 12 C atoms,
- R^{y} and R^{z}: H, F, CH₃ or CF₃,
- X¹, X², X³: -CO-O-, -O-CO- or a single bond,
- Z^{M1}: -O-, -CO-, -C(R^{y}R^{z})- or -CF₂CF₂-,
- Z^{M2}, Z^{M3}: -CO-O-, -O-CO-, -CH₂O-, -OCH₂-, -CF₂O-, -OCF₂- or -(CH₂)ₙ-, where n is 2, 3 or 4,
- L: F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms,
- L', L": H, F or Cl,
- r: 0, 1, 2, 3 or 4,
- s: 0, 1, 2 or 3,
- t: 0, 1 or 2,
- x: 0 or 1.

Especially preferred are compounds of Formulae M2 and M13.

Further preferred are trireactive compounds M15 to M31, in particular M17, M18, M19, M22, M23, M24, M25, M30 and M31.

In the compounds of Formulae M1 to M31 the group 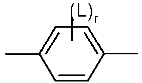 is preferably 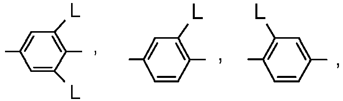 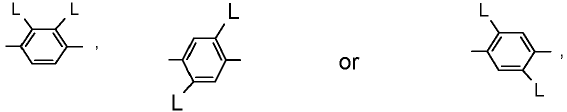 wherein L on each occurrence, identically or differently, has one of the meanings given for Formula M above or below, and is preferably F, Cl, CN, NO₂, CH₃, C₂H₅, C(CH₃)₃, CH(CH3)2, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ or P-Sp-, very preferably F, Cl, CN, CH₃, C₂H₅, OCH₃, COCH₃, OCF₃ or P-Sp-, more preferably F, Cl, CH₃, OCH₃, COCH₃ or OCF₃, especially F or CH₃.

Preferred compounds of Formulae M1 to M31 are those wherein P¹, P² and P³ denote an acrylate, methacrylate, oxetane or epoxy group, very preferably an acrylate or methacrylate group.

Further preferred compounds of Formulae M1 to M31 are those wherein Sp¹, Sp² and Sp³ are a single bond.

Further preferred compounds of Formulae M1 to M31 are those wherein one of Sp¹, Sp² and Sp³ is a single bond and another one of Sp¹, Sp² and Sp³ is different from a single bond.

Further preferred compounds of Formulae M1 to M31 are those wherein those groups Sp¹, Sp² and Sp³ that are different from a single bond denote -(CH₂)ₛ₁-X"-, wherein s1 is an integer from 1 to 6, preferably 2, 3, 4 or 5, and X" is X" is the linkage to the benzene ring and is -O-, -O-CO-, -CO-O-, -O-CO-O- or a single bond.

Particular preference is given to liquid-crystalline media comprising one, two or three polymerisable compounds of Formula M, preferably selected from Formulae M1 to M31.

Further preferably the liquid-crystalline media according to the present invention comprise one or more polymerisable compounds selected from Table E below.

Preferably the proportion of polymerisable compounds in the liquid-crystalline medium, preferably selected from Formula M and Table E, is from 0.01 to 5%, very preferably from 0.05 to 1%, most preferably from 0.1 to 0.5%.

It was observed that the addition of one or more polymerisable compounds to the liquid-crystalline medium, like those selected from Formula M and Table E, leads to advantageous properties like fast response times. Such a liquid-crystalline medium is especially suitable for use in PSA displays where it shows low image sticking, a quick and complete polymerisation, the quick generation of a low pretilt angle which is stable after UV exposure, a high reliability, high VHR value after UV exposure, and a high birefringence. By appropriate selection of the polymerisable compounds it is possible to increase the absorption of the liquid-crystalline medium at longer UV wavelengths, so that it is possible to use such longer UV wavelengths for polymerisation, which is advantageous for the display manufacturing process.

The polymerisable group P is a group which is suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C- triple bond, and groups which are suitable for polymerisation with ring opening, such as, for example, oxetane or epoxide groups.

Preferred groups P are selected from the group consisting of CH₂=CW¹-CO-O-, CH₂=CW¹-CO-, 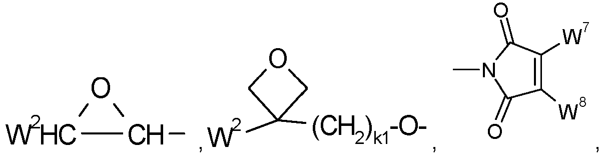 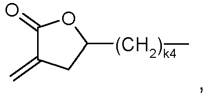 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN- and W⁴W⁵W⁶Si-, in which W¹ denotes H, F, CI, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or *n*-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, which is optionally substituted by one or more radicals L as defined for Formula M above which are other than P-Sp-, k₁, k₂ and k₃ each, independently of one another, denote 0 or 1, k₃ preferably denotes 1, and k₄ denotes an integer from 1 to 10.

Very preferred groups P are selected from the group consisting of CH₂=CW¹-CO-O-, CH₂=CW¹-CO-, 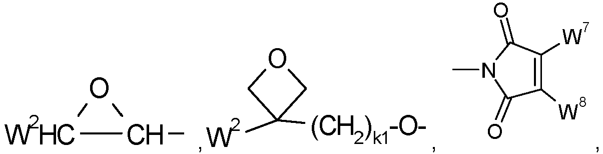 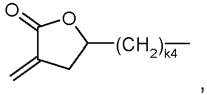 CH₂=CW²-O-, CH=CW²-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- and W⁴W⁵W⁶Si-, in which W¹ denotes H, F, CI, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or *n-*propyl, W⁴, W⁵ and W⁶ each, independently of one another, denote CI, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, k₁, k₂ and k₃ each, independently of one another, denote 0 or 1, k₃ preferably denotes 1, and k₄ denotes an integer from 1 to 10.

Very particularly preferred groups P are selected from the group consisting of CH₂=CW¹-CO-O-, in particular CH₂=CH-CO-O-, CH₂=C(CH₃)-CO-O- and CH₂=CF-CO-O-, furthermore CH₂=CH-O-, (CH₂=CH)₂CH-O-CO-, (CH₂=CH)₂CHO-,

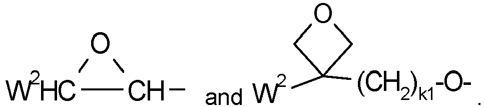

Further preferred polymerisable groups P are selected from the group consisting of vinyloxy, acrylate, methacrylate, fluoroacrylate, chloroacrylate, oxetane and epoxide, most preferably from acrylate and methacrylate.

If Sp is different from a single bond, it is preferably of the Formula Sp"-X", so that the respective radical P-Sp- conforms to the Formula P-Sp"-X"-, wherein
- Sp": denotes alkylene having 1 to 20, preferably 1 to 12, C atoms, which is optionally mono- or polysubstituted by F, CI, Br, I or CN and in which, in addition, one or more non-adjacent CH₂ groups may each be replaced, independently of one another, by -O-, -S-, -NH-, -N(R⁰)-, -Si(R⁰R⁰⁰)-, -CO-, -CO-O-, -O-CO-, -O-CO-O-, -S-CO-, -CO-S-, -N(R⁰⁰)-CO-O-, -O-CO-N(R⁰)-, -N(R⁰)-CO-N(R⁰⁰)-, -CH=CH- or -C≡C- in such a way that O and/or S atoms are not linked directly to one another,
- X": denotes -O-, -S-, -CO-, -CO-O-, -O-CO-, -O-CO-O-, -CO-N(R⁰)-, -N(R⁰)-CO-, -N(R⁰)-CO-N(R⁰⁰)-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-CO-O-, -O-CO-CH=CH- or a single bond,
- R⁰ and R⁰⁰: each, independently of one another, denote H or alkyl having 1 to 20 C atoms, and
- Y² and Y³: each, independently of one another, denote H, F, Cl or CN.
- X": is preferably -O-, -S-, -CO-, -COO-, -OCO-, -O-COO-, -CO-NR⁰-, -NR⁰-CO-, -NR⁰-CO-NR⁰⁰- or a single bond.

Typical spacer groups Sp and -Sp"-X"- are, for example, -(CH₂)ₚ₁-, -(CH₂CH₂O)_{q1}-CH₂CH₂-, -CH₂CH₂-S-CH₂CH₂-, -CH₂CH₂-NH-CH₂CH₂- or -(SiR⁰R⁰⁰-O)ₚ₁-, in which p1 is an integer from 1 to 12, q1 is an integer from 1 to 3, and R⁰ and R⁰⁰ have the meanings indicated in Formula M above.

Particularly preferred groups Sp and -Sp"-X"- are -(CH₂)ₚ₁-, -(CH₂)ₚ₁-O-, -(CH₂)ₚ₁-O-CO-, -(CH₂)ₚ₁-CO-O-, -(CH₂)ₚ₁-O-CO-O-, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

For the production of PSA displays, the polymerisable compounds contained in the liquid-crystalline medium are polymerised or crosslinked (if one compound contains two or more polymerisable groups) by in-situ polymerisation in the liquid-crystalline medium between the substrates of the LC display, optionally while a voltage is applied to the electrodes.

The structure of the PSA displays according to the invention corresponds to the usual geometry for PSA displays, as described in the prior art cited at the outset. Geometries without protrusions are preferred, in particular those in which, in addition, the electrode on the colour filter side is unstructured and only the electrode on the TFT side has slots. Particularly suitable and preferred electrode structures for PS-VA displays are described, for example, in US 2006/0066793 A1.

The combination of compounds of the preferred embodiments mentioned above with the polymerised compounds described above causes low threshold voltages, low rotational viscosities and very good low-temperature stabilities in the liquid-crystalline media according to the invention at the same time as constantly high clearing points and high VHR values.

The use of liquid-crystalline media containing polymerisable compounds allows the rapid establishment of a particularly low pretilt angle in PSA displays. In particular, the liquid-crystalline media exhibit significantly shortened response times, in particular also the grey-shade response times, in PSA displays compared with the media from the prior art.

Preference is generally given to liquid-crystalline media which have a nematic liquid-crystalline phase, and preferably have no chiral liquid crystal phase.

The invention also relates to the use of a liquid-crystalline medium according to the present invention as described above and below for electro-optical purposes, in particular for the use is in shutter glasses, for 3D applications, in TN, PS-TN, STN, TN-TFT, OCB, IPS, PS-IPS, FFS, HB-FFS, XB-FFS, PS-FFS, positive VA and positive PS-VA displays, and to electro-optical displays, in particular of the aforementioned types, containing a liquid-crystalline medium according to the present invention as described above and below, in particular a TN, PS-TN, STN, TN-TFT, OCB, IPS, PS-IPS, FFS, HB-FFS, XB-FFS, PS-FFS, positive VA (vertically aligned) or positive PS-VA display.

The invention also relates to electro-optical displays, such as, for example, STN or MLC displays, having two plane-parallel outer plates, which, together with a frame, form a cell, integrated non-linear elements for switching individual pixels on the outer plates, and a nematic liquid-crystal medium having positive dielectric anisotropy and high specific resistance located in the cell, wherein the a nematic liquid-crystal medium is a liquid-crystalline medium according to the present invention as described above and below.

The liquid-crystalline media according to the invention enable a significant broadening of the available parameter latitude. The achievable combinations of clearing point, viscosity at low temperature, thermal and UV stability and high optical anisotropy are far superior to previous materials from the prior art.

In particular, the combination of compounds of Formula I with compounds of Formula L1 and/or L2 and, optionally, with compounds selected from Formulae II-XXXIII or their subformulae, leads to liquid-crystalline media which show a moderate positive dielectric anisotropy and at the same time an increased dielectric constant ε_{⊥} perpendicular to the longitudinal axes of the liquid-crystalline molecules, while maintaining a low rotational viscosity and a low value of the ratio γ₁ /K₁. This enables liquid-crystalline displays, especially of the FFS, HB-FFS, XB-FFS and IPS mode, with high brightness and transmission and low response times.

The liquid-crystalline media according to the invention are suitable for mobile applications and TFT applications, such as, for example, mobile telephones and PDAs. Furthermore, the liquid-crystalline media according to the invention are particularly suitably for use in FFS, HB-FFS, XB-FFS and IPS displays based on dielectrically positive liquid crystals.

The liquid-crystalline media according to the invention, while retaining the nematic phase down to -20 °C and preferably down to -30 °C, particularly preferably down to -40 °C, and the clearing point ≥ 85 °C, preferably ≥ 90 °C, at the same time allow rotational viscosities γ₁ of ≤ 120 mPa·s, particularly preferably ≤ 100 mPa·s, to be achieved, enabling excellent MLC displays having fast response times to be achieved. The rotational viscosities are determined at 20 °C.

The dielectric anisotropy Δε of the liquid-crystalline media according to the invention at 20 °C and 1 kHz is preferably ≥ +1.5, very preferably from +3 to +18.

The birefringence Δn of the liquid-crystalline media according to the invention at 20 °C is preferably from 0.08 to 0.12, very preferably from 0.09 to 0.11.

The rotational viscosity γ₁ of the liquid-crystalline media according to the invention is preferably ≤ 120 mPa s, more preferably ≤ 110 mPa s, very preferably ≤ 90 mPa s.

The ratio γ₁ / K₁ (wherein γ₁ is the rotational viscosity γ₁ and K₁ is the elastic constant for splay deformation) of the liquid-crystalline media according to the invention is preferably ≤ 7 mPa·s / pN, very preferably ≤ 6 mPa·s / pN, most preferably ≤ 5.5 mPa·s / pN.

The nematic phase range of the liquid-crystalline media according to the invention preferably has a width of at least 90 °C, more preferably of at least 100 °C, in particular at least 110 °C. This range preferably extends at least from -25 °C to +90 °C.

It goes without saying that, through a suitable choice of the components of the liquid-crystalline media according to the invention, it is also possible for higher clearing points (for example above 100 °C) to be achieved at higher threshold voltages or lower clearing points to be achieved at lower threshold voltages with retention of the other advantageous properties. At viscosities correspondingly increased only slightly, it is likewise possible to obtain liquid-crystalline media having a higher Δε and thus low thresholds. The MLC displays according to the invention preferably operate at the first Gooch and Tarry transmission minimum [C.H. Gooch and H.A. Tarry, Electron. Lett. 10, 2-4, 1974; C.H. Gooch and H.A. Tarry, Appl. Phys., Vol. 8, 1575-1584, 1975], where, besides particularly favourable electro-optical properties, such as, for example, high steepness of the characteristic line and low angle dependence of the contrast (German patent 30 22 818), lower dielectric anisotropy is sufficient at the same threshold voltage as in an analogous display at the second minimum. This enables significantly higher specific resistance values to be achieved using the mixtures according to the invention at the first minimum than in the case of liquid-crystalline media comprising cyano compounds. Through a suitable choice of the individual components and their proportions by weight, the person skilled in the art is able to set the birefringence necessary for a pre-specified layer thickness of the MLC display using simple routine methods.

Measurements of the voltage holding ratio (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] have shown that liquid-crystalline media according to the invention comprising compounds of the Formulae ST1, ST2, RV, IA and IB exhibit a significantly smaller decrease in the HR on UV exposure than analogous mixtures comprising cyano-phenylcyclohexanes of the Formula 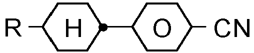 or esters of the Formula 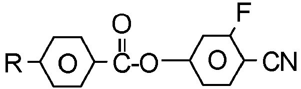 instead of the compounds of the Formulae I ST1, ST2, RV, IA and IB.

The light stability and UV stability of the liquid-crystalline media according to the invention are considerably better, *i.e.* they exhibit a significantly smaller decrease in the HR on exposure to light, heat or UV.

The construction of the MLC display according to the invention from polarisers, electrode base plates and surface-treated electrodes corresponds to the usual design for displays of this type. The term usual design is broadly drawn here and also encompasses all derivatives and modifications of the MLC display, in particular including matrix display elements based on poly-Si TFTs or MIM.

A significant difference between the displays according to the invention and the hitherto conventional displays based on the twisted nematic cell consists, however, in the choice of the liquid-crystal parameters of the liquid-crystal layer.

The liquid-crystalline media which can be used in accordance with the invention are prepared in a manner conventional per se, for example by mixing one or more compounds of Claim 1 with one or more compounds of the Formulae II-XXXIV or with further liquid-crystalline compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

The LC media may also comprise further additives known to the person skilled in the art and described in the literature, such as, for example, polymerisation initiators, inhibitors, surface-active substances, light stabilisers, antioxidants, e.g. BHT, TEMPOL, microparticles, free-radical scavengers, nanoparticles, etc. For example, 0 to 15% of pleochroic dyes or chiral dopants or initiators like Irgacure^{®} 651 or Irgacure^{®} 907 can be added. Suitable stabilisers and dopants are mentioned below in Tables C and D.

In a preferred embodiment of the present invention the LC media contain one or more further stabilisers, preferably selected from the group consisting of the following formulae: 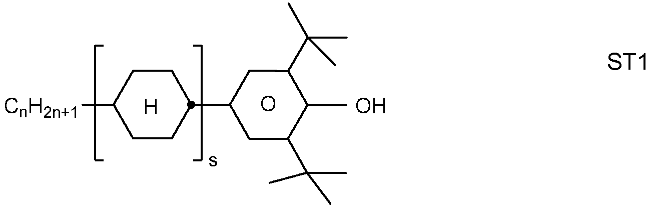 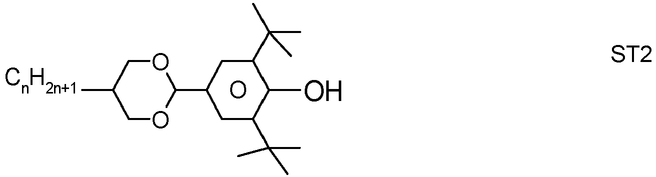 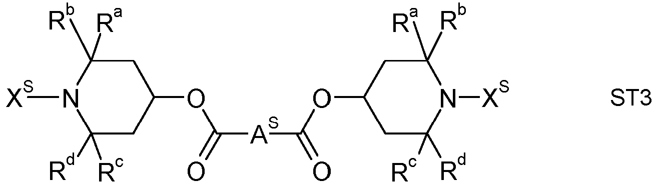 wherein the individual radicals, independently of each other and on each occurrence identically or differently, have the following meanings:
- R^{a-d}: straight-chain or branched alkyl with 1 to 10, preferably 1 to 6, very preferably 1 to 4 C atoms, most preferably methyl,
- X^{S}: H, CH₃, OH or O^{•},
- A^{S}: straight-chain, branched or cyclic alkylene with 1 to 20 C atoms which is optionally substituted,
- n: an integer from 1 to 6, preferably 3, and
- s: is 0 or 1.

Preferred stabilisers of Formula ST3 are selected from Formula ST3A 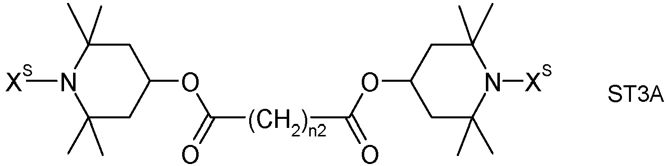 wherein n2 is an integer from 1 to 12, and wherein one or more H atoms in the group (CH₂)ₙ₂ are optionally replaced by methyl, ethyl, propyl, butyl, pentyl or hexyl.

Very preferred stabilisers are selected from the group consisting of the following formulae:

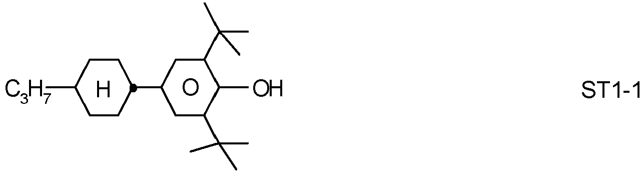

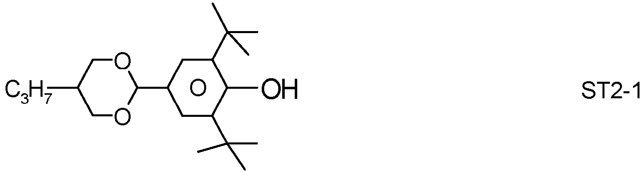

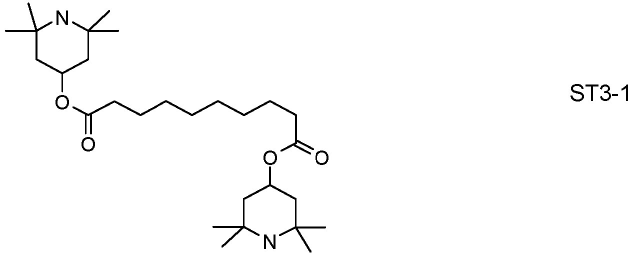

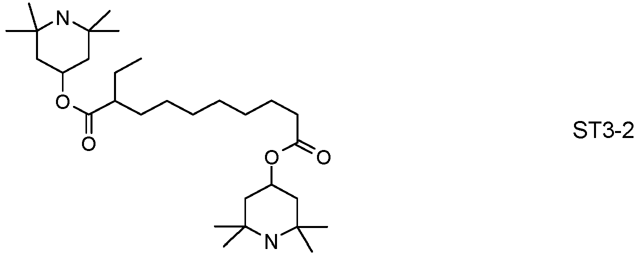

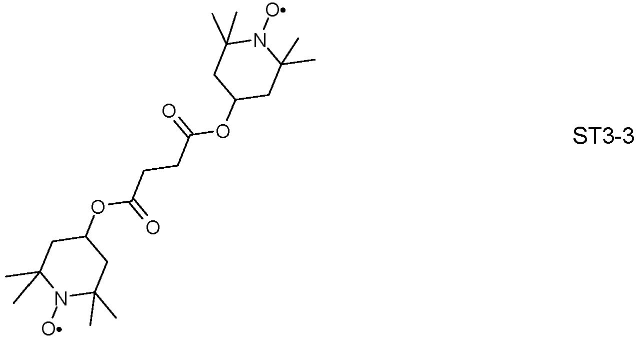

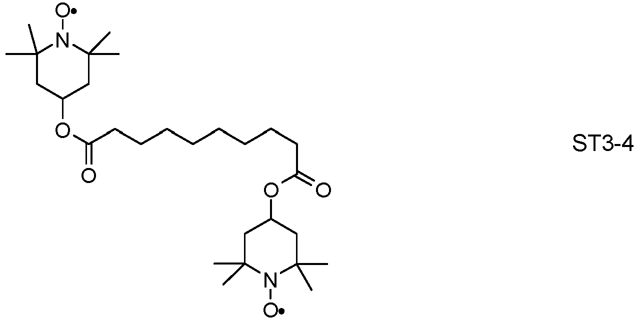

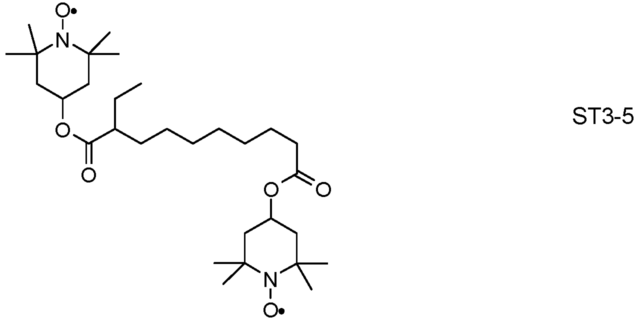

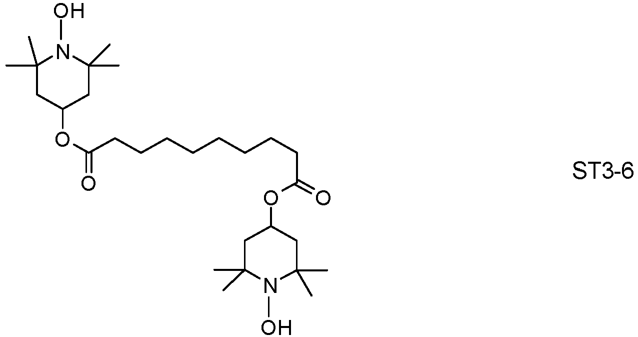

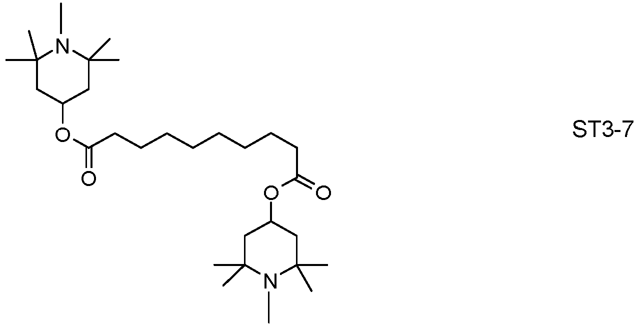

In a preferred embodiment the LC medium comprises one or more stabilisers selected from the group consisting of Formulae ST1-1, ST2-1, ST3-1, ST3-1 and ST3-3.

In a preferred embodiment the LC medium comprises one or more stabilisers selected from Table D.

Preferably the proportion of stabilisers, like those of Formulae ST1 to ST3, in the LC medium is from 10 to 2000 ppm, very preferably from 30 to 1000 ppm.

In another preferred embodiment the LC medium according to the present invention contains a self-aligning (SA) additive, preferably in a concentration of 0.1 to 2.5 wt.-%. An LC medium according to this preferred embodiment is especially suitable for use in polymer stabilised SA-FFS, SA-HB-FFS or SA-XB-FFS displays.

In a preferred embodiment the SA-FFS, SA-HB-FFS or SA-XB-FFS display according to the present invention does not contain a polyimide alignment layer. In another preferred embodiment the SA-FFS, SA-HB-FFS or SA-XB-FFS display according to preferred embodiment contains a polyimide alignment layer.

Preferred SA additives for use in this preferred embodiment are selected from compounds comprising a mesogenic group and a straight-chain or branched alkyl side chain that is terminated with one or more polar anchor groups selected from hydroxy, carboxy, amino or thiol groups.

Further preferred SA additives contain one or more polymerisable groups which are attached, optionally via spacer groups, to the mesogenic group or the polar anchor group. These polymerisable SA additives can be polymerised in the LC medium under similar conditions as applied for the RMs in the PSA process.

Suitable SA additives to induce homeotropic alignment, especially for use in SA-VA mode displays, are disclosed for example in US 2013/0182202 A1, US 2014/0838581 A1, US 2015/0166890 A1 and US 2015/0252265 A1.

In another preferred embodiment an LC medium or a polymer stabilised SA-FFS, SA-HB-FFS or SA-XB-FFS display according to the present invention contains one or more self-aligning additives selected from Table F below.

Furthermore, it is possible to add to the liquid-crystalline media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

For the present invention and in the following examples, the structures of the liquid-crystal compounds are indicated by means of acronyms, with the transformation into chemical formulae taking place in accordance with Tables A to C below. All radicals CₘH₂ₘ₊₁, CₙH₂ₙ₊₁, and CₗH₂ₗ₊₁ or CₘH₂ₘ₋₁, CₙH₂ₙ₋₁ and CₗH₂ₗ₋₁ are straight-chain alkyl radicals or alkylene radicals, in each case having n, m and I C atoms respectively. Preferably n, m and l are independently of each other 1, 2, 3, 4, 5, 6, or 7. Table A shows the codes for the ring elements of the nuclei of the compound, Table B lists the bridging units, and Table C lists the meanings of the symbols for the left- and right-hand end groups of the molecules. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 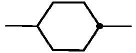 | | |
| **D** | 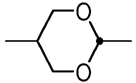 | **DI** | 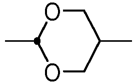 |
| **A** | 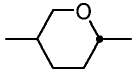 | **Al** | 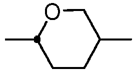 |
| **P** | 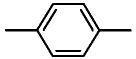 | | |
| **G** | 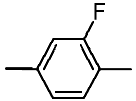 | **GI** | 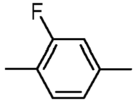 |
| **U** | 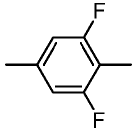 | **UI** | 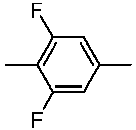 |
| **Y** | 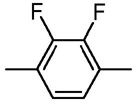 | | |
| **P(F, CI)Y** | 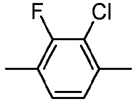 | **P(CI,F)Y** | 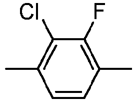 |
| **np** | 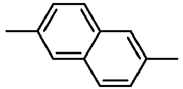 | | |
| **n3f** | 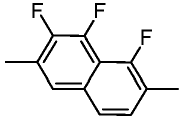 | **nN3fl** | 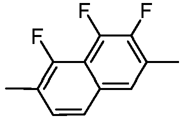 |
| **th** | 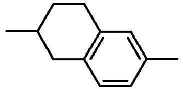 | **thl** | 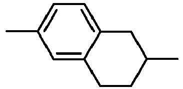 |
| **tH2f** | 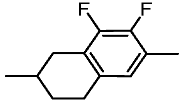 | **tH2fl** | 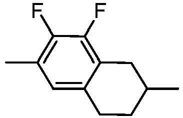 |
| **o2f** | 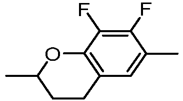 | **o2fl** | 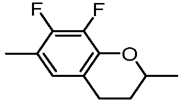 |
| **dh** | 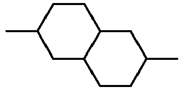 | | |
| **B** | 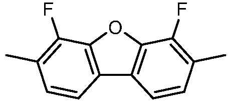 | **B(S)** | 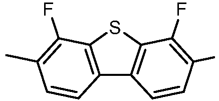 |
| **O** | 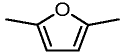 | **S** | 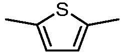 |
| **K** | 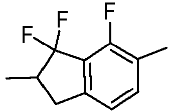 | **KI** | 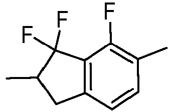 |
| **L** | 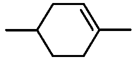 | **LI** | 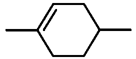 |
| **F** | 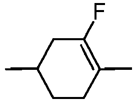 | **FI** | 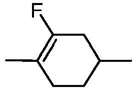 |
| **Bh** | 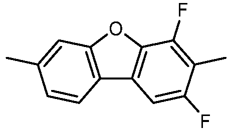 | **Bh(S)** | 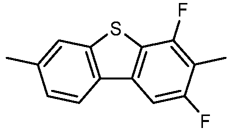 |
| **Bf** | 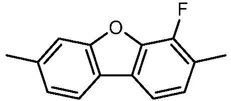 | **Bf(S)** | 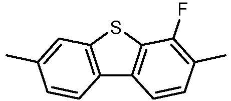 |
| **Bfi** | 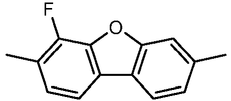 | **Bfi(S)** | 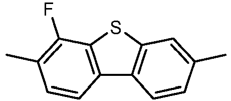 |

**Table B: Bridging units**

| | | | |
|---|---|---|---|
| **E** | -CH₂-CH₂- | | |
| **V** | -CH=CH- | | |
| **T** | -C≡C- | | |
| **W** | -CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH2- |
| **Q** | -CF₂-O- | **QI** | -O-CF2- |

**Table C: End groups**

| **On the left individually or in combination** | | **On the right individually or in combination** | |
|---|---|---|---|
| **-n-** | CₙH₂ₙ₊₁- | **-n** | -CₙH₂ₙ₊₁ |
| **-nO-** | CₙH₂ₙ₊₁-O- | **-On** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH-CₙH₂ₙ- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH2 |
| **-D-** | CF₂H- | **-D** | -CF₂H |
| **-T-** | CF₃- | **-T** | -CF₃ |
| **-MO-** | CFH₂O - | **-OM** | -OCFH2 |
| **-DO-** | CF₂HO - | **-OD** | -OCF₂H |
| **-TO-** | CF₃O- | **-OT** | -OCF₃ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |
| **-(cn)-** | 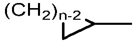 | **-(cn)** | 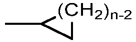 |

| **-(cn)m-** | 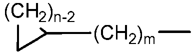 | **-m(cn)** | 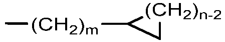 |
|---|---|---|---|
| **On the left only in combination** | | **On the right only in combination** | |
| **-... n...-** | -CₙH₂ₙ- | **-...n...** | -CₙH₂ₙ- |
| **-...M...-** | -CFH- | **-...M...** | -CFH- |
| **-...D...-** | -CF₂- | **-...D...** | -CF₂- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...Zl...** | -O-CO- |
| **-...K...-** | -CO- | **-...K...** | -CO- |
| **-...W...-** | -CF=CF- | **-...W...** | -CF=CF- |

in which n and m are each integers, and the three dots "..." are placeholders for other abbreviations from this table.

The following abbreviations are used:
(n, m, k and l are, independently of one another, each an integer, preferably 1 to 9 preferably 1 to 7, k and l possibly may be also 0 and preferably are 0 to 4, more preferably 0 or 2 and most preferably 2, n preferably is 1, 2, 3, 4 or 5, in the combination "-nO-" it preferably is 1, 2, 3 or 4, preferably 2 or 4, m preferably is 1, 2, 3, 4 or 5, in the combination "-Om" it preferably is 1, 2, 3 or 4, more preferably 2 or 4. The combination "-IVm" preferably is "2V1".)

Preferred mixture components are shown in Tables D and E.

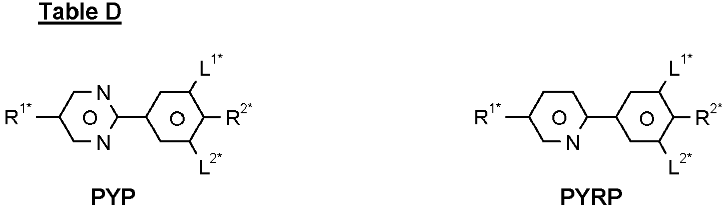

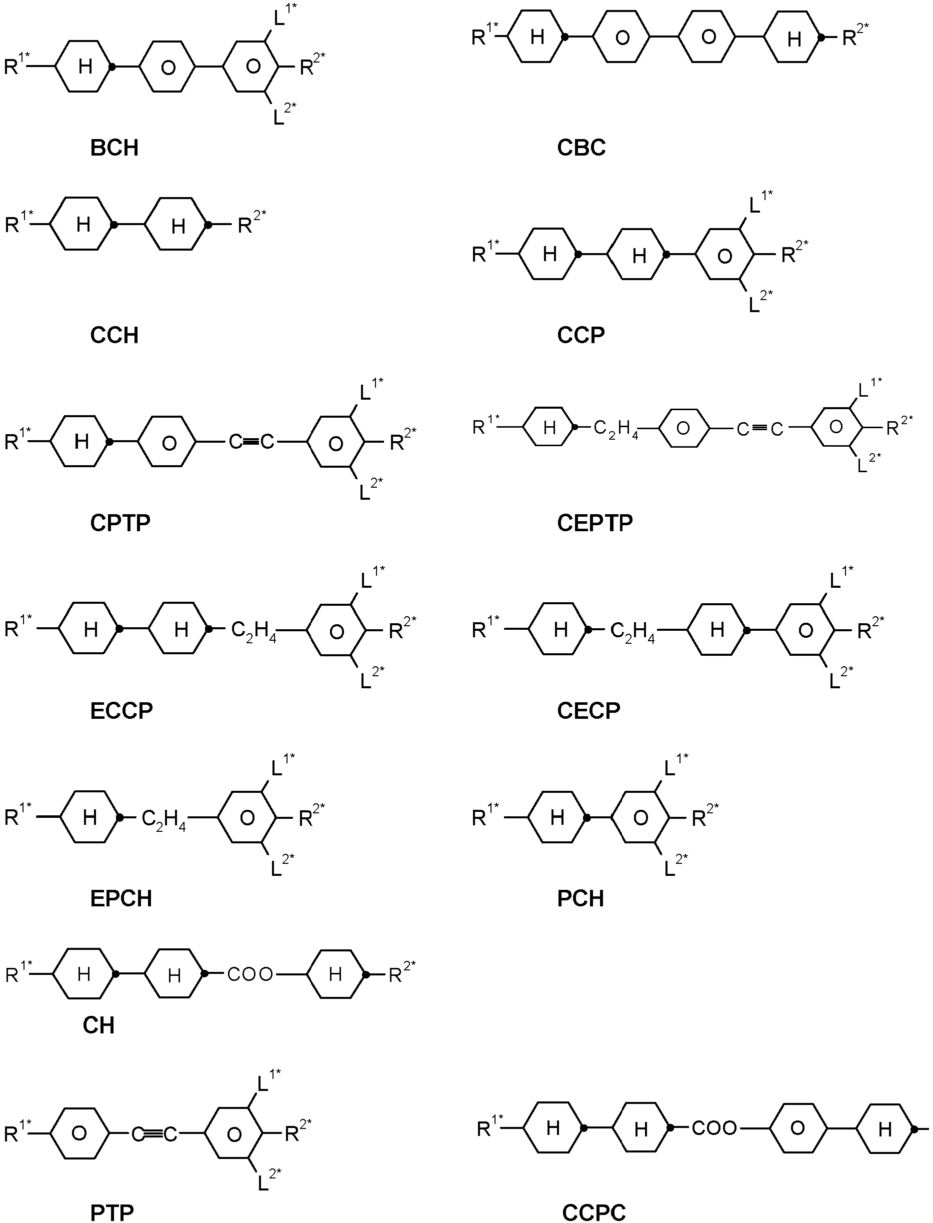

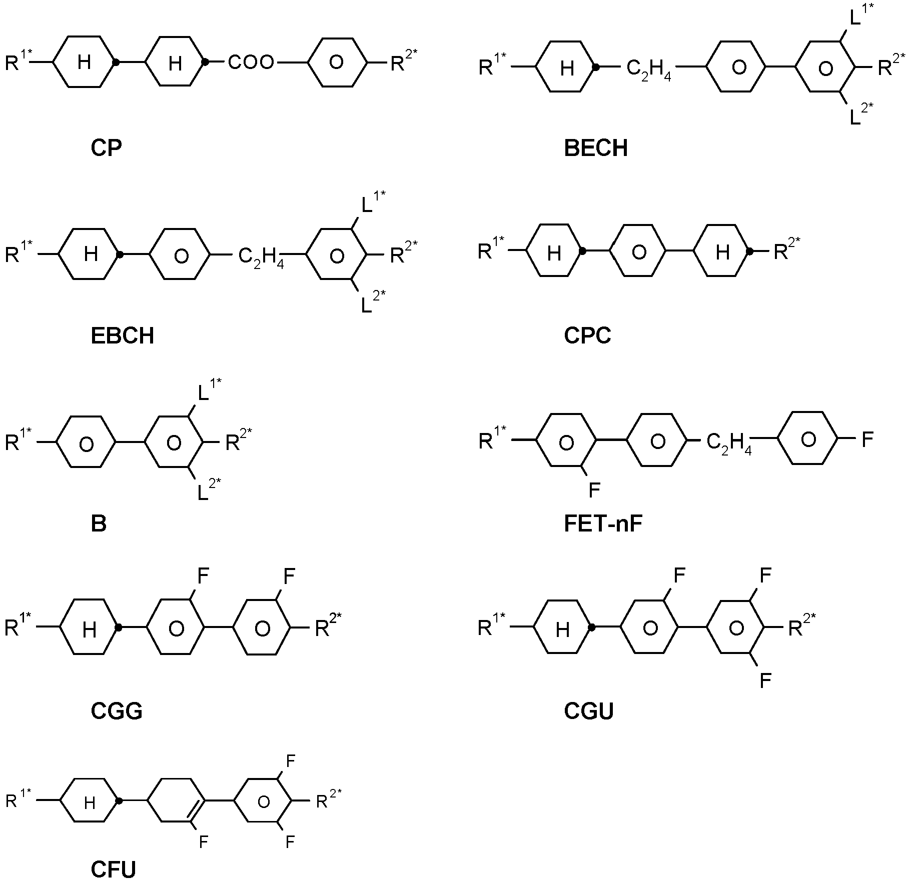

**Table E**

| In the following formulae, n and m each, independently of one another, denote 0, 1, 2, 3, 4, 5, 6, 7, 8, 9, 10, 11 or 12, in particular 2, 3, 5, furthermore 0, 4, 6. | |
|---|---|
| 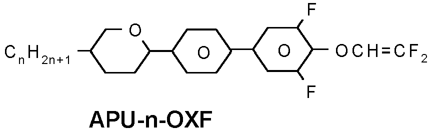 | |
| 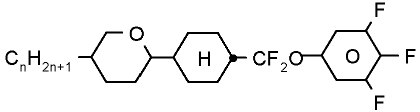 | |
| 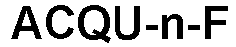 | |
| 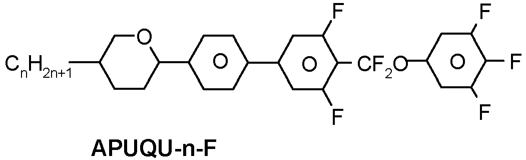 | |
| 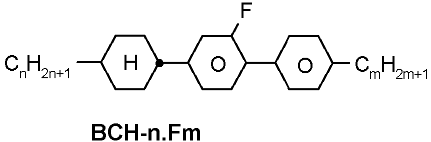 | 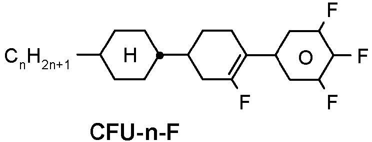 |
| 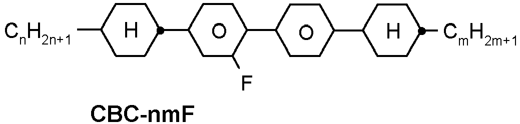 | |
| 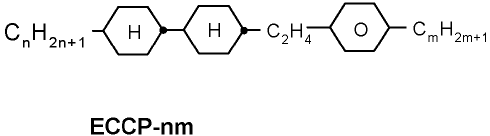 | 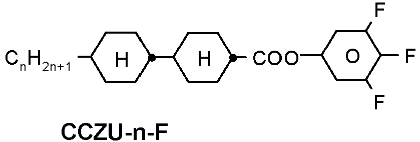 |
| 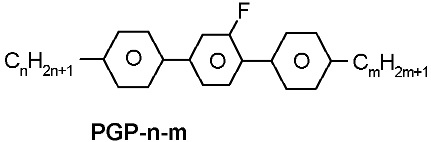 | 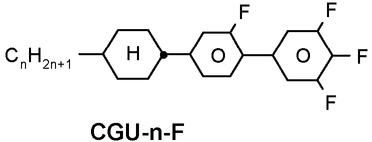 |
| 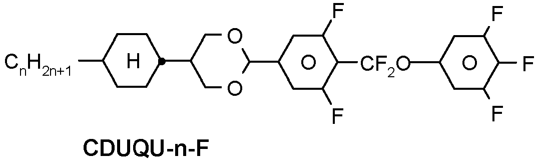 | |
| 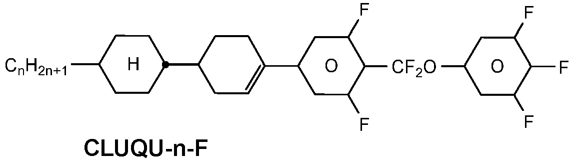 | |
| 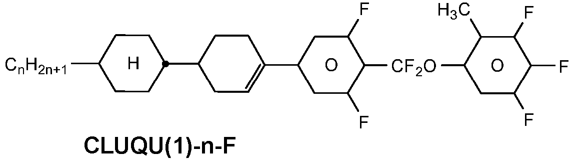 | |
| 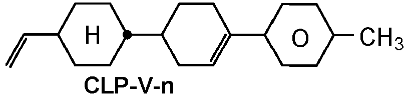 | |
| 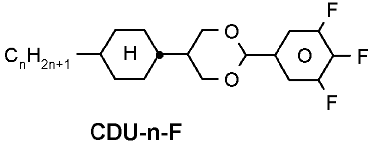 | 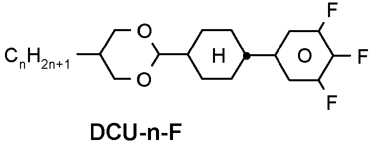 |
| 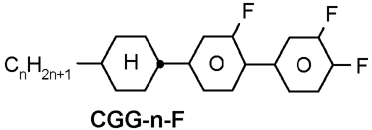 | 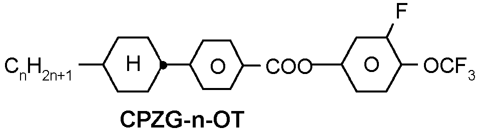 |
| 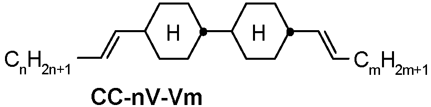 | |
| 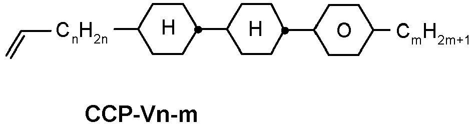 | 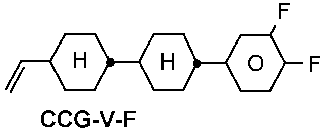 |
| 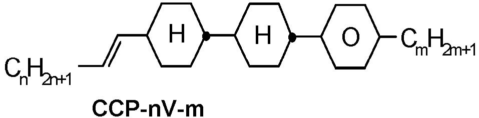 | 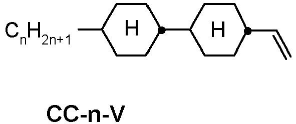 |
| 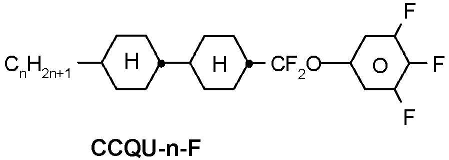 | 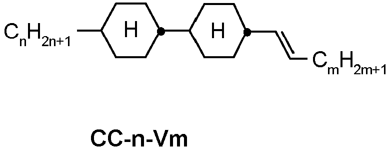 |
| 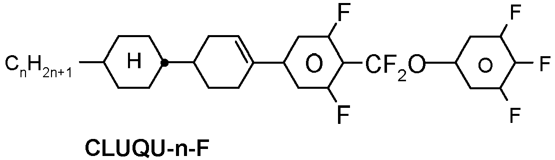 | |
| 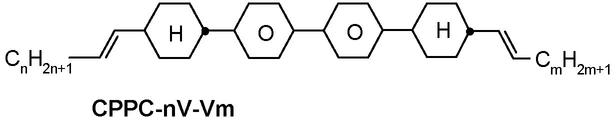 | |
| 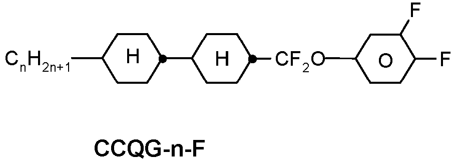 | 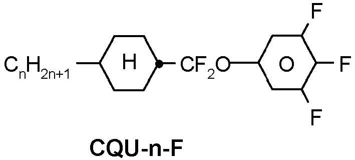 |
| 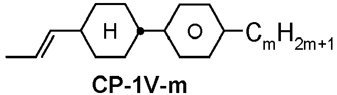 | 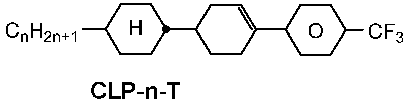 |
| 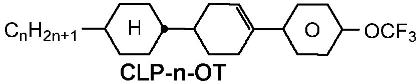 | |
| 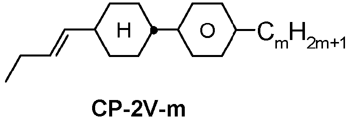 | 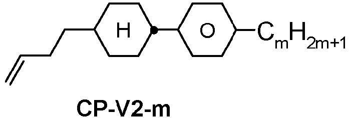 |
| 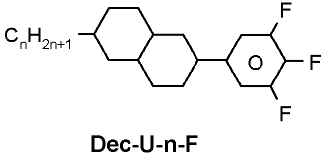 | 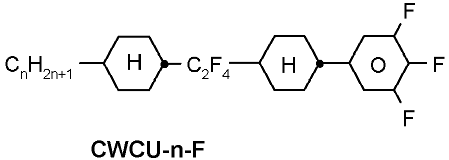 |
| 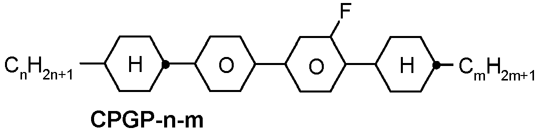 | |
| 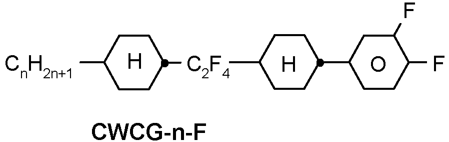 | 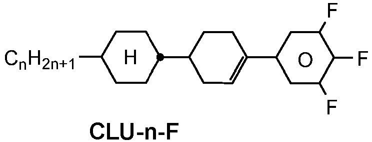 |
| 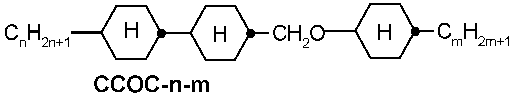 | |
| 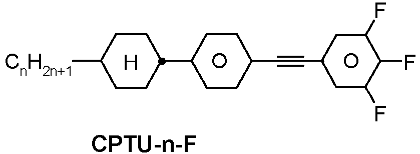 | 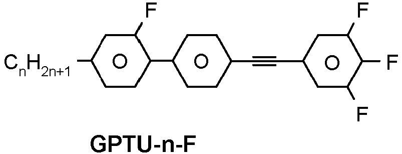 |
| 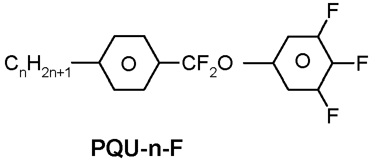 | 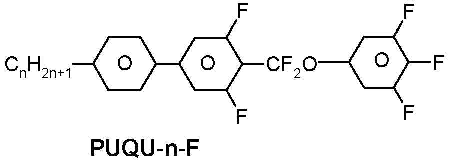 |
| 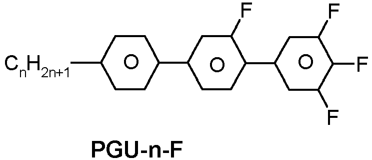 | 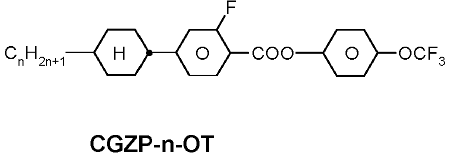 |
| 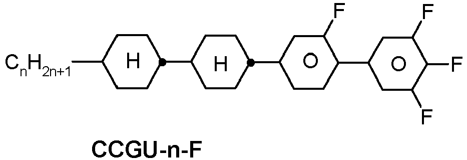 | 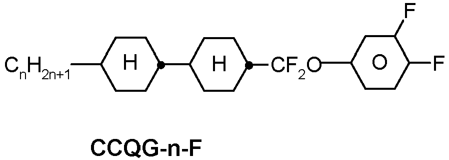 |
| 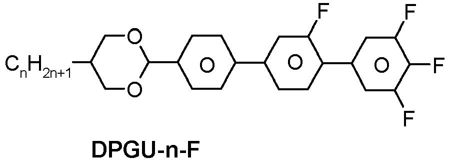 | 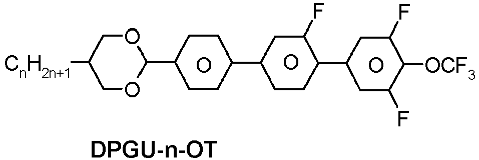 |
| 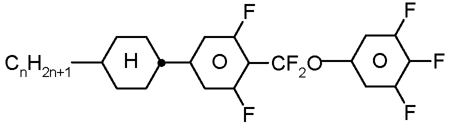 | |
| 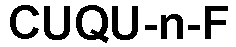 | |
| 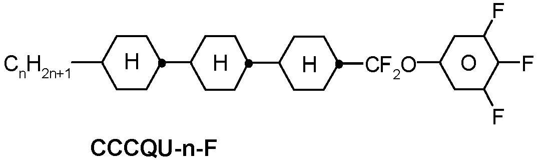 | |
| 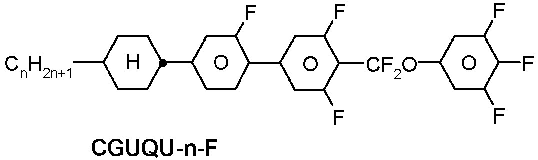 | |
| 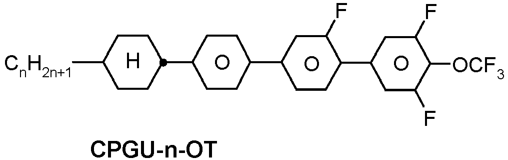 | |
| 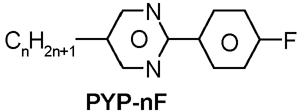 | |
| 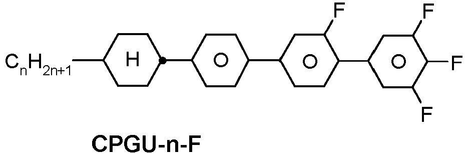 | |
| 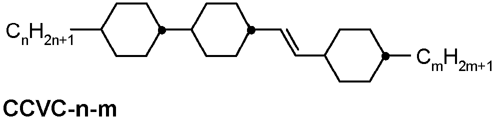 | |
| 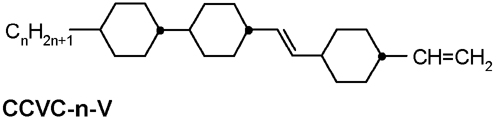 | |
| 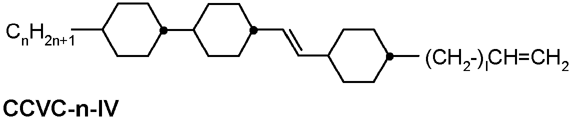 | |
| 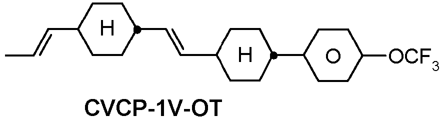 | 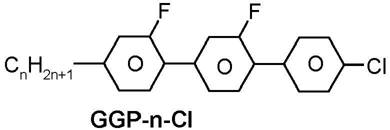 |
| 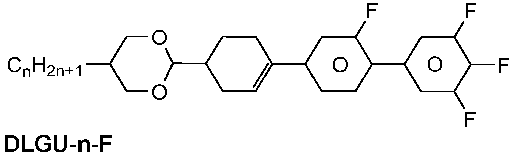 | |
| 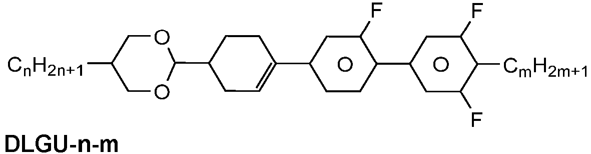 | |
| 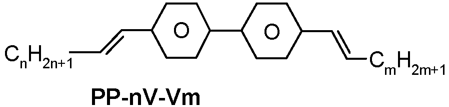 | 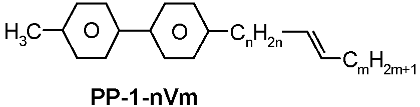 |
| 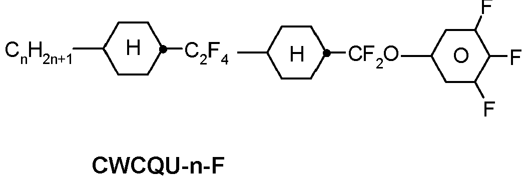 | |
| 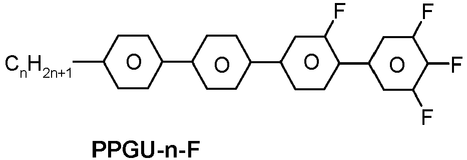 | |
| 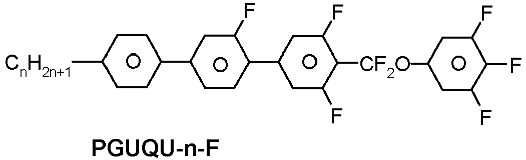 | |
| 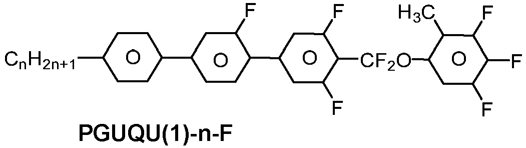 | |
| 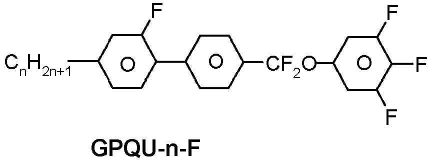 | 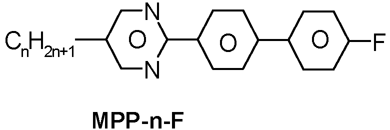 |
| 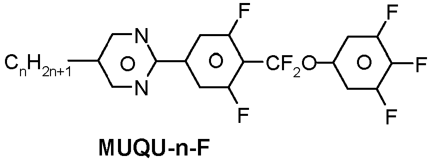 | 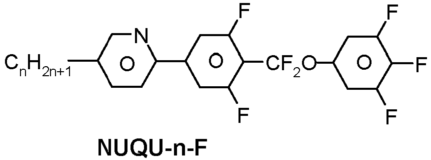 |
| 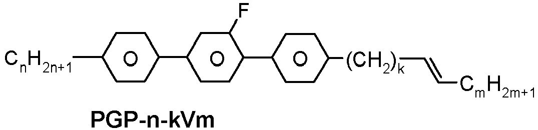 | |
| 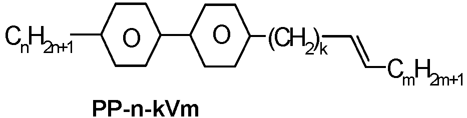 | |
| 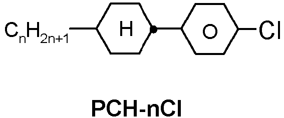 | 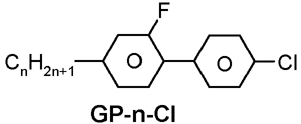 |
| 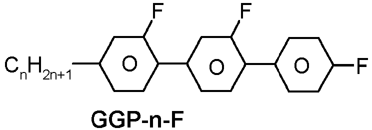 | 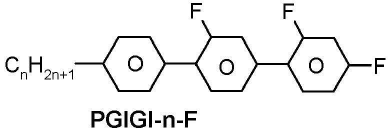 |
| 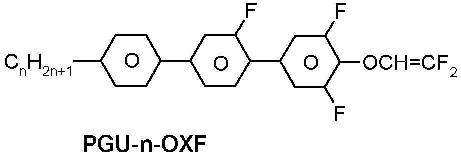 | 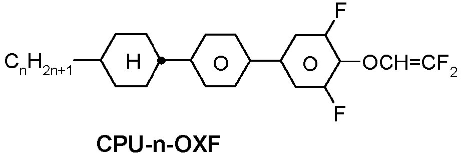 |
| 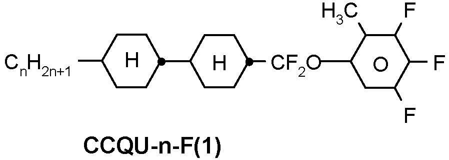 | |
| 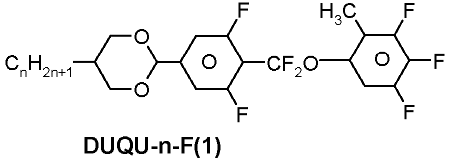 | |
| 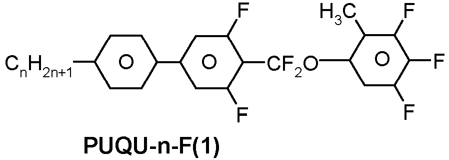 | |
| 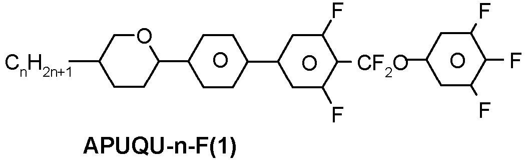 | |
| 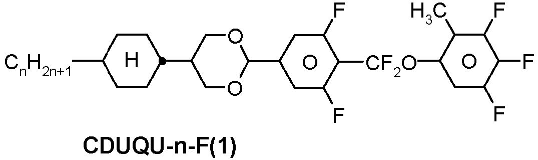 | |
| 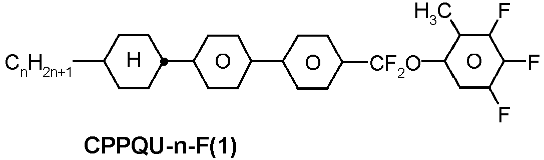 | |
| 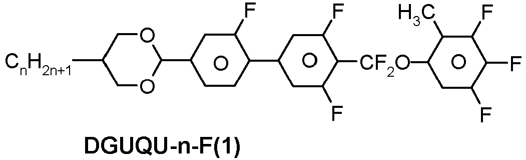 | |
| 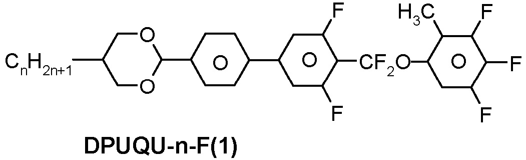 | |
| 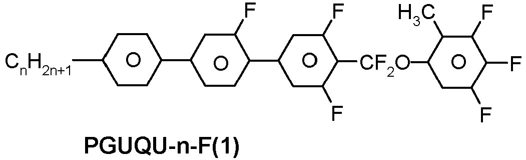 | |
| 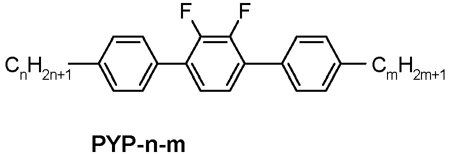 | |

Particular preference is given to liquid-crystalline media which, besides the compounds of the Formulae l, L1 and/or L2, comprise at least one, two, three, four or more compounds from Table E.

**Table F**

| | |
|---|---|
| Table F indicates possible dopants which are generally added to the liquid-crystalline media according to the invention. The liquid-crystalline media preferably comprise 0-10% by weight, in particular 0.01-5% by weight and particularly preferably 0.01-3% by weight of dopants. | |
| 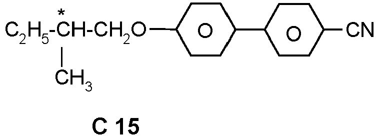 | 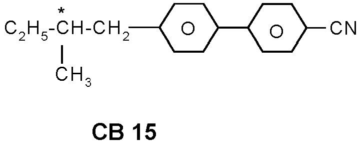 |
| 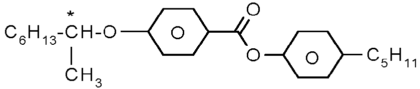 | 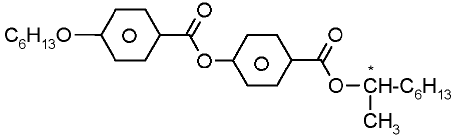 |
| 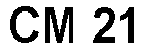 | 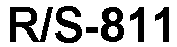 |
| 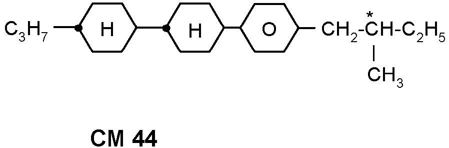 | 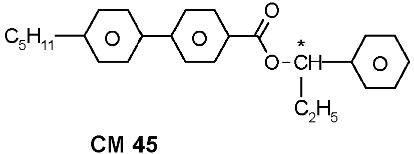 |
| 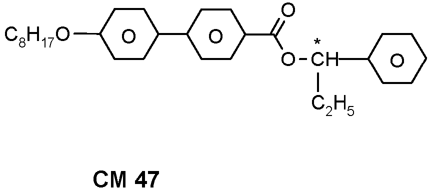 | 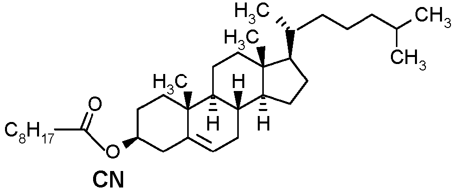 |
| 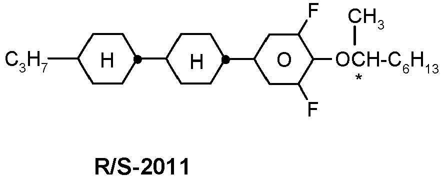 | 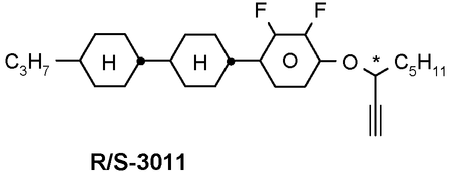 |
| 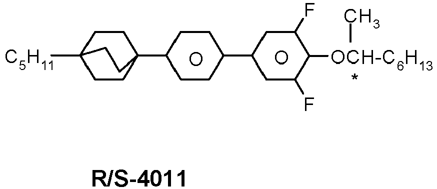 | 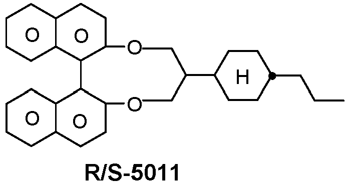 |
| 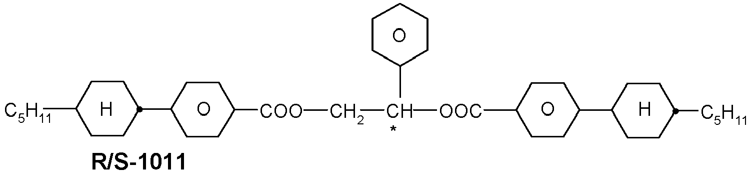 | |

**Table G**

| | |
|---|---|
| Stabilisers, which can additionally be added, for example, to the liquid-crystalline media according to the invention in amounts of 0 to 10% by weight, are mentioned below. | |
| 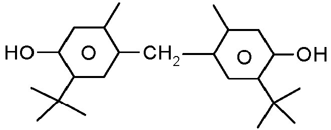 | 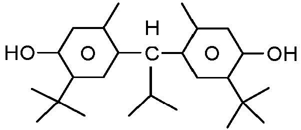 |
| 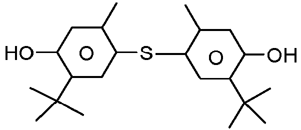 | 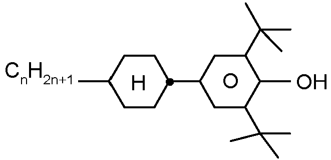 n = 1, 2, 3, 4, 5, 6 or 7 |
| 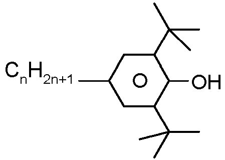 n = 1, 2, 3, 4, 5, 6 or 7 | 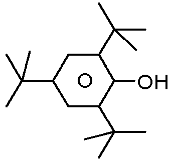 |
| 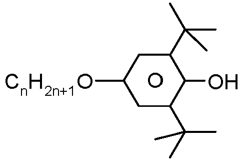 n = 1, 2, 3, 4, 5, 6 or 7 | 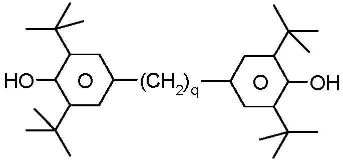 q = 1, 2, 3, 4, 5, 6 or 7 |
| 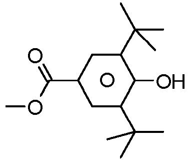 | 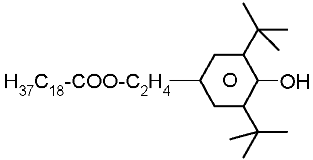 |
| 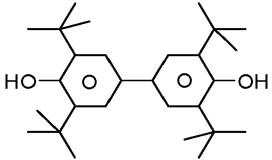 | 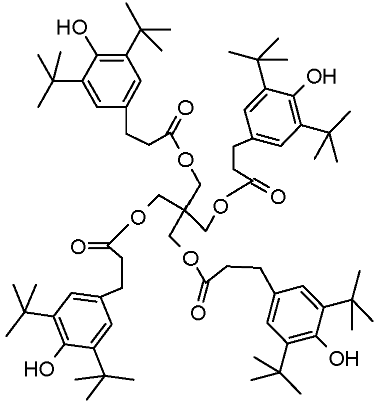 |
| 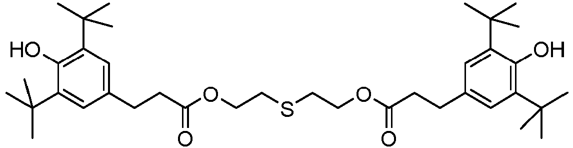 | |
| 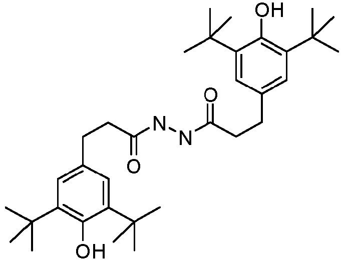 | 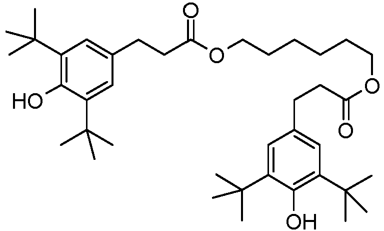 |
| 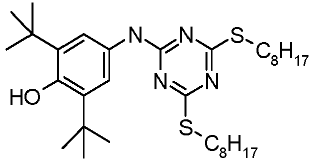 | 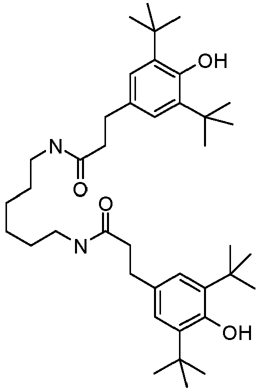 |
| 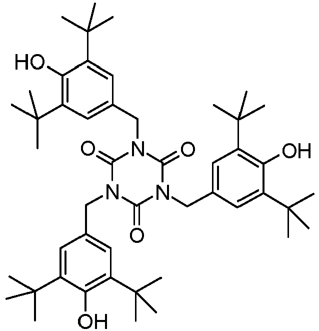 | 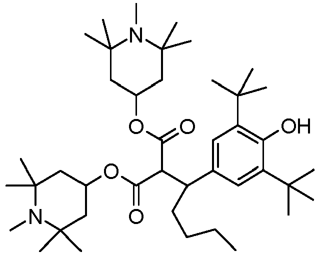 |
| 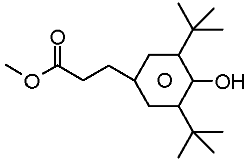 | 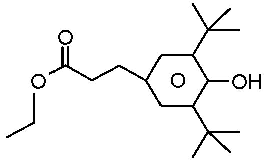 |
| 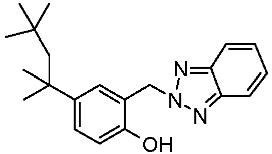 | 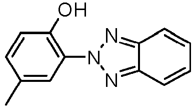 |
| 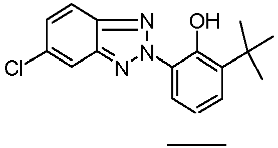 | 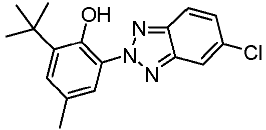 |
| 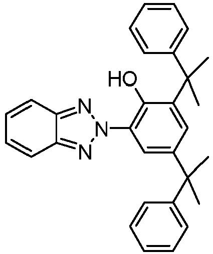 | 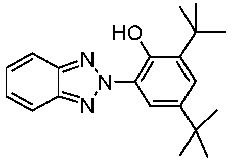 |
| 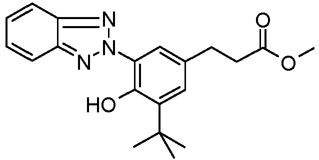 | 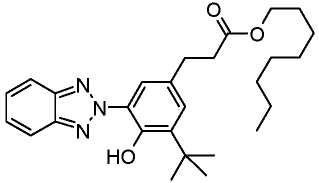 |
| 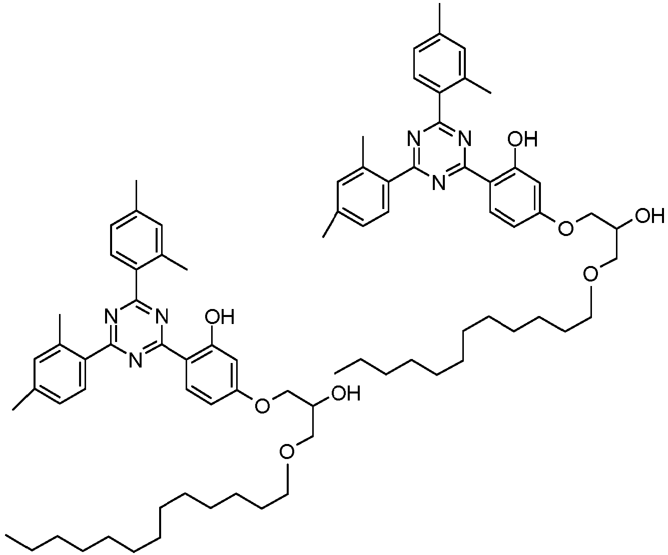 | |
| | 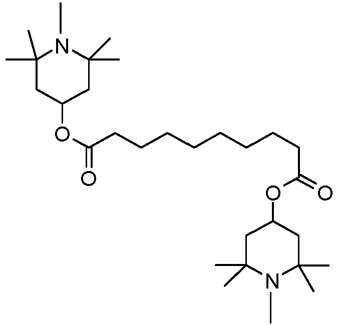 |
| 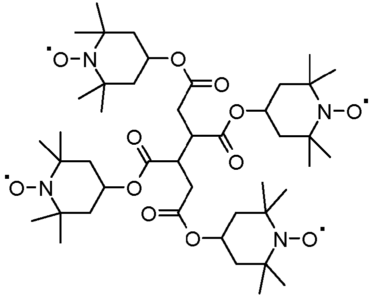 | |
| 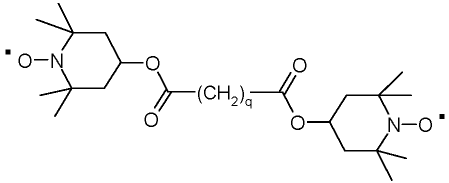 q = 1, 2, 3, 4, 5, 6, 7, 8, 9 or 10 | |

**Table H**

| Table H shows illustrative reactive mesogenic compounds (RMs) which can be used in the liquid-crystalline media in accordance with the present invention. | |
|---|---|
| 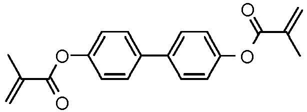 | RM-1 |
| 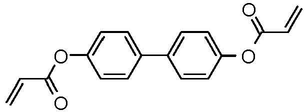 | RM-2 |
| 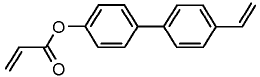 | RM-3 |
| 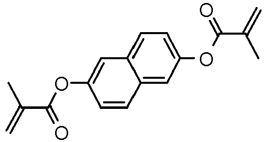 | RM-4 |
| 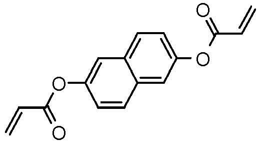 | RM-5 |
| 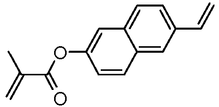 | RM-6 |
| 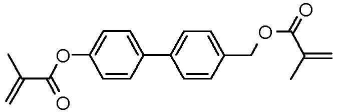 | RM-7 |
| 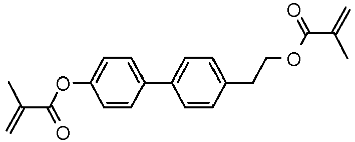 | RM-8 |
| 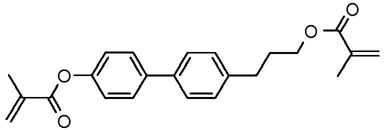 | RM-9 |
| 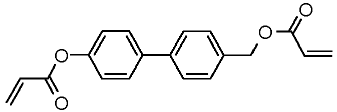 | RM-10 |
| 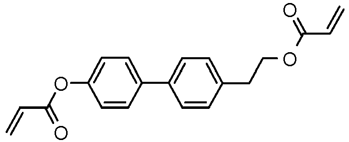 | RM-11 |
| 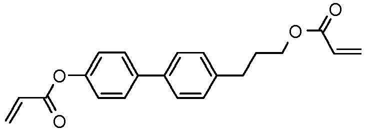 | RM-12 |
| 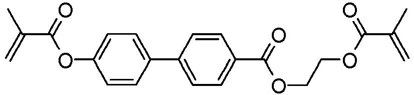 | RM-13 |
| 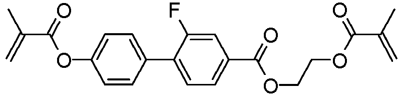 | RM-14 |
| 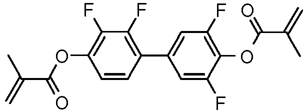 | RM-15 |
| 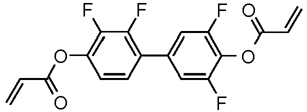 | RM-16 |
| 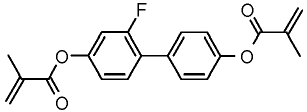 | RM-17 |
| 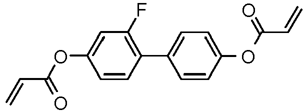 | RM-18 |
| 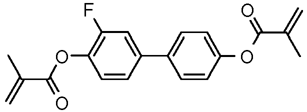 | RM-19 |
| 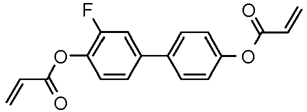 | RM-20 |
| 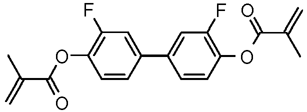 | RM-21 |
| 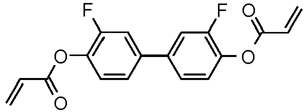 | RM-22 |
| 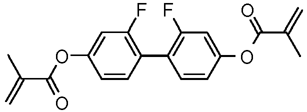 | RM-23 |
| 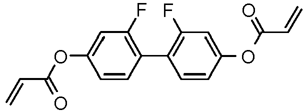 | RM-24 |
| 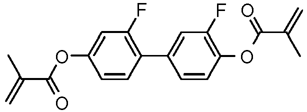 | RM-25 |
| 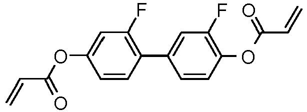 | RM-26 |
| 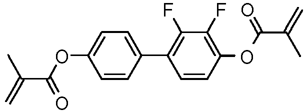 | RM-27 |
| 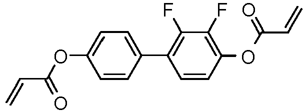 | RM-28 |
| 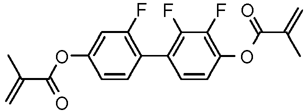 | RM-29 |
| 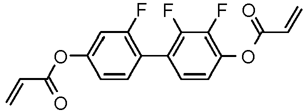 | RM-30 |
| 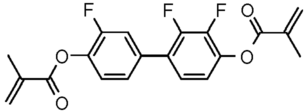 | RM-31 |
| 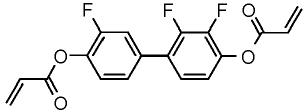 | RM-32 |
| 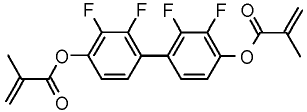 | RM-33 |
| 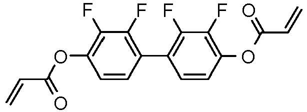 | RM-34 |
| 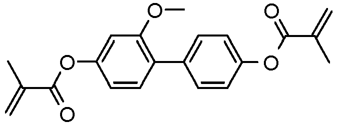 | RM-35 |
| 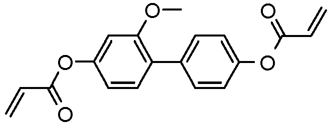 | RM-36 |
| 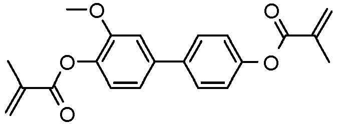 | RM-37 |
| 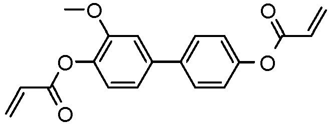 | RM-38 |
| 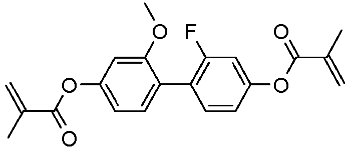 | RM-39 |
| 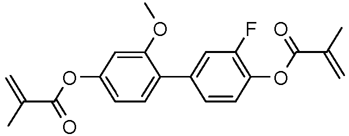 | RM-40 |
| 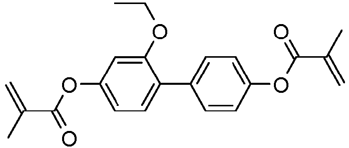 | RM-41 |
| 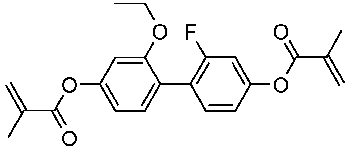 | RM-42 |
| 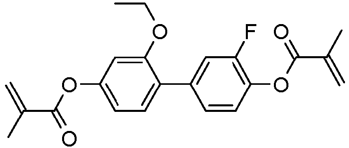 | RM-43 |
| 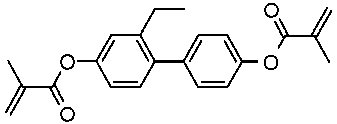 | RM-44 |
| 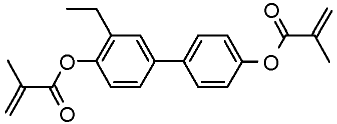 | RM-45 |
| 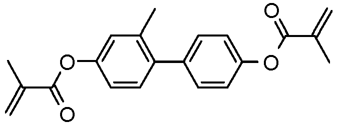 | RM-46 |
| 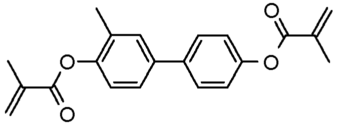 | RM-47 |
| 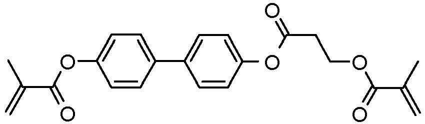 | RM-48 |
| 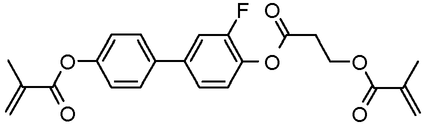 | RM-49 |
| 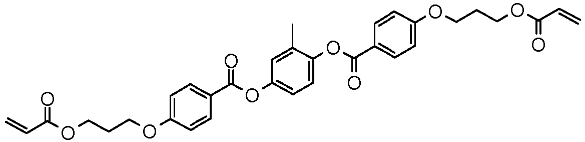 | RM-50 |
| 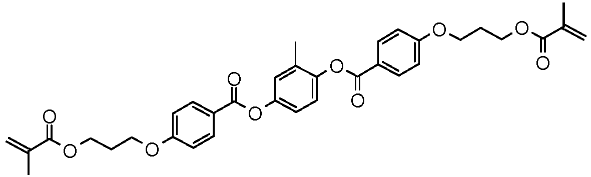 | RM-51 |
| 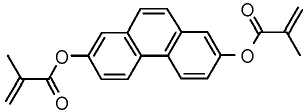 | RM-52 |
| 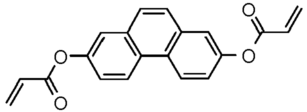 | RM-53 |
| 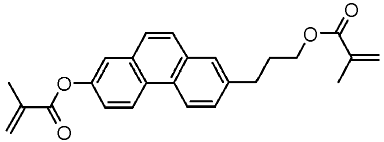 | RM-54 |
| 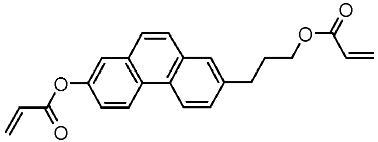 | RM-55 |
| 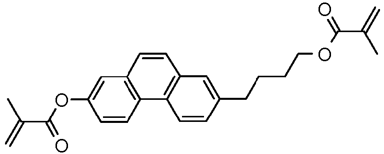 | RM-56 |
| 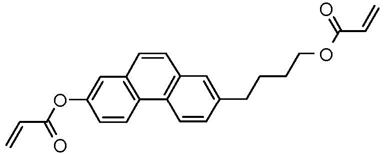 | RM-57 |
| 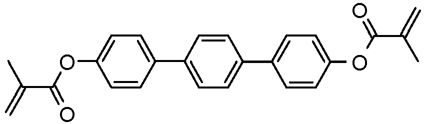 | RM-58 |
| 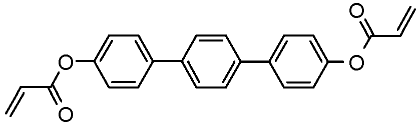 | RM-59 |
| 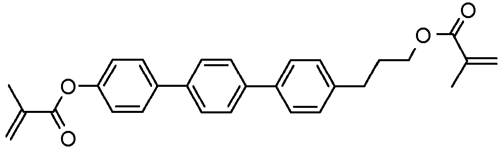 | RM-60 |
| 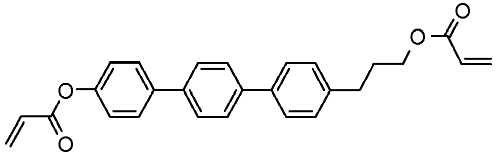 | RM-61 |
| 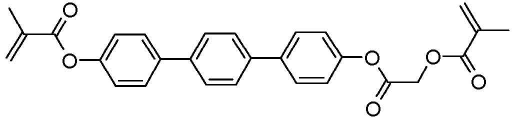 | RM-62 |
| 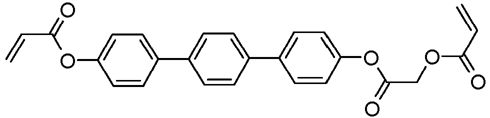 | RM-63 |
| 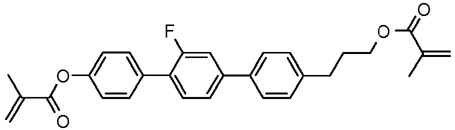 | RM-64 |
| 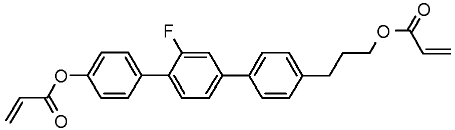 | RM-65 |
| 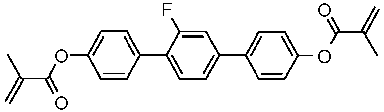 | RM-66 |
| 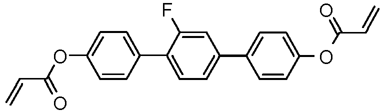 | RM-67 |
| 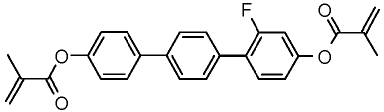 | RM-68 |
| 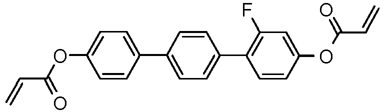 | RM-69 |
| 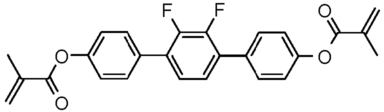 | RM-70 |
| 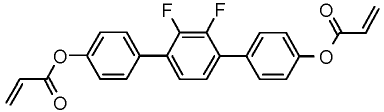 | RM-71 |
| 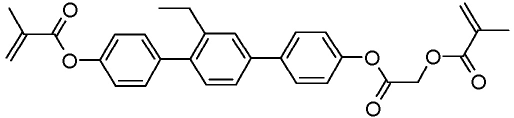 | RM-72 |
| 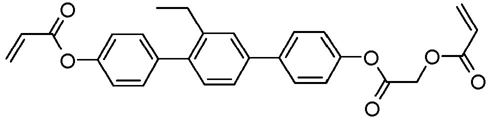 | RM-73 |
| 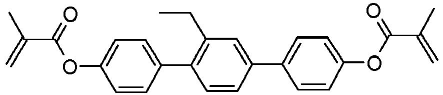 | RM-74 |
| 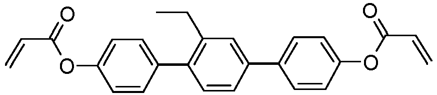 | RM-75 |
| 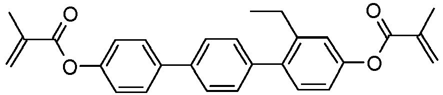 | RM-76 |
| 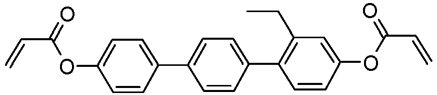 | RM-77 |
| 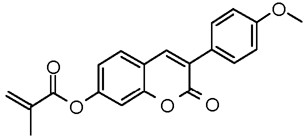 | RM-78 |
| 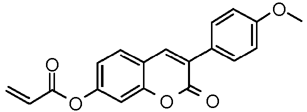 | RM-79 |
| 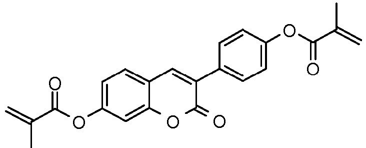 | RM-80 |
| 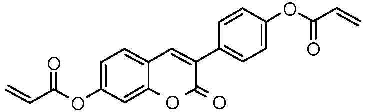 | RM-81 |
| 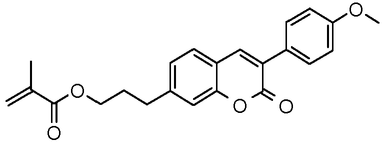 | RM-82 |
| 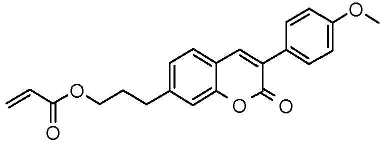 | RM-83 |
| 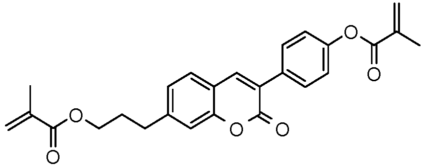 | RM-84 |
| 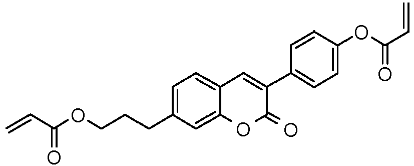 | RM-85 |
| 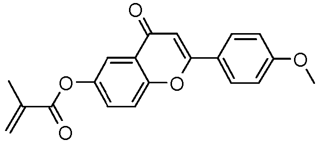 | RM-86 |
| 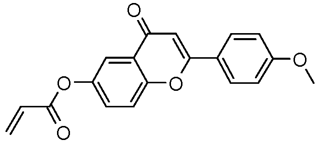 | RM-87 |
| 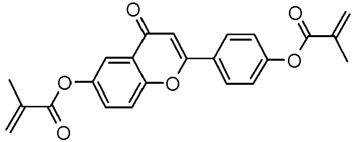 | RM-88 |
| 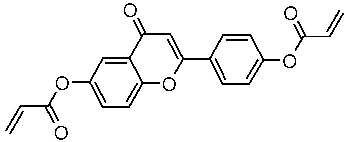 | RM-89 |
| 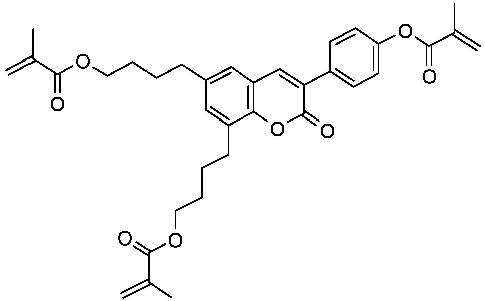 | RM-90 |
| 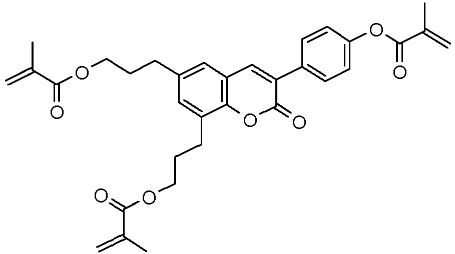 | RM-91 |
| 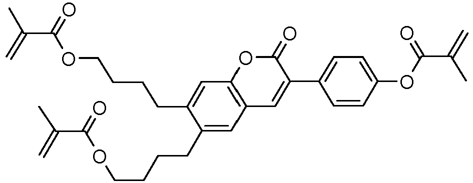 | RM-92 |
| 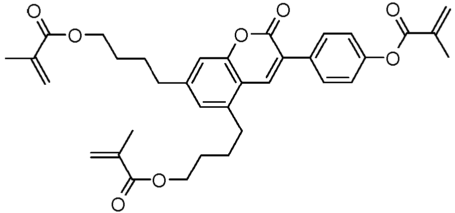 | RM-93 |
| 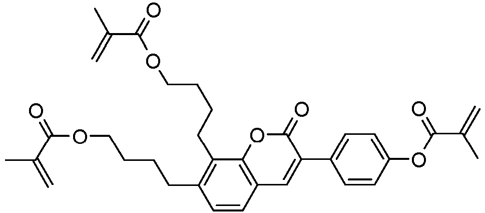 | RM-94 |
| 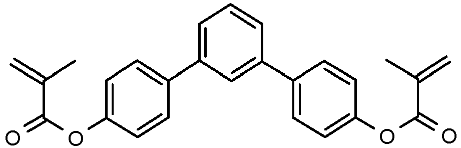 | RM-95 |
| 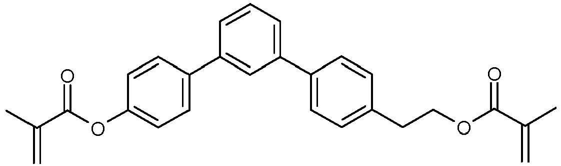 | RM-96 |
| 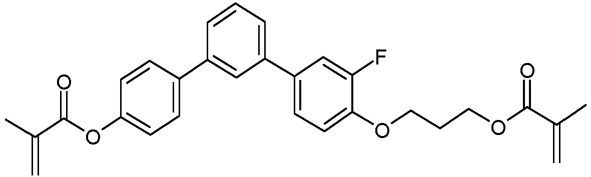 | RM-97 |
| 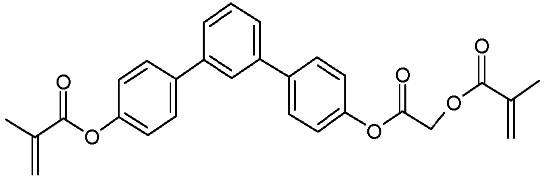 | RM-98 |
| 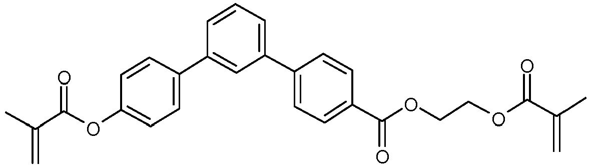 | RM-99 |
| 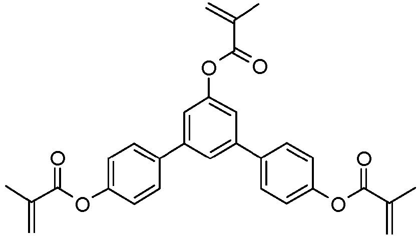 | RM-100 |
| 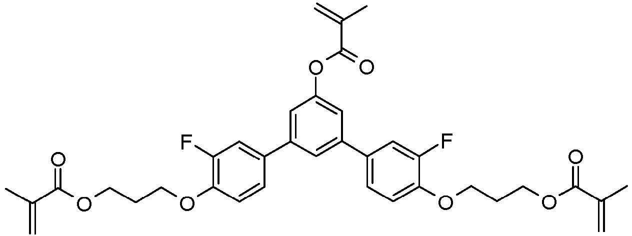 | RM-101 |
| 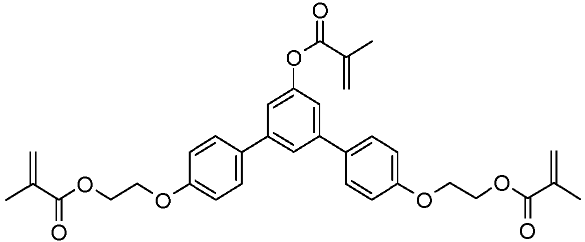 | RM-102 |
| 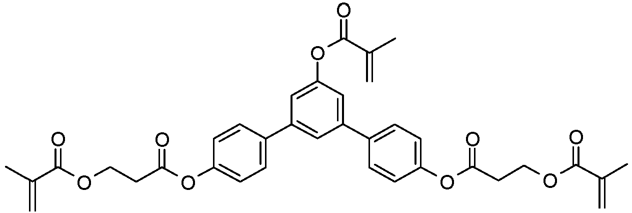 | RM-103 |
| 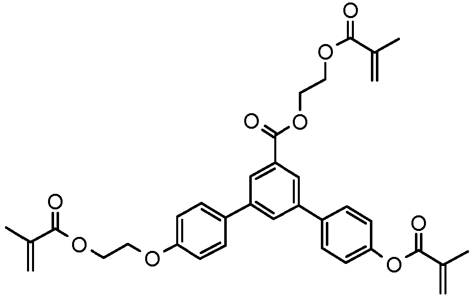 | RM-104 |
| 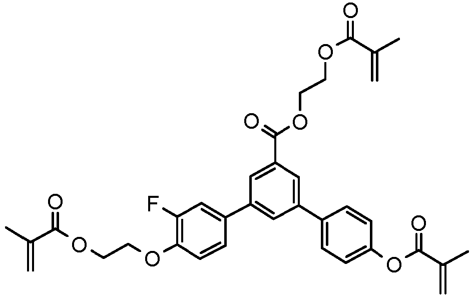 | RM-105 |
| 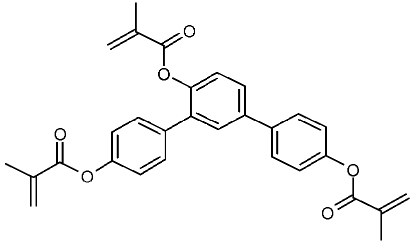 | RM-106 |
| 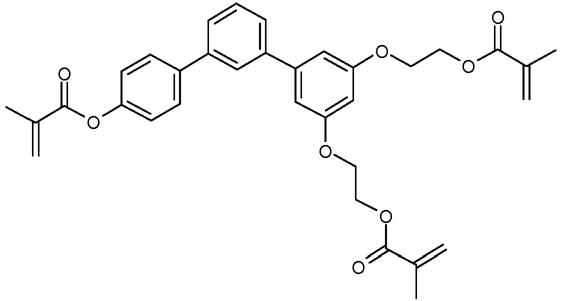 | RM-107 |
| 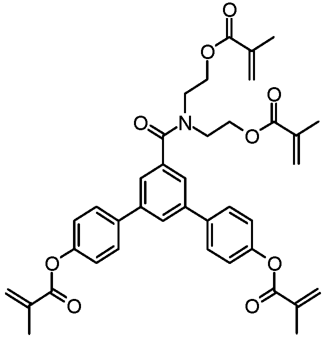 | RM-108 |
| 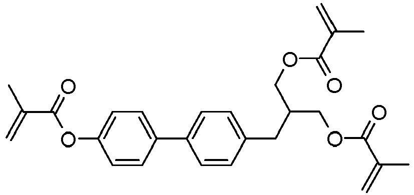 | RM-109 |
| 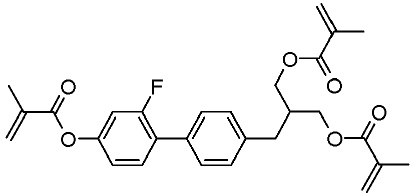 | RM-110 |
| 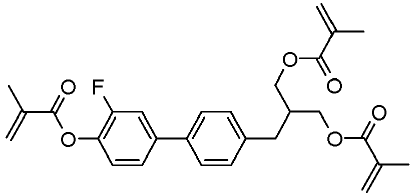 | RM-111 |
| 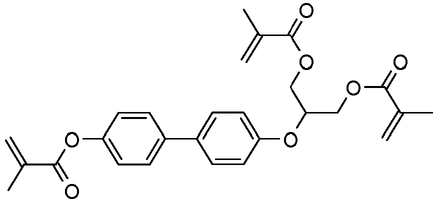 | RM-112 |
| 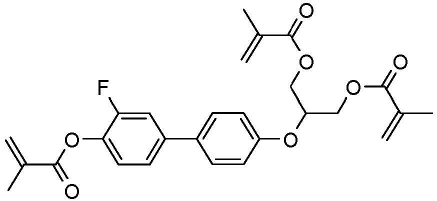 | RM-113 |
| 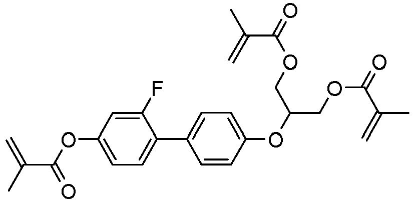 | RM-114 |
| 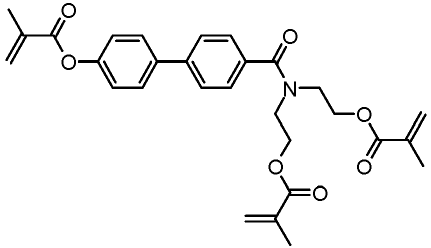 | RM-115 |
| 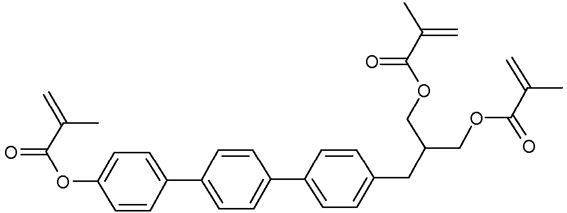 | RM-116 |
| 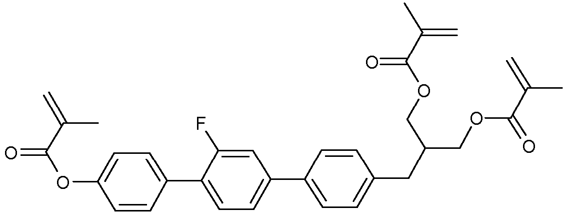 | RM-117 |
| 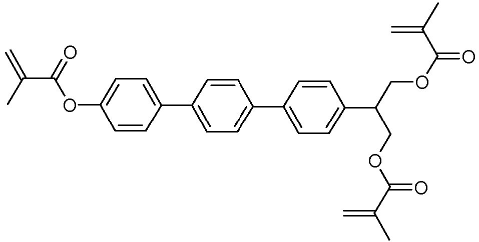 | RM-118 |
| 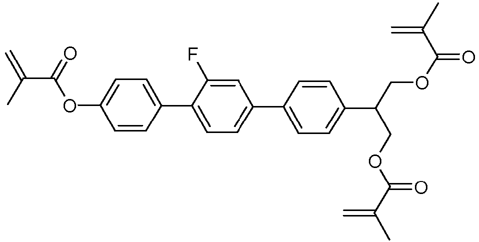 | RM-119 |
| 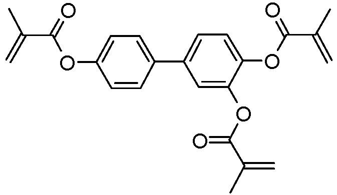 | RM-120 |
| 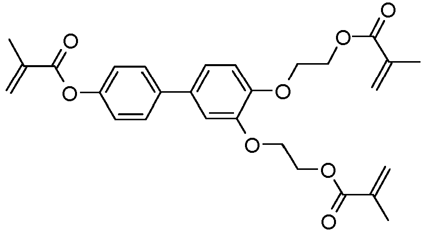 | RM-121 |
| 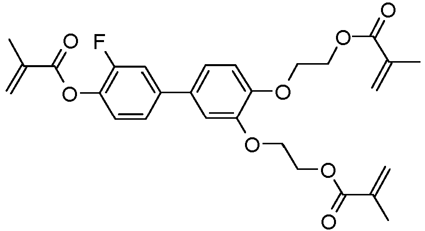 | RM-122 |
| 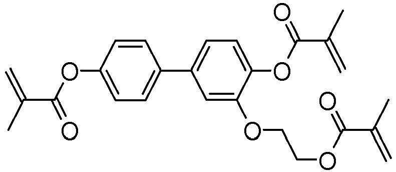 | RM-123 |
| 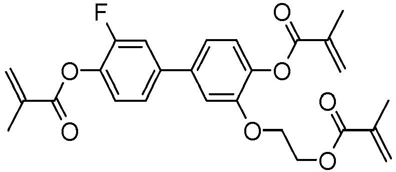 | RM-124 |
| 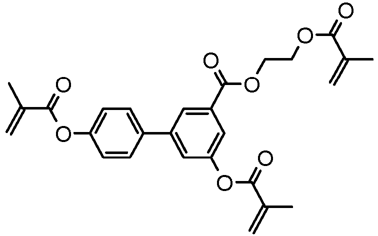 | RM-125 |
| 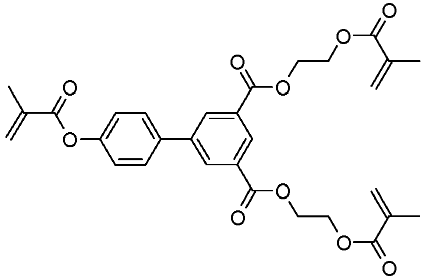 | RM-126 |
| 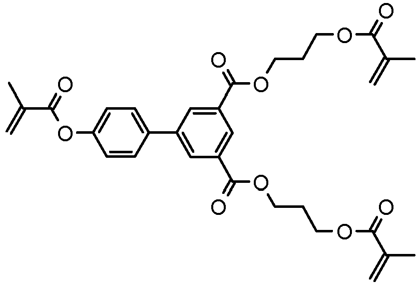 | RM-127 |
| 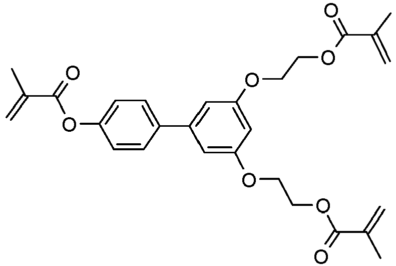 | RM-128 |
| 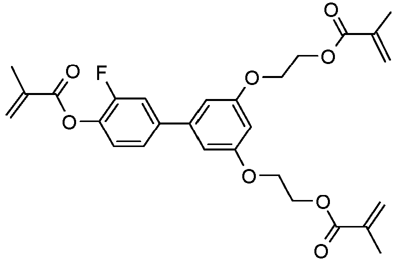 | RM-129 |
| 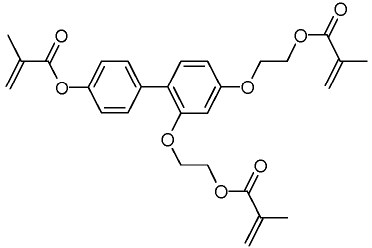 | RM-130 |
| 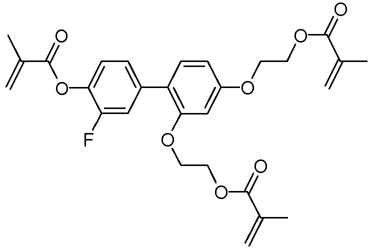 | RM-131 |
| 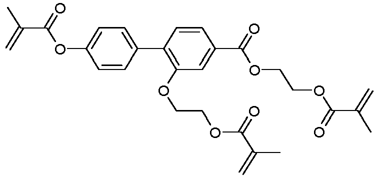 | RM-132 |
| 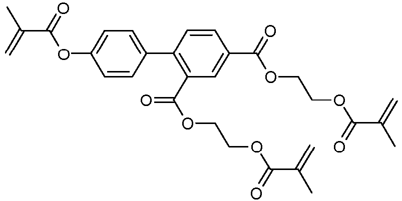 | RM-133 |
| 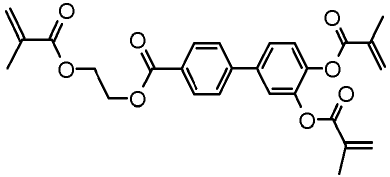 | RM-134 |
| 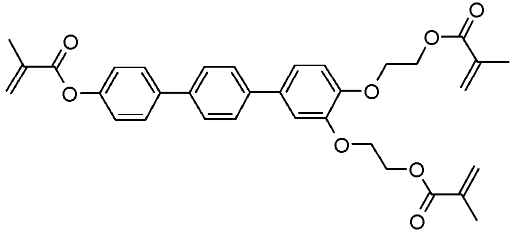 | RM-135 |
| 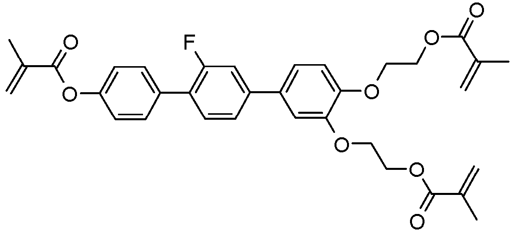 | RM-136 |
| 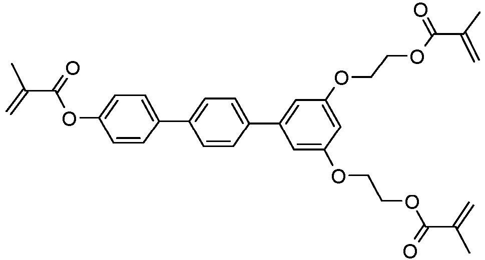 | RM-137 |
| 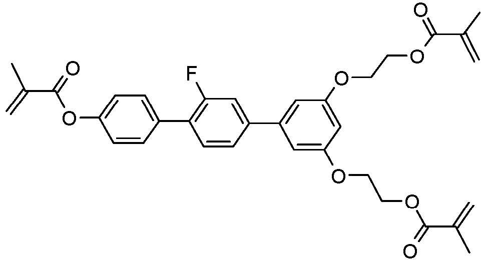 | RM-138 |
| 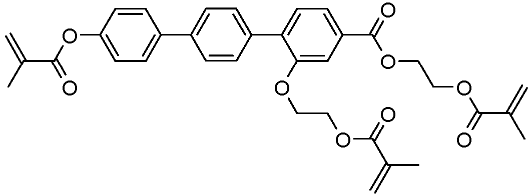 | RM-139 |
| 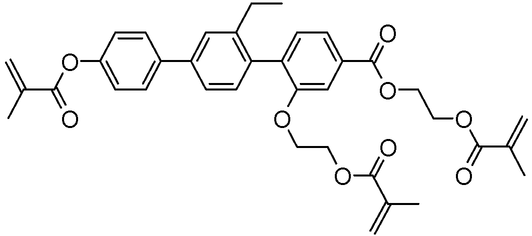 | RM-140 |
| 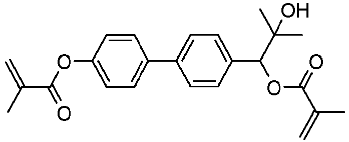 | RM-141 |
| 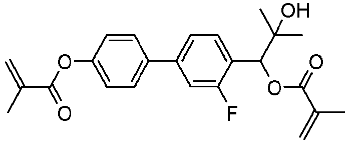 | RM-142 |
| 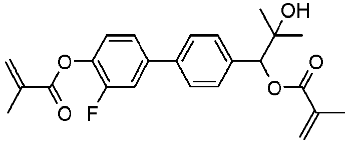 | RM-143 |

In a preferred embodiment, the liquid-crystalline media according to the invention comprise one or more polymerisable compounds, preferably selected from the polymerisable compounds of the Formulae RM-1 to RM-143. Of these, compounds RM-1, RM-4, RM-8, RM-17, RM-19, RM-35, RM-37, RM-39, RM-40, RM-41, RM-48, RM-52, RM-54, RM-57, RM-64, RM-74, RM-76, RM-88, RM-102, RM-103, RM-109, RM-117, RM-120, RM-121 and RM-122 are particularly preferred.

**Table I**

| | |
|---|---|
| Table I shows self-alignment additives for vertical alignment which can be used in LC media for SA-FFS, SA-HB-FFS and SA-XB-FFS displays according to the present invention: | |
| 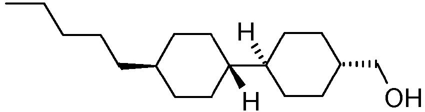 | SA-1 |
| 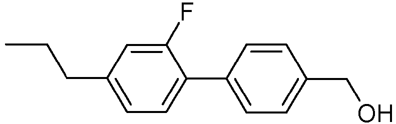 | SA-2 |
| 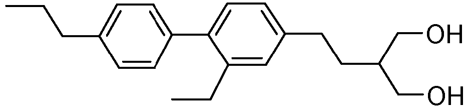 | SA-3 |
| 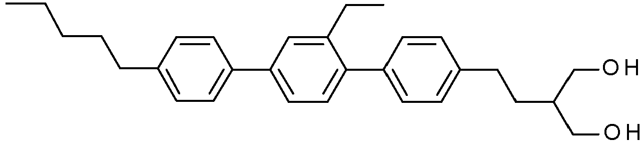 | SA-4 |
| 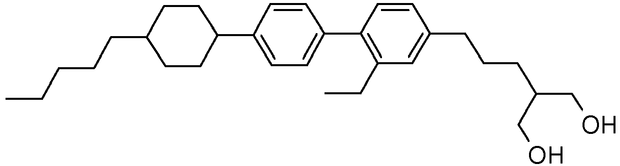 | SA-5 |
| 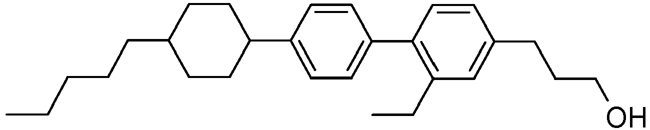 | SA-6 |
| 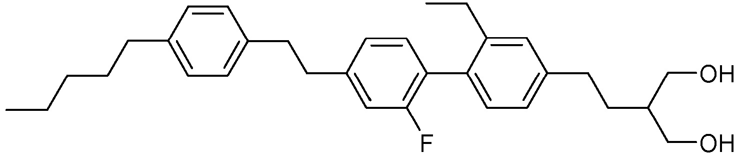 | SA-7 |
| 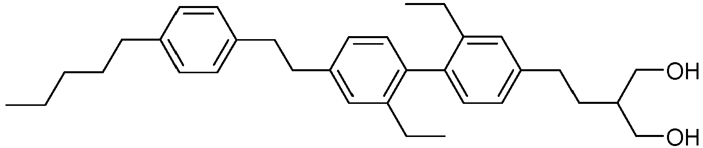 | SA-8 |
| 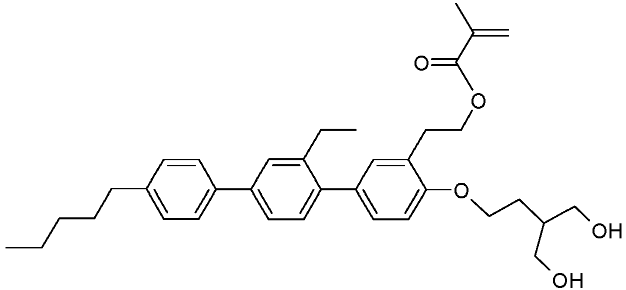 | SA-9 |
| 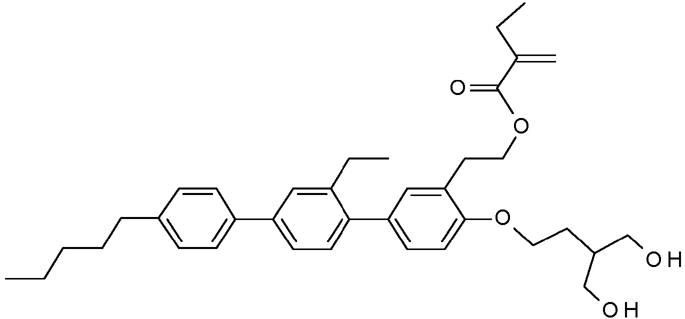 | SA-10 |
| 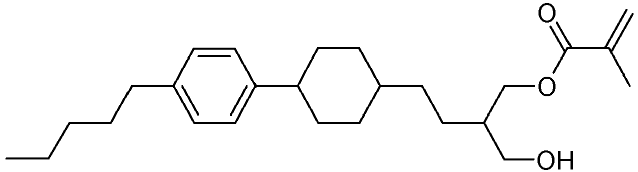 | SA-11 |
| 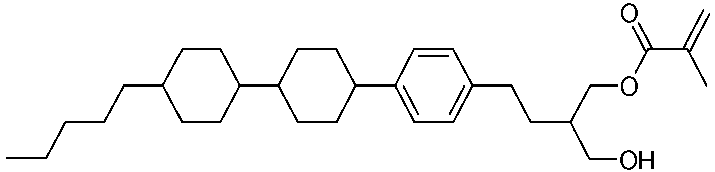 | SA-12 |
| 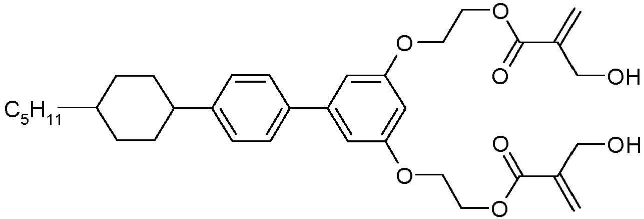 | SA-13 |
| 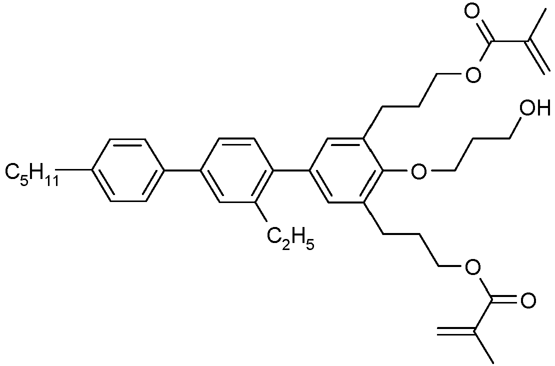 | SA-14 |
| 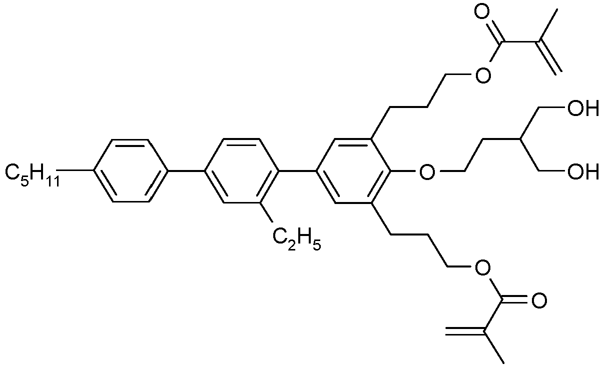 | SA-15 |
| 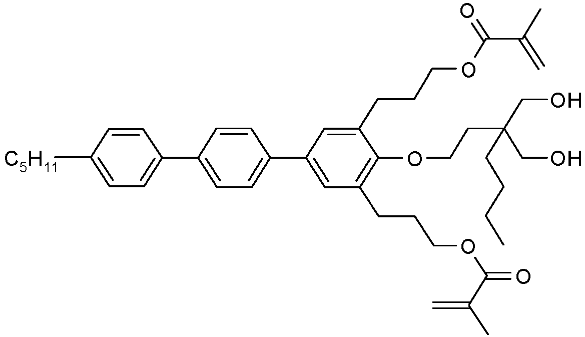 | SA-16 |
| 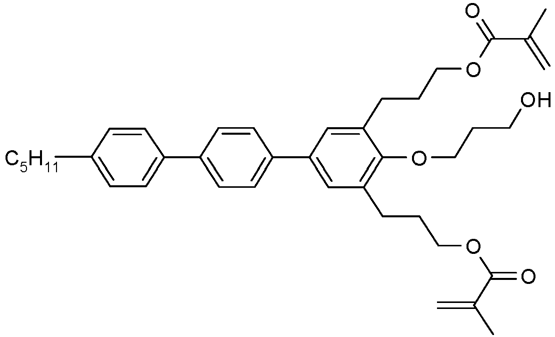 | SA-17 |
| 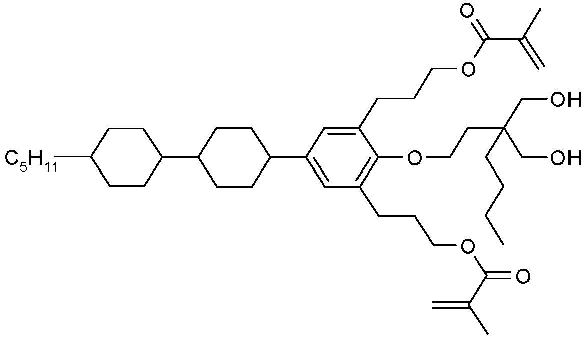 | SA-18 |
| 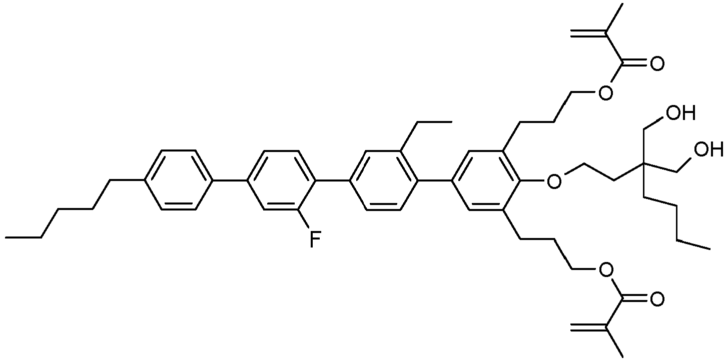 | SA-19 |
| 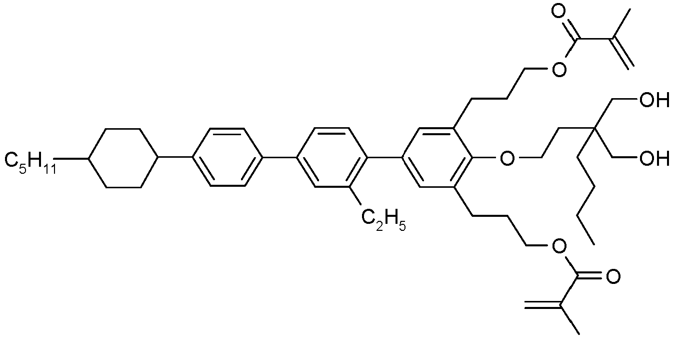 | SA-20 |
| 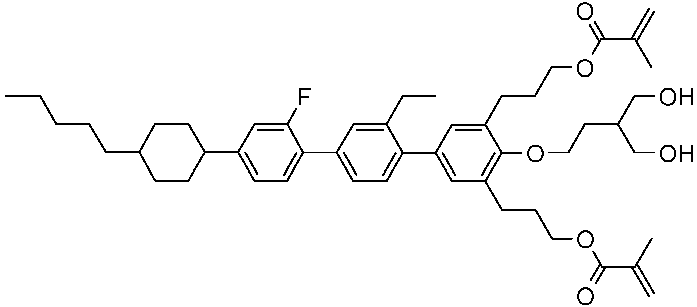 | SA-21 |
| 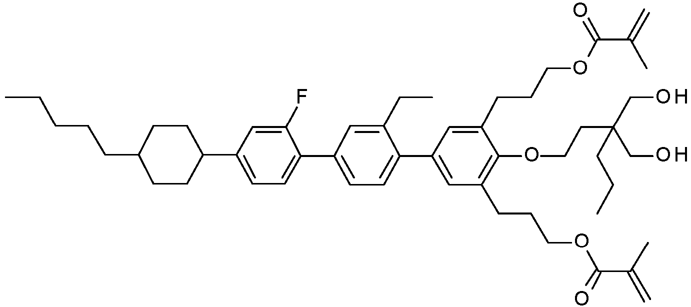 | SA-22 |
| 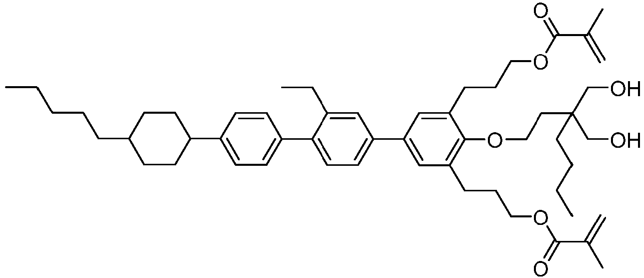 | SA-23 |
| 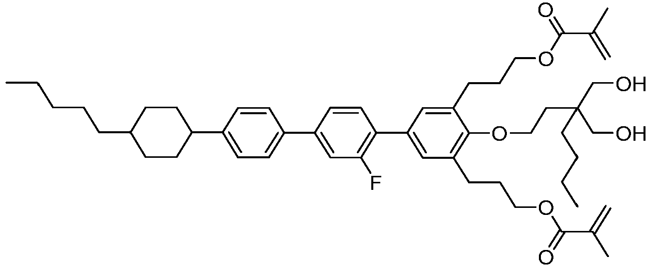 | SA-24 |
| 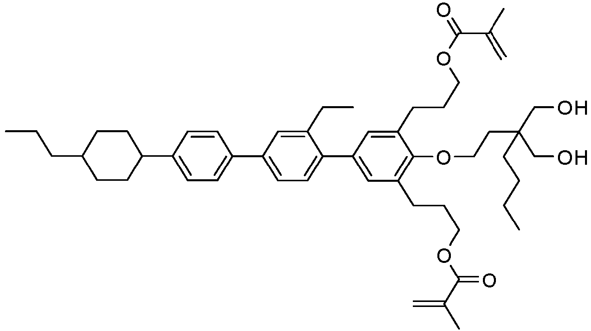 | SA-25 |
| 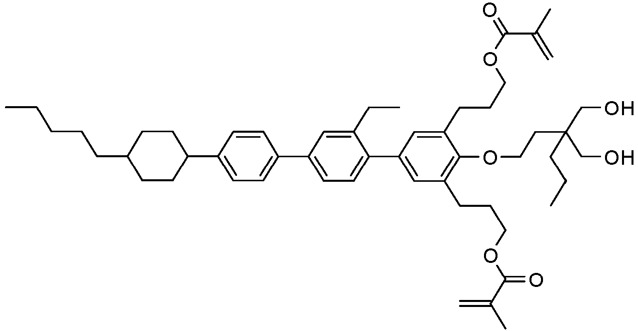 | SA-26 |
| 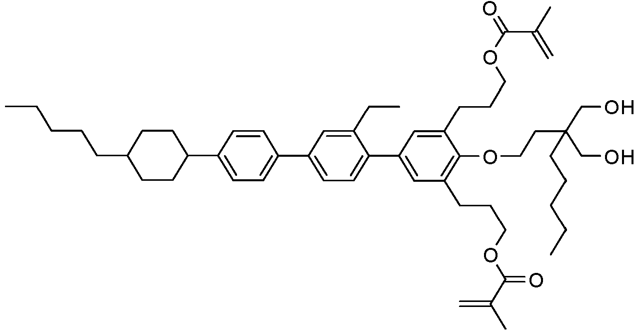 | SA-27 |
| 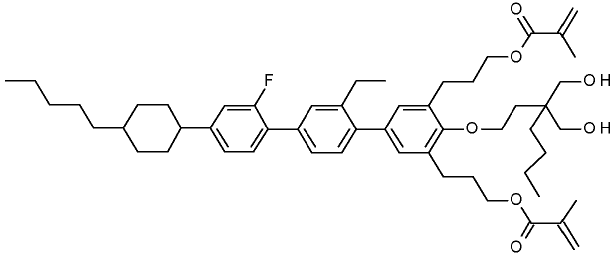 | SA-28 |
| 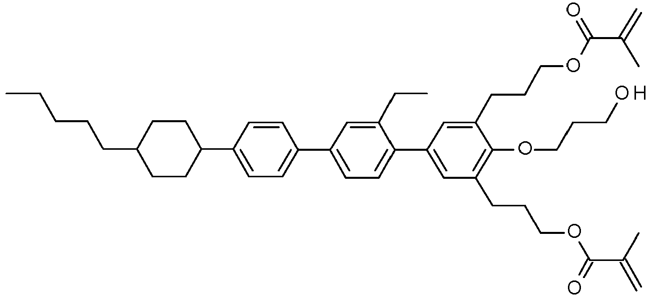 | SA-29 |
| 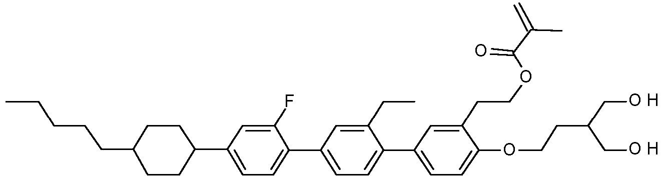 | SA-30 |
| 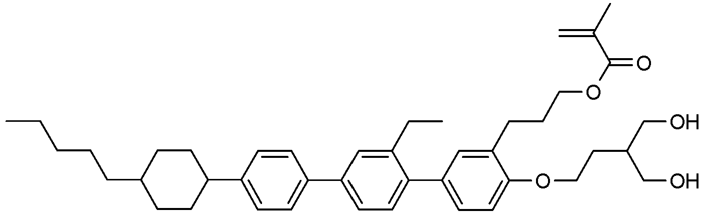 | SA-31 |
| 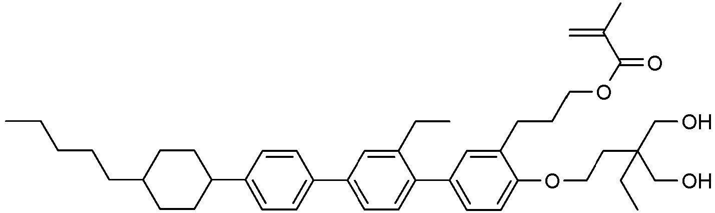 | SA-32 |
| 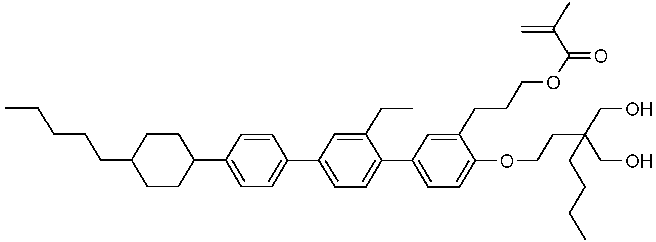 | SA-33 |
| 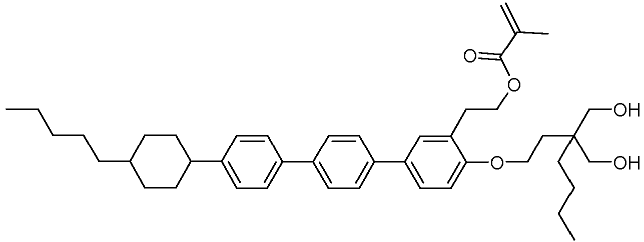 | SA-34 |

In a preferred embodiment, the LC media, SA-FFS, SA-HB-FFS and SA-XB-FFS displays according to the present invention comprise one or more SA additives selected from Formulae SA-1 to SA-34, preferably from Formulae SA-14 to SA-34, very preferably from Formulae SA-20 to SA-28, most preferably of Formula SA-20, in combination with one or more RMs of Formula I and L1 and/or L2. Very preferred is a combination of polymerizable compound 1, 2 or 3 of Example 1 below, very preferably of polymerizable compound 3 of Example 1, with an SA additive of Formula SA-20 to SA-28, very preferably of Formula SA-20.

The following mixture examples are intended to explain the invention without limiting it.

Above and below, percentage data denote per cent by weight. All temperatures are indicated in degrees Celsius. m.p. denotes melting point, cl.p. = clearing point. Furthermore, C = crystalline state, N = nematic phase, S = smectic phase and l = isotropic phase. The data between these symbols represent the transition temperatures. Furthermore, the following symbols are used
- V₀: Freedericks threshold voltage, capacitive [V] at 20 °C,
- V₁₀: voltage [V] for 10% transmission,
- nₑ: extraordinary refractive index measured at 20 °C and 589 nm,
- n₀: ordinary refractive index measured at 20 °C and 589 nm,
- Δn: optical anisotropy measured at 20 °C and 589 nm,
- ε_{⊥}: dielectric susceptibility (or "dielectric constant") perpendicular to the to the longitudinal axes of the molecules at 20 °C and 1 kHz,
- ε_{∥}: dielectric susceptibility (or "dielectric constant") parallel to the to the longitudinal axes of the molecules at 20 °C and 1 kHz,
- Δε: dielectric anisotropy at 20 °C and 1 kHz,
- cl.p. or T(N,I): clearing point [°C],
- v: flow viscosity measured at 20 °C [mm²·s⁻¹],
- γ₁: rotational viscosity measured at 20 °C [mPa·s],
- K₁: elastic constant, "splay" deformation at 20 °C [pN],
- K₂: elastic constant, "twist" deformation at 20 °C [pN],
- K₃: elastic constant, "bend" deformation at 20 °C [pN], and
- VHR: voltage holding ratio.

All physical properties are determined in accordance with "Merck Liquid Crystals, Physical Properties of Liquid Crystals", status Nov. 1997, Merck KGaA, Germany, and apply for a temperature of 20 °C, unless explicitly indicated otherwise.

### Examples

### Example 1

| **Composition** | | | **Properties** | | |
|---|---|---|---|---|---|
| **Nr.** | **Comp.** | **Conc., wt.-%** | | | |
| 1 | CC-3-V | 28.0 | T(N, I) | = | 113 °C |
| 2 | CC-3-V1 | 8.0 | Δn (20°C, 589 nm) | = | 0.1021 |
| 3 | CC-4-V1 | 5.0 | nₑ (589 nm, 20 °C) | = | 1.5893 |
| 4 | CCP-V-1 | 15.0 | nₒ (589 nm, 20 °C) | = | 1.4872 |
| 5 | CCP-V2-1 | 4.5 | Δε (20°C, 1 kHz) | = | 4.8 |
| 6 | PP-1-2V1 | 4.0 | ε_{∥} (20 °C, 1 kHz) | = | 7.6 |
| 7 | PGP-2-2V | 3.0 | ε_{⊥} (20°C, 1 kHz) | = | 2.8 |
| 8 | CCVC-3-V | 3.0 | K₁(20 °C) | = | 18.1 pN |
| 9 | CCPC-33 | 1.5 | K₃(20 °C) | = | 21.2 pN |
| 10 | CCPC-34 | 1.5 | γ₁(20 °C) | = | 101 mPa·s |
| 11 | CLP-V-1 | 6.0 | Kₐᵥ | = | 16.1 pN |
| 12 | CDUQU-3-F | 8.0 | γ₁ / K₁ | = | 5.58 mPa·s / pN |
| 13 | PGUQU-4-F | 4.0 | | | |
| 14 | CCGU-3-F | 3.0 | | | |
| 15 | PPGU-3-F | 0.5 | | | |
| 16 | CLUQU-3-F | 5.0 | | | |

The LC medium further contains 100 ppm of the compound of Formula ST3-1 as a stabilizer.

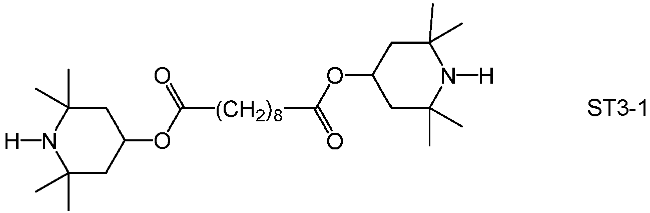

This LC medium is characterized by a very good contrast and fast switching in a FFS display. It has an average elastic constant Kₐᵥ = (K₁ + ½ K₁ + K₃) / 3 of 16.1 pN and a response time parameter γ₁ / K₁ of 5.58 mPa·s / pN. Additionally, the LC medium has a clearing point as high as 113 °C.

### Example 2

| **Composition** | | | **Properties** | | |
|---|---|---|---|---|---|
| **Nr.** | **Comp.** | **Conc., wt.-%** | | | |
| 1 | CC-3-V | 30.0 | T(N, I) | = | 107.5 °C |
| 2 | CC-3-V1 | 8.0 | Δn (20 °C, 589 nm) | = | 0.1025 |
| 3 | CC-4-V1 | 5.0 | nₑ (589 nm, 20 °C) | = | 1.5905 |
| 4 | CCP-V-1 | 15.0 | nₒ (589 nm, 20 °C) | = | 1.4880 |
| 5 | CCP-V2-1 | 5.0 | Δε (20 °C, 1 kHz) | = | 4.6 |
| 6 | PP-1-2V1 | 3.0 | ε_{∥} (20 °C, 1 kHz) | = | 7.4 |
| 7 | PGP-2-2V | 5.0 | ε_{⊥} (20 °C, 1 kHz) | = | 2.7 |
| 8 | CCVC-3-V | 3.0 | K₁ (20 °C) | = | 17.7 pN |
| 9 | CCPC-34 | 1.5 | K₃ (20 °C) | = | 19.4 pN |
| 10 | CLP-V-1 | 6.0 | γ₁ (20 °C) | = | 86 mPa·s |
| 11 | CDUQU-3-F | 8.0 | Kₐᵥ | = | 15.3 pN |
| 12 | PGUQU-3-F | 2.0 | γ₁/ K₁ | = | 4.86 mPa·s / pN |
| 13 | PGUQU-4-F | 3.0 | | | |
| 14 | PPGU-3-F | 0.5 | | | |
| 15 | CLUQU-3-F | 5.0 | | | |

The LC medium further contains 30 ppm of the compound of Formula ST2-1 as a stabilizer.

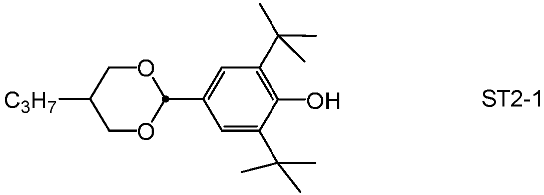

The obtained LC medium is characterized by a very good contrast and fast switching in a FFS display. It has an average elastic constant Kₐᵥ = (K₁ + ½ K₁ + K₃) / 3 of 15.3 pN and a response time parameter γ₁ / K₁ of 4.86 mPa·s / pN. Additionally, the LC medium has a clearing point as high as 107.5 °C.

### Example 3

| **Composition** | | | **Properties** | | |
|---|---|---|---|---|---|
| **Nr.** | **Comp.** | **Conc., wt.-%** | | | |
| 1 | CC-3-V | 37.5 | T(N, I) | = | 92 °C |
| 2 | CC-3-V1 | 8.0 | Δn (20 °C, 589 nm) | = | 0.1010 |
| 3 | CC-3-2V1 | 5.0 | nₑ (589 nm, 20 °C) | = | 1.5780 |
| 4 | CLP-3-T | 6.0 | nₒ (589 nm, 20 °C) | = | 1.4770 |
| 5 | APUQU-2-F | 4.0 | Δε (20 °C, 1 kHz) | = | 14.7 |
| 6 | APUQU-3-F | 4.5 | ε_{∥} (20 °C, 1 kHz) | = | 18.3 |
| 7 | CDUQU-3-F | 8.0 | ε_{⊥} (20 °C, 1 kHz) | = | 3.6 |
| 8 | DGUQU-4-F | 5.0 | K₁ (20 °C) | = | 15.7 pN |
| 9 | PGUQU-3-F | 3.0 | K₃ (20 °C) | = | 17.4 pN |
| 10 | PGUQU-4-F | 2.0 | γ₁ (20 °C) | = | 107 mPa·s |
| 11 | DPGU-4-F | 2.0 | Kₐᵥ | = | 13.6 pN |
| 12 | DLGU-3-F | 9.5 | γ₁ / K₁ | = | 6.82 mPa·s / pN |
| 13 | PPGU-3-F | 0.5 | | | |
| 14 | CLUQU-3-F | 5.0 | | | |

The LC medium further contains 20 ppm of the compound of Formula ST3-4 as a stabilizer.

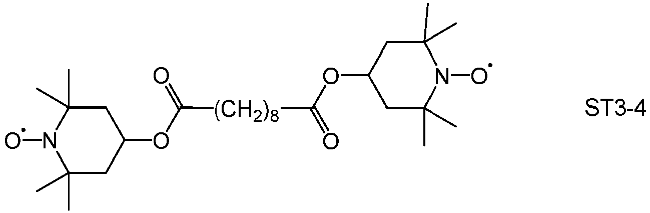

This LC medium is characterized by a very good contrast and fast switching in a FFS display. It has an average elastic constant Kₐᵥ = (K₁ + ½ K₁ + K₃) / 3 of 13.6 pN and a response time parameter γ₁ / K₁ of 6.82 mPa·s / pN. Additionally, the LC medium has a high clearing point.

### Example 4

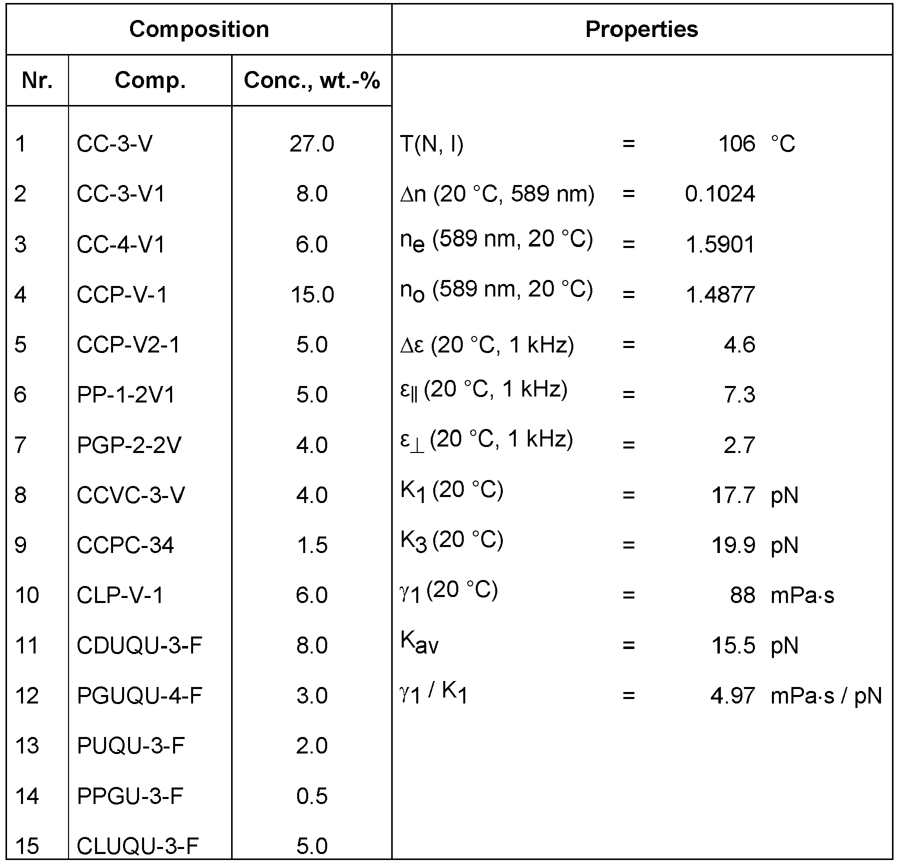

The LC medium further contains 30 ppm of the compound of Formula ST2-1 as a stabilizer.

This LC medium is characterized by a very good contrast and fast switching in a FFS display. It has an average elastic constant Kₐᵥ = (K₁ + ½ K₁ + K₃) / 3 of 15.5 pN and a response time parameter γ₁ / K₁ of 4.97 mPa·s / pN. Additionally, the LC medium has a clearing point as high as 106 °C.

### Example 5

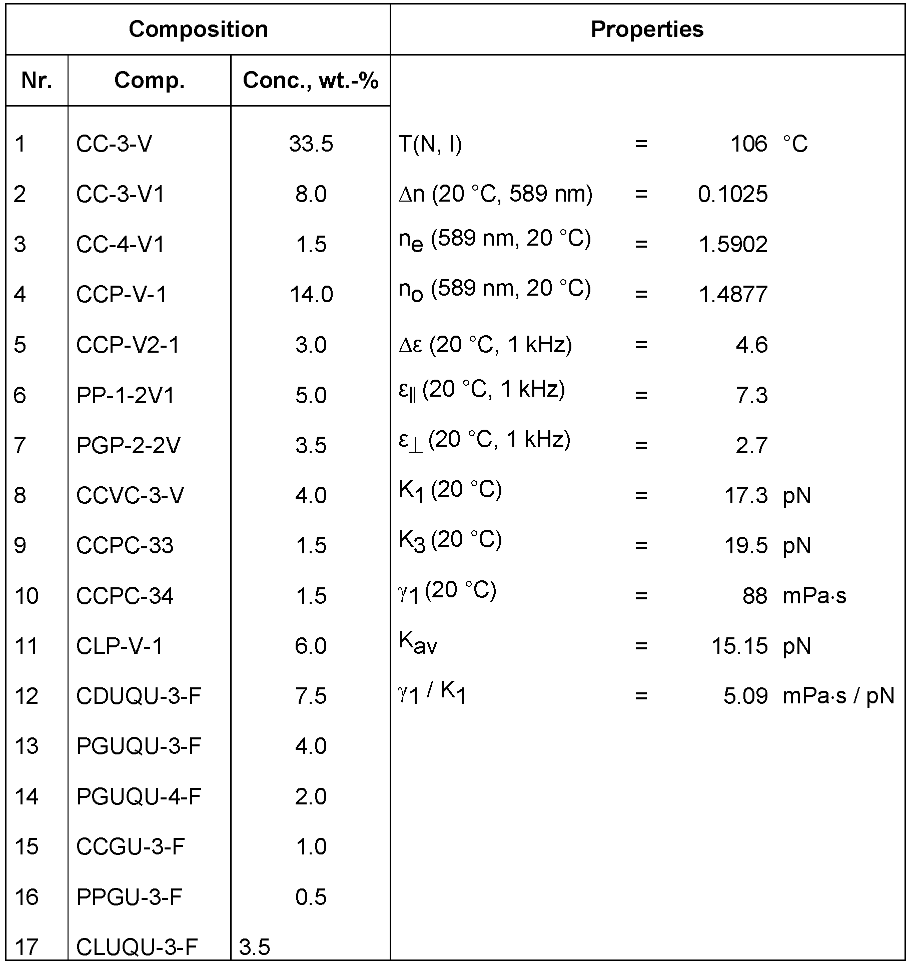

The LC medium further contains 30 ppm of the compound of Formula ST2-1 as a stabilizer.

This LC medium is characterized by a very good contrast and fast switching in a FFS display. It has an average elastic constant Kₐᵥ = (K₁ + ½ K₁ + K₃) / 3 of 15.15 pN and a response time parameter γ₁ / K₁ of 5.09 mPa·s / pN. Additionally, the LC medium has a clearing point as high as 106 °C.

### Example 6

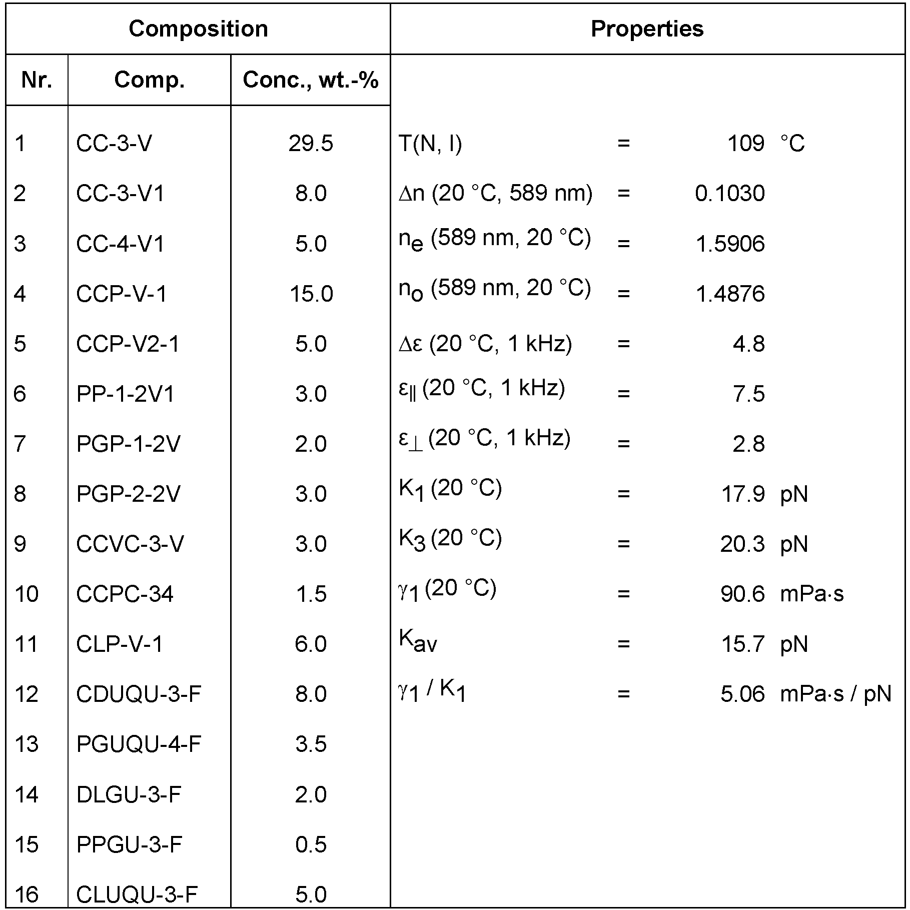

The LC medium further contains 30 ppm of the compound of Formula ST2-1 as a stabilizer.

This LC medium is characterized by a very good contrast and fast switching in a FFS display. It has an average elastic constant Kₐᵥ = (K₁ + ½ K₁ + K₃) / 3 of 15.7 pN and a response time parameter γ₁ / K₁ of 5.06 mPa·s / pN. Additionally, the LC medium has a clearing point as high as 109 °C.

### Example 7

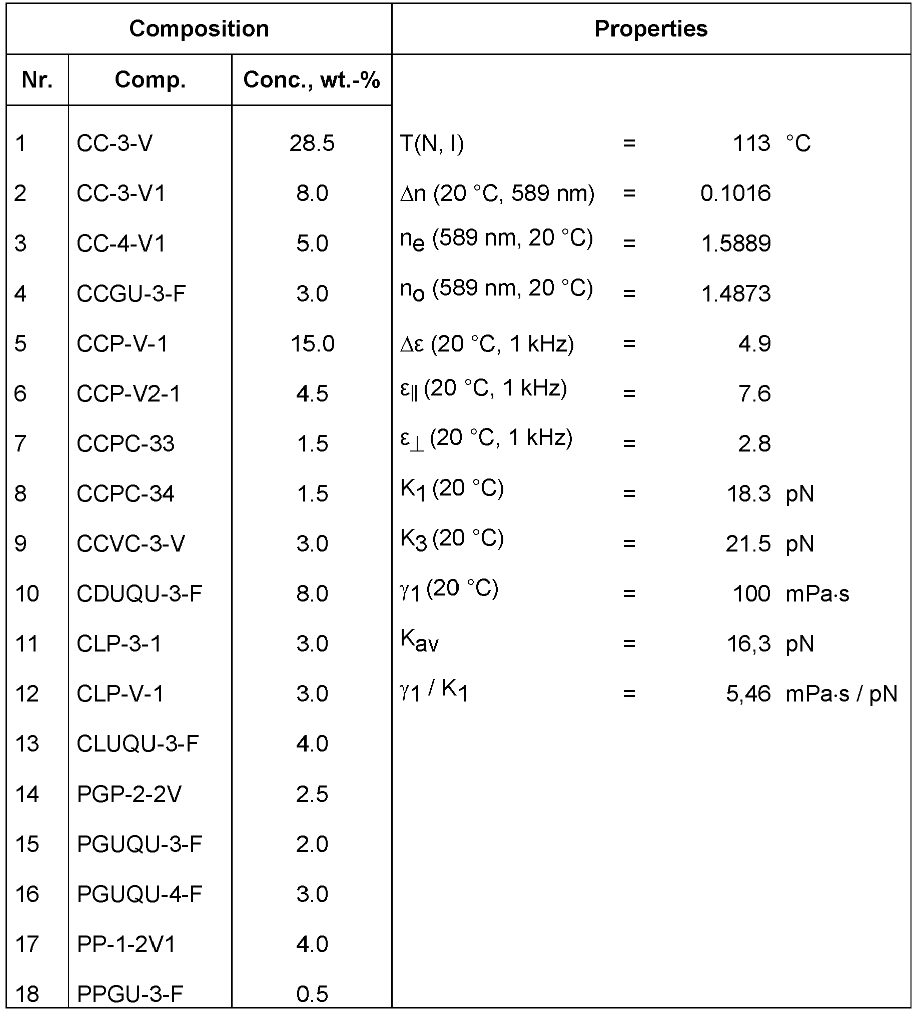

The LC medium further contains 30 ppm of the compound of Formula ST2-1 as a stabilizer.

This LC medium is characterized by a very good contrast and fast switching in a FFS display. It has an average elastic constant Kₐᵥ = (K₁ + ½ K₁ + K₃) / 3 of 16.3 pN and a response time parameter γ₁ / K₁ of 5.46 mPa·s / pN. Additionally, the LC medium has a clearing point as high as 113 °C.

### Example 8

| **Composition** | | | **Properties** | | |
|---|---|---|---|---|---|
| **Nr.** | **Comp.** | **Conc., wt.-%** | | | |
| 1 | CC-3-V | 29.75 | T(N, I) | = | 106 °C |
| 2 | CC-3-V1 | 8.0 | Δn (20 °C, 589 nm) | = | 0.1026 |
| 3 | CC-4-V1 | 5.0 | nₑ (589 nm, 20 °C) | = | 1.5897 |
| 4 | CCP-V-1 | 15.0 | nₒ (589 nm, 20 °C) | = | 1.4871 |
| 5 | CCP-V2-1 | 5.0 | Δε (20 °C, 1 kHz) | = | 4.6 |
| 6 | CCPC-34 | 0.5 | ε_{∥} (20 °C, 1 kHz) | = | 7.3 |
| 7 | CCVC-3-V | 4.0 | ε_{⊥} (20 °C, 1 kHz) | = | 2.7 |
| 8 | CDUQU-3-F | 8.0 | K₁ (20 °C) | = | 17.9 pN |
| 9 | CLP-3-1 | 6.0 | K₃ (20 °C) | = | 20.1 pN |
| 10 | CLUQU-3-F | 4.25 | γ₁ (20 °C) | = | 88 mPa·s |
| 11 | PGP-2-2V | 4.5 | Kₐᵥ | = | 15.6 pN |
| 12 | PGUQU-3-F | 2.0 | γ₁ / K₁ | = | 4.92 mPa·s / pN |
| 13 | PGUQU-4-F | 3.5 | | | |
| 14 | PP-1-2V1 | 4.0 | | | |
| 15 | PPGU-3-F | 0.5 | | | |

The LC medium further contains 30 ppm of the compound of Formula ST2-1 as a stabilizer.

This LC medium is characterized by a very good contrast and fast switching in a FFS display. It has an average elastic constant Kₐᵥ = (K₁ + ½ K₁ + K₃) / 3 of 15.6 pN and a response time parameter γ₁ / K₁ of 4.92 mPa·s / pN. Additionally, the LC medium has a clearing point as high as 106 °C.

### Example 9

| **Composition** | | | **Properties** | | |
|---|---|---|---|---|---|
| **Nr.** | **Comp.** | **Conc., wt.-%** | | | |
| 1 | CC-3-V | 30.0 | T(N, I) | = | 105 °C |
| 2 | CC-3-V1 | 8.0 | Δn (20 °C, 589 nm) | = | 0.1035 |
| 3 | CC-4-V1 | 5.0 | nₑ (589 nm, 20 °C) | = | 1.5905 |
| 4 | CCP-V-1 | 14.5 | nₒ (589 nm, 20 °C) | = | 1.4870 |
| 5 | CCP-V2-1 | 5.0 | Δε (20 °C, 1 kHz) | = | 4.6 |
| 6 | CCVC-3-V | 4.0 | ε_{∥} (20 °C, 1 kHz) | = | 7.4 |
| 7 | CDUQU-3-F | 8.0 | ε_{⊥} (20 °C, 1 kHz) | = | 2.7 |
| 8 | CLP-3-1 | 6.0 | K₁ (20 °C) | = | 17.8 pN |
| 9 | CLUQU-3-F | 4.5 | K₃ (20 °C) | = | 20.2 pN |
| 10 | PGP-2-2V | 5.0 | γ₁ (20 °C) | = | 86 mPa·s |
| 11 | PGUQU-3-F | 2.0 | Kₐᵥ | = | 15.6 pN |
| 12 | PGUQU-4-F | 3.5 | γ₁ / K₁ | = | 4.83 mPa·s / pN |
| 13 | PP-1-2V1 | 4.0 | | | |
| 14 | PPGU-3-F | 0.5 | | | |

The LC medium further contains 30 ppm of the compound of Formula ST2-1 as a stabilizer.

This LC medium is characterized by a very good contrast and fast switching in a FFS display. It has an average elastic constant Kₐᵥ = (K₁ + ½ K₁ + K₃) / 3 of 15.6 pN and a response time parameter γ₁ / K₁ of 4.83 mPa·s / pN. Additionally, the LC medium has a clearing point as high as 105 °C.

### Example 10

| **Composition** | | | **Properties** | | |
|---|---|---|---|---|---|
| **Nr.** | **Comp.** | **Conc., wt.-%** | | | |
| 1 | CC-3-V | 29.75 | T(N, I) | = | 104 °C |
| 2 | CC-3-V1 | 8.0 | Δn (20 °C, 589 nm) | = | 0.1022 |
| 3 | CC-4-V1 | 5.0 | Δε (20 °C, 1 kHz) | = | 4.5 |
| 4 | CCP-V-1 | 15.0 | | | |
| 5 | CCP-V2-1 | 5.0 | | | |
| 6 | CCPC-34 | 0.5 | | | |
| 7 | CCVC-3-V | 4.0 | | | |
| 8 | CDUQU-3-F | 8.0 | | | |
| 9 | CLP-3-1 | 6.0 | | | |
| 10 | CLUQU(1)-3-F | 4.25 | | | |
| 11 | PGP-2-2V | 4.5 | | | |
| 12 | PGUQU-3-F | 2.0 | | | |
| 13 | PGUQU-4-F | 3.5 | | | |
| 14 | PP-1-2V1 | 4.0 | | | |
| 15 | PPGU-3-F | 0.5 | | | |

The LC medium further contains 30 ppm of the compound of Formula ST2-1 as a stabilizer.

### Example 11

| **Composition** | | | **Properties** | | |
|---|---|---|---|---|---|
| **Nr.** | **Comp.** | **Conc., wt.-%** | | | |
| 1 | CC-3-V | 29.75 | T(N, I) | = | 103 °C |
| 2 | CC-3-V1 | 8.0 | Δn (20 °C, 589 nm) | = | 0.1020 |
| 3 | CC-4-V1 | 5.0 | Δε (20 °C, 1 kHz) | = | 4.4 |
| 4 | CCP-V-1 | 15.0 | | | |
| 5 | CCP-V2-1 | 5.0 | | | |
| 6 | CCPC-34 | 0.5 | | | |
| 7 | CCVC-3-V | 4.0 | | | |
| 8 | CDUQU-3-F | 8.0 | | | |
| 9 | CLP-3-1 | 6.0 | | | |
| 10 | CLUQU-(c3)1-F | 4.25 | | | |
| 11 | PGP-2-2V | 4.5 | | | |
| 12 | PGUQU-3-F | 2.0 | | | |
| 13 | PGUQU-4-F | 3.5 | | | |
| 14 | PP-1-2V1 | 4.0 | | | |
| 15 | PPGU-3-F | 0.5 | | | |

The LC medium further contains 30 ppm of the compound of Formula ST2-1 as a stabilizer.

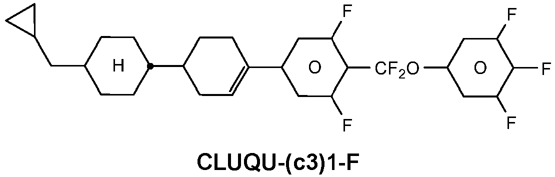

### Example 12

| **Composition** | | | **Properties** | | |
|---|---|---|---|---|---|
| **Nr.** | **Comp.** | **Conc., wt.-%** | | | |
| 1 | CC-3-V | 29.75 | T(N, I) | = | 105 °C |
| 2 | CC-3-V1 | 8.0 | Δn (20 °C, 589 nm) | = | 0.1028 |
| 3 | CC-4-V1 | 5.0 | Δε (20 °C, 1 kHz) | = | 4.6 |
| 4 | CCP-V-1 | 15.0 | | | |
| 5 | CCP-V2-1 | 5.0 | | | |
| 6 | CCPC-34 | 0.5 | | | |
| 7 | CCVC-3-V | 4.0 | | | |
| 8 | CDUQU-3-F | 8.0 | | | |
| 9 | CLP-3-1 | 6.0 | | | |
| 10 | CLUQU-3-F | 4.25 | | | |
| 11 | PGP-2-2V | 4.5 | | | |
| 12 | PGUQU(1)-3-F | 2.0 | | | |
| 13 | PGUQU-4-F | 3.5 | | | |
| 14 | PP-1-2V1 | 4.0 | | | |
| 15 | PPGU-3-F | 0.5 | | | |

The LC medium further contains 30 ppm of the compound ST2-1 as a stabilizer.

In summary, the LC media of Examples 1-12 have high clearing points but, nevertheless, low rotational viscosities γ₁ and response time parameters γ₁ / K₁. They provide an improved overall image quality, in particular a high contrast and short response times. Therefore they are highly suitable for use in mobile applications such as vehicle navigation systems and tablet computers.

## Claims

1. Liquid-crystalline medium, **characterised in that** it has positive dielectric anisotropy and comprises one or more compounds of Formula I 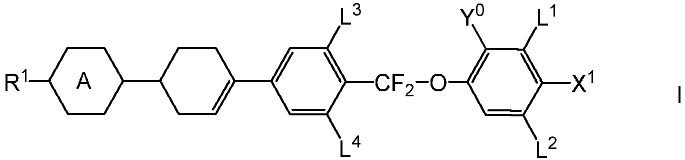 in which the individual radicals, on each occurrence identically or differently, and each, independently of one another, have the following meaning: 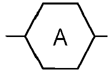 denotes 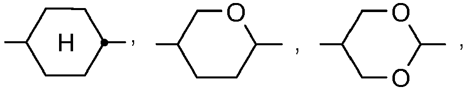 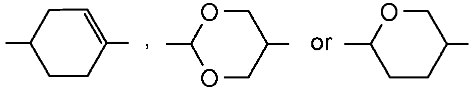
R¹ a H atom, an alkyl or an alkoxy group having 1 to 12 C atoms or an alkenyl or an alkenyloxy group having 2 to 12 C atoms in which one or more CH₂ groups are optionally substituted by -C≡C-, -CF₂O-, -OCF₂-, -CH=CH-, 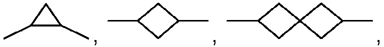 -O-, -CO-O- or -O-CO- in such a way that 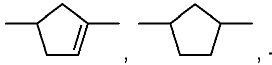 O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom, preferably cyclopentyl or cyclopentyloxyl,
Y⁰ a H atom or CH₃,
X¹ -CN, -SCN, a halogen atom or an alkyl or an alkoxy group having 1 to 3 C atoms or an alkenyl or an alkenyloxy group having 2 or 3 C atoms in which one or more H atoms are replaced by a halogen atom, and
L¹ to L⁴ independently of one another H or F;
and one or more compounds selected from L1 and L2, 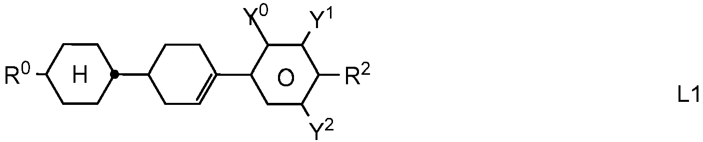 in which the individual radicals, on each occurrence identically or differently, and each, independently of one another, have the following meaning:
R⁰ an alkyl group having 1 to 12 C atoms or an alkenyl group having 2 to 12 C atoms in which one or more CH₂ groups are optionally substituted by -C≡C-, -CF₂O-, -OCF₂-, -CH=CH-, 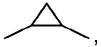 -O-, -CO-O- 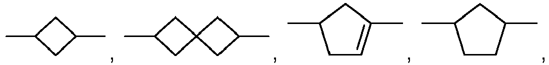 or -O-CO- in such a way that O atoms are not linked directly to one another, and in which one or more H atoms may be replaced by a halogen atom,
R² an alkyl group having 1 to 6 C atoms, in which one or more CH₂ groups are optionally substituted by -C≡C-, -CF₂O-, -OCF₂-, -CH=CH-, . 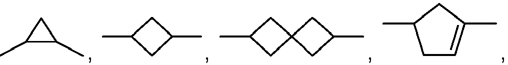 -O-, -CO-O- or -O-CO- in such a way that O atoms are 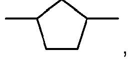 not linked directly to one another, and in which one or more H atoms may be replaced by a halogen atom;
Y¹ and Y² H, F or Cl,
Y⁰ H or CH₃ 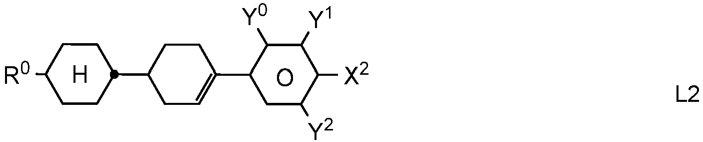
in which the individual radicals, on each occurrence identically or differently, and each, independently of one another, have the following meaning:
R⁰ an alkyl group having 1 to 12 C atoms or an alkenyl group having 2 to 12 C atoms in which one or more CH₂ groups are optionally substituted by -C≡C-, -CF₂O-, -OCF₂-, -CH=CH-, 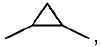 -O-, -CO-O- 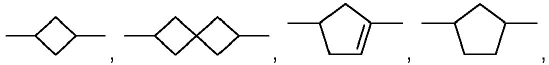 or -O-CO- in such a way that O atoms are not linked directly to one another, and in which one or more H atoms may be replaced by a halogen atom,
X² a F atom or an alkyl or an alkoxy group having 1 to 6 C atoms or an alkenyl or an alkenyloxy group having 2 to 6 C atoms in which one or more H atoms are replaced by a F atom,
Y¹ and Y² H, F or Cl,
Y⁰ H or CH₃.

2. Liquid crystal medium according to Claim 1 wherein the one or more compounds of Formula I are selected from those of Formulae I-1 to I-8: 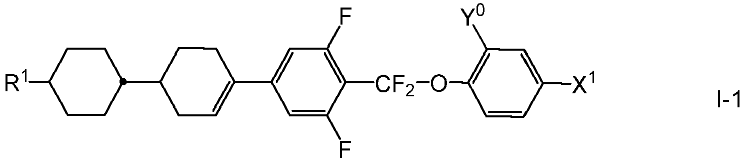 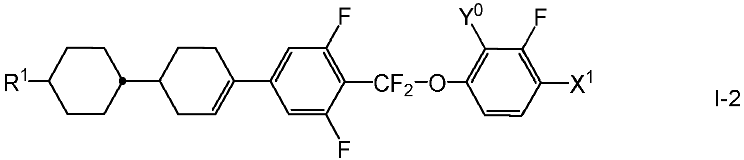 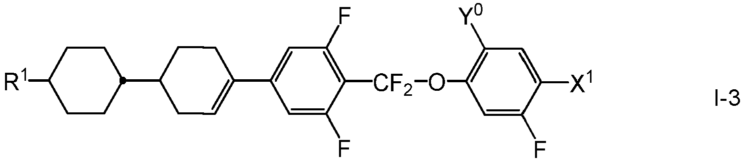 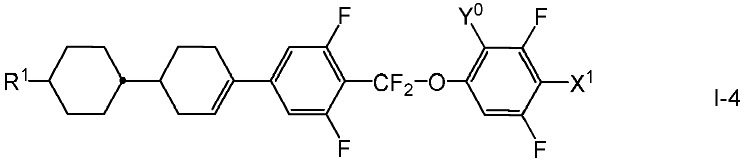 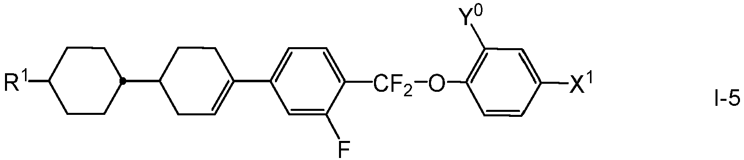 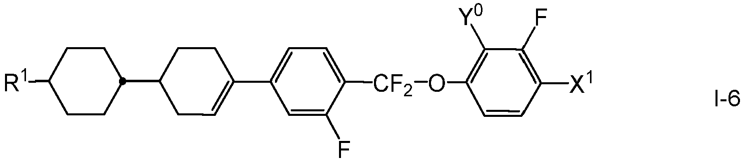 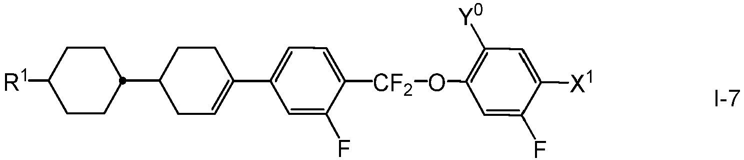 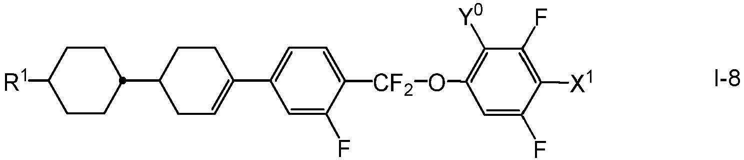 in which
R¹ a H atom, an alkyl or an alkoxy group having 1 to 6 C atoms or an alkenyl or an alkenyloxy group having 2 or 6 C atoms in which one or more CH₂ groups are optionally substituted by -C≡C-, -CF₂O-, -OCF₂-, -CH=CH-, 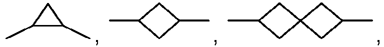 O-, -CO-O- or -O-CO- in such a way that 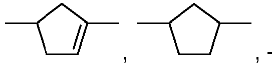 O atoms are not linked directly to one another, and in which one or more H atoms may be replaced by a halogen atom or a cycloalkyl or a cycloalkoxy group having 3 to 6 C atoms, in which one or more H atoms may be replaced by a halogen atom,
Y⁰ a H atom or CH₃, and
X¹ a F atom or an alkyl or an alkoxy group having 1 to 3 C atoms or an alkenyl or an alkenyloxy group having 2 or 3 C atoms in which one or more H atoms are replaced by a F atom.

3. Liquid-crystalline medium according to Claim 1 or 2, **characterized in that** the one or more compounds of Formulae L1 and L2 are described by the Formulae L1-1 and L2-1: 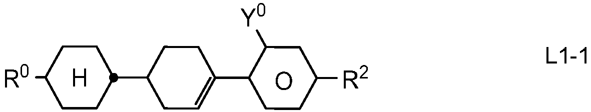 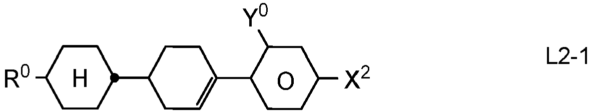 in which
R⁰ an alkyl group having 1 to 6 C atoms or an alkenyl group having 2 to 12 C atoms in which one or more CH₂ groups are optionally substituted by -C≡C-, -CF₂O-, -OCF₂-, -CH=CH-, 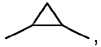 -O-, -CO-O- 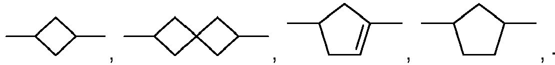 or -O-CO- in such a way that O atoms are not linked directly to one another, and in which one or more H atoms may be replaced by a halogen atom,
R² an alkyl group having 1 to 6 C atoms, in which one or more CH₂ groups are optionally substituted by -C≡C-, -CF₂O-, -OCF₂-, -CH=CH-, 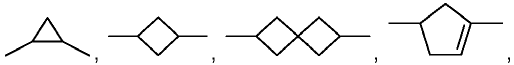 O-, -CO-O- or -O-CO- in such a way that O atoms are 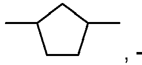 not linked directly to one another, and in which one or more H atoms may be replaced by a halogen atom;
X² a F atom or an alkyl or an alkoxy group having 1 to 3 C atoms or an alkenyl or an alkenyloxy group having 2 or 3 C atoms in which one or more H atoms are replaced by a F atom, and
Y⁰ H or CH₃.

4. Liquid-crystalline medium according to one or more of Claims 1 to 3, **characterized in that** it comprises one or more compounds selected from the following formulae: 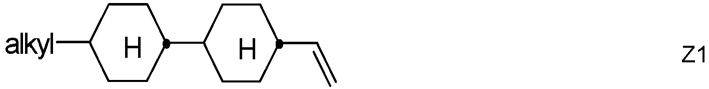 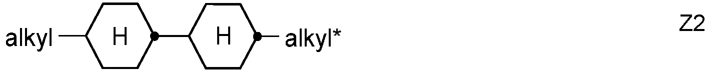 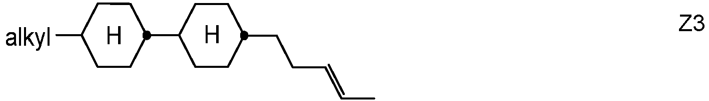 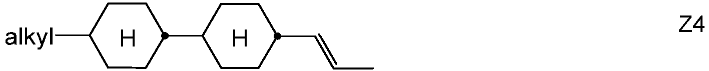 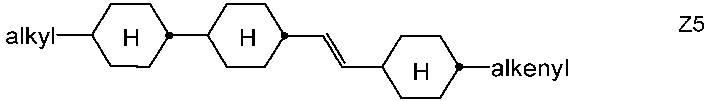 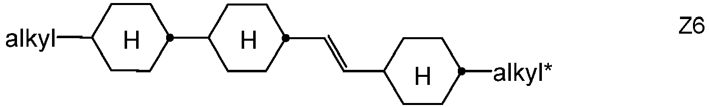 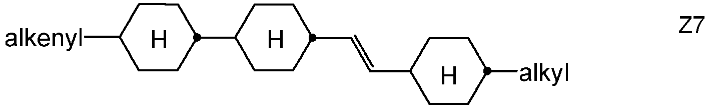 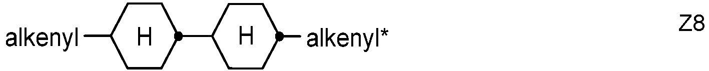
wherein "alkyl" and "alkyl*" denote C₁₋₆-alkyl and
"alkenyl" and "alkenyl*" denote C₂₋₆-alkenyl.

5. Liquid-crystalline medium according to one or more of Claims 1 to 4, **characterised in that** it comprises one or more compounds of the Formula XIV 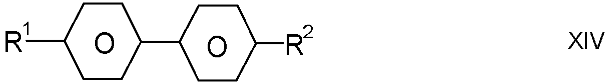 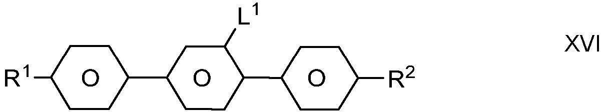 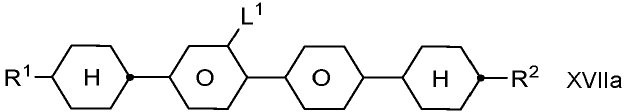 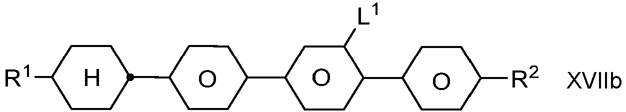 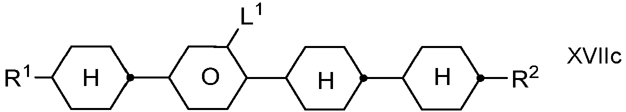 in which R¹ and R² each, independently of one another, denote n-alkyl, alkoxy, oxaalkyl, fluoroalkyl or alkenyl, each having up to 6 C atoms, and L¹ has the meanings indicated in Claim 1.

6. Liquid-crystalline medium according to one or more of Claims 1 to 5, **characterized in that** it comprises one or more compounds selected from the group consisting of the following formulae: 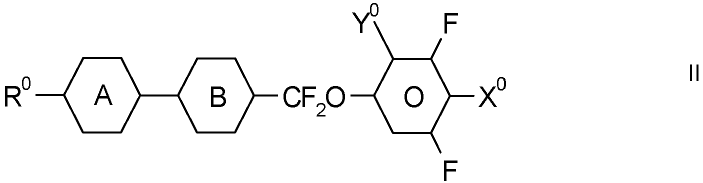 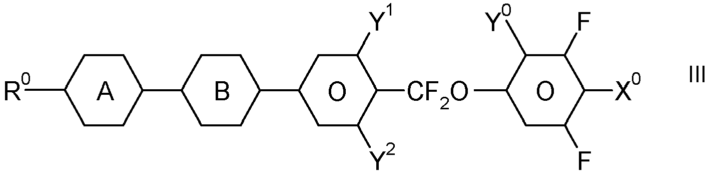 wherein the individual radicals, independently of each other and on each occurrence identically or differently, have the following meanings: 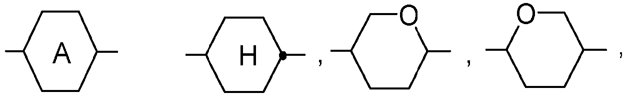 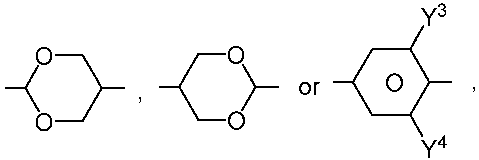 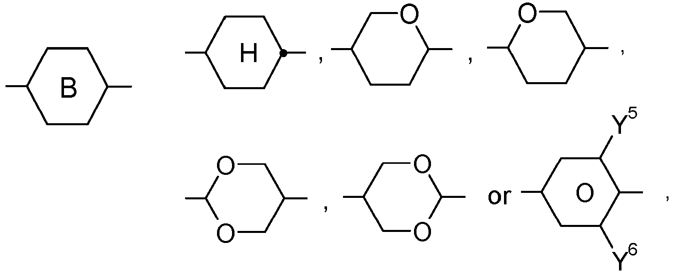
R⁰ one of the meanings given in claim 1 for R¹,
X⁰ F, Cl, CN, SF₅, SCN, NCS, a halogenated alkyl radical, a halogenated alkenyl radical, a halogenated alkoxy radical or a halogenated alkenyloxy radical having up to 6 C atoms, and
Y¹⁻⁶ H or F,
Y⁰ H or CH₃.

7. Liquid-crystalline medium according to Claim 6, wherein the one or more compounds of Formula II are selected from the following subformulae: 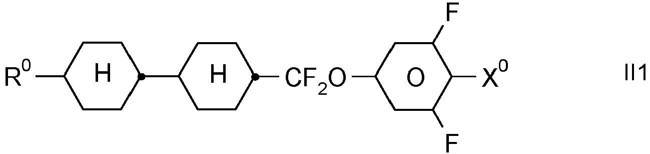 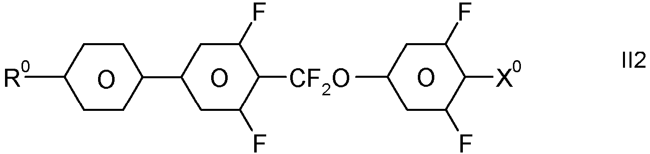 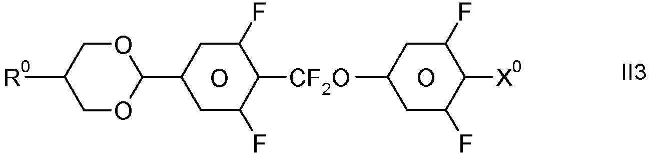 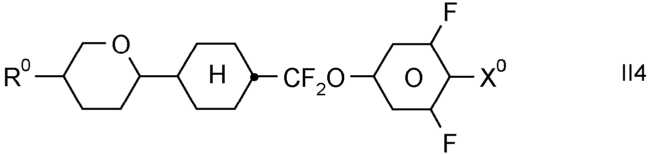 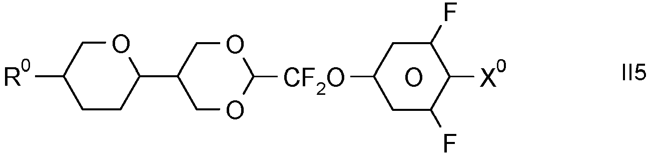 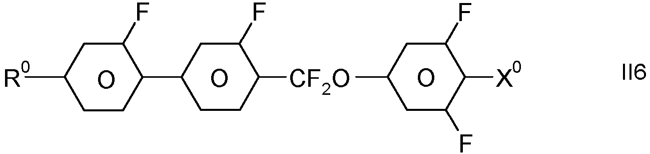 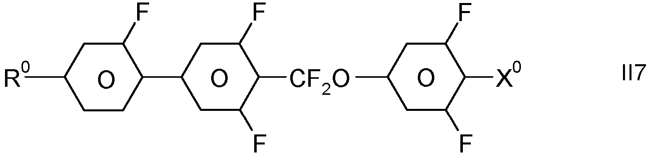 in which R⁰ and X⁰ have the meanings given in Formula II.

8. Liquid-crystalline medium according to Claim 6, wherein the one or more compounds of Formula III are selected from the following subformulae: 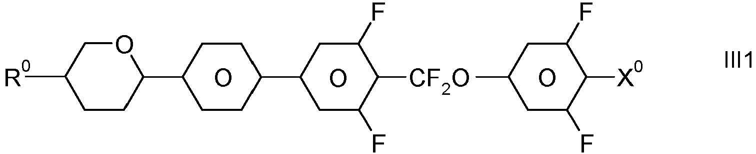 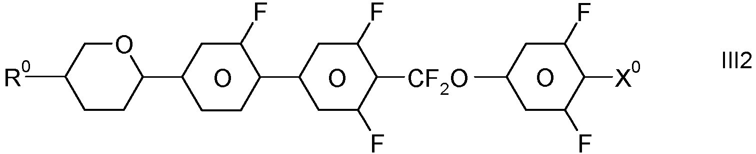 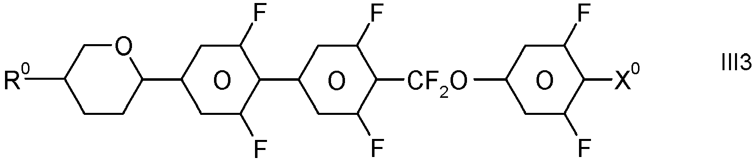 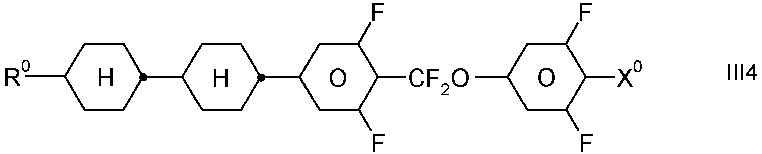 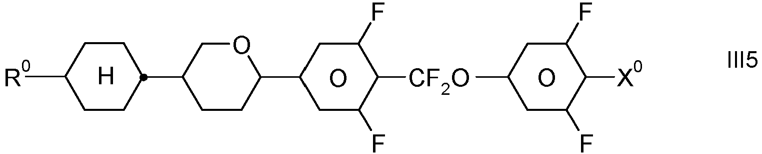 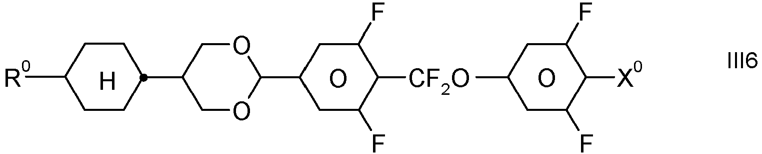 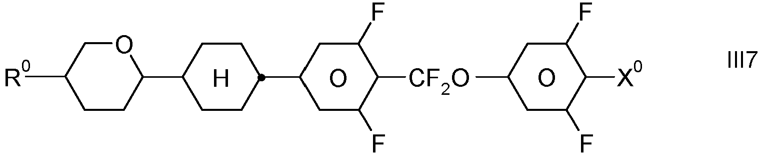 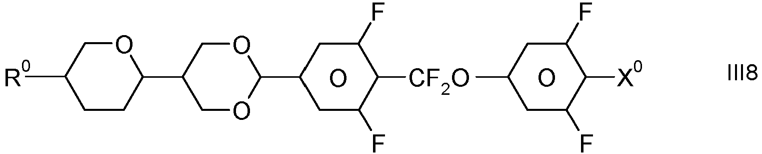 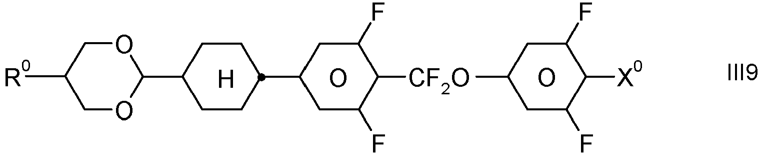 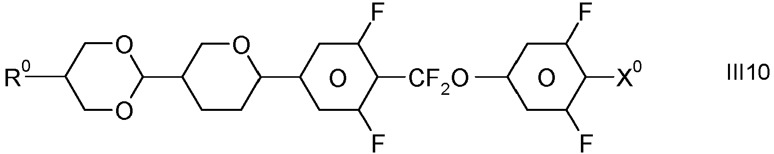 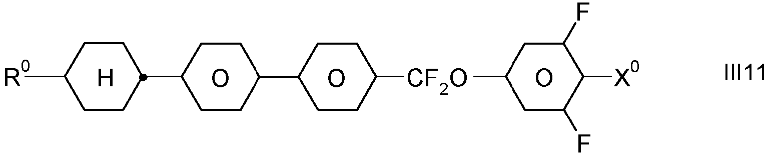 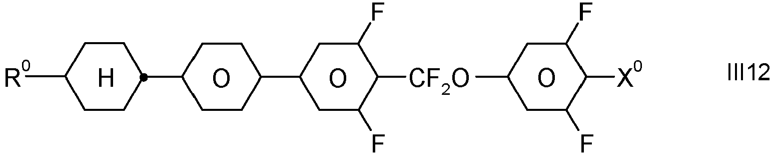 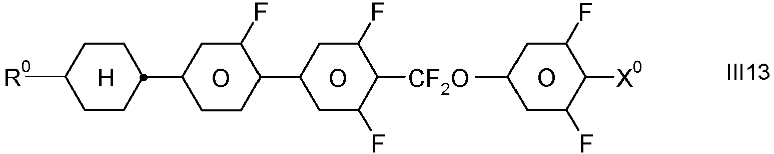 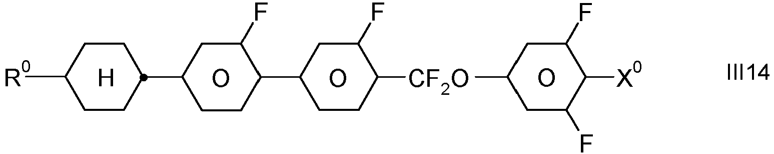 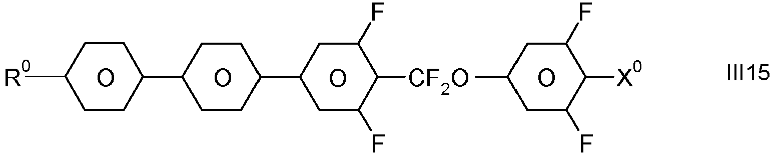 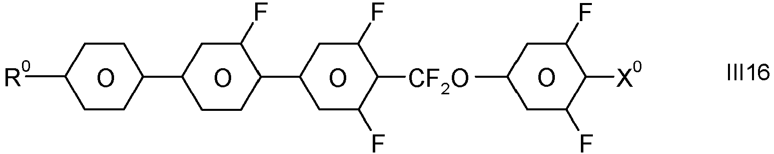 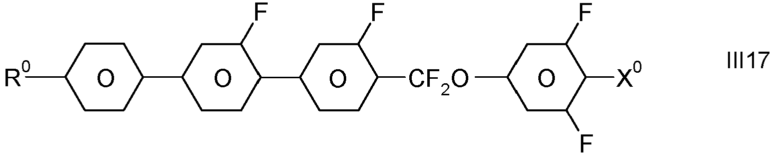 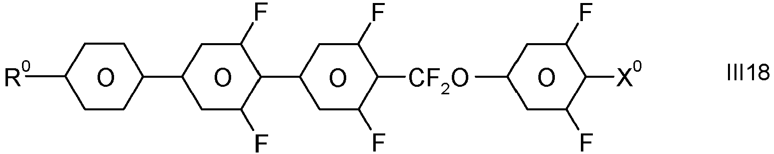 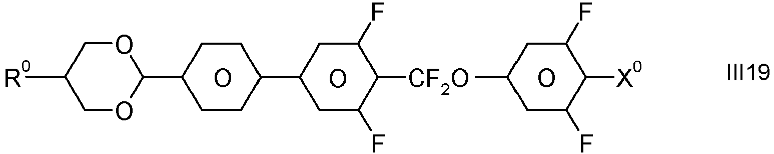 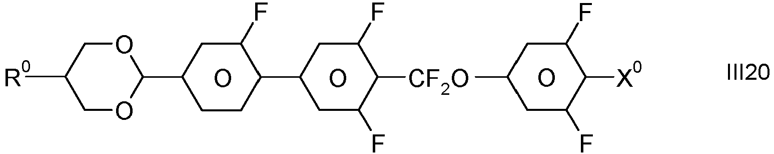 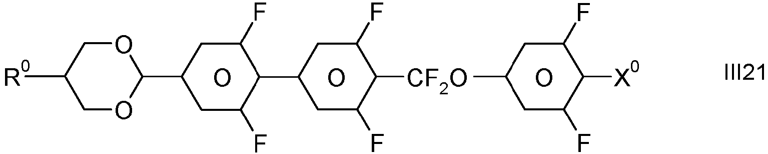 in which R⁰ and X⁰ have the meanings given in Formula II.

9. Liquid-crystalline medium according to one or more of Claims 1 to 8, **characterised in that** it additionally comprises one or more compounds selected from the group consisting of the following formulae: 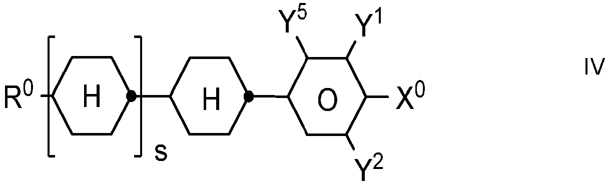 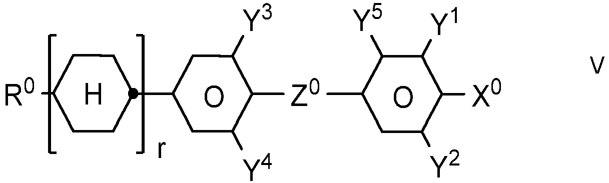 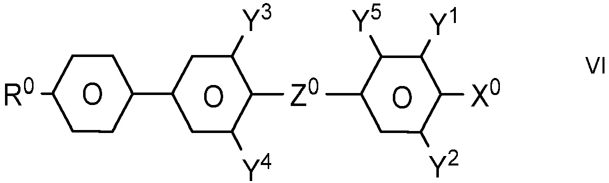 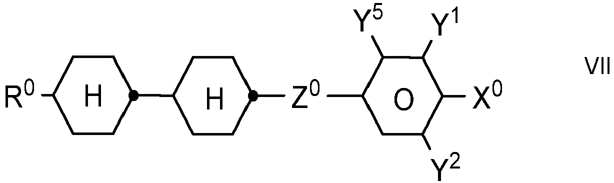 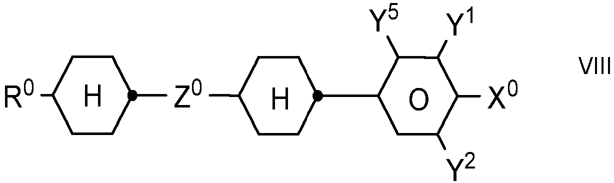 in which R⁰, X⁰, Y¹, Y² and Y⁵ have the meanings given in Claims 1 and 8, Y³ and Y⁴ have independently of each other one of the meanings given for Y¹, and
Z⁰ denotes -C₂H₄-, -(CH₂)₄-, -CH=CH-, -CF=CF-, -C₂F₄-, -CH₂CF₂-, -CF₂CH₂-, -CH₂O-, -OCH₂-, -COO- or -OCF₂-, in Formulae V and VI also a single bond, in Formulae V and VIII also -CF₂O-,
r denotes 0 or 1, and
s denotes 0 or 1.

10. Liquid-crystalline medium according to one or more of Claims 1 to 9, **characterised in that** it comprises one or more compounds selected from the group consisting of the following formulae: 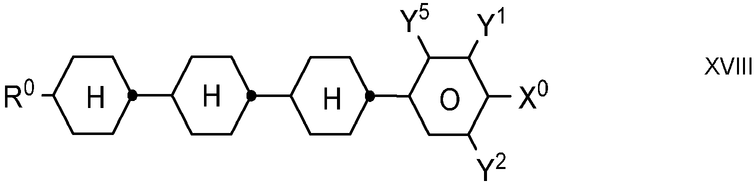 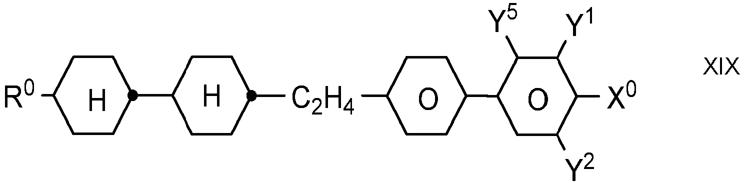 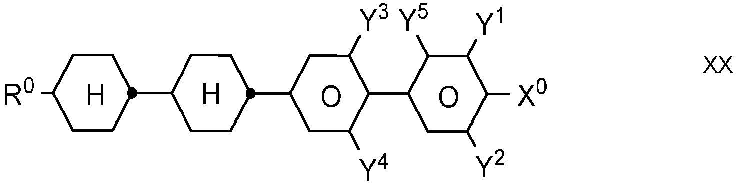 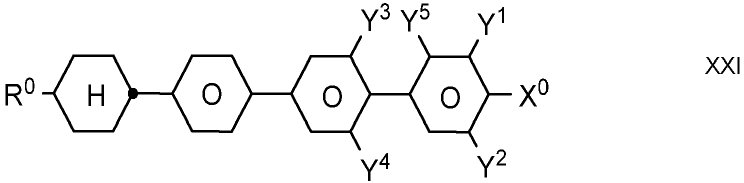 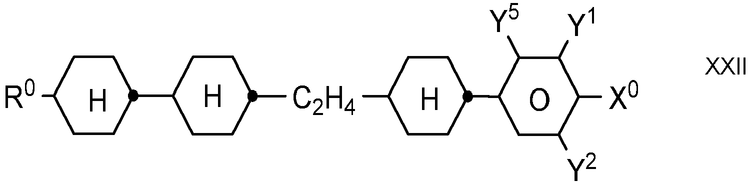 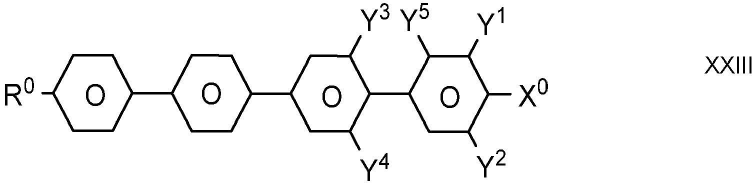 in which R⁰, Y¹⁻⁵ and X⁰ each, independently of one another, have one of the meanings indicated in Claim 1.

11. Liquid-crystalline medium according to one or more of Claims 1 to 10, **characterized in that** it comprises one or more compounds selected from the group consisting of the following formulae: 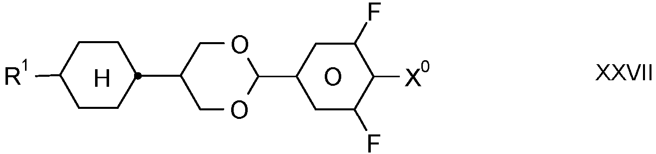 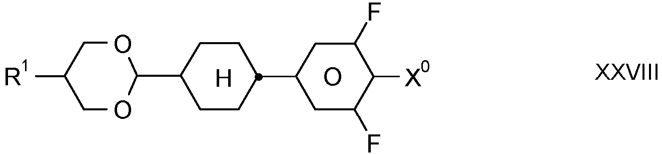 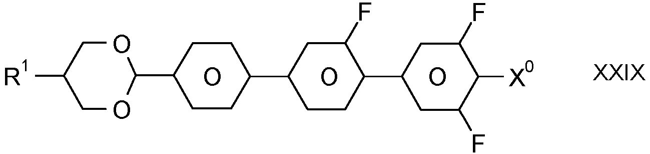 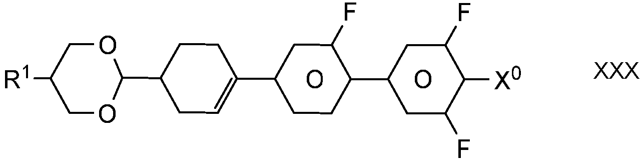 in which R¹ and X⁰ have the meanings indicated in Claims 5 and 9.

12. Liquid-crystalline medium according to one or more of Claims 1 to 11, **characterised in that** it comprises one or more compounds of Formulae I, L1 and L2 and one or more compounds selected from the group consisting of Formulae Z1, Z2, Z3, Z4, Z5, Y, B, II, III, IV, VI, XIV, XX, XII, XXIII, XXIX, XVI, XVlla, XVllb, XVllc, XXXI and XXXIII.

13. Liquid-crystalline medium according to one or more of Claims 1 to 12, **characterized in that** it additionally comprises one or more polymerizable compounds.

14. Process for the preparation of a liquid-crystalline medium according to one or more of Claims 1 to 13, **characterised in that** one or more compounds of the Formula I and one or more compounds of the Formula L1 and/or L2 are mixed with one or more mesogenic compounds and optionally one or more polymerizable compounds or compounds of Formula M and/or one or more additives.

15. Use of a liquid-crystalline medium according to one or more of Claims 1 to 14 for electro-optical purposes.

16. Electro-optical liquid-crystal display containing a liquid-crystalline medium according to one or more of Claims 1 to 13.

17. Electro-optical liquid-crystal display according to Claim 16, **characterized in that** it is a TN, PS-TN, STN, TN-TFT, OCB, IPS, PS-IPS, FFS, HB-FFS, XB-FFS, PS-HB-FFS, PS-XB-FFS, SA-HB-FFS, SA-XB-FS, polymer stabilised SA-HB-FFS, polymer stabilised SA-XB-FFS, positive VA or positive PS-VA display.

18. Electro-optical liquid-crystal display according to Claim 16, **characterized in that** it is an FFS, HB-FFS, XB-FFS, PS-HB-FFS, PS-XB-FFS, IPS or PS-IPS display.

## Patentansprüche

1. Flüssigkristallines Medium, **dadurch gekennzeichnet, dass** es positive dielektrische Anisotropie aufweist und eine oder mehrere Verbindungen der Formel I 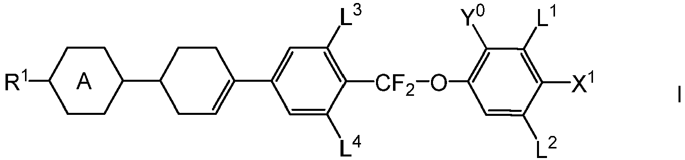 worin die einzelnen Reste, bei jedem Auftreten gleich oder verschieden und jeweils unabhängig voneinander, die folgende Bedeutung besitzen: 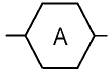 bedeutet 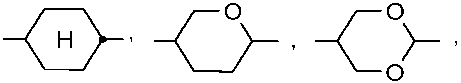 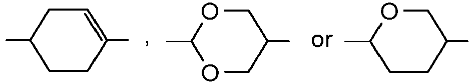
R¹ ein H-Atom, eine Alkyl- oder eine Alkoxygruppe mit 1 bis 12 C-Atomen oder eine Alkenyl- oder eine Alkenyloxygruppe mit 2 bis 12 C-Atomen, worin eine oder mehrere CH₂-Gruppen gegebenenfalls so durch -C≡C-, -CF₂O-, -OCF₂-, -CH=CH-, 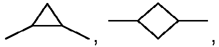 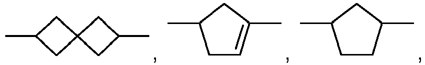 -O-, -CO-O- oder -O-CO-substituiert sind, dass O-Atome nicht direkt miteinander verknüpft sind, und worin ein oder mehrere H-Atome durch ein Halogenatom ersetzt sein können, oder eine Cycloalkyl- oder eine Cycloalkoxygruppe mit 3 bis 12 C-Atomen, worin ein oder mehrere H-Atome durch ein Halogenatom ersetzt sein können, vorzugsweise Cyclopentyl oder Cyclopentyloxyl,
Y⁰ ein H-Atom oder CH₃,
X¹ -CN, -SCN, ein Halogenatom oder eine Alkyl- oder eine Alkoxygruppe mit 1 bis 3 C-Atomen oder eine Alkenyl- oder eine Alkenyloxygruppe mit 2 oder 3 C-Atomen, worin ein oder mehrere H-Atome durch ein Halogenatom ersetzt sind, und
L¹ bis L⁴ unabhängig voneinander H oder F;
und eine oder mehrere Verbindungen, die ausgewählt sind aus L1 und L2, 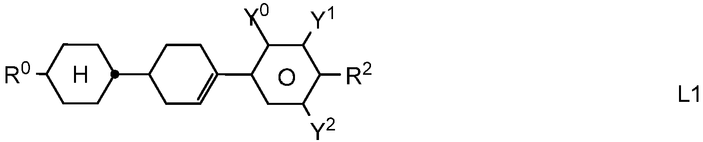 worin die einzelnen Reste, bei jedem Auftreten gleich oder verschieden und jeweils unabhängig voneinander, die folgende Bedeutung besitzen:
R⁰ eine Alkylgruppe mit 1 bis 12 C-Atomen oder eine Alkenylgruppe mit 2 bis 12 C-Atomen, worin eine oder mehrere CH₂-Gruppen gegebenenfalls so durch -C≡C-, -CF₂O-, -OCF₂-, -CH=CH-, 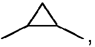 -O-, -CO-O- 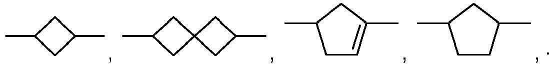 oder -O-CO- substituiert sind, dass O-Atome nicht direkt miteinander verknüpft sind, und worin ein oder mehrere H-Atome durch ein Halogenatom ersetzt sein können,
R² eine Alkylgruppe mit 1 bis 6 C-Atomen, worin eine oder mehrere CH₂-Gruppen gegebenenfalls so durch -C≡C-, -CF₂O-, -OCF₂-, -CH=CH-, 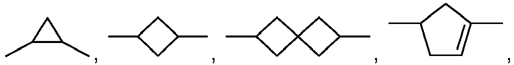 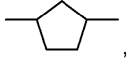 -O-, -CO-O- oder -O-CO- substituiert sind, dass O-Atome nicht direkt miteinander verknüpft sind, und worin ein oder mehrere H-Atome durch ein Halogenatom ersetzt sein können;
Y¹ und Y² H, F oder Cl,
Y⁰ H oder CH₃, 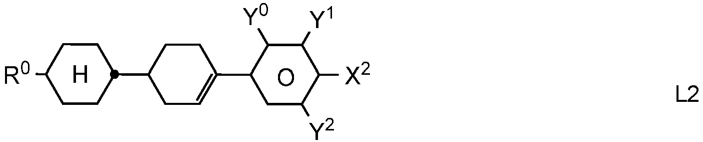
worin die einzelnen Reste, bei jedem Auftreten gleich oder verschieden und jeweils unabhängig voneinander, die folgende Bedeutung besitzen:
R⁰ eine Alkylgruppe mit 1 bis 12 C-Atomen oder eine Alkenylgruppe mit 2 bis 12 C-Atomen, worin eine oder mehrere CH₂-Gruppen gegebenenfalls so durch -C≡C-, -CF₂O-, -OCF₂-, -CH=CH-, 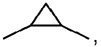 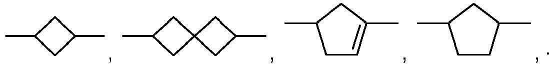 -O-, -CO-O-oder -O-CO- substituiert sind, dass O-Atome nicht direkt miteinander verknüpft sind, und worin ein oder mehrere H-Atome durch ein Halogenatom ersetzt sein können,
X² ein F-Atom oder eine Alkyl- oder eine Alkoxygruppe mit 1 bis 6 C-Atomen oder eine Alkenyl- oder eine Alkenyloxygruppe mit 2 bis 6 C-Atomen, worin ein oder mehrere H-Atome durch ein F-Atom ersetzt sind,
Y¹ und Y² H, F oder Cl,
Y⁰ H oder CH₃,
enthält.

2. Flüssigkristallmedium nach Anspruch 1, bei dem die eine oder mehreren Verbindungen der Formel I ausgewählt sind aus denen der Formeln I-1 bis I-8: 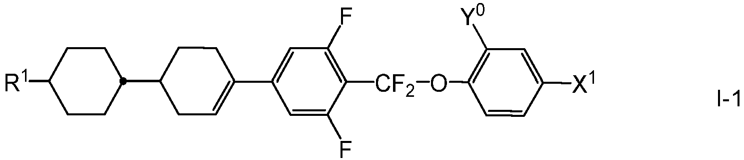 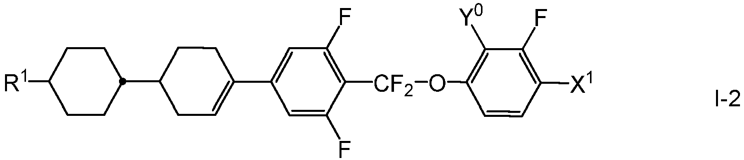 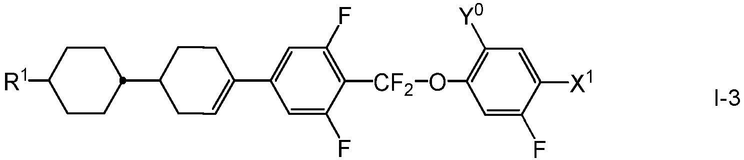 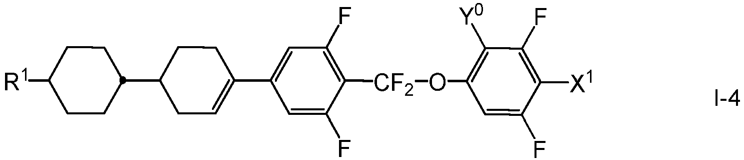 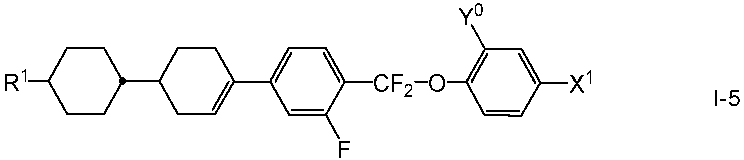 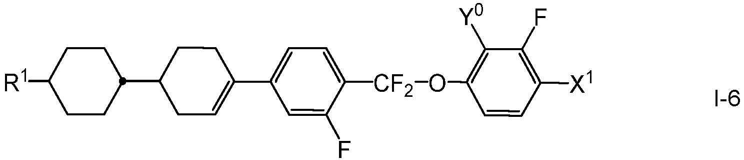 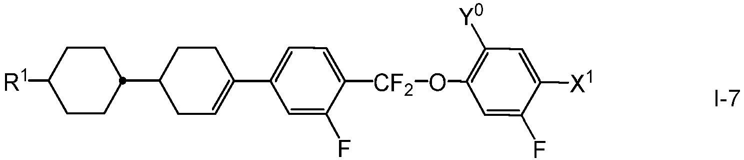 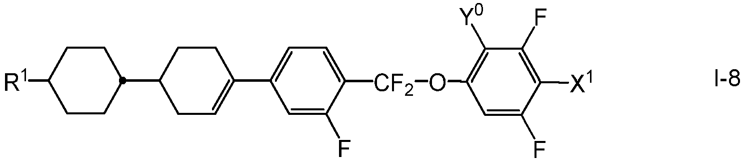 worin
R¹ ein H-Atom, eine Alkyl- oder eine Alkoxygruppe mit 1 bis 6 C-Atomen oder eine Alkenyl- oder eine Alkenyloxygruppe mit 2 oder 6 C-Atomen, worin eine oder mehrere CH₂-Gruppen gegebenenfalls so durch -C≡C-, -CF₂O-, -OCF₂-, -CH=CH-, 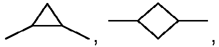 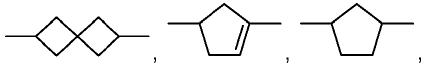 -O-, -CO-O- oder -O-CO-substituiert sind, dass O-Atome nicht direkt miteinander verknüpft sind, und worin ein oder mehrere H-Atome durch ein Halogenatom ersetzt sein können, oder eine Cycloalkyl- oder eine Cycloalkoxygruppe mit 3 bis 6 C-Atomen, worin ein oder mehrere H-Atome durch ein Halogenatom ersetzt sein können, bedeutet,
Y⁰ ein H-Atom oder CH₃ bedeutet, und
X¹ ein F-Atom oder eine Alkyl- oder eine Alkoxygruppe mit 1 bis 3 C-Atomen oder eine Alkenyl- oder eine Alkenyloxygruppe mit 2 oder 3 C-Atomen, worin ein oder mehrere H-Atome durch ein F-Atom ersetzt sind, bedeutet.

3. Flüssigkristallines Medium nach Anspruch 1 oder 2, **dadurch gekennzeichnet, dass** die eine oder mehreren Verbindungen der Formeln L1 und L2 beschrieben werden durch die Formeln L1-1 und L2-1: 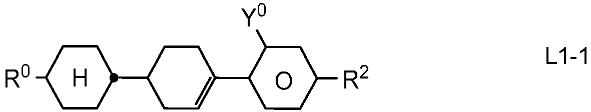 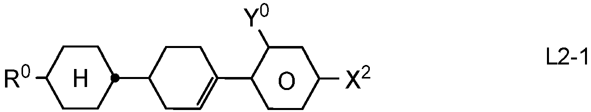 worin
R⁰ eine Alkylgruppe mit 1 bis 6 C-Atomen oder eine Alkenylgruppe mit 2 bis 12 C-Atomen, worin eine oder mehrere CH₂-Gruppen gegebenenfalls so durch -C≡C-, -CF₂O-, -OCF₂-, -CH=CH-, 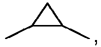 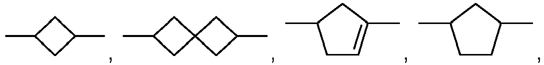 -O-, -CO-O-oder -O-CO- substituiert sind, dass O-Atome nicht direkt miteinander verknüpft sind, und worin ein oder mehrere H-Atome durch ein Halogenatom ersetzt sein können, bedeutet,
R² eine Alkylgruppe mit 1 bis 6 C-Atomen, worin eine oder mehrere CH₂-Gruppen gegebenenfalls so durch -C≡C-, -CF₂O-, -OCF₂-, -CH=CH-, 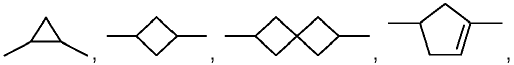 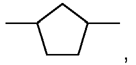 -O-, -CO-O- oder -O-CO- substituiert sind, dass O-Atome nicht direkt miteinander verknüpft sind, und worin ein oder mehrere H-Atome durch ein Halogenatom ersetzt sein können, bedeutet;
X² ein F-Atom oder eine Alkyl- oder eine Alkoxygruppe mit 1 bis 3 C-Atomen oder eine Alkenyl- oder eine Alkenyloxygruppe mit 2 oder 3 C-Atomen, worin ein oder mehrere H-Atome durch ein F-Atom ersetzt sind, bedeutet, und
Y⁰ H oder CH₃ bedeutet.

4. Flüssigkristallines Medium nach einem oder mehreren der Ansprüche 1 bis 3, **dadurch gekennzeichnet, dass** es eine oder mehrere Verbindungen enthält, die ausgewählt sind aus den folgenden Formeln: 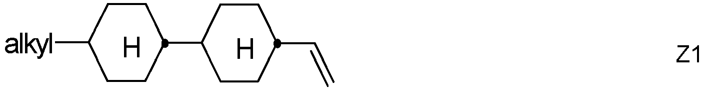 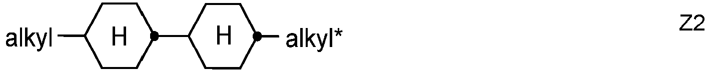 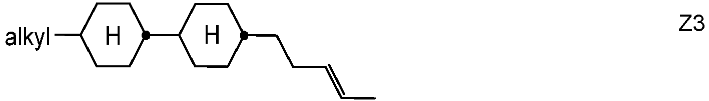 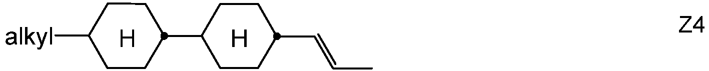 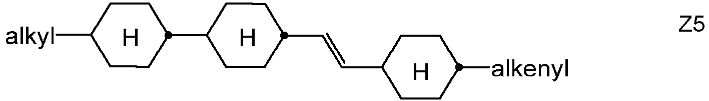 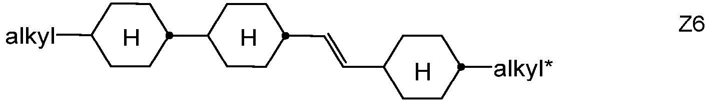 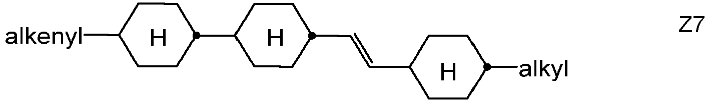 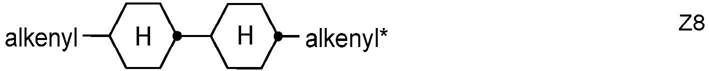
bei denen "alkyl" und "alkyl*" C₁₋₆-Alkyl bedeuten und
"alkenyl" und "alkenyl*" C₂₋₆-Alkenyl bedeuten.

5. Flüssigkristallines Medium nach einem oder mehreren der Ansprüche 1 bis 4, **dadurch gekennzeichnet, dass** es eine oder mehrere Verbindungen der Formeln XIV, XVI und XVIIa bis XVIIc 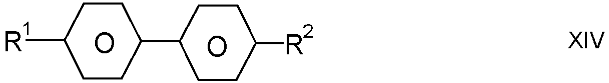 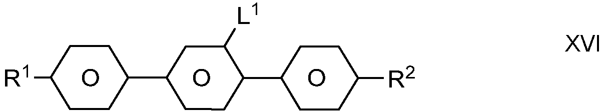 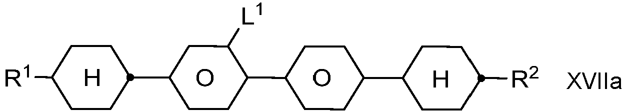 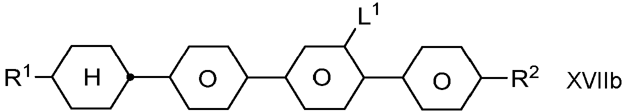 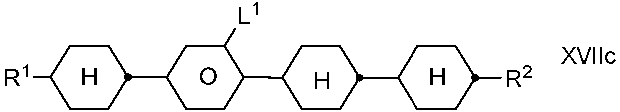
enthält, worin R¹ und R² jeweils unabhängig voneinander n-Alkyl, Alkoxy, Oxaalkyl, Fluoralkyl oder Alkenyl bedeuten, jeweils mit bis zu 6 C-Atomen, und
L¹ die in Anspruch 1 angegebenen Bedeutungen besitzt.

6. Flüssigkristallines Medium nach einem oder mehreren der Ansprüche 1 bis 5, **dadurch gekennzeichnet, dass** es eine oder mehrere Verbindungen enthält, die ausgewählt sind aus der Gruppe bestehend aus den folgenden Formeln: 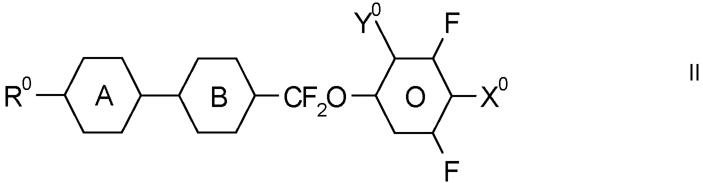 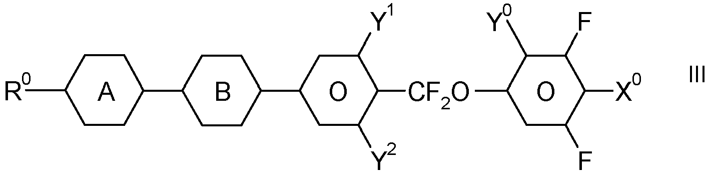 bei denen die einzelnen Reste, unabhängig voneinander und bei jedem Auftreten gleich oder verschieden, die folgenden Bedeutungen besitzen: 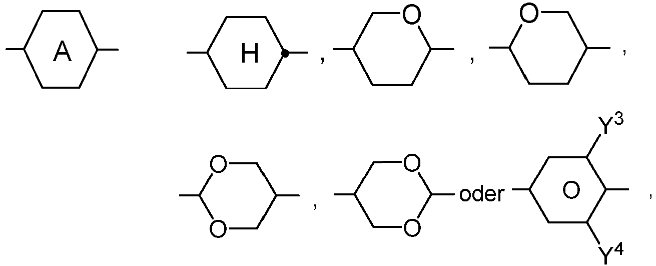 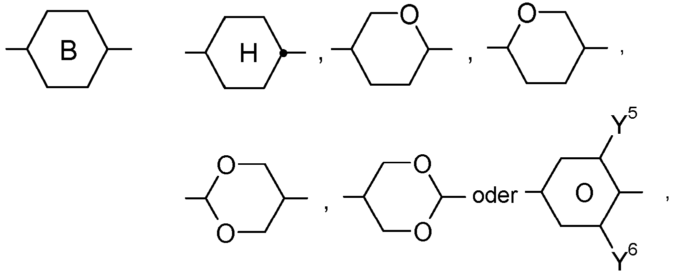
R⁰ eine der in Anspruch 1 für R¹ genannten Bedeutungen,
X⁰ F, Cl, CN, SF₅, SCN, NCS, einen halogenierten Alkylrest, einen halogenierten Alkenylrest, einen halogenierten Alkoxyrest oder einen halogenierten Alkenyloxyrest mit bis zu 6 C-Atomen, und
Y¹⁻⁶ H oder F,
Y⁰ H oder CH₃.

7. Flüssigkristallines Medium nach Anspruch 6, bei dem die eine oder mehreren Verbindungen der Formel II ausgewählt sind aus den folgenden Unterformeln: 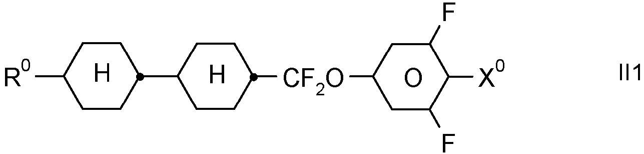 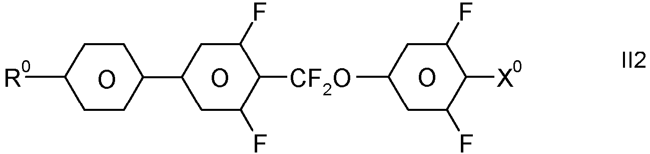 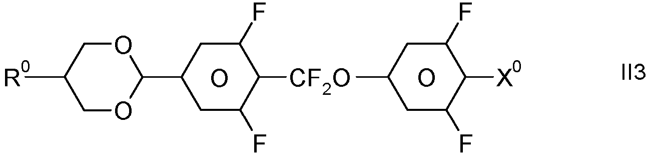 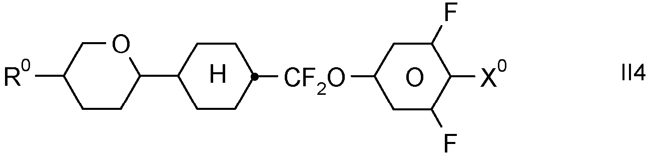 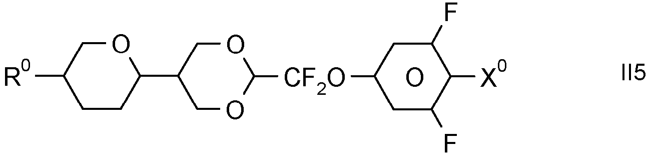 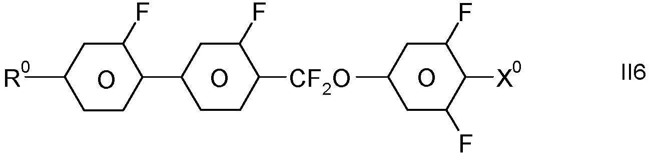 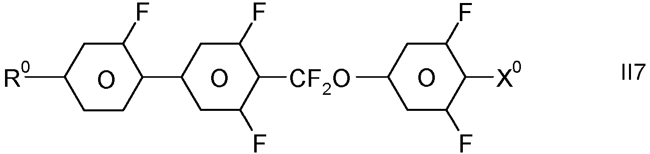 worin R⁰ und X⁰ die in Formel II genannten Bedeutungen besitzen.

8. Flüssigkristallines Medium nach Anspruch 6, bei dem die eine oder mehreren Verbindungen der Formel III ausgewählt sind aus den folgenden Unterformeln: 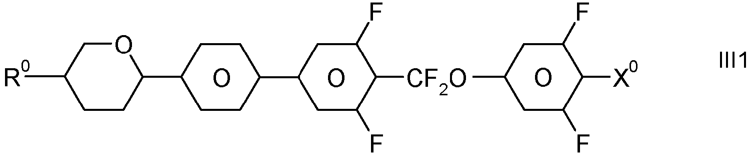 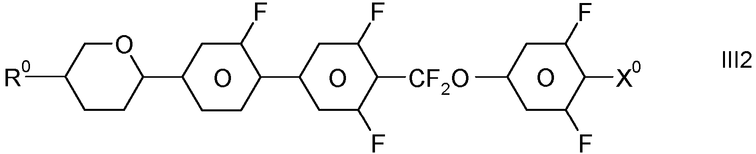 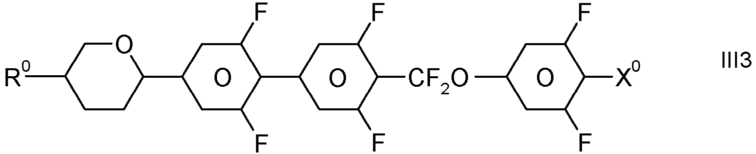 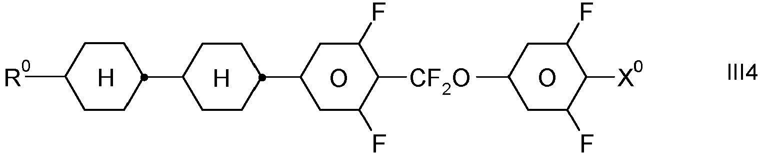 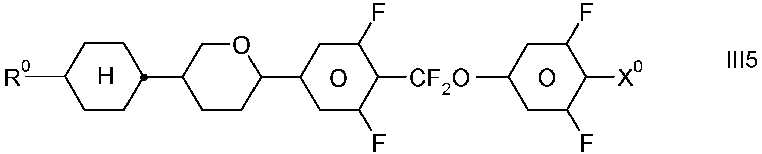 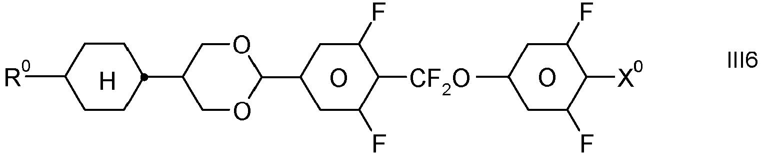 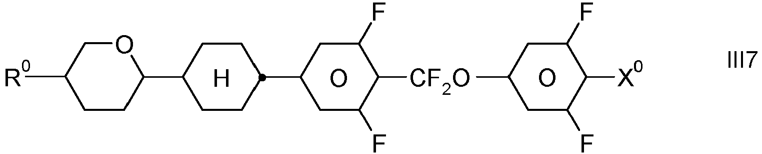 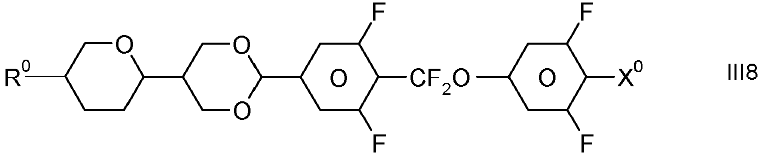 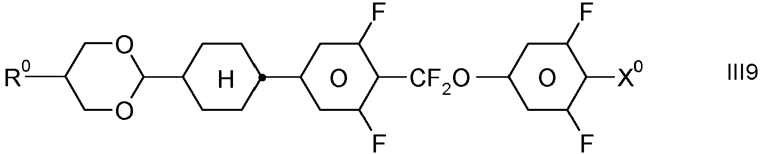 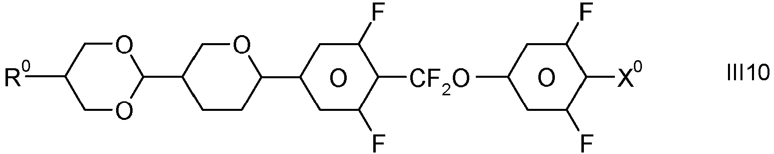 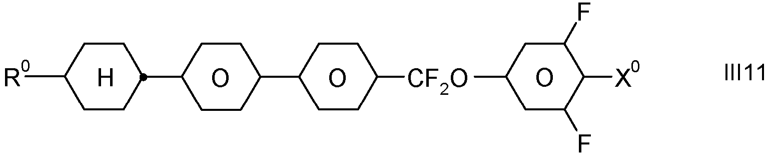 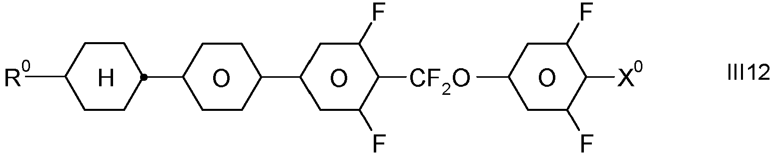 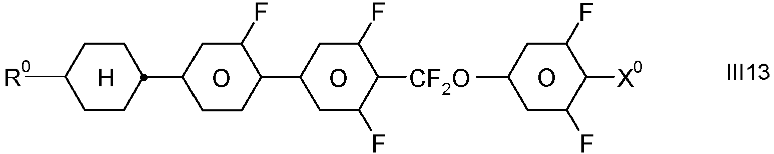 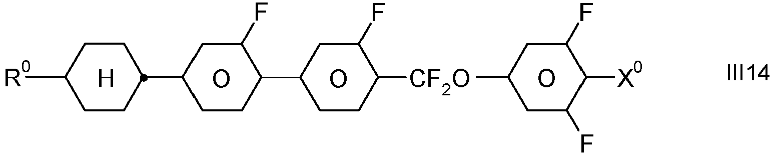 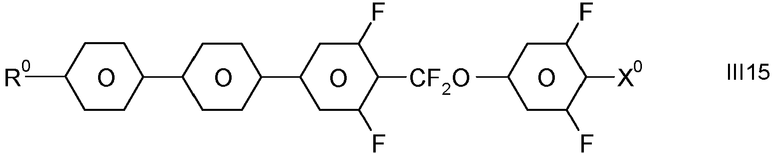 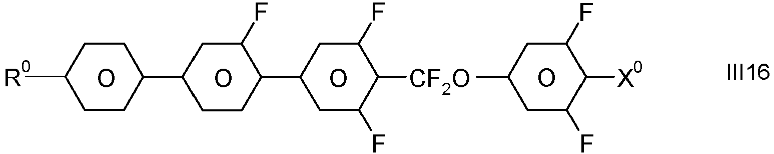 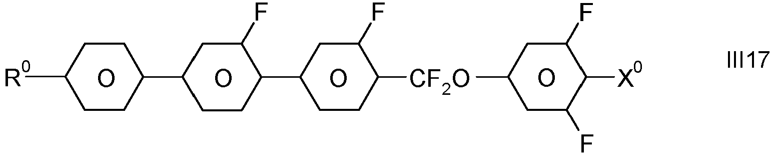 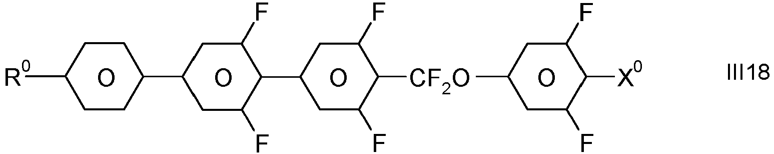 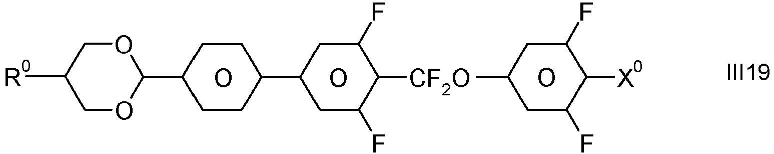 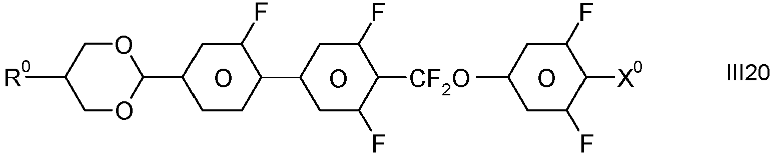 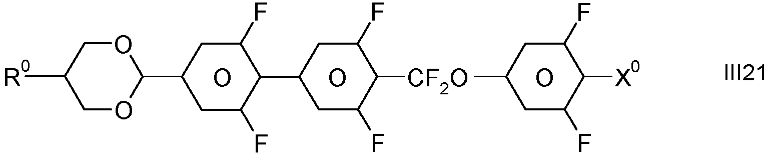 worin R⁰ und X⁰ die in Formel II genannten Bedeutungen besitzen.

9. Flüssigkristallines Medium nach einem oder mehreren der Ansprüche 1 bis 8, **dadurch gekennzeichnet, dass** es zusätzlich eine oder mehrere Verbindungen enthält, die ausgewählt sind aus der Gruppe bestehend aus den folgenden Formeln: 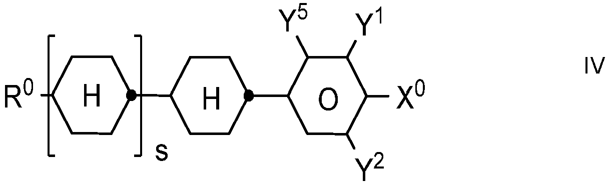 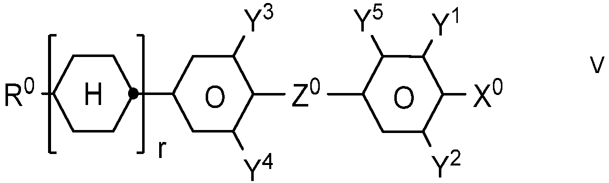 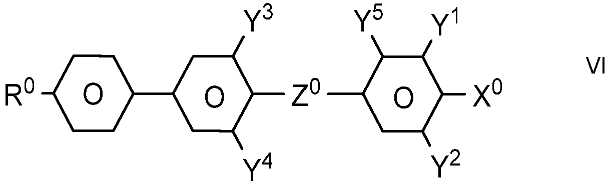 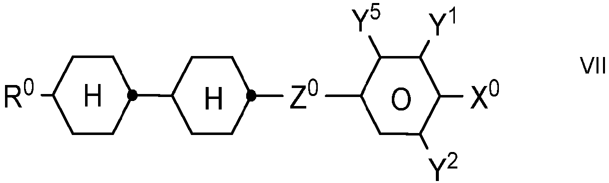 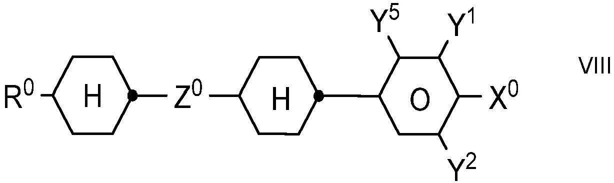 worin R⁰, X⁰, Y¹, Y² und Y⁵ die in den Ansprüchen 1 und 8 genannten Bedeutungen besitzen, Y³ und Y⁴ unabhängig voneinander eine der für Y¹ genannten Bedeutungen besitzen, und
Z⁰ -C₂H₄-, -(CH₂)₄-, -CH=CH-, -CF=CF-, -C₂F₄-, -CH₂CF₂-, -CF₂CH₂-, -CH₂O-, -OCH₂-, -COO- oder -OCF₂-, in den Formeln V und VI auch eine Einfachbindung, in den Formeln V und VIII auch -CF₂O- bedeutet,
r 0 oder 1 bedeutet, und
s 0 oder 1 bedeutet.

10. Flüssigkristallines Medium nach einem oder mehreren der Ansprüche 1 bis 9, **dadurch gekennzeichnet, dass** es eine oder mehrere Verbindungen enthält, die ausgewählt sind aus der Gruppe bestehend aus den folgenden Formeln: 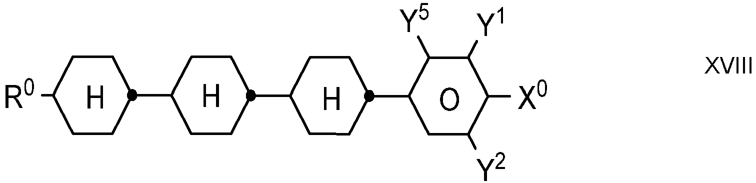 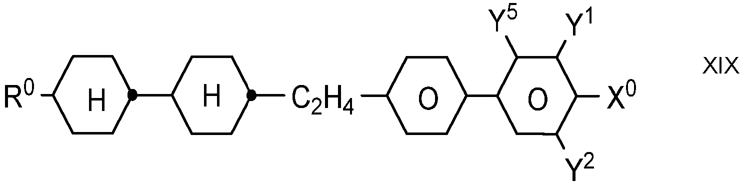 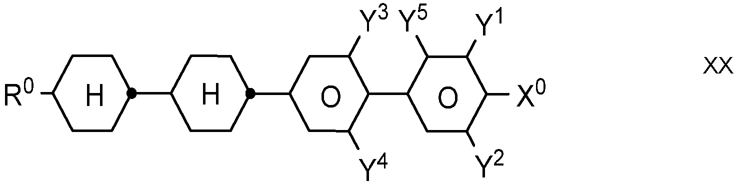 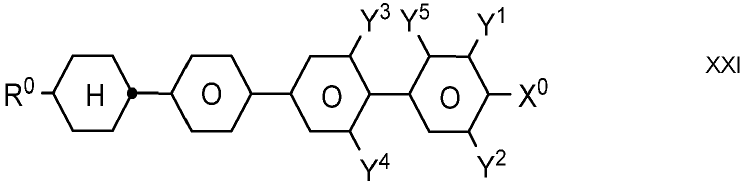 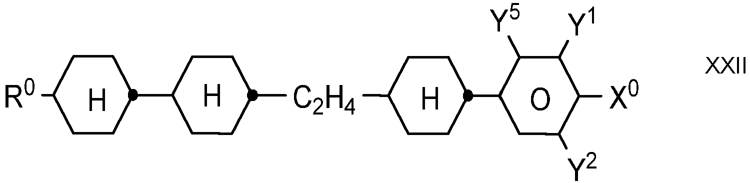 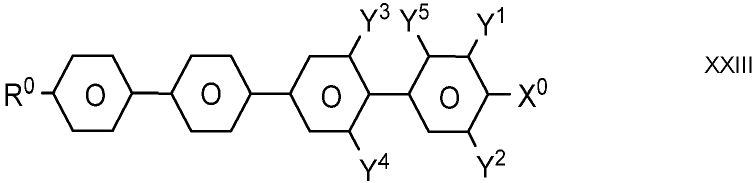 worin R⁰, Y¹⁻⁵ und X⁰ jeweils unabhängig voneinander eine der in Anspruch 1 angegebenen Bedeutungen besitzen.

11. Flüssigkristallines Medium nach einem oder mehreren der Ansprüche 1 bis 10, **dadurch gekennzeichnet, dass** es eine oder mehrere Verbindungen enthält, die ausgewählt sind aus der Gruppe bestehend aus den folgenden Formeln: 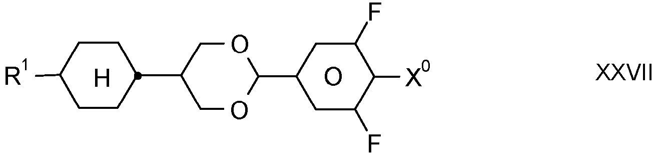 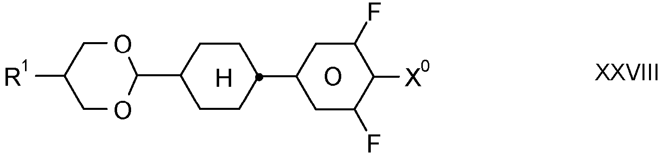 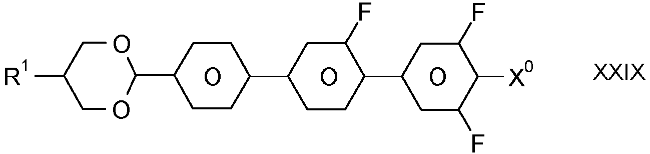 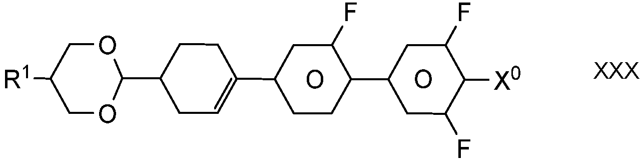 worin R¹ und X⁰ die in den Ansprüchen 5 und 9 angegebenen Bedeutungen besitzen.

12. Flüssigkristallines Medium nach einem oder mehreren der Ansprüche 1 bis 11, **dadurch gekennzeichnet, dass** es eine oder mehrere Verbindungen der Formeln I, L1 und L2 und eine oder mehrere Verbindungen, die aus der Gruppe bestehend aus den Formeln Z1, Z2, Z3, Z4, Z5, Y, B, II, III, IV, VI, XIV, XX, XII, XXIII, XXIX, XVI, XVlla, XVIIb, XVIIc, XXXI und XXXIII ausgewählt sind, enthält.

13. Flüssigkristallines Medium nach einem oder mehreren der Ansprüche 1 bis 12, **dadurch gekennzeichnet, dass** es zusätzlich eine oder mehrere polymerisierbare Verbindungen enthält.

14. Verfahren zur Herstellung eines flüssigkristallinen Mediums nach einem oder mehreren der Ansprüche 1 bis 13, **dadurch gekennzeichnet, dass** man eine oder mehrere Verbindungen der Formel I und eine oder mehrere Verbindungen der Formel L1 und/oder L2 mit einer oder mehreren mesogenen Verbindungen und gegebenenfalls einer oder mehreren polymerisierbaren Verbindungen oder Verbindungen der Formel M und/oder einem oder mehreren Zusatzstoffen mischt.

15. Verwendung eines flüssigkristallinen Mediums nach einem oder mehreren der Ansprüche 1 bis 13 für elektrooptische Zwecke.

16. Elektrooptische Flüssigkristallanzeige enthaltend ein flüssigkristallines Medium nach einem oder mehreren der Ansprüche 1 bis 13.

17. Elektrooptische Flüssigkristallanzeige nach Anspruch 16, **dadurch gekennzeichnet, dass** es sich um eine TN-, PS-TN-, STN-, TN-TFT-, OCB-, IPS-, PS-IPS-, FFS-, HB-FFS-, XB-FFS-, PS-HB-FFS-, PS-XB-FFS-, SA-HB-FFS-, SA-XB-FS-, polymerstabilisierte SA-HB-FFS-, polymerstabilisierte SA-XB-FFS-, positive VA- oder positive PS-VA-Anzeige handelt.

18. Elektrooptische Flüssigkristallanzeige nach Anspruch 16, **dadurch gekennzeichnet, dass** es sich um eine FFS-, HB-FFS-, XB-FFS-, PS-HB-FFS-, PS-XB-FFS-, IPS- oder PS-IPS-Anzeige handelt.

## Revendications

1. Milieu cristallin liquide, **caractérisé en ce qu'**il présente une anisotropie diélectrique positive et comprend un ou plusieurs composés de Formule I 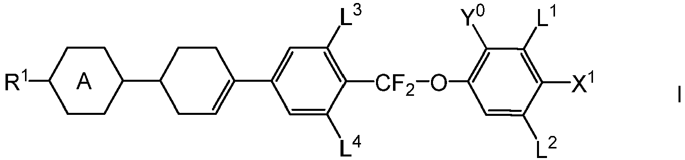 dans laquelle les radicaux individuels, à chaque occurrence de manière identique ou différente, et chacun, indépendamment les uns des autres, revêtent la signification suivante : 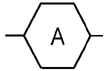 désigne 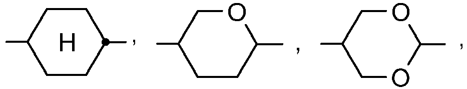 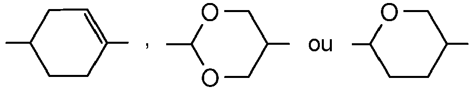
R¹ un atome de H, un groupement alkyle ou alcoxy ayant de 1 à 12 atomes de C ou un groupement alcényle ou alcényloxy ayant de 2 à 12 atomes de C où un ou plusieurs groupements CH₂ sont éventuellement substitués par -C≡C-, -CF₂O-, -OCF₂-, -CH=CH-, 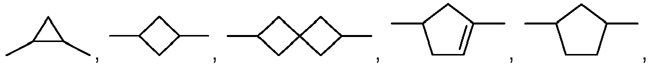 -O-, -CO-O- ou -O-CO- de telle sorte que les atomes de O ne soient pas liés directement les uns aux autres, et où un ou plusieurs atomes de H peuvent être remplacés par un atome d'halogène ou un groupement cycloalkyle ou cycloalcoxy ayant de 3 à 12 atomes de C, où un ou plusieurs atomes de H peuvent être remplacés par un atome d'halogène, préférablement cyclopentyle ou cyclopentyloxyle,
Y⁰ un atome de H ou CH₃,
X¹ -CN, -SCN, un atome d'halogène ou un groupement alkyle ou alcoxy ayant de 1 à 3 atomes de C ou un groupement alcényle ou alcényloxy ayant 2 ou 3 atomes de C où un ou plusieurs atomes de H sont remplacés par un atome d'halogène, et
L¹ à L⁴ indépendamment les uns des autres H ou F ;
et un ou plusieurs composés choisis parmi L1 et L2, 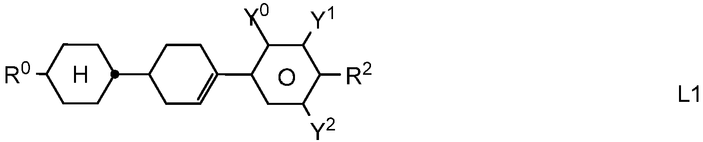 où les radicaux individuels, à chaque occurrence de manière identique ou différente, et chacun, indépendamment les uns des autres, revêtent la signification suivante :
R⁰ un groupement alkyle ayant de 1 à 12 atomes de C ou un groupement alcényle ayant de 2 à 12 atomes de C où un ou plusieurs groupements CH₂ sont éventuellement substitués par -C≡C-, -CF₂O-, -OCF₂-, -CH=CH-, 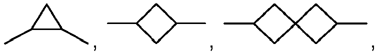 -O-, -CO-O- ou -O-CO- de telle sorte que 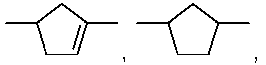 les atomes de O ne soient pas liés directement les uns aux autres, et où un ou plusieurs atomes de H peuvent être remplacés par un atome d'halogène,
R² un groupement alkyle ayant de 1 à 6 atomes de C, où un ou plusieurs groupements CH₂ sont éventuellement substitués par -C≡C-, -CF₂O-, -OCF₂-, -CH=CH-, 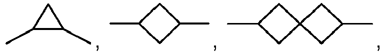 O-, -CO-O- ou -O-CO- de telle sorte que 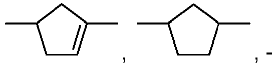 les atomes de O ne soient pas liés directement les uns aux autres, et où un ou plusieurs atomes de H peuvent être remplacés par un atome d'halogène ;
Y¹ et Y² H, F ou Cl,
Y⁰ H ou CH₃ 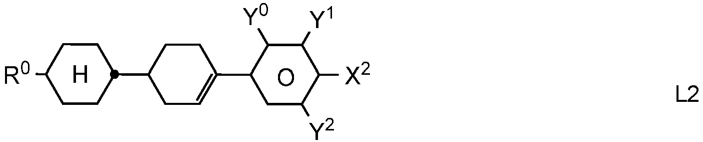
où les radicaux individuels, à chaque occurrence de manière identique ou différente, et chacun, indépendamment les uns des autres, revêtent la signification suivante :
R⁰ un groupement alkyle ayant de 1 à 12 atomes de C ou un groupement alcényle ayant de 2 à 12 atomes de C où un ou plusieurs groupements CH₂ sont éventuellement substitués par -C≡C-, -CF₂O-, -OCF₂-, -CH=CH-, 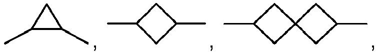 -O-, -CO-O- ou -O-CO- de telle sorte que 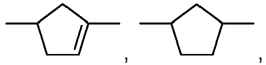 les atomes de O ne soient pas liés directement les uns aux autres, et où un ou plusieurs atomes de H peuvent être remplacés par un atome d'halogène,
X² un atome de F ou un groupement alkyle ou alcoxy ayant de 1 à 6 atomes de C ou un groupement alcényle ou alcényloxy ayant de 2 à 6 atomes de C où un ou plusieurs atomes de H sont remplacés par un atome de F,
Y¹ et Y² H, F ou Cl,
Y⁰ H ou CH₃.

2. Milieu cristallin liquide selon la revendication 1, dans lequel les un ou plusieurs composés de Formule I sont choisis parmi les composés de Formules I-1 à I-8 : 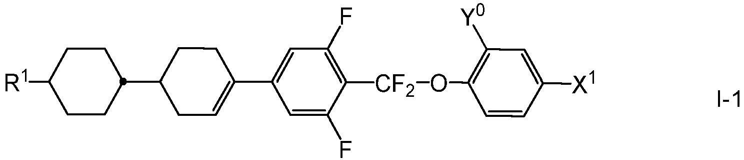 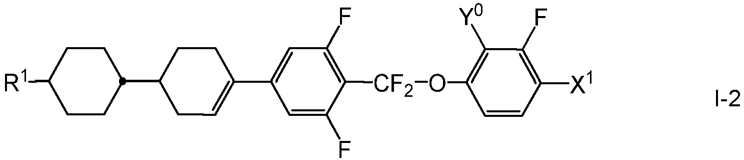 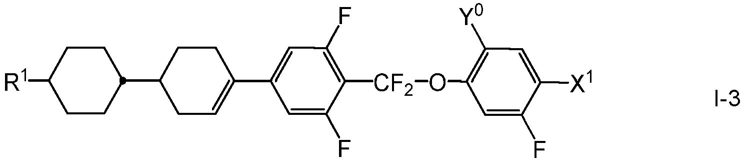 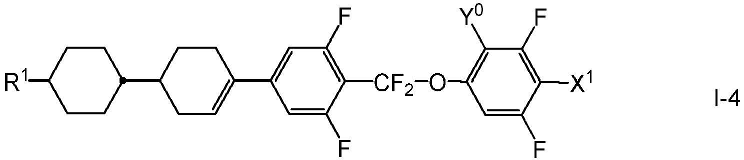 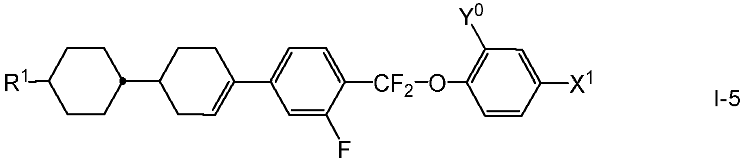 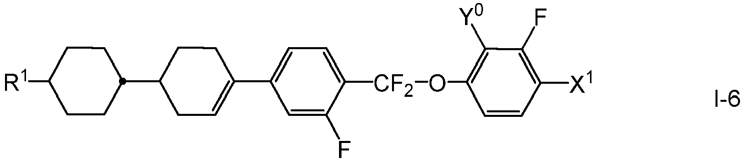 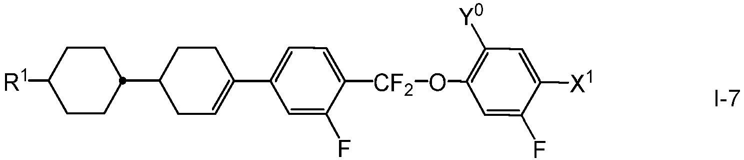 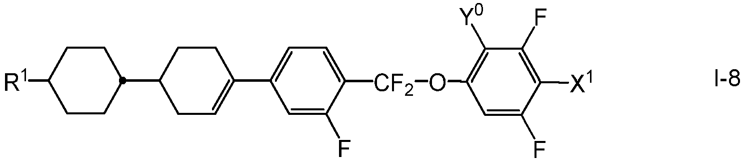 dans lesquelles
R¹ désigne un atome de H, un groupement alkyle ou alcoxy ayant de 1 à 6 atomes de C ou un groupement alcényle ou alcényloxy ayant 2 ou 6 atomes de C où un ou plusieurs groupements CH₂ sont éventuellement substitués par -C≡C-, -CF₂O-, -OCF₂-, -CH=CH-, 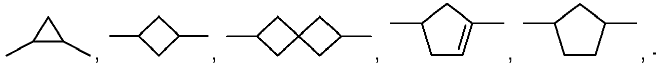 -O-, -CO-O- ou -O-CO- de telle sorte que les atomes de O ne soient pas liés directement les uns aux autres, et où un ou plusieurs atomes de H peuvent être remplacés par un atome d'halogène ou un groupement cycloalkyle ou cycloalcoxy ayant de 3 à 6 atomes de C, où un ou plusieurs atomes de H peuvent être remplacés par un atome d'halogène,
Y⁰ désigne un atome de H ou CH₃, et
X¹ désigne un atome de F ou un groupement alkyle ou alcoxy ayant de 1 à 3 atomes de C ou un groupement alcényle ou alcényloxy ayant 2 ou 3 atomes de C où un ou plusieurs atomes de H sont remplacés par un atome de F.

3. Milieu cristallin liquide selon la revendication 1 ou 2, **caractérisé en ce que** les un ou plusieurs composés de Formules L1 et L2 sont décrits par les Formules L1-1 et L2-1 : 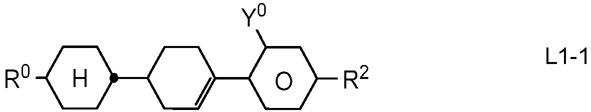 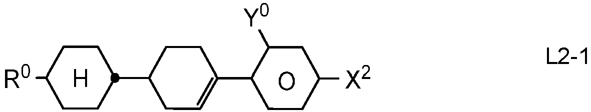 dans lesquelles
R⁰ désigne un groupement alkyle ayant de 1 à 6 atomes de C ou un groupement alcényle ayant de 2 à 12 atomes de C où un ou plusieurs groupements CH₂ sont éventuellement substitués par -C≡C-, -CF₂O-, -OCF₂-, -CH=CH-, 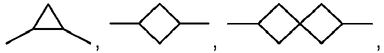 -O-, -CO-O- ou -O-CO- de telle sorte que 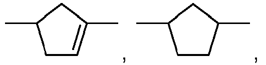 les atomes de O ne soient pas liés directement les uns aux autres, et où un ou plusieurs atomes de H peuvent être remplacés par un atome d'halogène,
R² désigne un groupement alkyle ayant de 1 à 6 atomes de C, où un ou plusieurs groupements CH₂ sont éventuellement substitués par -C≡C-, -CF₂O-, -OCF₂-, -CH=CH-, 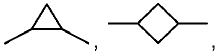 -O-, -CO-O- ou -O-CO- de 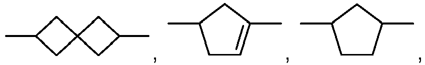 telle sorte que les atomes de O ne soient pas liés directement les uns aux autres, et où un ou plusieurs atomes de H peuvent être remplacés par un atome d'halogène ;
X² désigne un atome de F ou un groupement alkyle ou alcoxy ayant de 1 à 3 atomes de C ou un groupement alcényle ou alcényloxy ayant 2 ou 3 atomes de C où un ou plusieurs atomes de H sont remplacés par un atome de F, et
Y⁰ désigne H ou CH₃.

4. Milieu cristallin liquide selon l'une ou plusieurs parmi les revendications 1 à 3, **caractérisé en ce qu'**il comprend un ou plusieurs composés choisis parmi les Formules suivantes : 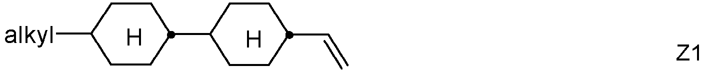 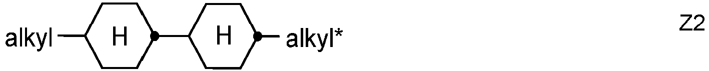 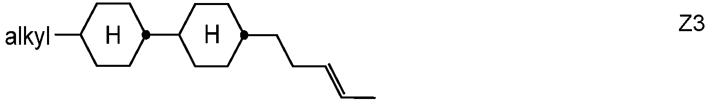 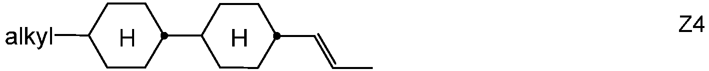 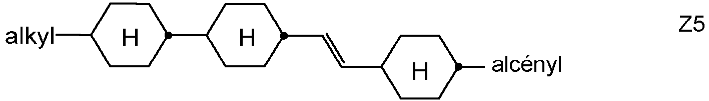 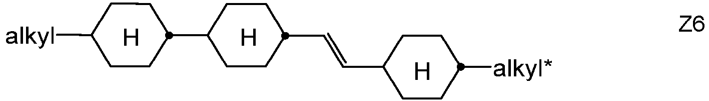 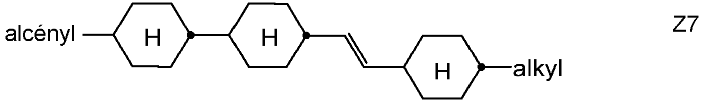 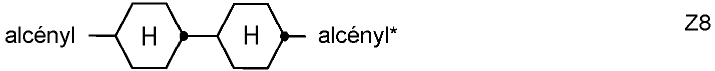
où « alkyl » et « alkyl* » désignent C₁₋₆-alkyle et
« alcényl » et « alcényl* » désignent C₂₋₆-alcényle.

5. Milieu cristallin liquide selon l'une ou plusieurs parmi les revendications 1 à 4, **caractérisé en ce qu'**il comprend un ou plusieurs composés de Formules XIV, XVI et XVIIa à XVIIc 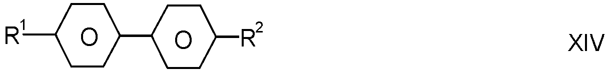 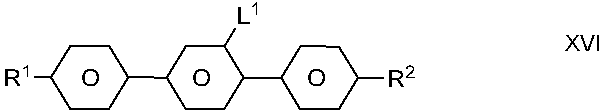 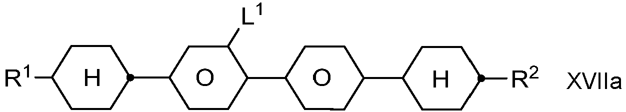 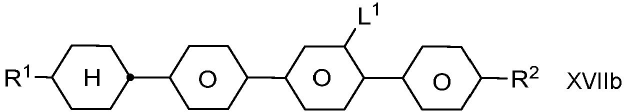 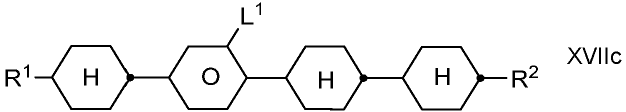
dans laquelle R¹ et R² chacun, indépendamment l'un de l'autre, désignent n-alkyle, alcoxy, oxaalkyle, fluoroalkyle ou alcényle, ayant chacun jusqu'à 6 atomes de C, et
L¹ revêt les significations indiquées selon la revendication 1.

6. Milieu cristallin liquide selon l'une ou plusieurs parmi les revendications 1 à 5, **caractérisé en ce qu'**il comprend un ou plusieurs composés choisis dans le groupe constitué par les Formules suivantes : 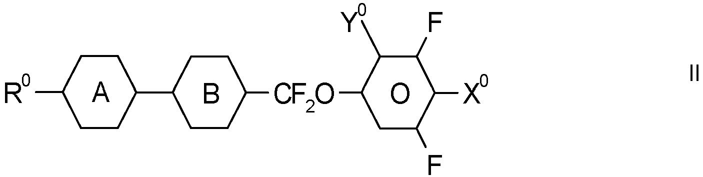 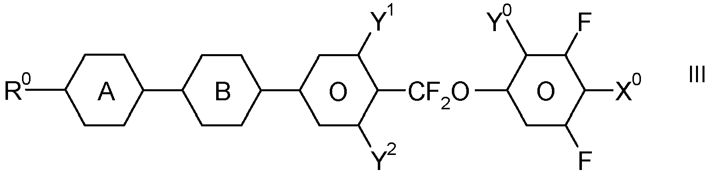 dans lesquelles les radicaux individuels, indépendamment les uns des autres et à chaque occurrence de manière identique ou différente, revêtent les significations suivantes : 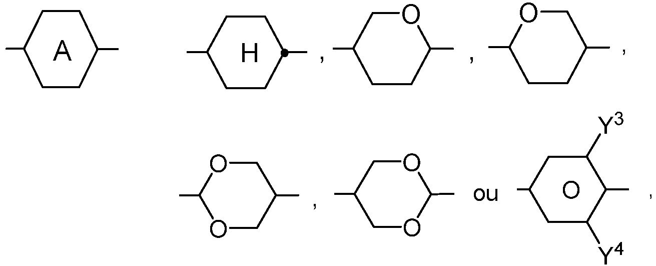 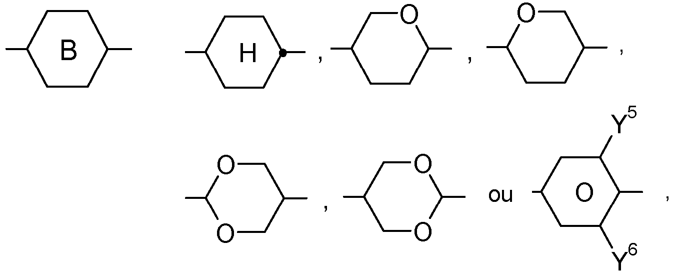
R⁰ l'une des significations données selon la revendication 1 pour R¹,
X⁰ F, CI, CN, SF₅, SCN, NCS, un radical alkyle halogéné, un radical alcényle halogéné, un radical alcoxy halogéné ou un radical alcényloxy halogéné ayant jusqu'à 6 atomes de C, et
Y¹⁻⁶ H ou F,
Y⁰ H ou CH₃.

7. Milieu cristallin liquide selon la revendication 6, dans lequel les un ou plusieurs composés de Formule Il sont choisis parmi les sous-Formules suivantes : 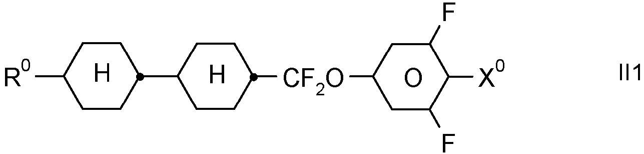 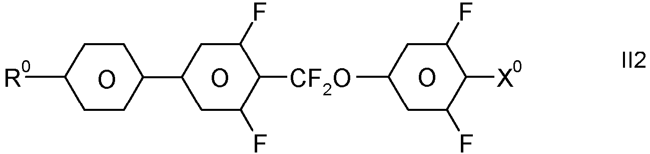 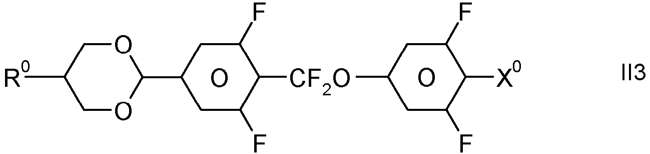 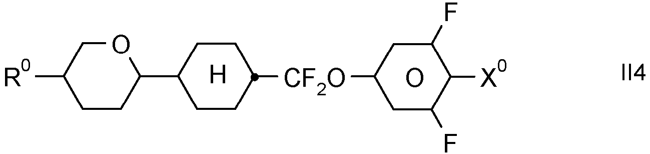 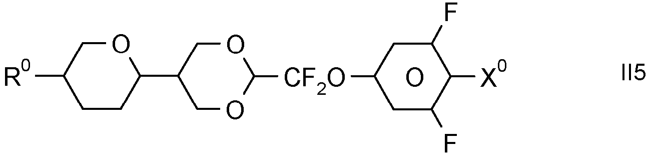 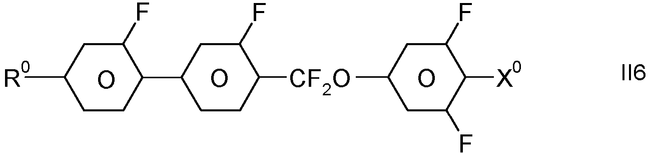 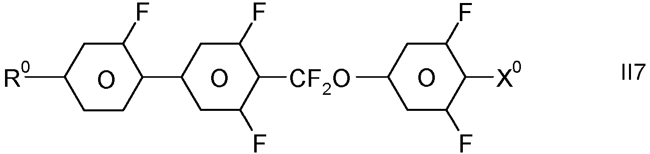 dans lesquelles R⁰ et X⁰ revêtent les significations données dans la Formule II.

8. Milieu cristallin liquide selon la revendication 6, dans lequel les un ou plusieurs composés de Formule III sont choisis parmi les sous-Formules suivantes : 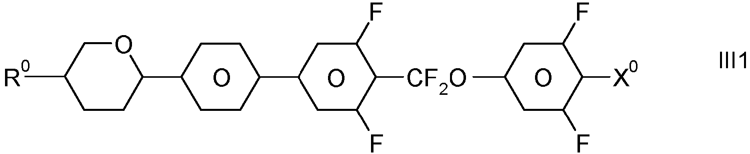 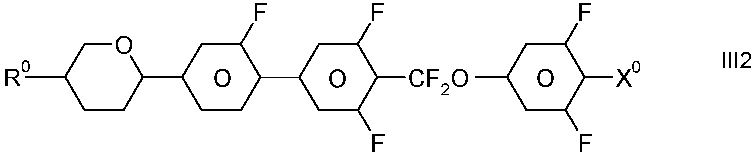 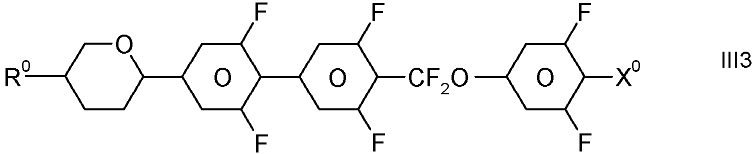 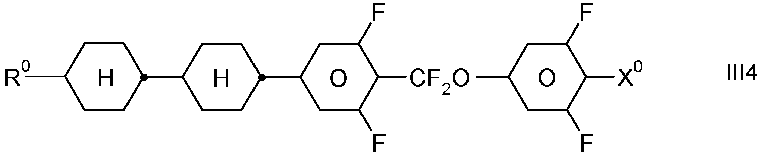 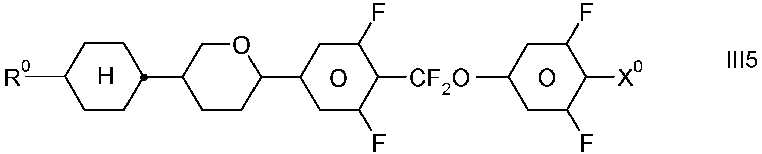 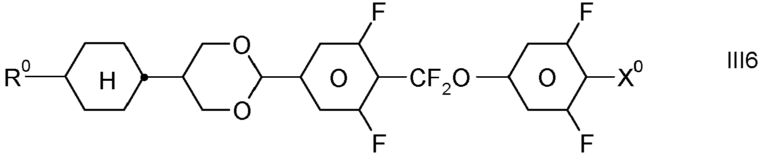 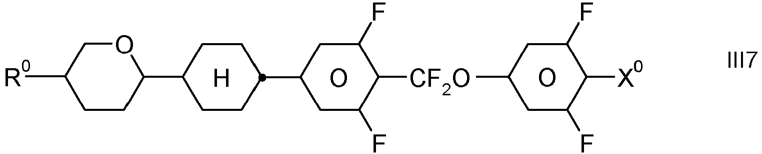 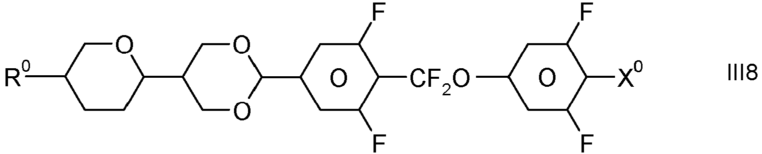 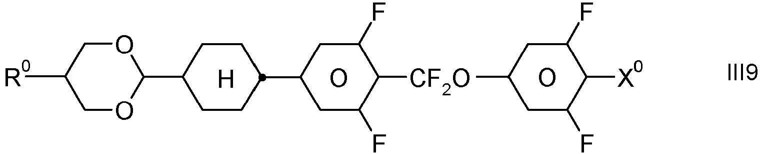 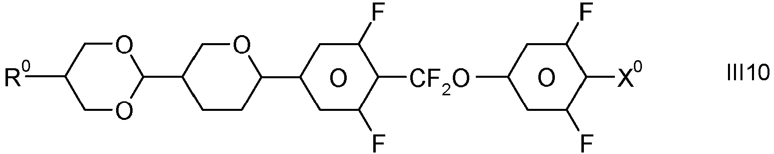 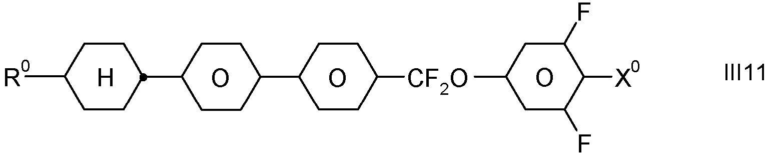 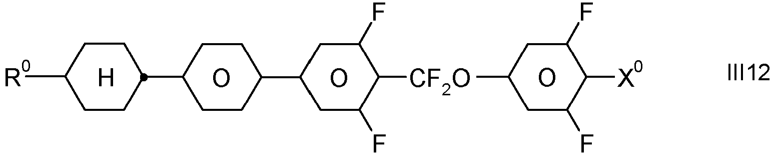 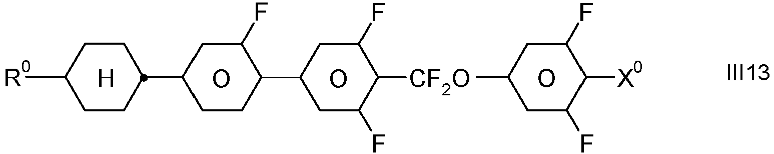 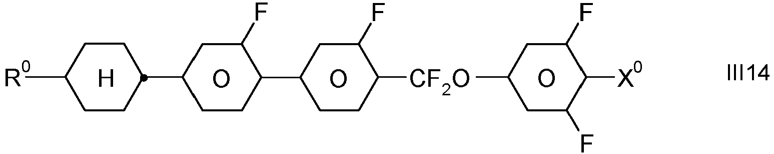 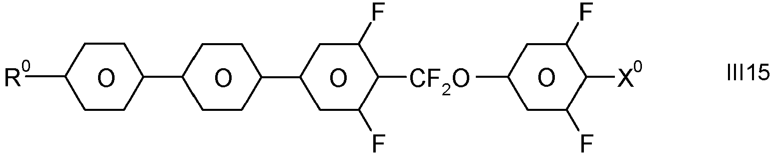 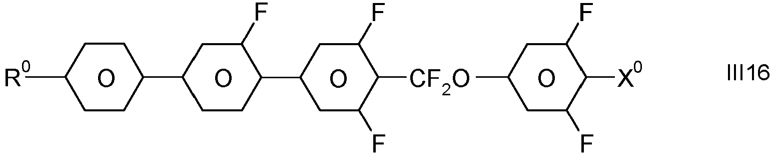 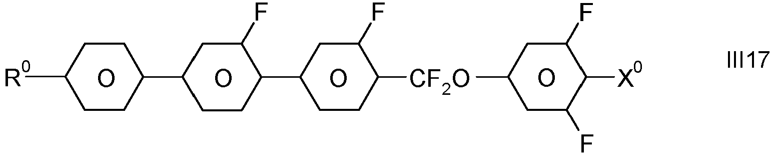 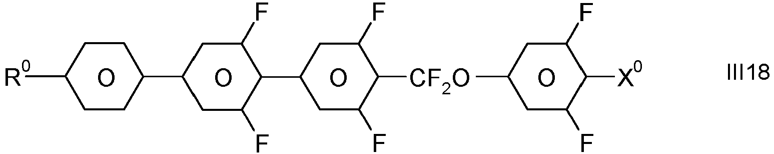 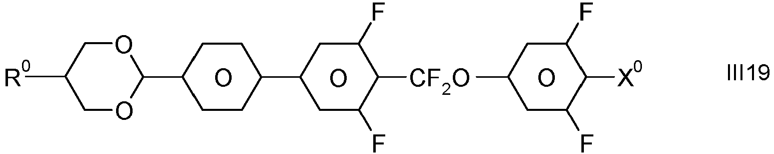 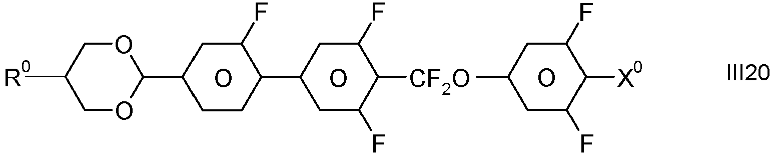 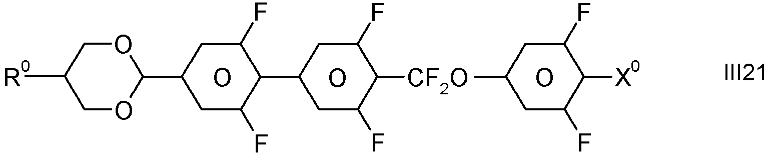 dans lesquelles R⁰ et X⁰ revêtent les significations données dans la Formule II.

9. Milieu cristallin liquide selon l'une ou plusieurs parmi les revendications 1 à 8, **caractérisé en ce qu'**il comprend en outre un ou plusieurs composés choisis dans le groupe constitué par les Formules suivantes : 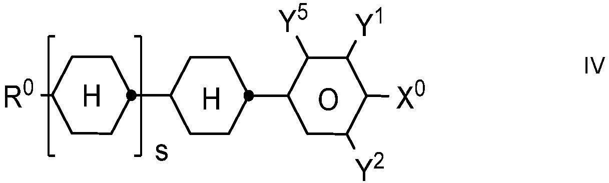 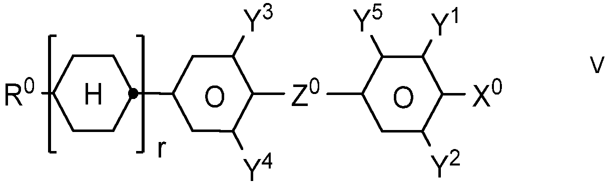 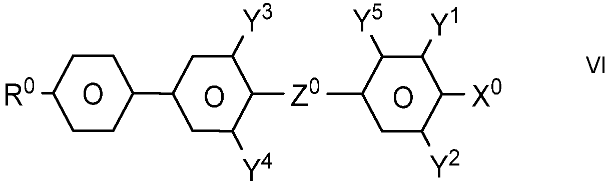 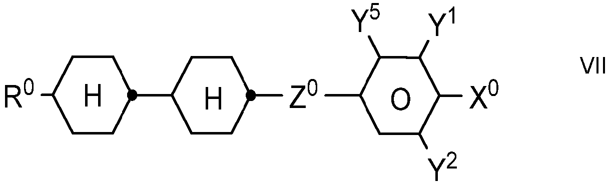 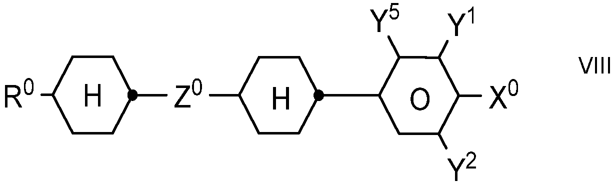 dans lesquelles R⁰, X⁰, Y¹, Y² et Y⁵ revêtent les significations données selon les revendications 1 et 8, Y³ et Y⁴ revêtent indépendamment l'un de l'autre l'une des significations données pour Y¹, et
Z^{D} désigne -C₂H₄-, -(CH₂)₄-, -CH=CH-, -CF=CF-, -C₂F₄-, -CH₂CF₂-, -CF₂CH₂-, -CH₂O-, -OCH₂-, -COO- ou -OCF₂-, dans les Formules V et VI de même une liaison simple, dans les Formules V et VIII de même -CF₂O-,
r désigne 0 ou 1, et
s désigne 0 ou 1.

10. Milieu cristallin liquide selon l'une ou plusieurs parmi les revendications 1 à 9, **caractérisé en ce qu'**il comprend un ou plusieurs composés choisis dans le groupe constitué par les Formules suivantes : 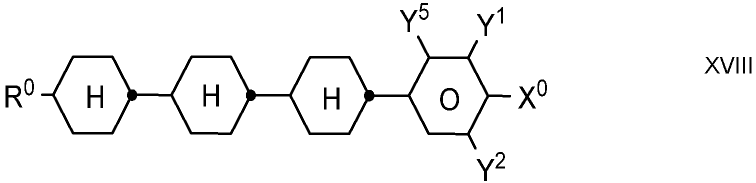 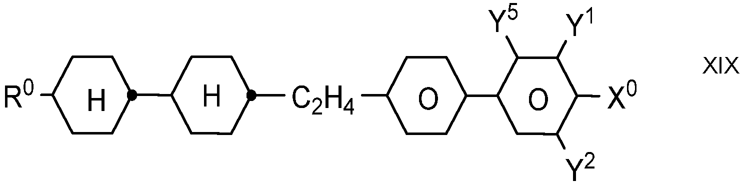 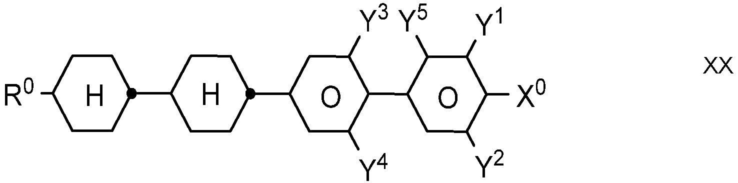 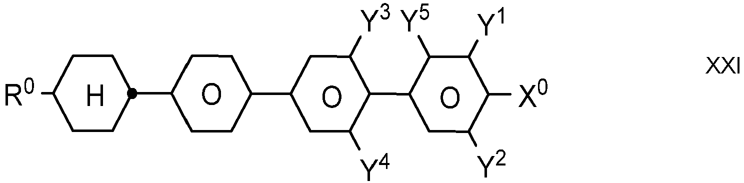 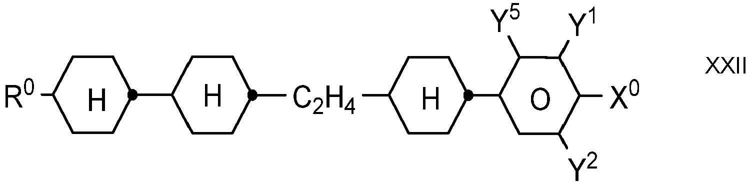 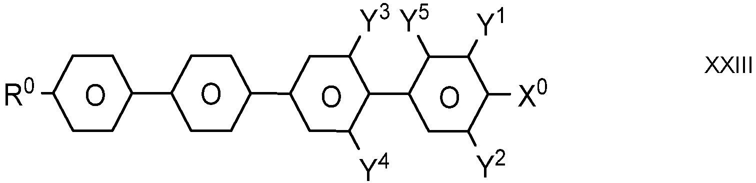 dans lesquelles R⁰, Y¹⁻⁵ et X⁰ chacun, indépendamment les uns des autres, revêtent l'une des significations indiquées selon la revendication 1.

11. Milieu cristallin liquide selon l'une ou plusieurs parmi les revendications 1 à 10, **caractérisé en ce qu'**il comprend un ou plusieurs composés choisis dans le groupe constitué par les Formules suivantes : 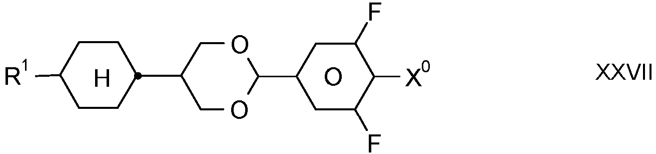 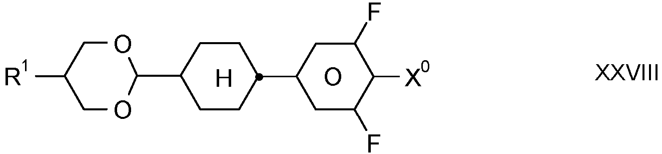 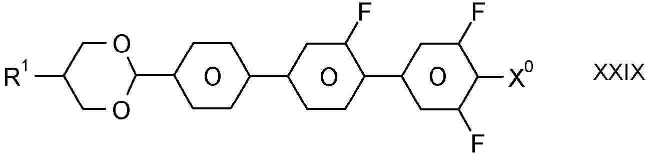 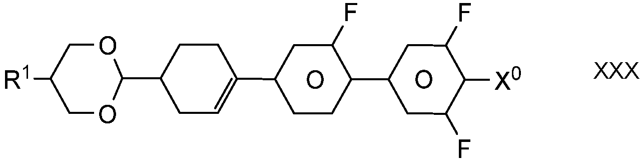 dans lesquelles R¹ et X⁰ revêtent les significations indiquées selon les revendications 5 et 9.

12. Milieu cristallin liquide selon l'une ou plusieurs parmi les revendications 1 à 11, **caractérisé en ce qu'**il comprend un ou plusieurs composés de Formules I, L1 et L2 et un ou plusieurs composés choisis dans le groupe constitué par les Formules Z1, Z2, Z3, Z4, Z5, Y, B, II, III, IV, VI, XIV, XX, XII, XXIII, XXIX, XVI, XVlla, XVllb, XVIIc, XXXI et XXXIII.

13. Milieu cristallin liquide selon l'une ou plusieurs parmi les revendications 1 à 12, **caractérisé en ce qu'**il comprend en outre un ou plusieurs composés polymérisables.

14. Procédé de préparation d'un milieu cristallin liquide selon l'une ou plusieurs parmi les revendications 1 à 13, **caractérisé en ce qu'**un ou plusieurs composés de Formule I et un ou plusieurs composés de Formule L1 et/ou L2 sont mélangés avec un ou plusieurs composés mésogènes et éventuellement un ou plusieurs composés polymérisables ou composés de Formule M et/ou un ou plusieurs additifs.

15. Utilisation d'un milieu cristallin liquide selon l'une ou plusieurs parmi les revendications 1 à 13, à des fins électro-optiques.

16. Affichage électro-optique à cristaux liquides contenant un milieu cristallin liquide selon l'une ou plusieurs parmi les revendications 1 à 13.

17. Affichage électro-optique à cristaux liquides selon la revendication 16, **caractérisé en ce qu'**il s'agit d'un affichage TN, PS-TN, STN, TN-TFT, OCB, IPS, PS-IPS, FFS, HB-FFS, XB-FFS, PS-HB-FFS, PS-XB-FFS, SA-HB-FFS, SA-XB-FS, un affichage SA-HB-FFS à stabilisation polymère, un affichage SA-XB-FFS à stabilisation polymère, un affichage VA positif ou PS-VA positif.

18. Affichage électro-optique à cristaux liquides selon la revendication 16, **caractérisé en ce qu'**il s'agit d'un affichage FFS, HB-FFS, XB-FFS, PS-HB-FFS, PS-XB-FFS, IPS ou PS-IPS.
